(19) Europäisches Patentamt
European Patent Office
Office européen des brevets

(11) **EP 4 649 827 A2**

(12) **EUROPEAN PATENT APPLICATION**

(43) Date of publication:
**19.11.2025 Bulletin 2025/47**

(21) Application number: **25195290.9**

(22) Date of filing: **08.07.2021**

(51) International Patent Classification (IPC):
***A01P 3/00*** *(2006.01)*

(52) Cooperative Patent Classification (CPC):
(C-Sets available)
**A01P 3/00; A01N 37/34; A01N 43/56; A01N 43/653; A01N 47/04** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2020 US 202063049423 P**
**19.01.2021 US 202163139269 P**

(62) Document number(s) of the earlier application(s) in accordance with Art. 76 EPC:
**21742524.8 / 4 178 358**

(71) Applicant: **ADAMA MAKHTESHIM LTD.**
**8410001 Beer Sheva (IL)**

(72) Inventors:
- **CERNUSCHI, Matteo**
  **20062 Milan (IT)**
- **AVIDOR, Yoav**
  **6219313 Tel-Aviv (IL)**
- **ROSENMUND, Alexandra**
  **8050 Zürich (CH)**

(74) Representative: **Modiano, Gabriella Diana**
**Modiano & Partners SA**
**Steinsdorfstraße 14**
**80538 München (DE)**

Remarks:
•This application was filed on 12-08-2025 as a divisional application to the application mentioned under INID code 62.
•Claims filed after the date of receipt of the divisional application (Rule 68(4) EPC).

(54) **FUNGICIDAL MIXTURES**

(57) The present invention provides improved combinations, mixtures and compositions comprising a phthalimide fungicide and a primary fungicide, as well as methods of use and processes of preparation thereof.

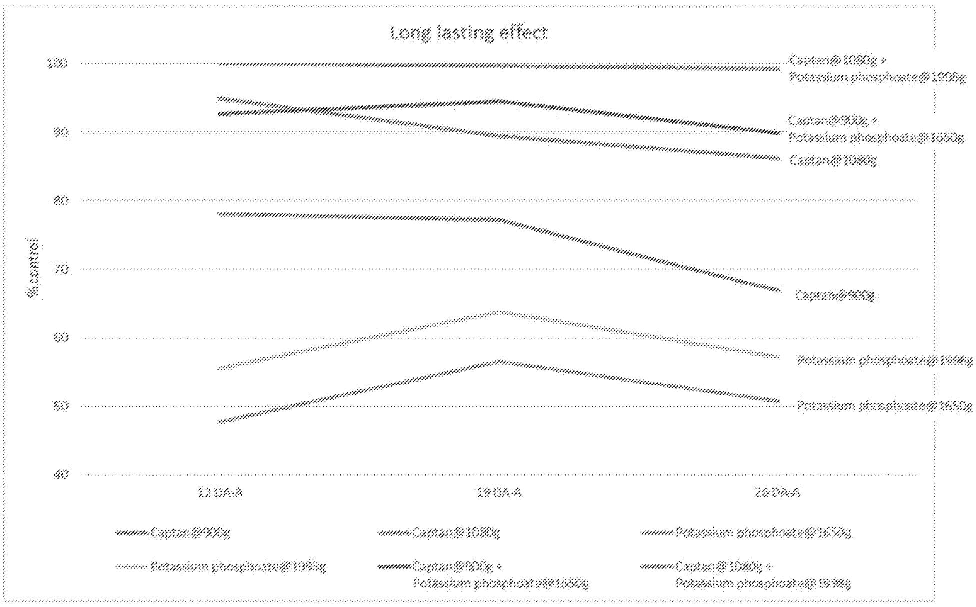


Figure 1



EP 4 649 827 A2

(52) Cooperative Patent Classification (CPC): (Cont.)

C-Sets
**A01N 37/34, A01N 59/02;**
**A01N 43/56, A01N 37/34, A01N 43/54, A01N 47/24, A01N 59/02;**
**A01N 43/653, A01N 43/40, A01N 43/54, A01N 43/56, A01N 47/24;**
**A01N 47/04, A01N 37/20, A01N 37/24, A01N 37/34, A01N 37/50, A01N 43/10, A01N 43/40, A01N 43/54, A01N 43/56, A01N 43/653, A01N 43/80, A01N 43/90, A01N 45/02, A01N 47/24, A01N 47/36, A01N 47/38, A01N 59/02, A01N 59/26, A01N 65/28**

## Description

Throughout this application, various publications are cited. Disclosures of the documents and publications referred to herein are hereby incorporated in their entireties by reference into this application.

### Field of the Present Subject Matter

The present invention provides improved combinations, mixtures and compositions comprising a phthalimide fungicide and a primary fungicide, as well as methods of use and processes of preparation thereof.

### Background of the Invention

Fungicides are compounds of natural or synthetic origin which act to protect plants against damage caused by fungi. In spite of the benefits derived from the use of fungicides in agriculture such as protection of crops and improved productivity, it is nowadays desirable to reduce the amount of fungicides used in the fields owing to the potential health risks associated with an intensive use of agrochemicals.

Another important issue associated with fungus attacks is the loss of nutrients which leads to a decrease in the overall yield of the crop. Compositions comprising one single active ingredient have shown a limited control over diseases. There is therefore a need for new mixtures and method of treatment that provides a control over the fungal attacks on crops and enables higher yields while preserving a high amount of nutrients in crops.

There is also a need for a way to increase penetration of fungicide(s) into the plant. For example, *Zymoseptoria tritici* is the main fungal agent responsible for wheat septoria in temperate regions. It is in autumn that the primary inoculum will start the epidemiological cycle and lead to the first foliar infections. An asymptomatic latent phase then begins and lasts for 14 to 21 days before the emergence of the pycnidia. These reproductive structures contain pycnospores capable of spreading over short distances from a sporulating lesion mainly by splashing during a rain event. As soon as the first symptoms from the primary inoculum appear, the decision to treat must be made. However, visual observations of symptoms reflect infections that occurred 14 to 21 days earlier. The use of systemic molecules (i.e. those capable of penetrating and migrating into plant tissue) should permit to act curatively on leaves for which the disease is still incubating. A race then ensues between the pathogen developing in the tissue and the systemic active ingredient seeking to reach it before the fungal development has reached the point of no return. In this context, the penetration speed of these molecules is one of the essential criteria modulating the effectiveness of treatments, making it possible to make up for a situation of incubating infection.

In addition, repeated usage of a single fungicide often leads to the development of resistance to the fungicide. Many so-called curative active ingredients are known and used in the field against Septoria, all of these molecules are unisites meaning that they subject the targeted fungal pathogen to strong selection pressure on a single site of action. These molecules are thus confronted with the rapid development and dissemination of resistance in populations and are therefore unfavorable to a resistance management strategy. Once resistance is developed, there is a need to revert, restore, increase and/or extend the activity. Moreover, many known fungicides are effective for specific crop and have a limited activity. In order to avoid the generalization of these situations causing losses of effectiveness and yield in the field, technical experts recommend the use of active ingredients with different modes of action or with multi-site action. No specific resistance is established or expected towards them. Most of them are so-called "contact resistant", unable to penetrate plant tissue and therefore only capable of preventive effectiveness. The use of two-way mixtures then presents an opportunity to combine these active ingredients for greater efficacy and better resistance management. However, it also brings complexity in regard to the impact that one molecule can have on the other, which can modulate the effectiveness of each molecule in unexpected ways.

There is also a need for find a way to increase the bioavailability of fungicide(s) in plants. Many known fungicides are effective for specific crop and have a limited bioavailability which effect the efficacy of the fungicide(s).

### SUMMARY OF THE INVENTION

The present invention provides a method of treating a plant or locus against fungal infection comprising applying a combination of an amount of a phthalimide fungicide and an amount of a primary fungicide to the plant or locus so as to thereby treat the plant or locus against fungal infection, wherein (i) the method is more effective against fungal infection than when the amount of the phthalimide fungicide and the amount of a primary fungicide are applied alone, and/or (ii) the amount of the phthalimide fungicide improves the fungicidal efficacy of the amount of the primary fungicide compared to when the same amount of the primary fungicide is applied not in combination with the amount of the phthalimide fungicide.

The present invention provides a method of increasing sensitivity of a fungus to an amount of a primary fungicide comprising applying a combination of an amount of a phthalimide fungicide and the amount of the primary fungicide to the

fungus, so as to thereby increase sensitivity of the fungus to the amount of the primary fungicide.

The present invention provides a method of increasing bioavailability of an amount of a primary fungicide to a plant comprising applying a combination of an amount of a phthalimide fungicide and the amount of the primary fungicide to the plant, so as to thereby increase bioavailability of the amount of the primary fungicide.

The present invention also provides a method of inhibiting fungal mycelium formation comprising applying a combination of an amount of a phthalimide fungicide and an amount of a primary fungicide to the fungus, so as to thereby inhibit fungal mycelium formation.

The present invention also provides a method of prolonging the period of protection against fungal infection and/or control of fungal infection from an application of an amount of a primary fungicide to a plant or locus comprising applying a combination of an amount of a phthalimide fungicide and the amount of the primary fungicide to the plant or locus. In some embodiments, the plant is a crop plant.

The present invention also provides a method of reducing the amount of time needed to achieve a level of fungal control from an application of an amount of primary fungicide to a plant or locus comprising applying a combination of an amount of a phthalimide fungicide and the amount of the primary fungicide to the plant or locus.

The present invention also provides a method of improving development of a plant affected by fungal infection comprising applying a combination of a phthalimide fungicide and a primary fungicide to the plant or a locus thereof so as to improve the development of the plant compared to the development of a plant affected by the same type and degree of fungal infection to which the combination is not applied.

The present invention provides an improved combination comprising an amount of a primary fungicide and an amount of a phthalimide fungicide.

The present invention also provides a fungicidal composition comprising (i) a phthalimide fungicide, (ii) a primary fungicide, and an agriculturally acceptable carrier.

The present invention also provides a process of preparing the composition described herein, comprises the steps of: (i) obtaining an amount of the phthalimide fungicide(s) and an amount of the primary fungicide(s), and (ii) mixing the obtained amount of phthalimide fungicide(s) and the obtained amount of the primary fungicide(s) to obtain the composition.

The present invention also provides a package comprising any one of the combinations disclosed herein.

## BRIEF DESCRIPTION OF THE DRAWINGS

**Figure 1.** Percentage of control of the mixture comprising phosphonates (potassium phosphonate, fosetyl-Al) and phthalimides (captan, folpet) toward *Venturia inaequalis* in young apple plants, variety Golden Delicious.

## DETAILED DESCRIPTION OF THE INVENTION

### Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Throughout the application, descriptions of various embodiments use the term "comprising"; however, it will be understood by one of skill in the art, that in some specific instances, an embodiment can alternatively be described using the language "consisting essentially of" or "consisting of."

As used herein, the term "a" or "an" includes the singular and the plural, unless specifically stated otherwise. Therefore, the terms "a," "an" or "at least one" can be used interchangeably in this application.

As use here in, the term "about" is inclusive of the stated value and means within an acceptable range of deviation for the particular value as determined by one of ordinary skill in the art, considering the measurement in question and the error associated with measurement of the particular quantity (*i.e.* the limitations of the measurement system). For example, "about" can mean within one or more standard deviations, or within ± 30%, 20%, 10%, 5% of the stated value. In this regard, use of the term "about" herein specifically includes ±10% from the indicated values in the range. In addition, the endpoints of all ranges directed to the same component or property herein are inclusive of the endpoints, are independently combinable, and include all intermediate points and ranges.

As used herein, the term "and/or" includes any and all combinations of one or more of the associated listed items. Expressions such as "at least one of," when preceding a list of elements, modify the entire list of elements and do not modify the individual clements of the list.

As used herein, the term "combination" means an assemblage of agrochemicals for application either by simultaneous or contemporaneous application.

As used herein, the term "simultaneous" when used in connection with application of agrochemicals means that the agrochemicals are applied in an admixture, for example, a tank mix. For simultaneous application, the combination may be the admixture or separate containers each containing an agrochemical that are combined prior to application.

The admixture or individual components may be in any physical form, e.g. blend, solution, suspension, dispersion, emulsion, alloy, or the like.

As used herein, the term "contemporaneous" when used in connection with application of agrochemicals means that an individual agrochemical is applied separately from another agrochemical or premixture at the same time or at times sufficiently close together that an activity that is additive or more than additive or synergistic relative to the activity of either agrochemical alone at the same dose is achieved. Benefits of applying the phthalimide fungicide with a primary fungicide, in particular fungicide (A) and fungicide I, include, but are not limited to, increased efficacy, bioavailability, penetration and translocation of the primary fungicide, in particular fungicide (A) and fungicide I.

As used herein, the term "mixture" refers to, but is not limited to, a combination in any physical form, e.g., blend, solution, suspension, dispersion, emulsion, alloy, or the like.

As used herein, the term "tank mix" means one or more of the components of the combination, mixture or composition of the present invention are added are mixed in a spray tank at the time of spray application or prior to spray application.

As used herein, the term "ready mix" means a composition that may be applied to plants directly after dilution. The composition comprises the combination of the active ingredients.

As used herein, the term "composition" includes at least one of the combinations or mixtures of the present invention with agriculturally acceptable carrier.

As used herein, the term "treating a plant or soil against fungal infection" includes, but is not limited to, protecting the plant or soil against fungal attack, preventing fungal infection of the plant or soil, controlling fungal disease infecting the plant or soil, and reducing fungal infection of the plant or soil.

As used herein, the terms "control" or "controlling" or "treating" refers but is not limited to preventing fungal disease, protecting plants from fungal disease, delaying the onset of fungal disease, and combating or killing fungal disease. They also may include the curative and/or eradication action of compounds and compositions on underway fungal diseases. Controlling fungal disease infecting the plant, propagation material of the plant or locus of the plant, controlling a plant or soil disease caused by phytopathologic fungi (pathogen), controlling fungal attack on the plant or, propagation material of the plant or locus of the plant refers to curative application and/or protectant/preventive application and/or persistence application.

The term "applying" or "application", as used herein, refers but is not limited to applying the compounds and compositions of the invention to the plant, to a site of infestation by fungi, to a potential site of infestation by the fungi, which may require protection from infestation, or the environment around the habitat or potential habitat of the fungi. It also refers to the activity of compounds and compositions on plants and fungal tissues with which they come into contact. The application may be by methods described in the present invention such as by spraying, dipping, etc.

As used herein, the term "protectant application" means an application of one or more fungicide for preventing fungal infection of the plant or locus, wherein the fungicidal combination, mixture or composition is applied before infection/disease occurs, before any disease symptoms are shown or when the disease pressure is low. Disease pressure may be assessed based on the conditions associated with disease development such as spore concentration and certain environmental conditions.

As used herein the term "curative application" means an application of one or more fungicide for controlling fungal infection of the plant or locus, wherein the fungicidal combination, mixture or composition is applied after an infection or after disease symptoms are shown. And wherein the fungal infection is reduced and/or curing plant or soil disease caused by phytopathologic fungi.

As used herein, the term "curative treatment" or "curative activity" means an application of one or more pesticide for controlling pest infection of the plant or locus, after an infection or after disease symptoms are shown and/or when the disease pressure is high. Disease pressure may be assessed based on the conditions associated with disease development such as spore concentration and certain environmental conditions. In some embodiments, the pest is a fungus.

As used herein, the term "preventative treatment" or "preventative activity" means an application of one or more pesticide for controlling pest infection of the plant or locus, before an infection or before disease symptoms are shown and/or when the disease pressure is low. Disease pressure may be assessed based on the conditions associated with disease development such as spore concentration and certain environmental conditions. In some embodiments, the pest is a fungus.

As used herein the term "persistence treatment" or "persistence activity" means an application of one or more pesticide for controlling pest infection of the plant or locus over an extended period of time, before an infection or before

fungal disease symptoms are shown and/or when the fungal disease pressure is low. Fungal disease pressure may be assessed based on the conditions associated with fungal disease development such as spore concentration and certain environmental conditions.

In particular, when the term "persistence treatment" or "persistence activity" is used in connection with a fungicide, the term means application of one or more fungicide for controlling fungal infection of the plant or locus over an extended period of inoculation, before an infection or before disease symptoms are shown and/or when the disease pressure is low. Disease pressure may be assessed based on the conditions associated with disease development such as spore concentration and certain environmental conditions.

The term "enhancing crop plants" as used herein means improving one or more of plant quality, plant vigor, nutrient uptake, root system, tolerance to stress factors, and/or yield in a plant to which the mixture or composition described herein is applied as compared to a control plant grown under the same conditions except to which the mixture or composition described herein is not applied.

The term "improving plant quality" as used herein means that one or more traits are improved qualitatively or quantitatively in a plant to which the mixture or composition described herein is applied as compared to the same trait in a control plant grown under the same conditions except to which the mixture or composition described herein is not applied. Such traits include but are not limited to improved visual appearance and composition of the plant *(i.e.* improved color, density, uniformity, compactness), reduced ethylene (reduced production and/or inhibition of reception), improved visual appearance and composition of harvested material (*i.e.* seeds, fruits, leaves, vegetables, shoot/stem/cane),), improved carbohydrate content (*i.e.* increased quantities of sugar and/or starch, improved sugar acid ratio, reduction of reducing sugars, increased rate of development of sugar), improved protein content, improved oil content and composition, improved nutritional value, reduction in anti-nutritional compounds, increased nutrient uptake, stronger and healthier roots, improved organoleptic properties (*i.e.* improved taste), improved consumer health benefits (*i.e.* increased levels of vitamins and antioxidants), improved post-harvest characteristics (*i.e.* enhanced shelf-life and/or storage stability, easier processability, easier extraction of compounds), and/or improved seed quality (*i.e.* for use in following seasons).

As used herein, the term "more effective" includes, but is not limited to, increasing efficacy of fungal disease control, prolonging protection and reducing the amount of time needed to achieve a given level of fungal control, prolonging the duration of protection against fungal attack after application and extending the protection period against fungal attack and/or reducing the amount of time needed to achieve a level of fungal control compared to when each fungicide at the same amount is applied alone. In particular, "more effective" includes increasing efficacy of fungal disease control in an untreated area.

As used herein, the term "effective" when used in connection with any combination, mixture or composition may be but is not limited to increase in controlling fungal disease, increase in preventing fungal disease, decrease time for effective controlling fungal disease, decrease the amount of the fungicide(s) which is required for effective controlling fungal disease, extend the controlling effect of the individual fungicide in the mixture in terms of type of crop and disease, prolong the time of controlling effect of the mixture compared to the individual fungicide in the mixture in terms of type of crop and disease, prolong the time of controlling effect of the individual fungicide in the mixture in terms of type of crop and disease.

In particular, the term "effective" may refer to, increasing efficacy of fungal disease control in untreated plant area, reducing the amount of time needed to achieve a given level of fungal control, extending the protection period against fungal attack and/or reducing the amount of time needed to achieve a level of fungal control.

As used herein, the term "effective amount" refers to an amount of the agrochemical composition or of the mixture which is sufficient for controlling harmful fungi on crop plants and does not cause any significant damage to the treated crop plants.

As used herein, the term "fungicidally effective amount" refers to an amount of the active component that is commercially recommended for use to control fungi. The commercially recommended amount for each active component, often specified as application rates of the commercial formulation, may be found on the label accompanying the commercial formulation. The commercially recommended application rates of the commercial formulation may vary depending on factors such as the plant species and the fungus to be controlled.

As used herein, the term "agriculturally acceptable carrier" means carriers which are known and accepted in the art for the formation of compositions for agricultural or horticultural use.

As used herein, the term "adjuvant" is broadly defined as any substance that itself is not an active ingredient but which enhances or is intended to enhance the effectiveness of the pesticide with which it is used. Adjuvants may be understood to include, but are not limited to, spreading agents, penetrants, compatibility agents, and drift retardants.

As used herein, the term "agriculturally acceptable additives" is defined as any substance that itself is not an active ingredient but is added to the composition such as thickening agent, sticking agents, surfactants, anti-oxidation agent, anti-foaming agents and thickeners.

As used herein, the term "systemic fungicide" is broadly defined as any agrochemical or any active compound that is taken up into the plant tissue. Once inside it can redistribute from the sprayed leaf surface to the lower unsprayed

surface and/or can redistribute through the xylem and/or phloem vessels in any other part of the plant.

As used herein, the term "treated area" refers to an area where the fungicide was applied to.

As used herein, the term "untreated area" refers to an area where the fungicide was not applied to. Presence of the fungicide in an untreated area may be due to translocation.

As used herein, the term "translocation" is synonymous with the term "migration".

As used herein the term "plant" or "crop" includes reference to agricultural crops including field crops (soybean, maize, wheat, rice, etc.), vegetable crops (potatoes, cabbages, etc.), fruits (peach, etc.), semi-perennial crops (sugarcane) and perennial crops (coffee and guava).

As used herein the term "plant" or "crop" includes reference to whole plants, plant organs (e.g. leaves, stems, twigs, roots, trunks, limbs, shoots, fruits etc.), plant cells, seedling or plant seeds. This term also encompasses plant crops such as fruits.

As used herein, the term "plants" refers to any and all physical parts of a plant, including but not limited to seeds, seedlings, saplings, roots, tubers, stems, stalks, foliage, and fruits.

The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts, basal shoots, stolons, and buds and other parts of plants, including seedlings and young plants, which are to be transplanted after germination, rooting or after emergence from soil or any other kind of substrate, be it artificial or natural.

As used herein the term "propagation material" is to be understood to denote all the generative parts of the plant such as seeds and spores, vegetative structures such as bulbs, corms, tubers, rhizomes, roots stems, basal shoots, stolons and buds.

As used herein, the term "cultivated plants" includes plants which have been modified by breeding, mutagenesis or genetic engineering. Genetically modified plants are plants, which their genetic material has been modified by the use of recombinant DNA techniques. Typically, one or more genes have been integrated into the genetic material of such a plant in order to improve certain properties of the plant.

The term "plant health" comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), shortening of stalks, increased diameter of stalks, increased shoot growth, enhanced plant vigor, increased plant stand and early and better germination; or any other advantages familiar to a person skilled in the art.

As used herein, the term "locus" includes not only areas where fungal infection/disease may already be shown, but also areas where fungal infection/disease have yet to show and also area under cultivation. Locus include but is not limited to soil and other plant growth medium.

As used herein, the term "locus" includes a habitat, breeding ground, plant, propagation material, soil, area, material or environment in which a fungal disease is growing or may grow.

As used herein the term "ha" refers to hectare.

As used herein, the term "fungicidal group" refer but is not limited to the differences in the chemical structure(s) and/or mode of action of the fungicides. e.g. multi-site contact fungicide, QiI fungicide (quinone inside inhibitors), QoI fungicide (quinone outside inhibitors) QoSI fungicide (quinone outside stigmatellin subsite inhibitors), SDHI fungicide (succinate dehydrogenase inhibitors), Demethylation Inhibitor fungicide, phenyl amide fungicide, methyl-benzimidazole-carbamate (MBC) fungicide, carboxylic acid amide fungicide, benzamide fungicide, natural fungicide, anilinopyrimidine fungicide, hydroxy-(2-amino)-pyrimidines fungicide, phosphonate fungicide, plant extract fungicide, Keto-Reductase inhibitor fungicide, phenylpyrrole fungicide (PP), aryl phenyl-ketone fungicide, amine fungicide, dinitro aniline fungicide, azanaphthalene fungicide, benzothiadiazole fungicide, carbamate fungicide, cyanoacetamideoxime fungicide, dinitrophenyl-crotonate fungicide, glucopyranosyl antibiotic fungicide, tetrazolyloxime fungicide, thiazolidine fungicide, oxysterol binding protein inhibitor (OSBPI) fungicide, thiophenecarboxamide fungicide, phenylacetamide fungicide, phenyl urea fungicide, polyene fungicide, pyr-hydrazone fungicide, pyrimidinamine fungicide, pyrimidinone fungicide, fungicide (B).

It will be understood that when an element is referred to as being "on" another element, it can be directly in contact with the other element or intervening elements may be present therebetween. In contrast, when an element is referred to as being "directly on" another element, there are no intervening elements present.

As used herein, the term "pathogen" includes "fungal pathogen".

It will be understood that, although the terms first, second, third, etc. may be used herein to describe various elements, components, regions, layers, and/or sections, these elements, components, regions, layers, and/or sections should not be limited by these terms. These terms are only used to distinguish one clement, component, region, layer, or

section from another element, component, region, layer, or section. Thus, a first element, component, region, layer, or section discussed below could be termed a second element, component, region, layer, or section without departing from the teachings of the present embodiments.

## Methods

The present invention provides a method of treating a plant or locus against fungal infection comprising applying a combination of an amount of a phthalimide fungicide and an amount of a primary fungicide to the plant or locus so as to thereby treat the plant or locus against fungal infection, wherein (i) the method is more effective against fungal infection than when the amount of the phthalimide fungicide and the amount of a primary fungicide are applied alone, and/or (ii) the amount of the phthalimide fungicide improves the fungicidal efficacy of the amount of the primary fungicide compared to when the same amount of the primary fungicide is applied not in combination with the amount of the phthalimide fungicide.

In some embodiments, the locus is soil.

In some embodiments, the method comprising applying the amount of the primary fungicide in combination with the amount of the phthalimide fungicide improves the fungicidal efficacy of the amount of primary fungicide compared to when the same amount of the primary fungicide is applied not in combination with the amount of the phthalimide fungicide. The present invention provides a method of improving fungicidal efficacy of an amount of a primary fungicide comprising applying a combination of an amount of a phthalimide fungicide and the amount of the primary fungicide to the fungus, so as to thereby improve the fungicidal efficacy of the amount of the primary fungicide compared to when the same amount of the primary fungicide is applied not in combination with the amount of the phthalimide fungicide.

In some embodiments, fungicidal efficacy is increased by at least 10%, 20%, or 30% compared to when the same amount of the primary fungicide is applied alone. In some embodiments, fungicidal efficacy is increased by at least 50%, 100%, 200% or 300% compared to when the same amount of the primary fungicide is applied alone.

In some embodiments, fungicidal efficacy is measured in a treated area of the plant. In some embodiments, fungicidal efficacy is measured in an untreated area of the plant. In some embodiments, fungicidal efficacy is increased in a treated area of the plant. In some embodiments, fungicidal efficacy is increased in an untreated area of the plant.

In some embodiments, fungicidal efficacy is measured 10 days after treatment. In some embodiments, fungicidal efficacy is measured at least 10 days after treatment. In some embodiments, fungicidal efficacy is measured at least 21 days after treatment. In some embodiments, fungicidal efficacy is measured at least 28 days after treatment.

In some embodiments, the amount of the phthalimide fungicide is effective to increase sensitivity of the fungus to the amount of the primary fungicide compared to the sensitivity of the fungus to the amount of the primary fungicide when it is applied not in combination with the amount of the phthalimide fungicide, so as to thereby improve the fungicidal efficacy of the amount of the primary fungicide. The present invention provides a method of increasing sensitivity of a fungus to an amount of a primary fungicide comprising applying a combination of an amount of a phthalimide fungicide and the amount of the primary fungicide to the fungus, so as to thereby increase sensitivity of the fungus to the amount of the primary fungicide.

In some embodiments, the amount of the phthalimide fungicide is effective to increase bioavailability of the amount of the primary fungicide compared to the bioavailability of the amount of the primary fungicide when it is applied not in combination with the amount of the phthalimide fungicide, so as to thereby improve the fungicidal efficacy of the amount of the primary fungicide. In some embodiments, the method increases the bioavailability the amount of the primary fungicide in the roots. In some embodiments, the method increases the bioavailability of the amount of the primary fungicide in the leaves. The present invention provides a method of increasing bioavailability of an amount of a primary fungicide to a plant comprising applying a combination of an amount of a phthalimide fungicide and the amount of the primary fungicide to the plant, so as to thereby increase bioavailability of the amount of the primary fungicide.

Increasing bioavailability includes increasing penetration of the amount of the primary fungicide into the plant. The primary fungicide may penetrate into the plant by penetrating into leaves (including penetrating leaf cuticle) and/or roots. In some embodiments, applying the amount of the primary fungicide in combination with the amount of the phthalimide fungicide increases penetration of the amount of the primary fungicide into the plant. In some embodiments, applying the amount of the primary fungicide in combination with the amount of the phthalimide fungicide increases penetration of the amount of the primary fungicide into the plant leaf. In some embodiments, applying the amount of the primary fungicide in combination with the amount of the phthalimide fungicide increases penetration of the primary fungicide into the plant root. The present invention provides a method of increasing penetration of an amount of a primary fungicide into a plant comprising applying a combination of an amount of a phthalimide fungicide and the amount of the primary fungicide to the plant, so as to thereby increase penetration of the amount of the primary fungicide into the plant.

Increasing bioavailability also includes increased translocation of the amount of the primary fungicide once inside the plant, including leaves. In some embodiments, applying the amount of the primary fungicide in combination with the amount of the phthalimide fungicide increases translocation of the amount of the primary fungicide after penetration into the plant. The present invention provides a method of increasing translocation of an amount of a primary fungicide in a plant

comprising applying a combination of an amount of a phthalimide fungicide and the amount of the primary fungicide to the plant, so as to thereby increase translocation of the amount of the primary fungicide in the plant.

In some embodiments, treating a plant or soil against fungal infection comprises inhibiting fungal mycelium formation. The present invention also provides a method of inhibiting fungal mycelium formation comprising applying a combination of an amount of a phthalimide fungicide and an amount of a primary fungicide to the fungus, so as to thereby inhibit fungal mycelium formation.

In some embodiments, treating a plant or locus against fungal infection comprises combating phytopathogenic diseases on the plant or locus. The present invention also provides a method of combating phytopathogenic diseases on a plant or locus which comprises applying to the plant or to the locus a combination of a phthalimide fungicide and a primary fungicide. In some embodiments, the plant is a crop plant.

In some embodiments, treating the plant or locus against fungal infection comprises protecting the plant or locus from fungal attack.

In some embodiments, treating the plant or locus against fungal infection comprises preventing fungal infection of the plant or locus.

In some embodiments, treating the plant or locus against fungal infection comprises controlling fungal disease affecting the plant or locus.

In some embodiments, treating the plant or locus against fungal infection comprises controlling a fungal pathogen, a fungal pathogen group or a fungal pathogen class affecting the plant or locus.

In some embodiments, treating the plant or locus against fungal infection comprises controlling a fungal disease caused by a fungal pathogen, a fungal pathogen group or a fungal pathogen class affecting the plant or locus.

In some embodiments, treating the plant or locus against fungal infection comprises reducing fungal infection of the plant or locus.

In some embodiments, the method is effective for prolonging the period of protection against fungal infection and/or control of fungal infection than when the amount of the phthalimide fungicide and the amount of a primary fungicide are applied alone. The present invention also provides a method of prolonging the period of protection against fungal infection and/or control of fungal infection from an application of an amount of a primary fungicide to a plant or locus comprising applying a combination of an amount of a phthalimide fungicide and the amount of the primary fungicide to the plant or locus. In some embodiments, the plant is a crop plant.

In some embodiments, the period of protection against fungal infection and/or control of fungal infection is prolonged by at least 7 days, 14 day, 21 days, or 28 days.

In some embodiments, the method is effective for reducing the amount of time needed to achieve a level of fungal control compared to when the amount of the phthalimide fungicide and the amount of a primary fungicide are applied alone. The present invention also provides a method of reducing the amount of time needed to achieve a level of fungal control from an application of an amount of primary fungicide to a plant or locus comprising applying a combination of an amount of a phthalimide fungicide and the amount of the primary fungicide to the plant or locus.

An example for reduction is, if each fungicide is applied alone achieves 50% control of fungal disease 7 days after application, the method disclosed herein achieves 50% control of fungal diseases 2 days after application where each fungicide is applied at the amount.

In some embodiments, the amount of time needed to achieve a level of fungal control is reduced by at least 1 day, 2 days, 3 days, 4 day, 5 days, 7 days, 10 days, 14 days or 21 days, or 28 days.

In some embodiments, the method is effective for improving plant development compared to the development of a plant affected by the same type and degree of fungal infection to which the combination is not applied. The present invention also provides a method of improving development of a plant affected by fungal infection comprising applying a combination of a phthalimide fungicide and a primary fungicide to the plant or a locus thereof so as to improve the development of the plant compared to the development of a plant affected by the same type and degree of fungal infection to which the combination is not applied. In some embodiments, the plant is a crop plant.

In some embodiments, the plant development is improved by treating the plant against fungal attack.

In some embodiments, improving plant development comprises enhancing crop plants. In some embodiment, improving plant development comprises improving plant quality.

Improving plant development includes, but is not limited to, enhancing the root systems, enhancing shoot of the plant, enhancing plant vigor, enhancing greening effect on leaves and/or enhancing plant potential yield.

In some embodiments, improving plant development comprises enhancing the root system. In some embodiments, enhancement in root system is measured by root weight. In some embodiments, root weight is increased by at least 1%, 5%, 10, 20%, 30%, 40%, 50%, 60%, 70%, 80%, or 90%.

In some embodiments, improving plant development comprises enhancing shoot of the plant. In some embodiments, enhancement in shoot is measured by shoot weight. In some embodiments, shoot weight is increased by at least 1%, 5%, 10, 20%, 30%, 40%, 50%, 60%, 70%, 80%, or 90%.

In some embodiments, improving plant development comprises enhancing plant vigor. In some embodiments,

plant vigor is assessed using the relative vigor index. In some embodiments, plant vigor is increased by at least 1%, 5%, 10, 20%, 30%, 40%, 50%, 60%, 70%, 80%, or 90%.

In some embodiments, improving plant development comprises enhancing greening effect on leaves. In some embodiments, greening effect on leaves is assessed using the relative vigor index. In some embodiments, greening effect on leaves is increased by at least 1%, 5%, or 10%.

In some embodiments, improving plant development comprises enhancing plant yield. In some embodiments, plant yield is increased by at least 1%, 5%, 10, 20%, 30%, 40%, 50%, 60%, 70%, 80%, or 90%.

In some embodiments, the combination is more effective in treating the plant or locus against fungal infection than when each fungicide at the same amount is applied alone.

In some embodiments, the combination comprises one or more primary fungicide(s) and the combination of the phthalimide fungicide and at least one of the primary fungicides applied is more effective in treating the plant or soil against fungal infection than when each fungicide at the same amount is applied alone. In some embodiments, the combination comprises two or more primary fungicides and the combination of the phthalimide fungicide and at least two of the primary fungicides applied is more effective in treating the plant or soil against fungal infection than when each fungicide at the same amount is applied alone.

In some embodiments, the combination is more effective in treating the plant or locus against fungal infection than when the primary fungicide at the same amount is applied alone.

In some embodiments, the amount of phthalimide fungicide applied is less than the fungicidally effective amount of the phthalimide fungicide when the phthalimide fungicide is applied alone.

In some embodiments, the amount of the primary fungicide applied is less than the fungicidally effective amount of the primary fungicide when the primary fungicide is applied not in combination with the phthalimide fungicide.

In some embodiments, the method is effective for improving potentiated efficacy, improving long lasting effect, improving anti-resistance activity, improving activity against resistant strains, improving green leaf area, improving greening effect, increasing disease spectrum of activity, increasing efficacy against disease not controlled by the solo fungicides, increasing yield, increasing protein content, increasing sugar content, increasing °Brix, improving color grading of fruits, increasing thousand kernels weight, increasing test weight or hectoliter weight, increasing fruit size, increasing number of marketable fruits, improving plant vigor, and/or reducing risks of adverse effects on plants.

***Preferred phthalimide fungicides, primary fungicides and combinations***

***i) Preferred phthalimide fungicides***

In some embodiments, the phthalimide fungicide is selected from the group consisting of captan, folpet, captafol, and any combination thereof. In some embodiments, the phthalimide fungicide is captan. In some embodiments, the phthalimide fungicide is folpet. In some embodiments, the phthalimide fungicide is captafol.

In some embodiments, the phthalimide fungicide is not folpet. In some embodiments, the phthalimide fungicide is other than folpet. In some embodiments, the method is free of application of folpet.

***ii) Preferred primary fungicides***

In some embodiments, the primary fungicide is selected from the group consisting of multi-site contact fungicide, QiI fungicide (quinone inside inhibitors), QoI fungicide (quinone outside inhibitors), QoSI fungicide (quinone outside stigmatellin subsite inhibitors), SDHI fungicide (succinate dehydrogenase inhibitors), demethylation inhibitor fungicide, phenyl amide fungicide, methyl-benzimidazole-carbamate (MBC) fungicide, carboxylic acid amide fungicide, benzamide fungicide, natural fungicide, anilinopyrimidine fungicide, hydroxy-(2-amino)-pyrimidines fungicide, phosphonate fungicide, plant extract fungicide, keto-reductase inhibitor fungicide, phenylpyrrole fungicide (PP), aryl phenyl-ketone fungicide, amine fungicide, dinitro aniline fungicide, azanaphthalene fungicide, benzothiadiazole fungicide, carbamate fungicide, cyanoacetamideoxime fungicide, dinitrophenyl-crotonate fungicide, glucopyranosyl antibiotic fungicide, tetrazolyloxime fungicide, thiazolidine fungicide, oxysterol binding protein inhibitor (OSBPI) fungicide, thiophenecarboxamide fungicide, phenylacetamide fungicide, phenyl urea fungicide, polyene fungicide, pyr-hydrazone fungicide, pyrimidinamine fungicide, pyrimidinone fungicide, fungicide (B) and any combination thereof.

In some embodiments, the primary fungicide is fungicide (A). In some embodiments, fungicide (A) is selected from the group consisting of multi-site contact fungicide, QiI fungicide (quinone inside inhibitors), QoI fungicide (quinone outside inhibitors), QoSI fungicide (quinone outside stigmatellin subsite inhibitors), SDHI fungicide (succinate dehydrogenase inhibitors), demethylation inhibitor fungicide, phenyl amide fungicide, methyl-benzimidazole-carbamate (MBC) fungicide, carboxylic acid amide fungicide, benzamide fungicide, natural fungicide, anilinopyrimidine fungicide, hydroxy-(2-amino)-pyrimidines fungicide, phosphonate fungicide, plant extract fungicide, keto-reductase inhibitor fungicide, phenylpyrrole fungicide (PP), aryl phenyl-ketone fungicide, amine fungicide, dinitro aniline fungicide, azanaphthalene

fungicide, benzothiadiazole fungicide, carbamate fungicide, cyanoacetamideoxime fungicide, dinitrophenyl-crotonate fungicide, glucopyranosyl antibiotic fungicide, tetrazolyloxime fungicide, thiazolidine fungicide, oxysterol binding protein inhibitor (OSBPI) fungicide, thiophenecarboxamide fungicide, phenylacetamide fungicide, phenyl urea fungicide, polyene fungicide, pyr-hydrazone fungicide, pyrimidinamine fungicide, pyrimidinone fungicide, fungicide (B) and any combination thereof.

In some embodiments, the primary fungicide is multi-site contact fungicide. In some embodiments, the primary fungicide is QiI fungicide (quinone inside inhibitors). In some embodiments, the primary fungicide is QoI fungicide (quinone outside inhibitors). In some embodiments, the primary fungicide is QoSI fungicide (quinone outside stigmatellin subsite inhibitors). In some embodiments, the primary fungicide is SDHI fungicide (succinate dehydrogenase inhibitors). In some embodiments, the primary fungicide is a demethylation inhibitor fungicide (DMI fungicide). In some embodiments, the primary fungicide is phenyl amide fungicide. In some embodiments, the primary fungicide is methyl-benzimidazole-carbamate (MBC) fungicide. In some embodiments, the primary fungicide is carboxylic acid amide fungicide. In some embodiments, the primary fungicide is benzamide fungicide. In some embodiments, the primary fungicide is natural fungicide. In some embodiments, the primary fungicide is anilinopyrimidine fungicide. In some embodiments, the primary fungicide is hydroxy-(2-amino)-pyrimidines fungicide. In some embodiments, the primary fungicide is phosphonate fungicide. In some embodiments, the primary fungicide is plant extract fungicide. In some embodiments, the primary fungicide is Keto-Reductase inhibitor fungicide. In some embodiments, the primary fungicide is phenylpyrrole fungicide (PP). In some embodiments, the primary fungicide is aryl phenyl-ketone fungicide. In some embodiments, the primary fungicide in amine fungicide. In some embodiments, the primary fungicide is dinitro aniline fungicide. In some embodiments, the primary fungicide is azanaphthalene fungicide. In some embodiments, the primary fungicide is benzothiadiazole fungicide. In some embodiments, the primary fungicide is carbamate fungicide. In some embodiments, the primary fungicide is cyanoacetamideoxime fungicide. In some embodiments, the primary fungicide is dinitrophenyl-crotonate fungicide. In some embodiments, the primary fungicide is glucopyranosyl antibiotic fungicide. In some embodiments, the primary fungicide is tetrazolyloxime fungicide. In some embodiments, the primary fungicide is thiazolidine fungicide. In some embodiments, the primary fungicide is oxysterol binding protein inhibitor (OSBPI) fungicide. In some embodiments, the primary fungicide is thiophenecarboxamide fungicide. In some embodiments, the primary fungicide is phenylacetamide fungicide. In some embodiments, the primary fungicide is phenyl urea fungicide. In some embodiments, the primary fungicide is polyene fungicide. In some embodiments, the primary fungicide is pyr-hydrazone fungicide. In some embodiments, the primary fungicide is pyrimidinamine fungicide. In some embodiments, the primary fungicide is pyrimidinone fungicide. In some embodiments, the primary fungicide is fungicide (B).

The multi-site contact fungicide according to the invention inhibits fungal growth through multiple sites of action. The term contact fungicide as used herein denotes a fungicide that remains at the site where it is applied but does not travel within the plant.

Multi-site contact fungicide according to the invention refers to multi-site contact fungicide which is different from phthalimide fungicide.

Multi-site contact fungicide according to the invention is selected from the group consisting of thiocarbamate, maleimide, quinoxalines, quinones, triazines, bis-guanidines, sulfamides, chloronitriles, dithio-carbamates, inorganic fungicide and any combination thereof.

In some embodiment, the multi-site contact fungicide according to the invention is not a phthalimide fungicide. In some embodiments, the thiocarbamate is methasulfocarb. In some embodiments, maleimide is fluoroimide. In some embodiments, the quinoxaline is selected from the group consisting of chinomethionat, quinomethionate, and a combination thereof. In some embodiments, the quinone is dithianon. In some embodiments, the triazine is anilazine. In some embodiments, the bis-guanidine is selected from the group consisting of guazatine, the iminoctadine and any combination thereof. In some embodiments, the sulfamide is selected from the group consisting of dichlofluanid, tolylfluanid and any combination thereof. In some embodiments, the chloronitrile is chlorothalonil. In some embodiments, the dithio-carbamate is selected from the group consisting of ferbam, mancozeb, maneb, metiram, propineb, thiram, zinc thiazole, zineb, ziram and any combination thereof. In some embodiments, the inorganic fungicide is selected from the group consisting of copper, sulphur and a combination thereof.

In some embodiments, the multi-site contact fungicide is selected from the group consisting of copper, sulphur, anilazine, dithianon, febram, mancozeb, zinc thiazole, chlorothalonil, maneb, propineb, metiram, thiram, zineb, ziram and any combination thereof. In some embodiments, the multi-site contact fungicide is selected from the group consisting of copper, sulphur, and any combination thereof. In some embodiments, the multi-site contact fungicide is sulphur. In some embodiments, the multi-site contact fungicide is copper. In some embodiments, the multi-site contact fungicide is mancozeb. In some embodiments, the multi-site contact fungicide is chlorothalonil.

As used herein, the term "copper" includes all forms of copper, such as copper oxychloride, copper sulphate, copper hydroxide and its complexes or chelates with amino acids, peptides, EDTA, urea, and octanoic or gluconic acids.

In some embodiments, the QiI (quinone inside inhibitors) is selected from the group consisting of amisulbrom, cyazofamid, fenpicoxamid and any combination thereof.

In some embodiments, the QiI (quinone inside inhibitors) is amisulbrom. In some embodiments, the QiI (quinone inside inhibitors) is cyazofamid. In some embodiments, the QiI (quinone inside inhibitors) is fenpicoxamid.

In some embodiments, the QoI (quinone outside inhibitors) is selected from the group consisting of azoxystrobin, kresoxim-methyl, picoxystrobin, fluxastrobin, dimoxystrobin, pyraclostrobin, trifloxystrobin, coumoxystrobin, fenaminstrobin, pyrametostrobin, triclopyricarb, pyribencarb, pyraoxystrobin, metyltetraprole, mandestrobin, famoxadone, oryzastrobin, enoxastrobin, pyraclostrobin, fluoxastrobin, flufenostrin, flufenoxystrobin, metominostrobin, triclopyricarb; pyriminostrobin, florylpicoxamid, and any combination thereof.

In some embodiments, the QoI (quinone outside inhibitors) is azoxystrobin. In some embodiments, the QoI (quinone outside inhibitors) is kresoxim-methyl. In some embodiments, the QoI (quinone outside inhibitors) is picoxystrobin. In some embodiments, the QoI (quinone outside inhibitors) is fluxastrobin. In some embodiments, the QoI (quinone outside inhibitors) is dimoxystrobin. In some embodiments, the QoI (quinone outside inhibitors) is pyraclostrobin. In some embodiments, the QoI (quinone outside inhibitors) is trifloxystrobin. In some embodiments, the QoI (quinone outside inhibitors) is coumoxystrobin. In some embodiments, the QoI (quinone outside inhibitors) is fenaminstrobin. In some embodiments, the QoI (quinone outside inhibitors) is pyrametostrobin. In some embodiments, the QoI (quinone outside inhibitors) is triclopyricarb. In some embodiments, the QoI (quinone outside inhibitors) is pyribencarb. In some embodiments, the QoI (quinone outside inhibitors) is pyraoxystrobin. In some embodiments, the QoI (quinone outside inhibitors) is metyltetraprole. In some embodiments, the QoI (quinone outside inhibitors) is mandestrobin. In some embodiments, the QoI (quinone outside inhibitors) is famoxadone. In some embodiments, the QoI (quinone outside inhibitors) is oryzastrobin. In some embodiments, the QoI (quinone outside inhibitors) is enoxastrobin. In some embodiments, the QoI (quinone outside inhibitors) is flufenostrin. In some embodiments, the QoI (quinone outside inhibitors) is flufenoxystrobin. In some embodiments, the QoI (quinone outside inhibitors) is metominostrobin. In some embodiments, the QoI (quinone outside inhibitors) is fluoxastrobin. In some embodiments, the QoI (quinone outside inhibitors) is triclopyricarb. In some embodiments, the QoI (quinone outside inhibitors) is pyriminostrobin. In some embodiments, the QoI (quinone outside inhibitors) is florylpicoxamid

In some embodiments, the QoSI (quinone outside stigmatellin inhibitors) is ametoctradin.

In some embodiments, the SDHI (succinate dehydrogenase inhibitors) fungicide is selected from the group consisting of fluxapyroxad, penflufen, bixafen, isopyrazam, sedaxane, benzovindiflupyr, thifluzamide, isofetamid, fluopyram, pydiflumetofen, pyraziflumid, flutolanil, carboxin, boscalid, fluindapyr, penthiopyrad, isoflucypram inpyrfluxam, furametpyr, benodanil, mepronil, fenfuram, oxycarboxin, pyrapropoyne, flubeneteram, quinofumelin and any combination thereof.

In some embodiments, the SDHI (succinate dehydrogenase inhibitors) fungicide is selected from the group consisting of penflufen, bixafen, isopyrazam, sedaxane, benzovindiflupyr, thifluzamide, isofetamid, fluopyram, pydiflumetofen, pyraziflumid, flutolanil, carboxin, boscalid, fluindapyr, penthiopyrad, isoflucypram inpyrfluxam, furametpyr, benodanil, mepronil, fenfuram, oxycarboxin, pyrapropoyne, flubeneteram, quinofumelin and any combination thereof.

In some embodiments, the SDHI (succinate dehydrogenase inhibitors) fungicide is fluxapyroxad. In some embodiments, the SDHI (succinate dehydrogenase inhibitors) fungicide is penflufen. In some embodiments, the SDHI (succinate dehydrogenase inhibitors) fungicide is bixafen. In some embodiments, the SDHI (succinate dehydrogenase inhibitors) fungicide is isopyrazam. In some embodiments, the SDHI (succinate dehydrogenase inhibitors) fungicide is sedaxane. In some embodiments, the SDHI (succinate dehydrogenase inhibitors) fungicide is benzovindiflupyr. In some embodiments, the SDHI (succinate dehydrogenase inhibitors) fungicide is thifluzamide. In some embodiments, the SDHI (succinate dehydrogenase inhibitors) fungicide is isofetamid. In some embodiments, the SDHI (succinate dehydrogenase inhibitors) fungicide is fluopyram. In some embodiments, the SDHI (succinate dehydrogenase inhibitors) fungicide is pydiflumetofen. In some embodiments, the SDHI (succinate dehydrogenase inhibitors) fungicide is pyraziflumid. In some embodiments, the SDHI (succinate dehydrogenase inhibitors) fungicide is flutolanil. In some embodiments, the SDHI (succinate dehydrogenase inhibitors) fungicide is carboxin. In some embodiments, the SDHI (succinate dehydrogenase inhibitors) fungicide is boscalid. In some embodiments, the SDHI (succinate dehydrogenase inhibitors) fungicide is fluindapyr. In some embodiments, the SDHI (succinate dehydrogenase inhibitors) fungicide is penthiopyrad. In some embodiments, the SDHI (succinate dehydrogenase inhibitors) fungicide is isoflucypram. In some embodiments, the SDHI (succinate dehydrogenase inhibitors) fungicide is inpyrfluxam. In some embodiments, the SDHI (succinate dehydrogenase inhibitors) fungicide is furametpyr. In some embodiments, the SDHI (succinate dehydrogenase inhibitors) fungicide is benodanil. In some embodiments, the SDHI (succinate dehydrogenase inhibitors) fungicide is mepronil. In some embodiments, the SDHI (succinate dehydrogenase inhibitors) fungicide is fenfuram. In some embodiments, the SDHI (succinate dehydrogenase inhibitors) fungicide is oxycarboxin. In some embodiments, the SDHI (succinate dehydrogenase inhibitors) fungicide is quinofumelin. In some embodiments, the SDHI (succinate dehydrogenase inhibitors) fungicide is pyrapropoyne. In some embodiments, the SDHI (succinate dehydrogenase inhibitors) fungicide is flubeneteram.

In some embodiments, the SDHI (succinate dehydrogenase inhibitors) fungicide is different from fluxapyroxad. In some embodiments, the SDHI (succinate dehydrogenase inhibitors) fungicide is not fluxapyroxad. In some embodiments, the SDHI (succinate dehydrogenase inhibitors) fungicide is other than fluxapyroxad. In some embodiments, the method is free of application of fluxapyroxad.

In some embodiments, the demethylation inhibitor fungicide (DMI fungicide) is selected from the group consisting of ipconazole, tebuconazole, metconazole, fenbuconazole, bromuconazole, tetraconazole, flutriafol, penconazole, difenoconazole, prothioconazole, epoxiconazole, mefentrifluconazole, triticonazole, imazalil, prochloraz, lobutanil, azaconazole, etaconazole, bitertanol, fluquinconazole, myclobutanil, flusilazole, cyproconazole, triadimenol, hexaconazole, simeconazole, imibenconazole, diniconazole, pyrisoxazole and any combination thereof.

In some embodiments, the demethylation inhibitor fungicide (DMI fungicide) is ipconazole. In some embodiments, the demethylation inhibitor fungicide (DMI fungicide) is tebuconazole. In some embodiments, the demethylation inhibitor fungicide (DMI fungicide) is metconazole. In some embodiments, the demethylation inhibitor fungicide (DMI fungicide) is fenbuconazole. In some embodiments, the demethylation inhibitor fungicide (DMI fungicide) is bromuconazole. In some embodiments, the demethylation inhibitor fungicide (DMI fungicide) is tetraconazole. In some embodiments, the demethylation inhibitor fungicide (DMI fungicide) is flutriafol. In some embodiments, the demethylation inhibitor fungicide (DMI fungicide) is penconazole. In some embodiments, the demethylation inhibitor fungicide (DMI fungicide) is difenoconazole. In some embodiments, the demethylation inhibitor fungicide (DMI fungicide) is prothioconazole. In some embodiments, the demethylation inhibitor fungicide (DMI fungicide) is epoxiconazole. In some embodiments, the demethylation inhibitor fungicide (DMI fungicide) is mefentrifluconazole. In some embodiments, the demethylation inhibitor fungicide (DMI fungicide) is triticonazole. In some embodiments, the demethylation inhibitor fungicide (DMI fungicide) is imazalil. In some embodiments, the demethylation inhibitor fungicide (DMI fungicide) is prochloraz. In some embodiments, the demethylation inhibitor fungicide (DMI fungicide) is lobutanil. In some embodiments, the demethylation inhibitor fungicide (DMI fungicide) is azaconazole. In some embodiments, the demethylation inhibitor fungicide (DMI fungicide) is etaconazole. In some embodiments, the demethylation inhibitor fungicide (DMI fungicide) is bitertanol. In some embodiments, the demethylation inhibitor fungicide (DMI fungicide) is fluquinconazole. In some embodiments, the demethylation inhibitor fungicide (DMI fungicide) is myclobutanil. In some embodiments, the demethylation inhibitor fungicide (DMI fungicide) is flusilazole. In some embodiments, the demethylation inhibitor fungicide (DMI fungicide) is cyproconazole. In some embodiments, the demethylation inhibitor fungicide (DMI fungicide) is triadimenol. In some embodiments, the demethylation inhibitor fungicide (DMI fungicide) is hexaconazole. In some embodiments, the demethylation inhibitor fungicide (DMI fungicide) is simeconazole. In some embodiments, the demethylation inhibitor fungicide (DMI fungicide) is imibenconazole. In some embodiments, the demethylation inhibitor fungicide (DMI fungicide) is diniconazole. In some embodiments, the demethylation inhibitor fungicide (DMI fungicide) is pyrisoxazole.

In some embodiments, the demethylation inhibitor fungicide (DMI fungicide) is not tebuconazole. In some embodiments, the demethylation inhibitor fungicide (DMI fungicide) is other than tebuconazole. In some embodiments, the method is free of application of tebuconazole.

In some embodiments, the phenyl amide fungicide is selected from the group consisting of benalaxyl, metalaxyl, kiralaxyl, mefenoxan, metalaxyl-M and any combination thereof.

In some embodiments, the phenyl amide fungicide is benalaxyl. In some embodiments, the phenyl amide fungicide is metalaxyl. In some embodiments, the phenyl amide fungicide is kiralaxyl. In some embodiments, the phenyl amide fungicide is mefenoxan. In some embodiments, the phenyl amide fungicide is metalaxyl-M.

In some embodiments, the OSBPI fungicide is selected from the group consisting of fluoxapiprolin, oxathiapiprolin and a combination thereof.

In some embodiments, the OSBPI fungicide fluoxapiprolin. In some embodiments, the OSBPI fungicide oxathiapiprolin.

In some embodiments, the MBC fungicide is selected from the group consisting of carbendazim, thiabendazole, thiophanate-methyl and a combination thereof.

In some embodiments, the MBC fungicide is carbendazim. In some embodiments, the MBC fungicide is thiabendazole. In some embodiments, the MBC fungicide is thiophanate-methyl.

In some embodiments, the keto-reductase inhibitor fungicide is selected from the group consisting of fenhexamid, fenpyrazamine and a combination thereof.

In some embodiments, the keto-reductase inhibitor is fenhexamid. In some embodiments, the keto-reductase inhibitor is fenpyrazamine.

In some embodiments the carboxylic acid amide fungicide is selected from the group consisting of benthiavalicarb, dimethomorph, iprovalicard, mandipropamid, valifenalate and any combination thereof.

In some embodiments, the carboxylic acid amide fungicide is benthiavalicarb. In some embodiments, the carboxylic acid amide fungicide is dimethomorph. In some embodiments, the carboxylic acid amide fungicide isiprovalicard. In some embodiments, the carboxylic acid amide fungicide is mandipropamid. In some embodiments, the carboxylic acid amide fungicide is valifenalate.

In some embodiments, the benzamide fungicide is selected from the group consisting of fluopicolide, fluopimomide, zoxamide and any combination thereof.

In some embodiments, the benzamide fungicide is fluopicolide. In some embodiments, the benzamide fungicide is fluopimomide. In some embodiments, the benzamide fungicide is zoxamide.

In some embodiments, the phenylpyrrole fungicide is selected from the group consisting of fludioxonil, fenpiclonil and a combination thereof.

In some embodiments, the phenylpyrrole fungicide is fludioxonil. In some embodiments, the phenylpyrrole fungicide is fenpiclonil.

In some embodiments, the aryl phenyl-ketone fungicide is selected from the group consisting of metrafenone, pyriofenone and any combination thereof.

In some embodiments, the aryl phenyl-ketone fungicide is metrafenone. In some embodiments, the aryl phenyl-ketone fungicide pyriofenone.

In some embodiments, the amine fungicide is selected from the group consisting of fenpropidin, spiroxamine and any combination thereof. In some embodiments, the amine fungicide is a morpholine fungicide.

In some embodiments, the amine fungicide is fenpropidin. In some embodiments, the amine fungicide is spiroxamine.

In some embodiments, the dinitro aniline fungicide is selected from the group consisting of fluazinam, 2, 6- dinitro-aniline fungicide, and a combination thereof.

In some embodiments, the dinitro aniline fungicide is fluazinam. In some embodiments, dinitro aniline fungicide is a 2, 6- dinitro-aniline fungicide.

In some embodiments, the azanaphthalene fungicide is proquinazid.

In some embodiments, the benzothiadiazole fungicide is acibenzolar-S-methyl.

In some embodiments, the carbamate fungicide is selected from the group consisting of propamocarb, iodocarb, prothiocarb and any combination thereof.

In some embodiments, the carbamate fungicide is propamocarb, In some embodiments, the carbamate fungicide is iodocarb. In some embodiments, the carbamate fungicide is prothiocarb.

In some embodiments, the cyanoacetamideoxime fungicide is cymoxanil.

In some embodiments, the dinitrophenyl-crotonate fungicide is meptyldinocap.

In some embodiments, the glucopyranosyl antibiotic fungicide is validamycin.

In some embodiments, the tetrazolyloxime fungicide is picarbutrazox.

In some embodiments, the thiazolidine fungicide is flutianil.

In some embodiments, the thiophenecarboxamide fungicide is silthiofam.

In some embodiments, the natural fungicide is laminarin.

In some embodiments, the phenylacetamide fungicide is cyflufenamide.

In some embodiments, the phenyl urea fungicide is pencycuron.

In some embodiments, the polyene fungicide is natamycin.

In some embodiments, the pyr-hydrazone fungicide is ferimzone.

In some embodiments, the pyrimidinamine fungicide is diflumetorim.

In some embodiments, the anilinopyrimidine fungicide is selected from the group consisting of cyprodinil, mepanipyrim, pyrimethanil and any combination thereof.

In some embodiments, the anilinopyrimidine fungicide is cyprodinil. In some embodiments, the anilinopyrimidine fungicide is mepanipyrim. In some embodiments, the anilinopyrimidine fungicide is pyrimethanil.

In some embodiments, the hydroxy-(2-amino)-pyrimidines fungicide is selected from the group consisting of bupirimate, dimethirimol, ethirimol and any combination thereof.

In some embodiments, the hydroxy-(2-amino)-pyrimidine fungicide is bupirimate. In some embodiments, the hydroxy-(2-amino)-pyrimidinefungicide is dimethirimol. In some embodiments, the hydroxy-(2-amino)-pyrimidine fungicide is ethirimol.

In some embodiments, the fungicide (B) is selected from the group consisting of tebufloquin, tolprocarb, dichlobentiazox, aminopyrifen, dipymetitrone and any combination thereof.

In some embodiments, the fungicide (B) is tebufloquin. In some embodiments, the fungicide (B) is tolprocarb. In some embodiments, the fungicide (B) is dichlobentiazox. In some embodiments, the fungicide (B) is aminopyrifen. In some embodiments, the fungicide (B) is dipymetitrone.

In some embodiments, the phosphonate fungicide is selected from the group consisting of fosetyl-Al (aluminum triethyl phosphonate), K-phosphonate, phosphorous acid and salts thereof, like disodium phosphonate (sodium phosphite), and esters thereof, like ethyl phosphonate and sodium ethyl phosphonate, and any combination thereof.

In some embodiments, the phosphonate fungicide is fosetyl-Al (aluminum triethyl phosphonate). In some embodiments, the phosphonate fungicide is K-phosphonate. In some embodiments, the phosphonate fungicide is phosphorous acid and salt thereof, like disodium phosphonate (sodium phosphite), and esters thereof, like ethyl phosphonate and sodium ethyl phosphonate.

In some embodiments, the phosphonate fungicide is phosphorous acid and its (alkali metal or alkaline earth

metal) salts such as potassium phosphites (e.g. $KH_2PO_3$ and $K_2HPO_3$, $Li_2HPO_3$), sodium phosphites such as disodium hydrogen phosphite and monosodium dihydrogen phosphite, ammonium phosphites, and (C-C4) alkyl esters of phosphorous acid and their salts such as aluminum ethyl phosphite (fosetyl-Al), calcium ethyl phosphite, magnesium isopropyl phosphite, magnesium isobutyl phosphite, magnesium sec-butyl phosphite, aluminum N-butyl phosphite, and any combination thereof.

In some embodiments, the salt of the phosphorous acid is an alkali metal salt or alkaline earth metal salt. In some embodiments, the phosphonate fungicide is potassium phosphonate. In some embodiments, the phosphonate fungicide is disodium phosphonate. In some embodiments, the phosphonate fungicide is sodium phosphites.

In some embodiments, the plant extract fungicide is selected from the group consisting of a fungicide extracted from Melaleuca altemifolia, a fungicide extracted from Swinglea glutinosa, a fungicide extracted Reynoutria sachalinensis, a fungicide extracted from cotyledons of lupine plantlets, a fungicide extracted from plant oil(s), and any combination thereof.

In some embodiments, the plant extract fungicide is a fungicide extracted from Melaleuca altemifolia. In some embodiments, the plant extracted fungicide is a fungicide extracted from Swinglea glutinosa. In some embodiments, the plant extracted fungicide is a fungicide extracted from Reynoutria sachalinensis. In some embodiments, the plant extracted fungicide is a fungicide extracted from cotyledons of lupine plantlets. In some embodiments, the plant extracted fungicide is a fungicide extracted from plant oil(s).

In some embodiments, the plant oil is selected from the group consisting of eugenol, geraniol, thymol and any combination thereof.

In some embodiments, plant extracted fungicide is selected from the group consisting of terpene hydrocarbons, terpene alcohol, terpene phenols and any combination thereof.

In some embodiments, the plant oil is a mixture of at least two terpenes selected from the group consisting of eugenol, geraniol, thymol, eucalyptol, eugenol, geraniol, myrcene, limonene, linalool, pinene, terpineol, thymol and combination thereof.

In some embodiments, the plant oil is a mixture of eugenol, geraniol, thymol or combination thereof.

In some embodiments, the pyrimidinone fungicide is a fluoropyrimidinone fungicide.

In some embodiments, the fluoropyrimidinone fungicide is 5-fluoro-4-imino-3-methyl-1-tosyl-3,4-dihydropyrimidin-2(1*H*)-one of the Formula I

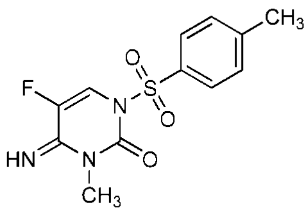

Formula I

In some embodiments, the combination comprises a multi-site contact fungicide. In some embodiments, the amount of the multi-site contact fungicide in the mixture or composition is less than the fungicidally effective amount of the multi-site contact fungicide when the multi-site contact fungicide is used alone.

In some embodiments, the combination comprises a QiI fungicide (quinone inside inhibitors). In some embodiments, the amount of the QiI fungicide in the mixture or composition is less than the fungicidally effective amount of the QiI fungicide when the QiI fungicide is used alone.

In some embodiments, the combination comprises a QoI fungicide (quinone outside inhibitors). In some embodiments, the amount of the QoI fungicide (quinone outside inhibitors) in the combination is less than the fungicidally effective amount of the QoI fungicide (quinone outside inhibitors) when the QoI fungicide (quinone outside inhibitors) is used alone.

In some embodiments, the combination comprises a QoSI fungicide (quinone outside stigmatellin subsite inhibitors). In some embodiments, the amount of the QoSI fungicide (quinone outside stigmatellin subsite inhibitors) in the combination is less than the fungicidally effective amount of the QoSI fungicide (quinone outside stigmatellin subsite inhibitors) when the QoSI fungicide (quinone outside stigmatellin subsite inhibitors) is used alone

In some embodiments, the combination comprises a SDHI fungicide (succinate dehydrogenase inhibitors). In some embodiments, the amount of the SDHI fungicide (succinate dehydrogenase inhibitors) in the combination is less than the fungicidally effective amount of the SDHI fungicide (succinate dehydrogenase inhibitors) when the SDHI fungicide (succinate dehydrogenase inhibitors) is used alone.

In some embodiments, the combination comprises a demethylation inhibitor fungicide. In some embodiments,

the amount of the Demethylation Inhibitor fungicide in the combination is less than the fungicidally effective amount of the Demethylation Inhibitor fungicide when the Demethylation Inhibitor fungicide is used alone.

In some embodiments, the combination comprises a phenyl amide fungicide. In some embodiments, the amount of the phenyl amide fungicide in the combination is less than the fungicidally effective amount of the phenyl amide fungicide when the phenyl amide fungicide is used alone.

In some embodiments, the combination comprises a methyl-benzimidazole-carbamate (MBC) fungicide. In some embodiments, the amount of the methyl-benzimidazole-carbamate (MBC) fungicide in the combination is less than the fungicidally effective amount of the methyl-benzimidazole-carbamate (MBC) fungicide when the methyl-benzimidazole-carbamate (MBC) fungicide is used alone.

In some embodiments, the combination comprises a carboxylic acid amide fungicide. In some embodiments, the amount of the carboxylic acid amide fungicide in the combination is less than the fungicidally effective amount of the carboxylic acid amide fungicide when the carboxylic acid amide fungicide is used alone.

In some embodiments, the combination comprises a benzamide fungicide. In some embodiments, the amount of the benzamide fungicide in the combination is less than the fungicidally effective amount of the benzamide fungicide when the benzamide fungicide is used alone.

In some embodiments, the combination comprises a natural fungicide. In some embodiments, the amount of the natural fungicide in the combination is less than the fungicidally effective amount of the natural fungicide when the natural fungicide is used alone.

In some embodiments, the combination comprises an anilinopyrimidine fungicide. In some embodiments, the amount of the anilinopyrimidine fungicide in the combination is less than the fungicidally effective amount of the anilinopyrimidine fungicide when the anilinopyrimidine fungicide is used alone.

In some embodiments, the combination comprises a hydroxy-(2-amino)-pyrimidines fungicide. In some embodiments, the amount of the hydroxy-(2-amino)-pyrimidines fungicide in the combination is less than the fungicidally effective amount of the hydroxy-(2-amino)-pyrimidines fungicide when the hydroxy-(2-amino)-pyrimidines fungicide is used alone.

In some embodiments, the combination comprises a phosphonate fungicide. In some embodiments, the amount of the phosphonate fungicide in the combination is less than the fungicidally effective amount of the phosphonate fungicide when the phosphonate fungicide is used alone.

In some embodiments, the combination comprises a plant extract fungicide. In some embodiments, the amount of the plant extract fungicide in the combination is less than the fungicidally effective amount of the plant extract fungicide when the plant extract fungicide is used alone.

In some embodiments, the, combination comprises a keto-reductase inhibitor fungicide. In some embodiments, the amount of the Keto-Reductase inhibitor fungicide in the combination is less than the fungicidally effective amount of the Keto-Reductase inhibitor fungicide when the Keto-Reductase inhibitor fungicide is used alone.

In some embodiments, the combination comprises a phenylpyrrole fungicide (PP). In some embodiments, the amount of the phenylpyrrole fungicide (PP) in the combination is less than the fungicidally effective amount of the phenylpyrrole fungicide (PP) when the phenylpyrrole fungicide (PP) is used alone.

In some embodiments, the combination comprises an aryl phenyl-ketone fungicide. In some embodiments, the amount of the aryl phenyl-ketone fungicide in the combination is less than the fungicidally effective amount of the aryl phenyl-ketone fungicide when the aryl phenyl-ketone fungicide is used alone.

In some embodiments, the combination comprises an amine fungicide. In some embodiments, the amount of the amine fungicide in the combination is less than the fungicidally effective amount of the amine fungicide when the amine fungicide is used alone.

In some embodiments, the combination comprises a dinitro aniline fungicide. In some embodiments, the amount of the dinitro aniline fungicide in the combination is less than the fungicidally effective amount of the dinitro aniline fungicide when the dinitro aniline fungicide is used alone.

In some embodiments, the combination comprises an azanaphthalene fungicide. In some embodiments, the amount of the azanaphthalene fungicide in the combination is less than the fungicidally effective amount of the azanaphthalene fungicide when the azanaphthalene fungicide is used alone.

In some embodiments, the combination comprises a benzothiadiazole fungicide. In some embodiments, the amount of the benzothiadiazole fungicide in the combination is less than the fungicidally effective amount of the benzothiadiazole fungicide when the benzothiadiazole fungicide is used alone.

In some embodiments, the combination comprises a carbamate fungicide. In some embodiments, the amount of the carbamate fungicide in the combination is less than the fungicidally effective amount of the carbamate fungicide when the carbamate fungicide is used alone.

In some embodiments, the combination comprises a cyanoacetamideoxime fungicide. In some embodiments, the amount of the cyanoacetamideoxime fungicide in the combination is less than the fungicidally effective amount of the cyanoacetamideoxime fungicide when the cyanoacetamideoxime fungicide is used alone.

In some embodiments, the combination comprises a dinitrophenyl-crotonate fungicide. In some embodiments, the amount of the dinitrophenyl-crotonate fungicide in the combination is less than the fungicidally effective amount of the dinitrophenyl-crotonate fungicide when the dinitrophenyl-crotonate fungicide is used alone.

In some embodiments, the combination comprises a glucopyranosyl antibiotic fungicide. In some embodiments, the amount of the glucopyranosyl antibiotic fungicide in the combination is less than the fungicidally effective amount of the glucopyranosyl antibiotic fungicide when the glucopyranosyl antibiotic fungicide is used alone.

In some embodiments, the combination comprises a tetrazolyloxime fungicide. In some embodiments, the amount of the tetrazolyloxime fungicide in the combination is less than the fungicidally effective amount of the tetrazolyloxime fungicide when the tetrazolyloxime fungicide is used alone.

In some embodiments, the combination comprises a thiazolidine fungicide. In some embodiments, the amount of the thiazolidine fungicide in the combination is less than the fungicidally effective amount of the thiazolidine fungicide when the thiazolidine fungicide is used alone.

In some embodiments, the combination comprises an oxysterol binding protein inhibitor (OSBPI) fungicide. In some embodiments, the amount of the oxysterol binding protein inhibitor (OSBPI) fungicide in the combination is less than the fungicidally effective amount of the oxysterol binding protein inhibitor (OSBPI) fungicide when the oxysterol binding protein inhibitor (OSBPI) fungicide is used alone.

In some embodiments, the combination comprises a thiophenecarboxamide fungicide. In some embodiments, the amount of the thiophenecarboxamide fungicide in the combination is less than the fungicidally effective amount of the thiophenecarboxamide fungicide when the thiophenecarboxamide fungicide is used alone.

In some embodiments, the combination comprises a phenylacetamide fungicide. In some embodiments, the amount of the phenylacetamide fungicide in the combination is less than the fungicidally effective amount of the phenylacetamide fungicide when the phenylacetamide fungicide is used alone.

In some embodiments, the combination comprises a phenyl urea fungicide. In some embodiments, the amount of the phenyl urea fungicide in the combination is less than the fungicidally effective amount of the phenyl urea fungicide when the phenyl urea fungicide is used alone.

In some embodiments, the combination comprises a polyene fungicide. In some embodiments, the amount of the polyene fungicide in the combination is less than the fungicidally effective amount of the polyene fungicide, when the polyene fungicide is used alone.

In some embodiments, the combination comprises a pyr-hydrazone fungicide. In some embodiments, the amount of the pyr-hydrazone fungicide in the combination is less than the fungicidally effective amount of the pyr-hydrazone fungicide when the pyr-hydrazone fungicide is used alone.

In some embodiments, the combination comprises a pyrimidinamine fungicide. In some embodiments, the amount of the pyrimidinamine fungicide in the combination is less than the fungicidally effective amount of the pyrimidinamine fungicide when the pyrimidinamine fungicide is used alone.

In some embodiments, the combination comprises a fungicide (B). In some embodiments, the amount of the fungicide (B) in the combination is less than the fungicidally effective amount of the fungicide (B) when the fungicide (B) is used alone.

In some embodiments, the combination comprises a pyrimidinone fungicide. In some embodiments, the amount of the pyrimidinone fungicide in the combination is less than the fungicidally effective amount of the pyrimidinone fungicide when the pyrimidinone fungicide is used alone.

In some embodiments, the pyrimidinone fungicide is fluoropyrimidinone fungicide. In some embodiments, fluoropyrimidinone fungicide is 5-fluoro-4-imino-3-methyl-1-tosyl-3,4-dihydropyrimidin-2(1*H*)-one of the Formula I

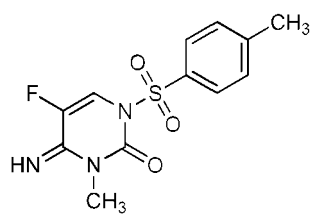

Formula I

In some embodiments, the combination or mixture comprises captan and 5-fluoro-4-imino-3-methyl-1-tosyl-3,4-dihydropyrimidin-2(1*H*)-one.

In some embodiments, the combination or mixture comprises folpet and 5-fluoro-4-imino-3-methyl-1-tosyl-3,4-dihydropyrimidin-2(1*H*)-one.

In some embodiments, the combination or mixture comprises captafol and 5-fluoro-4-imino-3-methyl-1-tosyl-3,4-dihydropyrimidin-2(1*H*)-one.

In some embodiments, the combination or mixture comprises phthalimide fungicide and 5-fluoro-4-imino-3-methyl-1-tosyl-3,4-dihydropyrimidin-2(1*H*)-one, further comprises at least one additional fungicide (A).

In some embodiments, the combination or mixture comprises folpet and 5-fluoro-4-imino-3-methyl-1-tosyl-3,4-dihydropyrimidin-2(1*H*)-one.

***iii) Preferred combinations of primary fungicides***

In some embodiments, the method comprises applying a combination comprising at least two primary fungicides. In some embodiments, the method comprises applying a combination comprising at least three primary fungicides. In some embodiments, the method comprises applying a combination comprising at least four primary fungicides.

In some embodiments, one of the primary fungicides is an SDHI fungicide.

In some embodiments, one of the primary fungicides is fluxapyroxad.

Preferred combinations of phthalimide fungicide(s) and primary fungicide(s) are described herein. Any combination comprising phthalimide fungicide(s) and primary fungicide(s) of the present invention may be used with the methods of the present invention.

***iv) Preferred combinations comprising phthalimide fungicide(s) and primary fungicide(s)***

In some embodiments, the combination comprises a phthalimide fungicide and a primary fungicide selected from the group consisting of mefentrifluconazole, difenoconazole, prothioconazole, tebuconazole, dimethomorph, mandipropamide, valifenalate, mandestrobin, metyltetraprole, azoxystrobin, pyraclostrobin, pydiflumetofen, bixafen, fluindapyr, flutolanil, inpyrfluxam, isoflucypram, isopyrazam, penflufen, penthiopyrad, pyraziflumid, sedaxane, thifluzamide, benzovindiflupyr, boscalid, fluopyram, fluxapyroxad, isofetamid, spiroxamine, carbendazim, thiophanate-methyl, kiralaxyl, fenpicoxamid, amisulbrom, ametoctradin, fludioxonil, K-phosphonate, fluopicolide, sulphur, a plant extract fungicide extracted from Mclalcuca altemifolia, a plant extract fungicide extracted from Reynoutria sachalinensis, a plant extract fungicide extracted from Swinglea glutinosa, a plant extract fungicide extracted from the cotyledons of lupine plantlets, fluazinam, propamocarb, picarbutrazox, cyprodinil, metrafenone, cyflufenamid, fenhexamid, laminarin, oxathiapiprolin, fluoxapiprolin, pencycuron, natamycin, fenpropidin, imazalil, prochloraz, fosetyl-Al, mefenoxam, zoxamide, cymoxanil, a plant extracted fungicide extracted from plant oils, and any combination thereof.

In some embodiments, the combination comprises a phthalimide fungicide and mefentrifluconazole. In some embodiments, the combination comprises a phthalimide fungicide and difenoconazole. In some embodiments, the combination comprises a phthalimide fungicide and prothioconazole. In some embodiments, the combination comprises a phthalimide fungicide and tebuconazole. In some embodiments, the combination comprises a phthalimide fungicide and dimethomorph. In some embodiments, the combination comprises a phthalimide fungicide and mandipropamide. In some embodiments, the combination comprises a phthalimide fungicide and valifenalate. In some embodiments, the combination comprises a phthalimide fungicide and mandestrobin. In some embodiments, the combination comprises a phthalimide fungicide and metyltetraprole. In some embodiments, the combination comprises a phthalimide fungicide and azoxystrobin. In some embodiments, the combination comprises a phthalimide fungicide and pyraclostrobin. In some embodiments, the combination comprises a phthalimide fungicide and pydiflumetofen. In some embodiments, the combination comprises a phthalimide fungicide and bixafen. In some embodiments, the combination comprises a phthalimide fungicide and fluindapyr. In some embodiments, the combination comprises a phthalimide fungicide and flutolanil. In some embodiments, the combination comprises a phthalimide fungicide and inpyrfluxam. In some embodiments, the combination comprises a phthalimide fungicide and isoflucypram. In some embodiments, the combination comprises a phthalimide fungicide and isopyrazam. In some embodiments, the combination comprises a phthalimide fungicide and penflufen. In some embodiments, the combination comprises a phthalimide fungicide and penthiopyrad. In some embodiments, the combination comprises a phthalimide fungicide and pyraziflumid. In some embodiments, the combination comprises a phthalimide fungicide and sedaxane. In some embodiments, the combination comprises a phthalimide fungicide and thifluzamide. In some embodiments, the combination comprises a phthalimide fungicide and benzovindiflupyr. In some embodiments, the combination comprises a phthalimide fungicide and boscalid. In some embodiments, the combination comprises a phthalimide fungicide and fluopyram. In some embodiments, the combination comprises a phthalimide fungicide and fluxapyroxad. In some embodiments, the combination comprises a phthalimide fungicide and isofetamid. In some embodiments, the combination comprises a phthalimide fungicide and spiroxamine. In some embodiments, the combination comprises a phthalimide fungicide and carbendazim. In some embodiments, the combination comprises a phthalimide fungicide and thiophanate-methyl. In some embodiments, the combination comprises a phthalimide fungicide and kiralaxyl. In some embodiments, the combination comprises a phthalimide fungicide and fenpicoxamid. In some embodiments, the combination comprises a phthalimide fungicide and amisulbrom. In some embodiments, the combination comprises a phthalimide fungicide and ametoctradin. In some embodiments, the

combination comprises a phthalimide fungicide and fludioxonil. In some embodiments, the combination comprises a phthalimide fungicide and K-phosphonate. In some embodiments, the combination comprises a phthalimide fungicide and fluopicolide. In some embodiments, the combination comprises a phthalimide fungicide and sulphur. In some embodiments, the combination comprises a phthalimide fungicide and a plant extract fungicide, wherein the plant extract fungicide is fungicide that is extracted from Melaleuca altemifolia. In some embodiments, the combination comprises a phthalimide fungicide and a plant extract fungicide, wherein the plant extract fungicide is fungicide that is extracted from Reynoutria sachalinensis. In some embodiments, the combination comprises a phthalimide fungicide and a plant extract fungicide, wherein the plant extract fungicide is fungicide that is extracted from Swinglea glutinosa. In some embodiments, the combination comprises a phthalimide fungicide and a plant extract fungicide, wherein the plant extract fungicide is fungicide that is extracted from the cotyledons of lupine plantlets. In some embodiments, the combination comprises a phthalimide fungicide and fluazinam. In some embodiments, the combination comprises a phthalimide fungicide and propamocarb. In some embodiments, the combination comprises a phthalimide fungicide and picarbutrazox. In some embodiments, the combination comprises a phthalimide fungicide and cyprodinil. In some embodiments, the combination comprises a phthalimide fungicide and metrafenon. In some embodiments, the combination comprises a phthalimide fungicide and cyflufenamid. In some embodiments, the combination comprises a phthalimide fungicide and fenhexamid. In some embodiments, the combination comprises a phthalimide fungicide and laminarin. In some embodiments, the combination comprises a phthalimide fungicide and oxathiapiprolin. In some embodiments, the combination comprises a phthalimide fungicide and fluoxapiprolin. In some embodiments, the combination comprises a phthalimide fungicide and pencycuron. In some embodiments, the combination comprises a phthalimide fungicide and natamycin. In some embodiments, the combination comprises a phthalimide fungicide and fenpropidin. In some embodiments, the combination comprises a phthalimide fungicide and imazalil. In some embodiments, the combination comprises a phthalimide fungicide and prochloraz. In some embodiments, the combination comprises a phthalimide fungicide and fosetyl-Al. In some embodiments, the combination comprises a phthalimide fungicide and mefenoxan. In some embodiments, the combination comprises a phthalimide fungicide and zoxamide. In some embodiments, the combination comprises a phthalimide fungicide and cymoxanil. In some embodiments, the combination comprises a phthalimide fungicide and a plant extracted fungicide, wherein the plant extract fungicide is fungicide extracted from plant oils.

In some embodiments, the combination comprises captan and a succinate dehydrogenase inhibitor fungicide. In some embodiments, the combination comprises folpet and a succinate dehydrogenase inhibitor fungicide. In some embodiments, the combination comprises captafol and a succinate dehydrogenase inhibitor fungicide. In some embodiments, the combination comprises folpet and fluxapyroxad. In some embodiments, the combination comprises captan and fluxapyroxad. In some embodiments, the combination comprises captafol and fluxapyroxad. In some embodiments, the combination comprises folpet and fluopyram. In some embodiments, the combination comprises folpet and bixafen. In some embodiments, the combination comprises folpet and penthiopyrad. In some embodiments, the combination comprises folpet and prochloraz. In some embodiments, the combination comprises folpet and mefentrifluconazole. In some embodiments, the combination comprises folpet and azoxystrobin.

In some embodiments, the combination comprises a phthalimide fungicide and a succinate dehydrogenase inhibitor fungicide as the only crop protection agents. In some embodiments, the combination comprises captan and a succinate dehydrogenase inhibitor fungicide as the only crop protection agents.

In some embodiments, the combination comprises at least two primary fungicides. In some embodiments, the combination comprises at least three primary fungicides. In some embodiments, the combination comprises at least four primary fungicides.

In some embodiments, the combination comprises two primary fungicides.

In some embodiments, the two primary fungicides are an amines fungicide and a cyanoacetamideoxime fungicide. In some embodiments, the two primary fungicides are an amines fungicide and a plant extract fungicide. In some embodiments, the two primary fungicides are an anilinopyrimidines fungicide and a cyanoacetamideoxime fungicide. In some embodiments, the two primary fungicides are an anilinopyrimidines fungicide and a amines fungicide. In some embodiments, the two primary fungicides are an anilinopyrimidines fungicide and a plant extracted fungicide. In some embodiments, the two primary fungicides are a benzamides fungicide and a QoI fungicide. In some embodiments, the two primary fungicides are a benzamides fungicide and a plant extract fungicide. In some embodiments, the two primary fungicides are a benzamides fungicide and an anilinopyrimidines fungicide. In some embodiments, the two primary fungicides are a benzamides fungicide and an amines fungicide. In some embodiments, the two primary fungicides are a benzamides fungicide and a cyanoacetamideoxime fungicide. In some embodiments, the two primary fungicides are a phosphonate fungicide and a cyanoacetamideoxime fungicide. In some embodiments, the two primary fungicides are a CAA fungicide and an amines fungicide. In some embodiments, the two primary fungicides are a CAA fungicide and a phosphonates fungicide. In some embodiments, the two primary fungicides are a CAA fungicide and a cyanoacetamideoxime fungicide. In some embodiments, the two primary fungicides are a CAA fungicide and an anilinopyrimidines fungicide. In some embodiments, the two primary fungicides are a CAA fungicide and a plant extract fungicide. In some embodiments, the two primary fungicides are a CAA fungicide and a benzamides fungicide. In some

embodiments, the two primary fungicides are a CAA fungicide and a QoI fungicide. In some embodiments, the two primary fungicides are a DMI fungicide and a QoI fungicide. In some embodiments, the two primary fungicides are a DMI fungicide and a cyanoacetamideoxime fungicide. In some embodiments, the two primary fungicides are a DMI fungicide and a CAA fungicide. In some embodiments, the two primary fungicides are a DMI fungicide and a benzamides fungicide. In some embodiments, the two primary fungicides are a DMI fungicide and a plant extract fungicide. In some embodiments, the two primary fungicides are a DMI fungicide and a anilinopyrimidines fungicide. In some embodiments, the two primary fungicides are a DMI fungicide, and a amines fungicide. In some embodiments, the two primary fungicides are an SDHI fungicide, and an amines fungicide. In some embodiments, the two primary fungicides are a QoI fungicide and a amines fungicide. In some embodiments, the two primary fungicides are a phenyl amide fungicide and a DMI fungicide. In some embodiments, the two primary fungicides are a phenyl amide fungicide and a CAA fungicide. In some embodiments, the two primary fungicides are a phenylpyrrole fungicide and a QoI fungicide. In some embodiments, the two primary fungicides are a phenylpyrrole fungicide and a DMI fungicide. In some embodiments, the two primary fungicides are a phenylpyrrole fungicide and a SDHI fungicide. In some embodiments, the two primary fungicides are a phenylpyrrole fungicide and a MBC fungicide. In some embodiments, the two primary fungicides are a QoI fungicide and a plant extract fungicide. In some embodiments, the two primary fungicides are a QoI fungicide and an anilinopyrimidines fungicide. In some embodiments, the two primary fungicides are a QoI fungicide and an amine fungicide. In some embodiments, the two primary fungicides are a QoI fungicide and a cyanoacetamideoxime fungicide. In some embodiments, the two primary fungicides are SDHI fungicide and a cyanoacetamideoxime fungicide. In some embodiments, the two primary fungicides are an amine fungicide and an SDHI fungicide. In some embodiments, the two primary fungicides are an amine fungicide and a QoI fungicide. In some embodiments, the two primary fungicides are a SDHI fungicide and an amine fungicide. In some embodiments, the two primary fungicides are an SDHI fungicide and an anilinopyrimidines fungicide. In some embodiments, the two primary fungicides are an SDHI fungicide and a benzamides fungicide. In some embodiments, the two primary fungicides are an SDHI fungicide and a DMI fungicide. In some embodiments, the two primary fungicides are an SDHI fungicide and a plant extract fungicide. In some embodiments, the two primary fungicides are an SDHI fungicide and a CAA fungicide. In some embodiments, the two primary fungicides are an SDHI fungicide and a QoI fungicide. In some embodiments, the two primary fungicides are an SDHI fungicide and a phenylpyrrole fungicide. In some embodiments, the two primary fungicides are a phenylpyrrole fungicide and a phenyl amide fungicide. In some embodiments, the two primary fungicides are a phenylpyrrole fungicide and a QoI fungicide. In some embodiments, the two primary fungicides are an SDHI fungicide and a DMI fungicide. In some embodiments, the two primary fungicides are an SDHI fungicide and a phenylpyrrole fungicide. In some embodiments, the two primary fungicides are an SDHI fungicide and a QoI fungicide. In some embodiments, the two primary fungicides are a MBC fungicide and a phenyl amide fungicide.

In some embodiments, the two primary fungicides are fenpropidin and an SDHI fungicide. In some embodiments, the two primary fungicides are fenpropidin and a QoI fungicide. In some embodiments, the two primary fungicides are thiophanate-methyl and kiralaxyl. In some embodiments, the two primary fungicides are prothioconazole and azoxystrobin. In some embodiments, the two primary fungicides are difenoconazole and pyraclostrobin. In some embodiments, the two primary fungicides are dimethomorph and fosetyl-Al. In some embodiments, the two primary fungicides are fluxapyroxad and picoxystrobin. In some embodiments, the two primary fungicides are fluxapyroxad and prothioconazole. In some embodiments, the two primary fungicides are fosetyl-Al and cymoxanil.

In some embodiments, the combination comprises folpet, dimethomorph and cymoxanil.

In some embodiments, the combination comprises three primary fungicides.

In some embodiments, the three primary fungicides are an SDHI fungicide, a phenylpyrrole fungicide and a QoI fungicide. In some embodiments, the three primary fungicides are an SDHI fungicide, a DMI fungicide and a QoI fungicide. In some embodiments, the three primary fungicides are an SDHI fungicide, a phenylpyrrole fungicide and a QoI fungicide.

In some embodiments, the combination comprises four primary fungicides.

In some embodiments, the four primary fungicides are an SDHI fungicide, a DMI fungicide, a QoI fungicide and a phenyl amides fungicide.

In some embodiments, the combination comprises two or more primary fungicides from different fungicidal groups. In some embodiments, the combination comprises two or more primary fungicides from the same fungicidal group.

In some embodiments, the phthalimide fungicide is not folpet. In some embodiments, the phthalimide fungicide is other than folpet. In some embodiments, the combination is free of folpet.

In some embodiments, the SDHI (succinate dehydrogenase inhibitors) fungicide is not fluxapyroxad. In some embodiments, the SDHI (succinate dehydrogenase inhibitors) fungicide is other than fluxapyroxad. In some embodiments, the combination is free of fluxapyroxad.

In some embodiments, the demethylation inhibitor fungicide (DMI fungicide) is not tebuconazole. In some embodiments, the demethylation inhibitor fungicide (DMI fungicide) is other than tebuconazole. In some embodiments, the combination is free of tebuconazole.

In some embodiments, the phthalimide fungicide is folpet and the primary fungicide is not SDHI fungicide. In some embodiments, the phthalimide fungicide is folpet and the primary fungicide is other than SDHI fungicide.

In some embodiments, the combination comprises a phthalimide fungicide, an SDHI fungicide, and at least one additional primary fungicide which is not an SDHI fungicide. In some embodiments, the combination comprises a phthalimide fungicide, an SDHI fungicide, and at least one additional primary fungicide which is other than the SDHI fungicide. In some embodiments, the combination comprises folpet, an SDHI fungicide, and at least one additional primary fungicide which is not an SDHI fungicide. In some embodiments, the combination comprises a phthalimide fungicide and a primary fungicide, wherein if the primary fungicide is an SDHI fungicide then the phthalimide fungicide is other than folpet.

In some embodiments, the combination comprises (a) a phthalimide fungicide, (b) a primary fungicide selected from the group consisting of multi-site contact fungicide, QiI fungicide (quinone inside inhibitors), QoI fungicide (quinone outside inhibitors) QoSI fungicide (quinone outside stigmatellin subsite inhibitors), demethylation inhibitor fungicide, phenyl amide fungicide, methyl-benzimidazole-carbamate (MBC) fungicide, carboxylic acid amide fungicide, benzamide fungicide, natural fungicide, anilinopyrimidine fungicide, hydroxy-(2-amino)-pyrimidines fungicide, phosphonate fungicide, plant extract fungicide, keto-reductase inhibitor fungicide, phenylpyrrole fungicide (PP), aryl phenyl-ketone fungicide, amine fungicide, dinitro aniline fungicide, azanaphthalene fungicide, benzothiadiazole fungicide, carbamate fungicide, cyanoacetamideoxime fungicide, dinitrophenyl-crotonate fungicide, glucopyranosyl antibiotic fungicide, tetrazolyloxime fungicide, thiazolidine fungicide, oxysterol binding protein inhibitor (OSBPI) fungicide, thiophenecarboxamide fungicide, phenylacetamide fungicide, phenyl urea fungicide, polyene fungicide, pyr-hydrazone fungicide, pyrimidinamine fungicide, pyrimidinone fungicide, fungicide (B) and any combination thereof, and (c) optionally, a SDHI fungicide (succinate dehydrogenase inhibitors).

In some embodiments, the combination comprises a phthalimide fungicide, fluxapyroxad, and at least one additional primary fungicide that is not fluxapyroxad. In some embodiments, the combination comprises a phthalimide fungicide, fluxapyroxad, and at least one additional primary fungicide other than fluxapyroxad.

*v) Fungicide I*

In some embodiments, the primary fungicide is a systemic fungicide.

In some embodiments, the systemic fungicide is fungicide I.

In some embodiments, fungicide I is selected from the group consisting of succinate dehydrogenase inhibitor (SDHI) fungicides, demethylation inhibitor (DMI) fungicides, quinone outside inhibitor (QoI) fungicides, and any combination thereof. In some embodiments, fungicide I is a succinate dehydrogenase inhibitor (SDHI) fungicide. In some embodiments, fungicide I is a demethylation inhibitor (DMI) fungicide. In some embodiments, fungicide I is a quinone outside inhibitor (QoI) fungicide. Preferred succinate dehydrogenase inhibitor (SDHI) fungicides, demethylation inhibitor (DMI) fungicides, and quinone outside inhibitor (QoI) fungicides are described herein.

It was found that fungicide I selected from the group consisting of succinate dehydrogenase inhibitor (SDHI) fungicides, demethylation inhibitor (DMI) fungicides, quinone outside inhibitor (QoI) fungicides, and combination thereof, if combined with at least one phthalimide fungicide have an increased efficacy, including an increased controlling effect, against disease(s) caused by pathogen in crop plants.

In some embodiments, fungicide I is selected from the group consisting of fluxapyroxad, bixafen, prochloraz, mefentrifluconazole, azoxystrobin, fluopyram, penthiopyrad, and any combination thereof. In some embodiments, fungicide I is fluxapyroxad. In some embodiments, fungicide I is bixafen. In some embodiments, the fungicide I is prochloraz. In some embodiments, the fungicide I is mefentrifluconazole. In some embodiments, the fungicide I is azoxystrobin. In some embodiments, the fungicide I is fluopyram. In some embodiments, the fungicide I is penthiopyrad.

*vi) Preferred combinations comprising phthalimide fungicide(s) and fungicide I*

In some embodiments, the phthalimide fungicide is folpet and fungicide I is fluopyram. In some embodiments, the phthalimide fungicide is folpet and fungicide I is fluxapyroxad. In some embodiments, the phthalimide fungicide is folpet and fungicide I is bixafen. In some embodiments, the phthalimide fungicide is folpet and fungicide I is penthiopyrad. In some embodiments, the phthalimide fungicide is folpet and fungicide I is prochloraz. In some embodiments, the phthalimide fungicide is folpet and fungicide I is mefentrifluconazole. In some embodiments, the phthalimide fungicide is folpet and fungicide I is azoxystrobin.

*vii) Preferred weight ratios*

In some embodiments, the weight ratio between the total amount of the phthalimide fungicide(s) to the total amount of the primary fungicide(s) is from 150:1 to 1:150. In some embodiments, the weight ratio between the total amount of the phthalimide fungicide(s) to the total amount of the primary fungicide(s) is from 100:1 to 1:100. In some embodiments, the weight ratio between the total amount of the phthalimide fungicide(s) to the total amount of the primary fungicide(s) is from 50:1 to 1:50. In some embodiments, the weight ratio between the total amount of the phthalimide fungicide(s) to the

total amount of the primary fungicide(s) is from 20:1 to 1:20. In some embodiments, the weight ratio between the total amount of the phthalimide fungicide(s) to the total amount of the primary fungicide(s) is from 10:1 to 1:10. In some embodiments, the weight ratio between the total amount of the phthalimide fungicide(s) to the total amount of the primary fungicide(s) is from 5:1 to 1:5. In some embodiments, the weight ratio between the total amount of the phthalimide fungicide(s) to the total amount of the primary fungicide(s) is from 2:1 to 1:2.

In some embodiments, the weight ratio between the total amount of the phthalimide fungicide(s) to the total amount of the primary fungicide(s) is any one of the following: 125:1 to 1:125, 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 12:1 to 1:12, 10:1 to 1:10, 5:1 to 1:5, 4:1 to 1:4, 3:1 to 1:3 or 2:1 to 1:2.

In some embodiments, the weight ratio between the total amount of the phthalimide fungicide(s) to the total amount of the primary fungicide(s) is about 10:1 to 6:1. **In** some embodiments, the weight ratio between the total amount of the phthalimide fungicide(s) to the total amount of the primary fungicide(s) is about 1:1 to 15:1.

In some embodiments, the weight ratio between the total amount of the phthalimide fungicide(s) to the total amount of the primary fungicide(s) is about 75:1. In some embodiments, the weight ratio between the total amount of the phthalimide fungicide(s) to the total amount of the primary fungicide(s) is about 20:1. In some embodiments, the weight ratio between the total amount of the phthalimide fungicide(s) to the total amount of the primary fungicide(s) is about 18:1. In some embodiments, the weight ratio between the total amount of the phthalimide fungicide(s) to the total amount of the primary fungicide(s) is about 12:1. In some embodiments, the weight ratio between the total amount of the phthalimide fungicide(s) to the total amount of the primary fungicide(s) is about 10:1. In some embodiments, the weight ratio between the total amount of the phthalimide fungicide(s) to the total amount of the primary fungicide(s) is about 8.3:1. In some embodiments, the weight ratio between the total amount of the phthalimide fungicide(s) to the total amount of the primary fungicide(s) is about 8:1. In some embodiments, the weight ratio between the total amount of the phthalimide fungicide(s) to the total amount of the primary fungicide(s) is about 7.5:1. In some embodiments, the weight ratio between the total amount of the phthalimide fungicide(s) to the total amount of the primary fungicide(s) is about 6:1. In some embodiments, the weight ratio between the total amount of the phthalimide fungicide(s) to the total amount of the primary fungicide(s) is about 5:1. In some embodiments, the weight ratio between the total amount of the phthalimide fungicide(s) to the total amount of the primary fungicide(s) is about 4:1. In some embodiments, the weight ratio between the total amount of the phthalimide fungicide(s) to the total amount of the primary fungicide(s) is about 3.75:1. In some embodiments, the weight ratio between the total amount of the phthalimide fungicide(s) to the total amount of the primary fungicide(s) is about 3:1. In some embodiments, the weight ratio between the total amount of the phthalimide fungicide(s) to the total amount of the primary fungicide(s) is about 2.5:1. In some embodiments, the weight ratio between the total amount of the phthalimide fungicide(s) to the total amount of the primary fungicide(s) is about 2:1. In some embodiments, the weight ratio between the total amount of the phthalimide fungicide(s) to the total amount of the primary fungicide(s) is about 1.67:1. In some embodiments, the weight ratio between the total amount of the phthalimide fungicide(s) to the total amount of the primary fungicide(s) is about 1:1.

The weight ratio between the total amount of the phthalimide fungicide(s) to the total amount of the primary fungicide(s) may be an intermediate range selected from the above indicated ratios.

The weight ratios described herein may be used with any phthalimide fungicide(s), primary fungicide(s), and combinations thereof described herein.

In a preferred embodiment, the primary fungicide is a succinate dehydrogenase inhibitor fungicide and the weight ratio between the phthalimide fungicide(s) and the succinate dehydrogenase inhibitor fungicide is any one of the ratios and ranges described above.

In a preferred embodiment, the primary fungicide is a succinate dehydrogenase inhibitor fungicide and the phthalimide fungicide is captan, and the weight ratio between captan and the succinate dehydrogenase inhibitor fungicide is any one of the ratios and ranges described above. In a preferred embodiment, the primary fungicide is a succinate dehydrogenase inhibitor fungicide and the phthalimide fungicide is captafol, and the weight ratio between captafol and the succinate dehydrogenase inhibitor fungicide is any one of the ratios and ranges described above. In a preferred embodiment, the primary fungicide is a succinate dehydrogenase inhibitor fungicide and the phthalimide fungicide is folpet, and the weight ratio between folpet and the succinate dehydrogenase inhibitor fungicide is any one of the ratios and ranges described above.

The weight ratio of the succinate dehydrogenase inhibitor fungicide to captan, captafol or folpet may be an intermediate range selected from the above indicated ratios.

In some embodiments, the succinate dehydrogenase inhibitor fungicide is fluxapyroxad. In some embodiments, the combination comprises fluxapyroxad and captan. In some embodiments, the combination comprises fluxapyroxad and captafol. In some embodiments, the combination comprises fluxapyroxad and folpet. The weight ratio between the fluxapyroxad and the captan, captafol or folpet may be any one of the ratios and ranges described above, or an intermediate range selected from the above indicated ratios.

In some embodiments, the succinate dehydrogenase inhibitor fungicide is penthiopyrad. In some embodiments,

the combination comprises penthiopyrad and captan. In some embodiments, the combination comprises penthiopyrad and captafol. In some embodiments, the combination comprises penthiopyrad and folpet. The weight ratio between the penthiopyrad and the captan, captafol or folpet may be any one of the ratios and ranges described above, or an intermediate range selected from the above indicated ratios.

In some embodiments, the succinate dehydrogenase inhibitor fungicide is fluopyram. In some embodiments, the combination comprises fluopyram and captan. In some embodiments, the combination comprises fluopyram and captafol. In some embodiments, the combination comprises fluopyram and folpet. The weight ratio between the fluopyram and the captan, captafol or folpet may be any one of the ratios and ranges described above, or an intermediate range selected from the above indicated ratios.

In some embodiments, the primary fungicide is 5-fluoro-4-imino-3-methyl-1-tosyl-3,4-dihydropyrimidin-2(1*H*)-one. In some embodiments, the combination comprises 5-fluoro-4-imino-3-methyl-1-tosyl-3,4-dihydropyrimidin-2(1*H*)-one and captan. In some embodiments, the combination comprises 5-fluoro-4-imino-3-methyl-1-tosyl-3,4-dihydropyrimidin-2(1*H*)-one and captafol. In some embodiments, the combination comprises 5-fluoro-4-imino-3-methyl-1-tosyl-3,4-dihydropyrimidin-2(1*H*)-one and folpet. The weight ratio between the 5-fluoro-4-imino-3-methyl-1-tosyl-3,4-dihydropyrimidin-2(1*H*)-one and the captan, captafol or folpet may be any one of the ratios and ranges described above, or an intermediate range selected from the above indicated ratios.

In some embodiments, the weight ratio of phthalimide fungicide and the 5-fluoro-4-imino-3-methyl-1-tosyl-3,4-dihydropyrimidin-2(1*H*)-one is from 150:1 to 1:150. In some embodiments, the weight ratio of phthalimide fungicide and the 5-fluoro-4-imino-3-methyl-1-tosyl-3,4-dihydropyrimidin-2(1*H*)-one is from 100:1 to 1:100. In some embodiments, the weight ratio of phthalimide fungicide and the 5-fluoro-4-imino-3-methyl-1-tosyl-3,4-dihydropyrimidin-2(1*H*)-one is from 75:1 to 1:75. In some embodiments, the weight ratio of phthalimide fungicide and the 5-fluoro-4-imino-3-methyl-1-tosyl-3,4-dihydropyrimidin-2(1*H*)-one is 1:1. In some embodiments, the weight ratio between the phthalimide fungicide and the 3-fluoro-4-imino-3-methyl-1-tosyl-3,4-dihydropyrimidin-2(1*H*)-one is about 75:1. In some embodiments, the weight ratio between the phthalimide fungicide and the 5-fluoro-4-imino-3-methyl-1-tosyl-3,4-dihydropyrimidin-2(1*H*)-one is about 10:1.

In some embodiments, the primary fungicide is fungicide I. In some embodiments, the combination comprises a phthalimide fungicide and fungicide I. The weight ratio between the phthalimide fungicide and fungicide I may be any one of the ratios and ranges described above, or an intermediate range selected from the above indicated ratios.

In some embodiments, the weight ratio of the phthalimide to the fungicide I is from about 1:1 to 15:1. In some embodiments, the weight ratio of the phthalimide fungicide to the fungicide I is about 1.67:1. In some embodiments, the weight ratio of the phthalimide fungicide to the fungicide I is about 20:1. In some embodiments, the weight ratio of the phthalimide fungicide to the fungicide I is about 18:1. In some embodiments, the weight ratio of the phthalimide fungicide to the fungicide I is about 12:1. In some embodiments, the weight ratio of the phthalimide fungicide to the fungicide I is about 10:1. In some embodiments, the weight ratio of the phthalimide fungicide to the fungicide I is about 8.3:1. In some embodiments, the weight ratio of the phthalimide fungicide to the fungicide I is about 8:1. In some embodiments, the weight ratio of the phthalimide fungicide to the fungicide I is about 7.5:1. In some embodiments, the weight ratio of the phthalimide fungicide to the fungicide I is about 6:1. In some embodiments, the weight ratio of the phthalimide fungicide to the fungicide I is about 5:1. In some embodiments, the weight ratio of the phthalimide fungicide to the fungicide I is about 4:1. In some embodiments, the weight ratio of the phthalimide to the fungicide I is about 3.75:1. In some embodiments, the weight ratio of the phthalimide fungicide to the fungicide I is about 3:1. In some embodiments, the weight ratio of the phthalimide to the fungicide I is about 2.5:1. In some embodiments, the weight ratio of the phthalimide to the fungicide I is about 2:1. In some embodiments, the weight ratio of the phthalimide to the fungicide I is about 1:1.

***Preferred parameters for application***

In some embodiments, each of the phthalimide fungicide(s) and primary fungicide(s) is formulated in its own composition. In some embodiments, each of the phthalimide fungicide(s) and primary fungicide(s) is formulated in its own composition prior to application.

The components of the combination can be applied either separately or as part of a multipart fungicidal system. Consequently, the methods and uses disclosed herein include preparation of the combination, mixture and composition from the component parts prior to application or use.

In some embodiments, the phthalimide fungicide and the primary fungicide are prepared separately, and the individual formulations are applied as is, or are diluted to predetermined concentrations. In some embodiments, the phthalimide fungicide and the primary fungicides are prepared separately, and the formulations are mixed when are diluted to a predetermined concentration. In some embodiment, the phthalimide fungicide and the primary fungicides are formulated together, and the formulation is applied as it is, or the formulation is diluted to a predetermined concentration.

In some embodiments, the phthalimide fungicide(s) and primary fungicide(s) are applied together. In some embodiments, the phthalimide fungicide(s) and primary fungicide(s) are applied separately. In some embodiments, the

phthalimide fungicide(s) and primary fungicide(s) are applied simultaneously. In some embodiments, the phthalimide fungicide(s) and primary fungicide(s) are applied contemporaneously. In some embodiments, the phthalimide fungicide(s) and primary fungicide(s) are applied successively.

In some embodiments, the phthalimide fungicide(s) is applied an amount of time before the primary fungicide(s) is applied. In some embodiments, the phthalimide fungicide(s) is applied an amount of time before at least one of the primary fungicide(s) is applied. In some embodiments, the primary fungicide(s) is applied an amount of time before the phthalimide fungicide(s) is applied. In some embodiments, the primary fungicide(s) is applied an amount of time before at least one of the phthalimide fungicide(s) is applied.

In some embodiments, the amount of time between application is between 1 to 28 days. In some embodiments, the amount of time between application is between 1 to 14 days. In some embodiments, the amount of time between application is between 1 to 10 days. In some embodiments, the amount of time between application is between 1 to 7 days. In some embodiments, the amount of time between application is 1 to 5 days. In some embodiments, the amount of time between application is between 1 to 72 hours. In some embodiments, the amount of time between application is between 1 to 48 hours. In some embodiments, the amount of time between application is between 1 to 24 hours. In some embodiments, the amount of time between application is between 1 to 12 hours. In some embodiments, the amount of time between application is between 1 to 10 hours. In some embodiments, the amount of time between application is between 1 to 5 hours. In some embodiments, the amount of time between application is between 1 to 2 hours. In some embodiments, the amount of time between application is less than 1 hour. In some embodiments, the amount of time between application is less than 30 minutes.

In some embodiments, the primary fungicide is fungicide I and the phthalimide fungicide is applied prior to application of fungicide I. In some embodiments, the phthalimide fungicide is applied day(s) or hour(s) before the application of fungicide I.

In some embodiments, the phthalimide fungicide is applied at least 1 day prior to application of fungicide I. In some embodiments, the phthalimide fungicide is applied at least 2 day prior to application of fungicide I. In some embodiments, the phthalimide fungicide is applied at least 3 day prior to application of fungicide I. In some embodiments, the phthalimide fungicide is applied at least 4 day prior to application of fungicide I. In some embodiments, the phthalimide fungicide is applied at least 5 day prior to application of fungicide I. In some embodiments, the phthalimide fungicide is applied at least 6 day prior to application of fungicide I. In some embodiments, the phthalimide fungicide is applied at least 7 day prior to application of fungicide I. In some embodiments, the phthalimide fungicide is applied at least 8 day prior to application of fungicide I. In some embodiments, the phthalimide fungicide is applied at least 9 day prior to application of fungicide I. In some embodiments, the phthalimide fungicide is applied at least 10 day prior to application of fungicide I. In some embodiments, the phthalimide fungicide is applied at least 11 day prior to application of fungicide I. In some embodiments, the phthalimide fungicide is applied at least 12 day prior to application of fungicide I. In some embodiments, the phthalimide fungicide is applied at least 13 day prior to application of fungicide I. In some embodiments, the phthalimide fungicide is applied at least 14 days prior to application of fungicide I.

In some embodiments, the phthalimide fungicide and fungicide I are applied 1 to 28 days apart. In some embodiments, the phthalimide fungicide and fungicide I are applied between 1 to 14 days apart. In some embodiments, the phthalimide fungicide and fungicide I are applied between 1 to 10 days apart. In some embodiments, the phthalimide fungicide and fungicide I are applied between 1 to 7 days apart. In some embodiments, the phthalimide fungicide and fungicide I are applied between 1 to 5 days apart. In some embodiments, the phthalimide fungicide and fungicide I are applied between 1 to 5 hours apart.

Number and rates of application depend on the biological and climatic environment of the pathogen. Alternatively, the active ingredients can reach the plant from the soil or water via the root system (systemic action) by drenching the locus of the plant with a liquid preparation (for example in rice growing) or incorporating the substances into the soil in solid form, for example in the form of granules (soil application). The inventive combination can also be applied to seed kernels for the purposes of seed treatment (coating), either by soaking the roots or kernels in succession with a liquid preparation of an active ingredient or by coating them with a moist or dry preparation which already comprises the combination. In addition, other types of application to plants are possible in specific cases, for example the targeted treatment of buds or fruit-bearing parts of the plant.

The amount of the combination to be applied and/or the weight ratio between the phthalimide fungicide and the primary fungicide, will depend on various factors such as the compound employed, the subject of the treatment (plant, soil, seed), the type of treatment (e.g. spraying, dusting, seed dressing), the purpose of the treatment (prophylactic or therapeutic), the type of fungi to be treated and the application time.

In some embodiments, the phthalimide fungicide(s) and primary fungicide(s) are applied at least one time during a growth season. In some embodiments, the phthalimide fungicide(s) and primary fungicide(s) are applied two or more times during a growth season.

In some embodiments, the phthalimide fungicide(s) and primary fungicide(s) are applied as a soil application, as a foliar application, as seed treatment and any combination thereof. In some embodiments, the phthalimide fungicide(s)

and primary fungicide(s) are applied as a soil application. In some embodiments, the phthalimide fungicide(s) and primary fungicide(s) are applied as a foliar application. In some embodiments, the phthalimide fungicide(s) and primary fungicide(s) are applied as seed treatment. In some embodiments, the phthalimide fungicide(s) and primary fungicide(s) are applied to plant leaves. In some embodiments, the phthalimide fungicide(s) and primary fungicide(s) are applied to plant propagation material.

In some embodiments, the phthalimide fungicide(s) and primary fungicide(s) are applied as curative treatment, preventive treatment, persistence treatment and any combination thereof. In some embodiments, the phthalimide fungicide(s) and primary fungicide(s) are applied as curative treatment. In some embodiments, the phthalimide fungicide(s) and primary fungicide(s) are applied as preventive treatment. In some embodiments, the phthalimide fungicide(s) and primary fungicide(s) are applied as persistence treatment.

In some embodiments, the phthalimide fungicide(s) and primary fungicide(s) are applied before infection by harmful fungal pathogen. In some embodiments, the phthalimide fungicide(s) and primary fungicide(s) are applied after infection by harmful fungal pathogen. In some embodiments, the phthalimide fungicide(s) and primary fungicide(s) are applied before and after infection by harmful fungal pathogen.

In some embodiments, the phthalimide fungicide(s) and primary fungicide(s) are applied in the early stages of the crop cycle. In some embodiments, the phthalimide fungicide(s) and primary fungicide(s) are applied during the T1 stage of growth of cereals, from BBCH 31 to 33. The phthalimide fungicide(s) and primary fungicide(s) when applied at early stages of growth protects the plant or locus against infection by harmful fungi.

In an embodiment, the succinate dehydrogenase inhibitor fungicide and phthalimide fungicide can be applied in the early stages of the crop cycle, such as for example pre-sowing or post-sowing of the crop. In a specific embodiment, a mixture of fluxapyroxad and phthalimide fungicide can be applied in the early stages of the crop cycle. The mixture of fluxapyroxad may be applied during the T1 stage of growth. The early application can allow phthalimide fungicide to provide early protection during the early stages of growth and the SDHI, for example fluxapyroxad, to provide long lasting protectant efficacy. The phthalimide fungicide may be folpct, captan, captafol or any combination thereof.

The mixture of active substances can be diluted and applied in a customary manner, for example by watering (drenching), drip irrigation, spraying, and atomizing.

The rate at which the combination according to the invention is applied will depend upon the particular type of fungus to be controlled, the degree of control required and the timing and method of application. The effective application rates of the succinate dehydrogenase inhibitor fungicide and phthalimide fungicide cannot generally be defined, as it varies depending upon various conditions such as the type of the formulation, weather conditions, the type of crop and the type of pests.

In some embodiments, the combination is applied at a rate from 0.1 grams of total active ingredient per hectare (g a.i./ha) to 10000 g a.i./ha based on the total amount of active ingredients in the combination. In some embodiments, the combination is applied at a rate from about 10 g a.i./ha to about 10000 g a.i./ha. In some embodiments, the combination is applied at a rate from about 50 g a.i./ha to about 5000 g a.i./ha. In some embodiments, the combination is applied at a rate from about 50 g a.i./ha to about 2600 g a.i./ha. In some embodiments, the combination is applied at a rate from about 100 g a.i./ha to about 2500 g a.i./ha. In some embodiments, the combination is applied at a rate from about 50 g a.i./ha to about 2000 g a.i./ha. In some embodiments, the combination is applied at a rate from about 25 g a.i./ha to about 2000 g a.i./ha. In some embodiments, the combination is applied at a rate from about 100 g a.i./ha to about 750 g a.i./ha. In an embodiment, the combination is applied at a rate from about 60 g a.i./ha to about 600 g a.i./ha. In a more particular embodiment, the combination is applied at a rate from about 100 g a.i./ha to about 200 g a.i./ha. In a more particular embodiment, the combination is applied at a rate from about 100 g a.i./ha to about 130 g a.i./ha.

In some embodiments, the combination, if applied as soil application, is to be applied at a rate between 0.1 to 10000 g/ha. In some embodiments, the combination, if applied as soil application, is to be applied at a rate between 1 to 5000 g/ha. In some embodiments, the combination, if applied as soil application, is to be applied at a rate between 60 to 2600 g/ha.

In some embodiments, the combination, if applied as seed treatment, is to be applied at a rate between 2g per 100kg to 400 g per 100 kg of seed. In some embodiments, the combination, if applied as seed treatment is to be applied at a rate between 2.5g per 100kg to 50 g per 100 kg of seed. In some embodiments, the combination, if applied as seed treatment is to be applied at a rate between 2.5g per 100kg to 25 g per 100 kg of seed.

The application rates for phthalimide fungicide are generally from 1 to 5000 g/ha, preferably from 10 to 2500 g/ha, in particular from 20 to 1000 g/ha. In some embodiments, the application rates of phthalimide fungicide may be from 400 to 1500 g/ha. In some embodiments, the application rates of phthalimide fungicide may be from 500 to 1500 g/ha. In some embodiments, the phthalimide fungicide is applied at a rate between 500 to 1000 g/ha. In some embodiments, the phthalimide fungicide is applied at a rate between 700 to 800 g/ha. In some embodiments, the phthalimide fungicide is applied at a rate of 750 g/ha. In some embodiments, the phthalimide fungicide is applied at a rate between 450 to 550 g/ha. In some embodiments, the phthalimide fungicide is applied at a rate of 500 g/ha.

In some embodiments, the phthalimide fungicide(s) is applied at a rate between 10-400 g a.i./ha. In some

embodiments, the phthalimide fungicide(s) is applied at a rate between 30-400 g a.i./ha. In some embodiments, the phthalimide fungicide(s) is applied at a rate between 100-400 g a.i./ha. In some embodiments, the phthalimide fungicide(s) is applied at a rate of 300 g a.i./ha. In some embodiments, the phthalimide fungicide(s) is applied at a rate of 250 g a.i./ha. In some embodiments, the phthalimide fungicide(s) is applied at a rate between 50-200 g a.i./ha. In some embodiments, the phthalimide fungicide(s) is applied at a rate between 100-200 g a.i./ha. In some embodiments, the phthalimide fungicide(s) is applied at a rate of less than 200 g a.i./ha. In some embodiments, the phthalimide fungicide(s) is applied at a rate of 200 g a.i./ha. In some embodiments, the phthalimide fungicide(s) is applied at a rate of 150 g a.i./ha. In some embodiments, the phthalimide fungicide(s) is applied at a rate of 100 g a.i./ha. In some embodiments, the phthalimide fungicide(s) is applied at a rate of 75 g a.i./ha. In some embodiments, the phthalimide fungicide(s) is applied at a rate of 30 g a.i./ha.

In some embodiments, the phthalimide fungicide(s) is applied at a rate between 0.0001 to 10000 ppm. In some embodiments, the phthalimide fungicide(s) is applied at a rate between 1 to 10000 ppm. In some embodiments, the phthalimide fungicide(s) is applied at a rate between 10 to 1000 ppm. In some embodiments, the phthalimide fungicide(s) is applied at a rate between 0.0001 to 0.5 ppm. In some embodiments, the phthalimide fungicide(s) is applied at a rate between 0.0005 to 0.3 ppm. In some embodiments, the phthalimide fungicide(s) is applied at a rate of about 0.0005 ppm. In some embodiments, the phthalimide fungicide(s) is applied at a rate between 0.005 to 0.03 ppm. In some embodiments, the phthalimide fungicide(s) is applied at a rate of about 0.002 ppm. In some embodiments, the phthalimide fungicide(s) is applied at a rate of about 0.06 ppm. In some embodiments, the phthalimide fungicide(s) is applied at a rate of about 0.3 ppm.

The application rates for captafol are generally from 1 to 5000 g/ha, preferably from 10 to 2500 g/ha, in particular from 20 to 1000 g/ha. In some embodiments, the application rates of captafol may be from 500 to 1500 g a.i/ha.

In some embodiments, the application rates for captan are generally from 1 to 5000 ga.i./ha, preferably from 10 to 2500 ga.i./ha, in particular from 20 to 1000 g/ha. In some embodiment, the application rates of captan may be from 500 to 1500 ga.i./ha. In some embodiments, the application rates of captan may be from 400 to 1500 g/ha.

In some embodiments, the application rates for folpet are generally from 1 to 5000 g a.i./ha, preferably from 10 to 2500 g a.i./ha, in particular from 20 to 1000 g/ha. In some embodiments, the application rates of folpet may be from 2000 to 5000 g a.i./ha. In some embodiments, the application rates of folpet may be from 500 to 1500 g a.i./ha. In some embodiments, the application rates of folpet may be from 400 to 1500 g/ha. In some embodiments, folpet is applied at a rate of 750 g/ha.

In some embodiments, the primary fungicide(s) is applied at a rate of 100-2000 g a.i./ha.

In some embodiments, the multi-site contact fungicide is applied at a rate of 500-1500 g a.i./ha. In some embodiments, the multi-site contact fungicide is applied at a rate of 1000-1500 g a.i./ha. In some embodiments, the multi-site contact fungicide is applied at a rate of 1000-1200 g a.i./ha. In some embodiments, the multi-site contact fungicide is applied at a rate of 1125 g a.i./ha. In some embodiments, the multi-site contact fungicide is applied at a rate of 1000 g a.i./ha. In some embodiments, the multi-site contact fungicide is applied at a rate of 1000-1250 g a.i./ha. In some embodiments, the multi-site contact fungicide is applied at a rate of 250-1000 g a.i./ha. In some embodiments, the multi-site contact fungicide is applied at a rate of 500-1000 g a.i./ha. In some embodiments, the multi-site contact fungicide is applied at a rate of 250-750 g a.i./ha. In some embodiments, the multi-site contact fungicide is applied at a rate of 500-750 g a.i./ha.

In some embodiments, the multi-site contact fungicide is applied at a rate between 0.0001 to 10000 ppm. In some embodiments, the multi-site contact fungicide is applied at a rate between 0.003 to about 0.01 ppm. In some embodiment, the multi-site contact fungicide is applied at a rate of about 0.003 ppm. In some embodiment, the multi-site contact fungicide is applied at a rate of about 0.01 ppm.

In some embodiments, the application rates for the succinate dehydrogenase inhibitor fungicide are generally from 1 to 1000 g a.i./ha, preferably from 10 to 900 g a.i./ha, in particular from 20 to 750 g a.i./ha. In some embodiments, the application rates of a succinate dehydrogenase inhibitor fungicide such as fluxapyroxad may be from 20 to 250 g a.i./ha.

In some embodiments, the SDHI fungicide is applied at a rate between 0.0001 to 10000 ppm. In some embodiments, the SDHI fungicide is applied at a rate between 0.00005 to about 0.1 ppm. In some embodiments, the SDHI fungicide is applied at a rate between 0.0001 to about 0.07 ppm. In some embodiments, the SDHI fungicide is applied at a rate of about 0.0001 ppm. In some embodiments, the SDHI fungicide is applied at a rate of about 0.0006 ppm. In some embodiments, the SDHI fungicide is applied at a rate of about 0.003 ppm. In some embodiments, the SDHI fungicide is applied at a rate of about 0.01 ppm. In some embodiments, the SDHI fungicide is applied at a rate of about 0.07 ppm.

The application rates for the succinate dehydrogenase inhibitor fungicide are generally from 1 to 1000 g/ha, preferably from 10 to 900 g/ha, in particular from 20 to 250 g/ha.

In some embodiments, the SDHI fungicide is applied at a rate between 20 to 250 g/ha. In some embodiments, the SDHI fungicide is applied at a rate between 20 to 150 g/ha. In some embodiments, the SDHI fungicide is applied at a rate between 50 to 100 g/ha. In some embodiments, the SDHI fungicide is applied at a rate of 62.5 g/ha. In some embodiments, the SDHI fungicide is applied at a rate of 90 g/ha.

The application rates for the DMI fungicide are generally from 1 to 1000 g/ha, preferably from 10 to 900 g/ha, in particular from 20 to 750 g/ha. In some embodiments, the DMI fungicide is applied at a rate between 20 to 450 g/ha.

In some embodiments, the DMI fungicide is applied at a rate between 300 to 600 g/ha. In some embodiments, the DMI fungicide is applied at a rate between 360 to 450 g/ha. In some embodiments, the DMI fungicide is applied at a rate between 400 to 500 g/ha. In some embodiments, the DMI fungicide is applied at a rate of 450 g/ha.

The application rates for the quinone outside inhibitor fungicide are generally from 1 to 1000 g/ha, preferably from 50 to 250 g/ha, in particular from 90 to 150 g/ha.

In some embodiments, the QoI fungicide is applied at a rate between 50 to 250 g/ha. In some embodiments, the QoI fungicide is applied at a rate between 90 to 200 g/ha. In some embodiments, the QoI fungicide is applied at a rate between 90 to 150 g/ha. In some embodiments, the QoI fungicide is applied at a rate of 150 g/ha. In some embodiments, the QoI fungicide is applied at a rate of 125 g/ha. In some embodiments, the QoI fungicide is applied at a rate of 90 g/ha. In some embodiments, the QoI fungicide is applied at a rate between 200 to 500 g/ha. In some embodiments, the QoI fungicide is applied at a rate of 200 g/ha. In some embodiments, the QoI fungicide is applied at a rate of 250 g/ha. In some embodiments, the QoI fungicide is applied at a rate of 500 g/ha.

The effective application rates of fungicide I and the phthalimide fungicide cannot generally be defined, as it varies depending upon various conditions such as the type of the formulation, weather conditions, the type of crop and the type of pests. The application rates of fungicide I and the phthalimide fungicide may also vary, depending on the desired effect.

In an embodiment, the application rate of fungicide I and the phthalimide fungicide combined is from 10 g/ha to 10000 g/ha. In an embodiment the application rate of fungicide I and the phthalimide fungicide combined is from 50 to 5000 g/ha. In some embodiments, the application rate of fungicide I and the phthalimide fungicide combined is from 100 to 2500 g/ha. In some embodiments, the application rate of fungicide I and the phthalimide fungicide combined is from 500 to 1500 g/ha. In some embodiments, the application rate of fungicide I and the phthalimide fungicide combined is from 800 to 1200 g/ha.

In some embodiments, the application rate of the SDHI fungicide and the phthalimide fungicide combined is from 500 to 1000 g/ha. In some embodiments, the application rate of the SDHI fungicide and the phthalimide fungicide combined is from 800 to 850 g/ha. In some embodiments, the application rate of the SDHI fungicide and the phthalimide fungicide combined is 812.5 g/ha. In some embodiments, the application rate of the SDHI fungicide and the phthalimide fungicide combined is 840 g/ha.

In some embodiments, the application rate of the DMI fungicide and the phthalimide fungicide combined is from 1000 to 1500 g/ha. In some embodiments, the application rate of the DMI fungicide and the phthalimide fungicide combined is from 1100 to 1300 g/ha. In some embodiments, the application rate of the DMI fungicide and the phthalimide fungicide combined is 1200 g/ha.

In some embodiments, the application rate of the QoI fungicide and the phthalimide fungicide combined is from 500 to 1500 g/ha. In some embodiments, the application rate of the DMI fungicide and the phthalimide fungicide combined is from 500 to 1000 g/ha. In some embodiments, the application rate of the DMI fungicide and the phthalimide fungicide combined is from 890 to 900 g/ha. In some embodiments, the application rate of the DMI fungicide and the phthalimide fungicide combined is from 750 to 1000 g/ha. In some embodiments, the application rate of the DMI fungicide and the phthalimide fungicide combined is 700 g/ha. In some embodiments, the application rate of the DMI fungicide and the phthalimide fungicide combined is 750 g/ha. In some embodiments, the application rate of the DMI fungicide and the phthalimide fungicide combined is 875 g/ha. In some embodiments, the application rate of the DMI fungicide and the phthalimide fungicide combined is 900 g/ha. In some embodiments, the application rate of the DMI fungicide and the phthalimide fungicide combined is 950 g/ha. In some embodiments, the application rate of the DMI fungicide and the phthalimide fungicide combined is 1000 g/ha.

In some embodiments, the method comprises applying a fungicide in addition to the phthalimide fungicide(s) and the primary fungicide(s).

In some embodiments, the plant includes cultivated plants which tolerate the action of herbicides, fungicides or insecticides as a result of breeding and/or genetically engineered methods.

In yet another embodiment the plant is wheat, rye, barley, triticale, oat, sorghum, rice, corn, vegetables, such as tomatoes, peppers, cucurbits, cabbage, broccoli, lettuce, spinach, cauliflower, melon, watermelon, cucumbers, carrots and onions, fruit trees, such as walnuts, hazelnut, pistachios, cocoa, kiwi, berries, olive, almonds, pineapples, apples, pears, plums, peaches, apricots and cherries, grapes, citrus fruit, such as oranges, lemons, grapefruits and limes, soft berries, such as strawberry, blueberry, raspberry, blackberry and goose berry, banana, potatoes, tobacco, cotton, soybean, oilseed rape, sunflower, peanuts, coffee, legumes, such as peas, beans, lentils and chickpeas, sugar beet, and sugar cane.

Target crops for the areas of indication disclosed herein comprise the following species of plants: cereals (wheat, barley, rye, oats, rice, sorghum and related crops); beet (sugar beet and fodder beet): pomes, stone fruit and soft fruit (apples, pears, plums, peaches, almonds, cherries, strawberries, raspberries and blackberries); leguminous plants (beans, lentils, peas, soybeans); oil plants (rape, mustard, poppy, olives, sunflowers, coconut, castor oil plants, cocoa beans, groundnuts): cucumber plants (marrows, cucumbers, melons): fibre plants (cotton, flax, hemp, jute): citrus fruit

(oranges, lemons, grapefruit, mandarins): vegetables (spinach, lettuce, asparagus, cabbages, carrots, onions, tomatoes, potatoes, paprika): lauraceae (avocados, cinnamon, camphor): or plants such as maize, tobacco, nuts, coffee, sugar cane, tea, vines, hops, bananas and natural rubber plants, as well as ornamentals (flowers, shrubs, broad-leaved trees and evergreens, such as conifers). This list does not represent any limitation.

The target crops include but are not limited to cocoa, cereals, pistachio, almond, grape, banana, corn, cotton, sugar beet, peanuts, pome fruit, pulses, soybean, cucurbits, hop, oilseed rape (OSR), tobacco, rice, potato, solanacea, coffee, stone fruits, citrus, sugar cane, ST bulbs, ST cereals, ST flowers bulbs, ST potato, ST sugar beet, and ST sugarcane.

In some embodiments, the plant is strawberry. In some embodiments, the plant is melon. In some embodiments, the plant is cereals. In some embodiments, the plant is grape. In some embodiments, the plant is banana. In some embodiments, the plant is corn. In some embodiments, the plant is cotton. In some embodiments, the plant is sugar beet. In some embodiments, the plant is rice. In some embodiments, the plant is cucurbits. In some embodiments, the plant is hop. In some embodiments, the plant is pome fruit. In some embodiments, the plant is solanacea. In some embodiments, the plant is oilseed rape (OSR). In some embodiments, the plant stone fruits. In some embodiments, the plant is citrus. In some embodiments, the plant is cocoa. In some embodiments, the plant is potato. In some embodiments, the plant is pulses. In some embodiments, the plant is coffee. In some embodiments, the plant is soybean.

Fungicide I is used for controlling disease in broad spectrum of plants, the plants include wheat, rye, barley, triticale, oat, sorghum, rice, corn, vegetables, such as tomatoes, peppers, cucurbits, cabbage, broccoli, lettuce, spinach, cauliflower, melon, watermelon, cucumbers, carrots and onions, fruit trees, such as walnuts, hazelnut, pistachios, cocoa, kiwi, berries, olive, almonds, pineapples, apples, pears, plums, peaches, apricots and cherries, grapes, citrus fruit, such as oranges, lemons, grapefruits and limes, soft berries, such as strawberry, blueberry, raspberry, blackberry and goose berry, banana, potatoes, tobacco, cotton, soybean, oilseed rape, sunflower, peanuts, coffee, legumes, such as peas, beans, lentils and chickpeas, sugar beet, sugar cane.

In some embodiments, the plant is a crop and the method is effective for increasing yield.

In some embodiments, the fungal infection causes a fungal disease.

The fungicidal combination, mixture or compositions according to the invention are effective against a broad spectrum of phytopathogenic fungi, especially the ones belonging to the following classes: Frosty pod (Moniliophthora roreri), Witches' broom (Moniliophthora pemiciosa), Seedling blight / foliar&ear disease (Microdochium sp.), Botryosphaeria Panicle and Shoot Blight (Botryosphaeria dothidea), Band canker (Botryosphaeria dothidea), Black rot (Phyllosticta ampelicida), Black sigatoka (Mycosphaerella fijiensis), Septoria (Zymoseptoria tritici), Ramularia leaf spot (Ramularia collo-cygni), Gray Leaf Spot (Cercospora zeae-maydis), Ramularia leaf spot (Ramularia areola), leaf spot of beet (Cercospora beticola), Ramularia leaf spot (Ramularia beticola), Yellow sigatoka (Pseudocercospora musae), Early leaf spot (Mycosphaerella arachidis), Late leaf spot (Mycosphaerella berkeleyi). Ashy leaf spot of pear (Mycosphaerella pyri), Leaf spot (Cercospora sp.), Septoria brown spot (Septoria glycines). Purple Seed Stain (Cercospora kikuchii), Scab (Cladosporium sp.), Leaf spot of hop (Pseudocercospora cantuariensis), White leaf spot (Neopseudocercosporella capsellae). Barn spot (Cercospora nicotianac). Sheath Blight (Rhizoctonia solani /Thanatephorus cucumeris), Rizoctonia (Rhizoctonia solani / Thanatephorus cucumeris), Damping off/root rot (Rhizoctonia solani / Thanatephorus cucumeris), Rizoctonia (Rhizoctonia solani / Thanatephorus cucumeris), Rhizoctonia root and crown rot (Rhizoctonia solani/Thanatephorus cucumeris), Pink Disease (Erythricium salmonicolor), Dead-arm (Diaporthe neoviticola), Eyespot (Kabatiella zeae), Powedery mildew (Blumeria graminis), Powdery mildew (Erysiphe cichoracearum), Powdery mildew (Sphaerotheca fuliginea), Powdery mildew (Erysiphe necator), Powdery mildew (Podosphaera macularis), Powdery mildew (Podosphaera leucotricha), Powdery mildew (Leveillula taurica / Oidium neolycopersici). powdery mildew (Erysiphe betae /Erysiphe polygoni), Powdery mildew (Erysiphe sp.), Powdery mildew (Podosphaera pannosa), Downy mildew (Peronospora tabacina), Powdery mildew (Erysiphe sp. / Oïdium sp), Powdery mildew (Leveillula taurica), Powdery mildew (Erysiphe cruciferarum), Powdery mildew (Erysiphe diffusa), Aspergillus ear rot (Aspergillus sp.), Light leaf Spot (Pyrenopeziza brassicae), Bark canker of apple (Phlyctema vagabunda), Leaf spot (Blumeriella jaapii), Grey mold (Botrytis cinerea), Sclerotinia (Sclerotinia sclerotiorum), Grey mould (Botrytis cinerea), Monilia (Monilinia spp. / Monilinia laxa / Monilia fructigena / Monilia fructicola), Botrytis blight (Botrytis cinerea), Grey mold (Botrytis sp.), White mould (Sclerotinia sp.), Sclerotinia stem rot or white mold (Sclerotinia sclerotiorum), Brown rot blossom (Monilinia fructicola), Botrytis Blossom and Shoot Blight (Botrytis cinerea), Leaf blotch of cereals (Rhynchosporium secalis), Fusarium head blight (Fusarium sp.), Maize Ear and Kernel Rot (Fusarium sp.), Eye rot (Neonectria galligena), Bakanae disease (Gibberella fujikuroi), Giberrella stalk and ear rot (Gibberella zeae), Coffee Wilt Disease (Gibberella xylarioides), Anthracnose of grapevine (Elsinoë ampelina), Crown and root rot (Phytophthora sp.), Black pod (Phytophthora palmivora/Phytophthora megakarya / Phytophthora capsica), Downy mildew (Pseudoperonospora cubensis), Downy mildew (Plasmopara viticola), Downy mildew (Pseudoperonospora humul), Late blight (Phytophthora infestans), Downy mildew (Peronospora viciae / Phytopthora sp.), Downy mildew (Hyaloperonospora parasitica), Downy mildew (Peronospora farinose), Coffee Berry Disease (Colletotrichum kahawae), Anthracnose (Colletotrichum sp.), Anthracnose (Colletotrichum musae), Anthracnose (Colletotrichum spp.), Anthracnose (Glomerella cingulata), Anthracnose (Colletotrichum

graminicola), Anthracnose (Glomerella gossypii), Fruit rot (Glomerella cingulata), Red rot (Colletotrichum falcatum), Anthracnose (Colletotrichum destructivum), Leaf spot (Polystigma rubrum). Club rot (Plasmodiophora brassicae), Target spot (Corynespora cassiicola). Didymella pisi (Ascochyta rabici), Boll rot (Ascochyta gossypiicola), Leaf spot of apple (Didymella pomorum), Leaf and pod spot (Didymella sp.), Shot-hole of stone fruit (Wilsonomyces carpophilus), Phoma stem canker and leaf spot (Plenodomus lingam), black leg of beet (Neocamarosporium betac), Yellow spot (Pyrenophora tritici-repentis / Drechslera tritici-repentis), Net blotch (Pyrenophora teres), Northern Corn Leaf Blight (Sctosphacria turcica). Southern corn leaf blight (Cochliobolus heterostrophus), Northern Corn Leaf Spot (Cochliobolus carbonum), Leaf blight (Alternaria spp. / Alternaria cucumerina), Alternaria (Alternaria alternata), Brown spot of pear (Pleospora allii), Alternaria blotch of apple (Alternaria mali / Alternaria sp.), Early blight (Alternaria sp.), Alternaria late blight (Alternaria sp.), Brown spot (Alternaria alternata), Leaf spot (Alternaria sp.), Brown spot (Cochliobolus miyabeanus), Eyespot (Helminthosporium sacchari), Scab (Venturia inaequalis), Scab (Venturia pyrina), Scab (Venturia carpophila), Coffee Leaf Rust (Hemileia vastatrix), Asian soybean rust (Phakopsora pachyrhizi), Panama wilt (Phakopsora gossypii), Tropical cotton rust (Phakopsora gossypii), Brown rust (Puccinia recondite), Yellow rust (Puccinia striiformis), Rust (Uromyces betae), Common Rust (Puccinia sorghi), Rust (Uromyces sp.), Cotton rust (Puccinia schedonnardi), Southwestern cotton rust (Puccinia cacabata), Rust (Tranzschelia spp.), Rice Blast (Pyricularia oryzae), leaf curl (Taphrina spp. / Taphrina deformans), Common Smut (Ustilago maydis), Smut (Ustilago scitaminea), Esca of grapevine (Phaeomoniella chlamydospore).

Fungicide I is used for controlling a broad spectrum of phytopathogenic fungi. For example, the phytopathogenic fungi may be one or more of Alternaria species on vegetables, fruit trees, oilseed rape, sugar beet and fruit and rice, such as, *A. solani* or *A. alternata* on potatoes, tomatoes, apples and pears; Aphanomyces species on sugar beet and vegetables: Ascochyta species on cereals, legumes and vegetables; Bipolaris and Drechslera species on corn, cereals, rice and lawns, for example, *D. maydis* on corn; *Blumeria graminis* (powdery mildew) on cereals; Botrytis *cinerea* (gray mold) on strawberries, vegetables, flowers and grapevines; *Bremia lactucae* on lettuce; Cercospora species on corn, soybeans, rice, sugar beet and coffee; Cochliobolus species on corn, cereals, rice, for example *Cochliobolus sativus* on cereals, *Cochliobolus miyabeanus* on rice; Colletotricum species on vegetables, soybeans and cotton, such as *Colletotrichum truncatum* in pepper and soybean; Drechslera species, Pyrenophora species on corn, cereals, rice and lawns, for example, *D. teres* on barley or *D. tritici-repentis* on wheat: Esca on grapevines, caused by *Phaeoacremonium chlamydosporum, P. Aleophilum* and *Fomitiporia punctata* (syn. *Phellinus punctatus*), Exscrohilum species on corn; *Erysiphe cichoracearum* and *Sphaerotheca fuliginea* on cucumbers: Fusarium and Verticillium species on various plants, for example, *Fusarium graminearum* or *Fusarium culmorum* on cereals or *F. oxysporum* on a multitude of plants, such as, for example, tomatoes: *Gaeumannomyces graminis* on cereals: Gibberella species on cereals and rice (for example *Gibberella fujikuroi* on rice); Grainstaining complex on rice: Helminthosporium species on corn and rice; *Hemileia vastatrix* on coffee: *Microdochium nivale* on cereals; Mycosphaerella species on cereals, bananas and peanuts, for example, *M. graminicola* on wheat, *M. fijiensis* on bananas or *M. pyri* on pears: Peronospora species on cabbage and bulbous plants, for example, *P. brassicae* on cabbage or *P. destructor* on onions; *Phakopsora pachyrhizi* and *Phakopsora meibomiae* on soybeans: Phomopsis species on soybeans, sunflowers and grapes; *Phytophthora infestans* on potatoes and tomatoes; Phytophthora species on various plants, for example, *P. capsici* on bell pepper, *P. citrophthora* and *P. citricola* in citrus; *Plasmopara viticola* on grapevines; Pleosporales on various plants, for example,*Pleospora allii* in pears and onion: *Podosphaera leucotricha* on apples; *Pseudocercosporella herpotrichoides* on cereals: Pseudoperonospora on various plants, for example, *P. cubensis* on cucumber or *P. humili* on hops: Puccinia species on various plants, for example, *Puccinia recondita, Puccinia triticina, Puccinia striiformis, Puccinia hordei* or *Puccinia graminis* on cereals or *Puccinia asparagi* on asparagus: *Pyricularia oryzae, Corticium sasakii, Sarocladium oryzae, S. attenuatum, Entyloma oryzae* on rice: *Pyricularia grisea* on lawns and cereals: *Pythium* spp. on lawns, rice, corn, cotton, oilseed rape, sunflowers, sugar beet, vegetables and other plants, for example, *P. ultimum* on various plants, *P. aphanidermatum* on lawns; Ramularia species on cereals, barley and cotton, for example, *Ramularia collo-cygni* on barley and *Ramularia areola* on cotton: Rhizoctonia species on cotton, rice, potatoes, lawns, corn, oilseed rape, sugar beet, vegetables and on various plants, for example, *R. solani* on beet and various plants; *Rhynchosporium secalis* on barley, rye and triticale; Sclerotinia species on oilseed rape and sunflowers: *Zymoseptoria tritici* (syn. *Septoria tritici*) and *Stagonospora nodorum* on wheat; Erysiphe species on wheat such as *Erysiphe graminis*; *Erysiphe* (syn. *Uncinula*) *necator* on grapevines: Setosphaeria species on corn and lawns; *Sphacelotheca reiliana* on corn; Thielaviopsis species on soybeans and cotton: Tilletia species on cereals; Ustilago species on cereals, corn and sugar cane, for example, *U. maydis* on corn; Venturia species (scab) on apples and pears, for example, V. *inaequalis* on apples.

In some embodiments, the disease is Ramularia leaf spot in barley (*Ramularia collo-cygni*).

The fungal pathogen is one or more of Alternaria species on vegetables, oilseed rape, sugar beet and rice. such as, *A. solani* in tomatoes or *A. cucumerina* in cucumber or melon: Aphanomyces species on sugar beet and vegetables: Ascochyta species on cereals, legumes and vegetables: Bipolaris and Drechslera species on corn, cereals, rice and lawns, for example, *D. maydis* on com: *Blumeria graminis* (powdery mildew) on cereals; *Botrytis cinerea* (gray mold) on strawberries, vegetables and flowers or *B. aclada* on onion: *Bremia lactucae* on lettuce: Cercospora species on corn,

soybeans, rice, sugar beet and coffee as *C. beticola* in sugarbeet or *C. kikuchii* in soybean; Cladosporium species on several crops: *Claviceps purpurea* on rye; Cochliobolus species on corn, cereals, rice, for example *Cochliobolus sativus* on cereals, *Cochliobolus miyabeanus* on rice; Colletotricum species on vegetables, soybeans and cotton, such as *Colletotrichum truncatum* in pepper and soybean; Drechslera species and Pyrenophora species on corn, cereals, rice and lawns, for example, *D. teres* on barley or *D. tritici-repentis* on wheat; Esca on grapevines, caused by *Phaeoacremonium chlamydosporum, P. Aleophilum* and *Fomitiporia punctata* (syn. *Phellinus punctatus*), Exserohilum species on corn; *Erysiphe cichoracearum* and *Sphaerotheca fuliginea* on cucumbers: Fusarium and Verticillium species on various plants, for example, *Fusarium graminearum* or *Fusarium culmorum* on cereals or *F. oxysporum* on a multitude of plants, such as, for example, tomatoes: *Gaeumannomyces graminis* on cereals; Gibberella species on cereals and rice (for example *Gibberella fujikuroi* on rice): Grainstaining complex on rice: Helminthosporium species on corn and rice: *Hemileia vastatrix* on coffee; *Microdochium nivale* on cereals; Mycosphaerella species on several crops, for example, *M. brassicicola* on brassicas: *Parastagonospora nodonum* on cereals: Peronospora species on cabbages, legumes and bulbous plants, for example, *P. brassicae* on cabbage or *P. destructor* on onions; *Phakopsora pachyrhizi* and *Phakopsora meibomiae* on soybeans; Phoma species on soybean, cucurbits, tomato and brassicas: Phomopsis species on soybeans, sunflowers and grapes; *Phytophthora infestans* on potatoes and tomatoes; Phytophthora species on various plants, for example, *P. capsici* on bell pepper, *P. citrophthora* and *P. citricola* in citrus; *Plasmopara viticola* on grapevines; Pleosporales on various plants, for example, *Pleospora herbarum* in alfalfa, tomato and chickpeas: *Pseudocercosporella herpotrichoides* on cereals; Pseudoperonospora on various plants, for example, *P. cubensis* on cucumber or *P. humili* on hops: *Pyricularia oryzae, Corticium sasakii, Sarocladium oryzae, S. attenuatum, Entyloma oryzae* on rice: *Pyricularia grisea* on lawns and cereals: *Pythium* spp. on lawns, rice, corn, cotton, oilseed rape, sunflowers, sugar beet, vegetables and other plants, for example, *P. ultimum* on various plants, *P. aphanidermatum* on lawns: Ramularia species on cereals, barley and cotton, for example, *Ramularia collo-cygni* on barley and *Ramularia areola* on cotton: Rhizoctonia species on cotton, rice, potatoes, lawns, corn, oilseed rape, sugar beet, vegetables and on various plants, for example, *R. solani* on beet and various plants; *Rhynchosporium secalis* on barley, rye and triticale; Sclerotinia species on oilseed rape, sunflowers and lettuce; Septoria species on several crops as *S. lacturae* in lettuce: Erysiphe species on wheat such as *Erysiphe graminis*, *Erysiphe* (syn. *Uncinula*) *necator* on grapevines: Setosphaeria species on corn and lawns: *Sphacelotheca reiliana* on com: Thielaviopsis species on soybeans and cotton; Tilletia species on cereals: Ustilago species on cereals, corn and sugar cane, for example, *U. maydis* on corn.

In some embodiments, the fungal pathogen group is Hyponectriaceae. In some embodiments, the fungal pathogen group is Phyllostictaceae. In some embodiments, the fungal pathogen group is Mrycosphaerellaceae. In some embodiments, the fungal pathogen group is Ceratobasidiaceae. In some embodiments, the fungal pathogen group is Erysiphaceae. In some embodiments, the fungal pathogen group is Trichocomaceae. In some embodiments, the fungal pathogen group is Sclerotiniaceae. In some embodiments, the fungal pathogen group is Dermateaceae. In some embodiments, the fungal pathogen group is Sclerotiniaceae. In some embodiments, the fungal pathogen group is Nectriaceae. In some embodiments, the fungal pathogen group is Peronosporaceae. In some embodiments, the fungal pathogen group is Glomerellaceac. In some embodiments, the fungal pathogen group is Plcosporaccac. In some embodiments, the fungal pathogen group is Leptosphaeriaceac. In some embodiments, the fungal pathogen group is Venturiaceae. In some embodiments, the fungal pathogen group is Didymellaceae. In some embodiments, the fungal pathogen group is Pleosporaceae. In some embodiments, the fungal pathogen group is Corynesporascaceae. In some embodiments, the fungal pathogen group is Pucciniaceae. In some embodiments, the fungal pathogen group is Chaconiaceae. In some embodiments, the fungal pathogen group is Phakopsoraceae. In some embodiments, the fungal pathogen group is Pucciniaceae. In some embodiments, the fungal pathogen group is Magnaporthales. In some embodiments, the fungal pathogen group is Taphrinaceae. In some embodiments, the fungal pathogen group is Ustilaginaceae.

In some embodiments, the pathogen class is Amphisphaeriales. In some embodiments, the pathogen class is Botryosphaeriales. In some embodiments, the pathogen class is Capnodiales. In some embodiments, the pathogen class is Ceratobasidiales. In some embodiments, the pathogen class is Erysiphales. In some embodiments, the pathogen class is Eurotiales. In some embodiments, the pathogen class is Helotiales. In some embodiments, the pathogen class is Hypocrcales. In some embodiments, the pathogen class is Peronosporales. In some embodiments, the pathogen class is Phyllachorales. In some embodiments, the pathogen class is Pleosporales. In some embodiments, the pathogen class is Pucciniales. In some embodiments, the pathogen class is Pyriculariaceae. In some embodiments, the pathogen class is Taphrinales. In some embodiments, the pathogen class is Ustilaginales.

In some embodiments, the fungal pathogen is Botrytis cinerea. In some embodiments, the fungal pathogen is Microdochium sp. In some embodiments, the fungal pathogen is Phyllosticta ampelicida. In some embodiments, the fungal pathogen is Mycosphaerella fijiensis. In some embodiments, the fungal pathogen is Zymoseptoria tritici. In some embodiments, the fungal pathogen is Ramularia collo-cygni. In some embodiments, the fungal pathogen is Cercospora zeae-maydis. In some embodiments, the fungal pathogen is Ramularia areola. In some embodiments, the fungal pathogen is Cercospora beticola. In some embodiments, the fungal pathogen is Ramularia beticola. In some embodiments, the fungal pathogen is Rhizoctonia solani / Thanatephorus cucumeris. In some embodiments, the fungal pathogen is Blumeria graminis. In some embodiments, the fungal pathogen is Erysiphe cichoracearum. In some embodiments, the fungal pathogen is Sphaerotheca fuliginea. In some embodiments, the fungal pathogen is Erysiphe necator. In some embodiments, the fungal pathogen is Podosphaera macularis. In some embodiments, the fungal pathogen is Podosphaera leucotricha. In some embodiments, the fungal pathogen is Leveillula Taurica. In some embodiments, the fungal pathogen is Oidium neolycopersici. In some embodiments, the fungal pathogen is Erysiphe betae. In some embodiments, the fungal pathogen is Erysiphe polygoni. In some embodiments, the fungal pathogen is Aspergillus sp. In some embodiments, the fungal pathogen is Botrytis cinerea. In some embodiments, the fungal pathogen is Pyrenopeziza brassicae. In some embodiments, the fungal pathogen is Sclerotinia sclerotiorum. In some embodiments, the fungal pathogen is Botrytis cinerea. In some embodiments, the fungal pathogen is Monilinia spp. In some embodiments, the fungal pathogen is Monilinia laxa. In some embodiments, the fungal pathogen is Monilia fructigena. In some embodiments, the fungal pathogen is Monilia fructicola. In some embodiments, the fungal pathogen is Fusarium sp. In some embodiments, the fungal pathogen is Phytophthora sp. In some embodiments, the fungal pathogen is Phytophthora palmivora. In some embodiments, the fungal pathogen is Phytophthora megakarya. In some embodiments, the fungal pathogen is Phytophthora capsica. In some embodiments, the fungal pathogen is Pseudoperonospora cubensis. In some embodiments, the fungal pathogen is Plasmopara viticola. In some embodiments, the fungal pathogen is Pseudoperonospora humul. In some embodiments, the fungal pathogen is Phytophthora infestans. In some embodiments, the fungal pathogen is Peronospora viciac. In some embodiments, the. fungal pathogen is Phytopthora sp. In some embodiments, the fungal pathogen is Phytophthora infestans. In some embodiments, the fungal pathogen is Colletotrichum kahawac. In some embodiments, the fungal pathogen is Colletotrichum sp.. In some embodiments, the fungal pathogen is Pyrenophora tritici-repentis In some embodiments, the fungal pathogen is Drechslera tritici-repentis. In some embodiments, the fungal pathogen is Pyrenophora teres. In some embodiments, the fungal pathogen is Setosphaeria turcica. In some embodiments, the fungal pathogen is Cochliobolus heterostrophus. In some embodiments, the fungal pathogen is Cochliobolus carbonum. In some embodiments, the fungal pathogen is Alternaria spp. In some embodiments, the fungal pathogen is Alternaria cucumerina. In some embodiments, the fungal pathogen is Plenodomus lingam. In some embodiments, the fungal pathogen is Alternaria alternate. In some embodiments, the fungal pathogen is Pleospora allii. In some embodiments, the fungal pathogen is Alternaria mali. In some embodiments, the fungal pathogen is Alternaria sp. In some embodiments, the fungal pathogen is Venturia inaequalis. In some embodiments, the fungal pathogen is Venturia pyrina. In some embodiments, the fungal pathogen is Alternaria sp. In some embodiments, the fungal pathogen is Ascochyta rabiei. In some embodiments, the fungal pathogen is Alternaria sp. In some embodiments, the fungal pathogen is Corynesporacassiicola. In some embodiments, the fungal pathogen is Puccinia recondite. In some embodiments, the fungal pathogen is Puccinia striiformis. In some embodiments, the fungal pathogen is Hemileia vastatrix. In some embodiments, the fungal pathogen is Phakopsora pachyrhizi. In some embodiments, the fungal pathogen is Uromyces betae. In some embodiments, the fungal pathogen is Pyricularia oryzae. In some embodiments, the fungal pathogen is Taphrina spp. In some embodiments, the fungal pathogen is Taphrina deformans. In some embodiments, the fungal pathogen is Ustilago maydis.

Fungicide I is used for controlling fungal groups, fungal classes and fungal pathogens, including the fungal groups, fungal classes and fungal pathogens described herein.

Fungal infection may cause fungal disease affecting the plant or soil. In some embodiments, treating a plant or soil against fungal infection comprises treating the plant or soil against fungal disease.

In some embodiments, the fungal disease is apple scab disease. In some embodiments, the fungal disease is seedling blight. In some embodiments, the fungal disease is foliar & car disease. In some embodiments, the fungal disease is Black rot. In some embodiments, the fungal disease is Black sigatoka. In some embodiments, the fungal disease is Septoria. In some embodiments, the fungal disease is Ramularia leaf spot. In some embodiments, the fungal disease is gray leaf spot. In some embodiments, the fungal disease is leaf spot of beet. In some embodiments, the fungal disease is sheath blight. In some embodiments, the fungal disease is powdery mildew. In some embodiments, the fungal disease is Aspergillus ear rot. In some embodiments, the fungal disease is grey mold. In some embodiments, the fungal disease is Sclerotinia. In some embodiments, the fungal disease is Monilia. In some embodiments, the fungal disease is Fusarium head blight. In some embodiments, the fungal disease is Maize Ear and Kernel Rot. In some embodiments, the fungal disease is Crown and root rot. In some embodiments, the fungal disease is Black pod. In some embodiments, the fungal disease is Downy mildew. In some embodiments, the fungal disease is Late blight. In some embodiments, the fungal disease is Coffee Berry Disease. In some embodiments, the fungal disease is Anthracnose. In some embodiments, Antracnose. In some embodiments, the fungal disease is yellow spot. In some embodiments, the fungal disease is Net blotch. In some embodiments, the fungal disease is Northern Corn Leaf Blight. In some embodiments, the fungal disease is Northern Corn Leaf Spot. In some embodiments, the fungal disease is Phoma stem canker and leaf spot. In some embodiments, the fungal disease is Alternaria. In some embodiments, the fungal disease is Brown spot of pear. In some embodiments, the fungal disease is Alternaria blotch of apple. In some embodiments, the fungal disease is scab. In some embodiments, the fungal disease is Early blight. In some embodiments, the fungal disease is Didymella pisi. In some

embodiments, the fungal disease is Target spot. In some embodiments, the fungal disease is Brown rust. In some embodiments, the fungal disease is yellow rust. In some embodiments, the fungal disease is Coffee Leaf Rust. In some embodiments, the fungal disease is Asian soybean rust. In some embodiments, the fungal disease is Rust. In some embodiments, the fungal disease is Rice Blast. In some embodiments, the fungal disease is leaf curl. In some embodiments, the fungal disease is Common Smut.

Fungicide I is used for controlling broad spectrum of diseases, including the fungal diseases described herein. Fungicide I may be used on a variety of plants, including the plants described herein. Preferably, fungicide I is used for controlling the following fungal diseases. In some embodiments, the disease is Sheath blight in rice crop. In some embodiments, the disease is apple scab. In some embodiments, the disease is Early blight disease in vegetable crop. In some embodiments, the vegetable crop is potato. In some embodiments, the vegetable crop is tomato. In some embodiments, the vegetable crop is chili. In some embodiments, the disease is Anthracnose and/or Altemaria. In some embodiments, the disease is an early blight disease in potatoes. In some embodiments, the disease is an anthracnose disease in chili. In some embodiments, the disease is Septoria in cereals. In some embodiments, the disease is black sigatoka in banana. In some embodiments, the disease is Sphaerotheca fuliginea in melon. In some embodiments, the disease is Anthracnose and/or Alternariain chilli. In some embodiments, the disease is Erysiphe necator in grape. In some embodiments, the disease is Phakopsora pachyrhizi in soybean. In some embodiments, the disease is Botrytis cinerea in strawberry. In some embodiments, the disease is Venturia inaequalis in apple. In some embodiments, the disease is Alternaria sp. or Phytophthora infestans in tomato. In some embodiments, the disease is Plasmopara viticola in grape. In some embodiments, the disease is caused by Colletotrichum capsica. In some embodiments, the disease is caused by Alternaria solani.

***Preferred Combinations for Specific Fungal Pathogens, Fungal Diseases, and/or Plants***

In some embodiments, the fungal disease is a fungal disease in a vegetable crop. In some embodiments, the vegetable crop is potato. In some embodiments, the vegetable crop is tomato. In some embodiments, the vegetable crop is chili. In some embodiments, the fungal disease is a fungal disease in a fruit crop. In some embodiments, the fruit crop is apple. In some embodiments, the fruit crop is banana. In some embodiments, the fruit is grape. In some embodiments, the fruit is melon. In some embodiments, the fruit is strawberry. In some embodiments, the fungal disease is a fungal disease in rice. In some embodiments, the fungal disease is a fungal disease in barley. In some embodiments, the fungal disease is a fungal disease in soybean.

In some embodiments, the fungal disease is early blight disease. In some embodiments, the fungal disease is early blight disease in tomato. In some embodiments, the fungal disease is early blight disease in potato. In some embodiments, the fungal disease is caused by Alternaria sp. In some embodiments, the Alternaria sp. is Alternaria solani. In some embodiments, the early blight disease is caused by Alternaria sp. In some embodiments, the early blight disease is caused by Alternaria solani. For early blight disease and/or fungal disease caused by Alternaria sp., the combination comprising a phthalimide fungicide and the following primary fungicides or combinations of primary fungicides are preferred. In some embodiments, the primary fungicide is selected from the group consisting of demethylation inhibitor fungicides (DMI), succinate dehydrogenase inhibitor fungicides (SDHI), quinone outside inhibitors and any combination thereof. In some embodiments, the primary fungicide is a demethylation inhibitor fungicide (DMI). In some embodiments, the primary fungicide is a succinate dehydrogenase inhibitor fungicide (SDHI). In some embodiments, the primary fungicide is a quinone outside inhibitor. In some embodiments, the demethylation inhibitor fungicide (DMI) is difenocon0le or tebuconazole. In some embodiments, the succinate dehydrogenase inhibitor fungicide (SDHI) is fluxapyroxad. In some embodiments, the quinone outside inhibitor is azoxystrobin or pyraclostrobin. In some embodiments, the combination comprises two primary fungicides, wherein the two primary fungicides are a quinone outside inhibitor fungicide and a succinate dehydrogenase inhibitor fungicide (SDHI), preferably the succinate dehydrogenase inhibitor fungicide (SDHI) is fluxapyroxad. In some embodiments, primary fungicide is selected from the group consisting of carboxylic acid amide fungicides, quinone outside stigmatellin inhibitors fungicides, cyanoacetamideoxime fungicides, oxysterol binding protein inhibitor fungicides, and any combination thereof. In some embodiments, primary fungicide is a carboxylic acid amide fungicide. In some embodiments, the primary fungicide is a quinone outside stigmatellin inhibitors fungicide. In some embodiments, the primary fungicide is a benzamides fungicide. In some embodiments, the primary fungicide is a cyanoacetamideoxime fungicide. In some embodiments, the primary fungicide is an oxysterol binding protein inhibitor fungicide. In some embodiments, the carboxylic acid amide fungicide is mandipropamide. In some embodiments, the quinone outside stigmatellin inhibitors fungicide is ametoctradin. In some embodiments, the benzamides fungicide is zoxamide or fluopicolide. In some embodiments, the cyanoacetamideoxime fungicide is cymoxanil. In some embodiments, the oxysterol binding protein inhibitor fungicide is oxathiapiprolin. In some embodiments, the fungal pathogen is Alternaria sp. and/or the fungal disease in tomato or potato is caused by Alternaria sp. and the primary fungicide is selected from the group consisting of difenoxonazole, tebuconazole, fluxapyroxad, azoxystrobin pyraclostrobin and any combination thereof. In some embodiments, the fungal pathogen is Alternaria sp. and/or the fungal disease in tomato or potato is

caused by Alternaria sp. and the primary fungicide is selected from the group consisting of mandipropamide, ametoctradin, zoxamide, fluopicolide, cymoxanil oxathiapiprolin and any combination thereof. In some embodiments, the combination for controlling Alternaria sp. in tomato or potato comprises difenoconazole and captan. In some embodiments, the combination for controlling Alternaria sp. in tomato comprises tebuconazole and captan. In some embodiments, the combination for controlling Alternaria sp. in tomato or potato comprises difenoconazole, fluxapyroxad and captan. In some embodiments, the combination for controlling Alternaria sp. in tomato or potato comprises tebuconazole and captan. In some embodiments, the combination for controlling Alternaria sp. in tomato or potato comprises pyraclostrobin and captan. In some embodiments, the combination for controlling Alternaria sp. in tomato or potato comprises azoxystrobin and captan. In some embodiments, the combination for controlling Alternaria sp. in tomato or potato comprises azoxystrobin and folpet. In some embodiments, the combination for controlling Alternaria sp. in tomato or potato comprises pyraclostrobin, fluxapyroxad and captan. In some embodiments, the combination for controlling Alternaria sp. in tomato or potato comprises pyraclostrobin, fluxapyroxad and folpet. In some embodiments, the combination for controlling Alternaria sp. in tomato or potato comprises azoxystrobin, fluxapyroxad and captan. In some embodiments, the combination for controlling Alternaria sp. in tomato or potato comprises azoxystrobin, fluxapyroxad and folpet. In some embodiments, the combination for controlling Alternaria sp. in tomato or potato comprises pyraclostrobin, fluxapyroxad and folpet. In some embodiments, the combination for controlling Alternaria sp. in tomato or potato comprises mandipropamide and captan. In some embodiments, the combination for controlling Alternaria sp. in tomato or potato comprises ametoctradin and captan. In some embodiments, the combination for controlling Alternaria sp. in tomato or potato comprises zoxamide and captan. In some embodiments, the combination for controlling Alternaria sp. in tomato or potato comprises fluopicolide and captan. In some embodiments, the combination for controlling Alternaria sp. in tomato or potato comprises cymoxanil and captan. In some embodiments, the combination for controlling Alternaria sp. in tomato or potato comprises oxathiapiprolin and captan. In some embodiments, the combination for controlling Alternaria sp. in tomato or potato comprises mandipropamide and folpet. In some embodiments, the combination for controlling Alternaria sp. in tomato or potato comprises ametoctradin and folpet. In some embodiments, the combination for controlling Alternaria sp. in tomato or potato comprises zoxamide and folpet. In some embodiments, the combination for controlling Alternaria sp. in tomato or potato comprises fluopicolide and folpet. In some embodiments, the combination for controlling Alternaria sp. in tomato or potato comprises cymoxanil and folpet. In some embodiments, the combination for controlling Alternaria sp. in tomato or potato comprises oxathiapiprolin and folpet. In some embodiments, the combination for controlling Alternaria sp. in tomato or potato comprises fluxapyroxad and captan. In some embodiments, the combination for controlling Alternaria sp. in tomato or potato comprises fluxapyroxad and folpet.

In some embodiments, the fungal disease is late blight disease. In some embodiments, the fungal disease is late blight disease in tomato. In some embodiments, the fungal disease is caused by Phytophthora infestans. In some embodiments, the late blight disease is caused by Phytophthora infestans. For late blight disease and/or fungal disease caused by Phytophthora infestans, the combination comprising a phthalimide fungicide and the following primary fungicides or combinations of primary fungicides are preferred. In some embodiments, primary fungicide is selected from the group consisting of carboxylic acid amide fungicides, quinone outside stigmatellin inhibitors fungicides, cyanoacetamideoxime fungicides, oxysterol binding protein inhibitor fungicides, and any combination thereof. In some embodiments, primary fungicide is a carboxylic acid amide fungicide. In some embodiments, the primary fungicide is a quinone outside stigmatellin inhibitors fungicide. In some embodiments, the primary fungicide is a benzamides fungicide. In some embodiments, the primary fungicide is a cyanoacetamideoxime fungicide. In some embodiments, the primary fungicide is an oxysterol binding protein inhibitor fungicide. In some embodiments, the carboxylic acid amide fungicide is mandipropamide. In some embodiments, the quinone outside stigmatellin inhibitors fungicide is ametoctradin. In some embodiments, the benzamides fungicide is zoxamide or fluopicolide. In some embodiments, the cyanoacetamideoxime fungicide is cymoxanil. In some embodiments, the oxysterol binding protein inhibitor fungicide is oxathiapiprolin. In some embodiments, the fungal pathogen is Phytophthora infestans and/or the fungal disease in tomato is caused by Phytophthora infestans and the primary fungicide is selected from the group consisting of mandipropamide, ametoctradin, zoxamide, fluopicolide, cymoxanil oxathiapiprolin and any combination thereof.

In some embodiments, the combination for controlling Phytophthora infestans in tomato comprises mandipropamide and captan. In some embodiments, the combination for controlling Phytophthora infestans in tomato comprises ametoctradin and captan. In some embodiments, the combination for controlling Phytophthora infestans in tomato comprises zoxamide and captan. In some embodiments, the combination for controlling Phytophthora infestans in tomato comprises fluopicolide and captan. In some embodiments, the combination for controlling Phytophthora infestans in tomato comprises cymoxanil and captan. In some embodiments, the combination for controlling Phytophthora infestans in tomato comprises oxathiapiprolin and captan. In some embodiments, the combination for controlling Phytophthora infestans in tomato comprises mandipropamide and folpet. In some embodiments, the combination for controlling Phytophthora infestans in tomato comprises ametoctradin and folpet. In some embodiments, the combination for controlling *Phytophthora* infestans in tomato comprises zoxamide and folpet. In some embodiments, the combination for controlling Phytophthora infestans in tomato comprises fluopicolide and folpet. In some embodiments, the combination

for controlling Phytophthora infestans in tomato comprises cymoxanil and folpet. In some embodiments, the combination for controlling Phytophthora infestans in tomato comprises oxathiapiprolin and folpet.

In some embodiments, the fungal disease is apple scab disease. In some embodiments, the fungal pathogen is Venturia inaequalis. In some embodiments, the fungal disease in apple is caused by Venturia inaequalis. In some embodiments, the apple scab disease is caused by Venturia inaequalis. For apple scab disease and/or fungal disease caused by Venturia inaequalis, the combination comprising a phthalimide fungicide and the following primary fungicides or combinations of primary fungicides are preferred. In some embodiments, the primary fungicide is selected from the group consisting of demethylation inhibitor fungicides (DMI), anilinopyrimidines fungicides, phosphonates fungicides, succinate dehydrogenase inhibitor fungicides (SDHI), and any combination thereof. In some embodiments, the primary fungicide is a demethylation inhibitor fungicide (DMI). In some embodiments, primary fungicide is an anilinopyrimidines fungicide. In some embodiments, the primary fungicide is a phosphonates fungicide. In some embodiments, the primary fungicide is a succinate dehydrogenase inhibitor fungicide (SDHI). In some embodiments, the demethylation inhibitor fungicide (DMI) is difenoconazole or tebuconazole. In some embodiments, the succinate dehydrogenase inhibitor fungicide (SDHI) is fluxapyroxad. In some embodiments, the anilinopyrimidines fungicide is cyprodinil. In some embodiments, the phosphonates fungicide is potassium phosphonate (fosetyl-Al). In some embodiments, the fungal pathogen is Venturia inaequalis or the fungal disease in apple is caused by Venturia inaequalis and the primary fungicide is selected from the group consisting of cyprodinil, difenoconazole, tebuconazole, fluopyram, fluxapyroxad, fosetyl-Al potassium phosphonate and any combination thereof. In some embodiments, the combination for controlling Venturia inaequalis in apple comprises tebuconazole, fluopyram and captan. In some embodiments, the combination for controlling Venturia inaequalis in apple comprises difenoconazole, fluopyram and captan. In some embodiments, the combination for controlling Venturia inaequalis in apple comprises difenoconazole, fluopyram and folpet. In some embodiments, the combination for controlling Venturia inacqualis in apple comprises tebuconazole, fluopyram and folpet. In some embodiments, the combination for controlling Venturia inacqualis in apple comprises fluopyram and captan. In some embodiments, the combination for controlling Venturia inaequalis in apple comprises fluopyram and folpet. In some embodiments, the combination for controlling Venturia inacqualis in apple comprises difenoconazole and captan. In some embodiments, the combination for controlling Venturia inacqualis in apple comprises difenoconazole and folpet. In some embodiments, the combination for controlling Venturia inaequalis in apple comprises tebuconazole and captan. In some embodiments, the combination for controlling Venturia inaequalis in apple comprises tebuconazole and folpet. In some embodiments, the combination for controlling Venturia inaequalis in apple comprises tebuconazole, fluxapyroxad and captan. In some embodiments, the combination for controlling Venturia inaequalis in apple comprises difenoconazole, fluxapyroxad and captan. In some embodiments, the combination for controlling Venturia inaequalis in apple comprises difenoconazole, fluxapyroxad and folpet. In some embodiments, the combination for controlling Venturia inaequalis in apple comprises tebuconazole, fluxapyroxad and folpet. In some embodiments, the combination for controlling Venturia inaequalis in apple comprises cyprodinil and captan. In some embodiments, the combination for controlling Venturia inaequalis in apple comprises cyprodinil and folpet. In some embodiments, the combination for controlling Venturia inaequalis in apple comprises fluxapyroxad and captan. In some embodiments, the combination for controlling Venturia inacqualis in apple comprises fluxapyroxad and folpet. In some embodiments, the combination for controlling Venturia inaequalis in apple comprises cyprodinil, fluxapyroxad and captan. In some embodiments, the combination for controlling Venturia inaequalis in apple comprises cyprodinil, fluxapyroxad and folpet. In some embodiments, the combination for controlling Venturia inaequalis in apple comprises potassium phosphonate and captan. In some embodiments, the combination for controlling Venturia inaequalis in apple comprises potassium phosphonate and folpet. In some embodiments, the combination for controlling Venturia inaequalis in apple comprises fosetyl-Al and captan. In some embodiments, the combination for controlling Venturia inaequalis in apple comprises fosetyl-Al and folpet. In some embodiments, the combination for controlling Venturia inaequalis in apple comprises pyraclostrobin and folpet. In some embodiments, the combination for controlling Venturia inaequalis in apple comprises azoxystrobin and folpet. In some embodiments, the combination for controlling Venturia inaequalis in apple comprises difenoconazole and folpet. In some embodiments, the combination for controlling Venturia inaequalis in apple comprises tebuconazole and folpet. In some embodiments, the combination for controlling Venturia inacqualis in apple comprises benzovindiflupyr and folpet. In some embodiments, the combination for controlling Venturia inacqualis in apple comprises penthiopyrad and folpet. In some embodiments, the combination for controlling Venturia inacqualis in apple comprises pydiflumetofen and folpet.

In some embodiments, the fungal disease is sheath blight disease in rice.

In some embodiments, the fungal disease is Anthracnose and/or Alternaria in chili. In some embodiments, the fungal disease in chili is caused by Colletotrichum capsica. In some embodiments, the fungal disease in chili is caused by Alternaria solani.

In some embodiments, the fungal disease is black sigatoka in banana. In some embodiments, the fungal disease is caused by Mycosphaerella fijiensis.

In some embodiments, the fungal disease is ramularia leaf spot in barley. In some embodiments, the fungal disease is caused by Ramularia collo-cygni. For ramularia leaf spot in barley and/or fungal disease caused by Ramularia

collo-cygni, the combination comprising a phthalimide fungicide and a pyrimidinone fungicide, or the combination comprising a phthalimide fungicide and two or more primary fungicides wherein at least one primary fungicide is a pyrimidinone fungicide are preferred. It is more preferred that the pyrimidinone fungicide or at least one of the pyrimidinone fungicides is 5-fluoro-4-imino-3-methyl-1-tosyl-3,4-dihydropyrimidin-2(1*H*)-one. In some embodiments, for ramularia leaf spot in barley, the phthalimide fungicide is folpet. In some embodiments, for ramularia leaf spot in barley, the phthalimide fungicide is captan. In some embodiments, for ramularia leaf spot in barley, the phthalimide fungicide is captafol. In some embodiments, the combination for controlling Ramularia collo-cygni in barley comprises 5-fluoro-4-imino-3-methyl-1-tosyl-3,4-dihydropyrimidin-2(1*H*)-one and folpet. In some embodiments, the combination for controlling Ramularia collo-cygni in barley comprises 5-fluoro-4-imino-3-methyl-1-tosyl-3,4-dihydropyrimidin-2(1*H*)-one and captan. For ramularia leaf spot in barley and/or fungal disease caused by Ramularia collo-cygni, the combination comprising a phthalimide fungicide, a SDHI fungicide and a DMI fungicide is also preferred. In some embodiments, the combination for controlling Ramularia collo-cygni in barley comprises folpet, prothioconazole and fluxapyroxad.

In some embodiments, the fungal disease is Asian soybean rust. In some embodiments, the fungal pathogen is Phakopsora pachyrhizi. In some embodiments, the Asian soybean rust is caused by Phakopsora pachyrhizi. For Asian soybean rust and/or fungal disease caused by Phakopsora pachyrhizi, the combination comprising a phthalimide fungicide and the following primary fungicides or combinations of primary fungicides are preferred. In some embodiments, the primary fungicide is a quinone outside inhibitors fungicide. In some embodiments, the quinone outside inhibitors fungicide is azoxystrobin or picoxystrobin. In some embodiments, the combination comprises two primary fungicides, wherein the two primary fungicides are a quinone outside inhibitor fungicide and a succinate dehydrogenase inhibitor fungicide. preferably the succinate dehydrogenase inhibitor fungicide is fluxapyroxad. In some embodiments, the fungal pathogen is Phakopsora pachyrhizi and/or the fungal disease in soybean is caused by Phakopsora pachyrhizi and the primary fungicide is selected from the group consisting of azoxystrobin, picoxystrobin, fluxapyroxad and any combination thereof. In some embodiments, the combination for controlling Phakopsora *pachyrhizi* in soybean comprises picoxystrobin and folpet. In some embodiments, the combination for controlling Phakopsora pachyrhizi in soybean comprises fluxapyroxad and folpet. In some embodiments, the combination for controlling Phakopsora pachyrhizi in soybean comprises azoxystrobin and folpet. In some embodiments, the combination for controlling Phakopsora pachyrhizi in soybean comprises picoxystrobin, fluxapyroxad and folpet. In some embodiments, the combination for controlling Phakopsora pachyrhizi in soybean comprises azoxystrobin, fluxapyroxad and folpet. In some embodiments, the combination for controlling Phakopsora pachyrhizi in soybean comprises picoxystrobin and captan. In some embodiments, the combination for controlling Phakopsora pachyrhizi in soybean comprises fluxapyroxad and captan. In some embodiments, the combination for controlling Phakopsora *pachyrhizi* in soybean comprises azoxystrobin and captan. In some embodiments, the combination for controlling Phakopsora pachyrhizi in soybean comprises picoxystrobin, fluxapyroxad and captan. In some embodiments, the combination for controlling Phakopsora pachyrhizi in soybean comprises azoxystrobin, fluxapyroxad and captan.

In some embodiments, the fungal disease is downy mildew in grape. In some embodiments, the fungal pathogen is Plasmopara viticola. In some embodiments, the downy mildew is caused by Plasmopara viticola. For downy mildew in grape and/or fungal disease caused by Plasmopara viticola, the combination comprising a phthalimide fungicide and the following primary fungicides or combinations of primary fungicides are preferred. In some embodiments, the primary fungicide is selected from the group consisting of succinate dehydrogenase inhibitor fungicides (SDHI), carboxylic acid amide fungicides, quinone outside stigmatellin inhibitor fungicides, benzamide fungicides, cyanoacetamideoxime fungicides, oxysterol binding protein inhibitor fungicides, phosphonates fungicides, fluoropyrimidinone fungicide and any combination thereof. In some embodiments, the primary fungicide is a succinate dehydrogenase inhibitor fungicide (SDHI). In some embodiments, the primary fungicide is a carboxylic acid amide fungicide. In some embodiments, the primary fungicide is a quinone outside stigmatellin inhibitor fungicide. In some embodiments, the primary fungicide is a benzamide fungicide. In some embodiments, the primary fungicide is a cyanoacetamideoxime fungicide. In some embodiments, the primary fungicide is an oxysterol binding protein inhibitor fungicide. In some embodiments, the primary fungicide is a phosphonates fungicide. In some embodiments, the phosphonates fungicide is a potassium phosphonate. In some embodiments, the succinate dehydrogenase inhibitor fungicide (SDHI) is fluxapyroxad. In some embodiments, the carboxylic acid amide fungicide is mandipropamid. In some embodiments, the quinone outside stigmatellin inhibitor fungicide is ametoctradin. In some embodiments, the benzamide fungicide is zoxamide or fluopicolide. In some embodiments, the cyanoacetamideoxime fungicide is cymoxanil. In some embodiments, the oxysterol binding protein inhibitor fungicide is oxathiapiprolin. In some embodiments, the fluoropyrimidinone fungicide is 5-fluoro-4-imino-3-methyl-1-tosyl-3,4-dihydropyrimidin-2(1H)-one. In some embodiments, the fungal pathogen is Plasmopara viticola and/or the fungal disease in grape is caused by Plasmopara viticola and the primary fungicide is selected from the group consisting of fluxapyroxad, mandipropamid, ametoctradin, zoxamide, cymoxanil, fluopicolide, potassium phosphonate, oxathiapiprolin and any combination thereof. In some embodiments, the combination for controlling Plasmopara viticola in grape comprises fluxapyroxad and folpet. In some embodiments, the combination for controlling Plasmopara viticola in grape comprises mandipropamide and folpet. In some embodiments, the combination for controlling Plasmopara viticola

in grape comprises ametoctradin and folpet. In some embodiments, the combination for controlling Plasmopara viticola in grape comprises zoxamide and folpet. In some embodiments, the combination for controlling Plasmopara viticola in grape comprises cymoxanil and folpet. In some embodiments, the combination for controlling Plasmopara viticola in grape comprises fluopicolide and folpet. In some embodiments, the combination for controlling Plasmopara viticola in grape comprises oxathiapiprolin and folpet. In some embodiments, the combination for controlling Plasmopara viticola in grape comprises fluxapyroxad and captan. In some embodiments the combination for controlling Plasmopara viticola in grape comprises mandipropamid and captan. In some embodiments, the combination for controlling Plasmopara viticola in grape comprises ametoctradin and captan. In some embodiments, the combination for controlling Plasmopara viticola in grape comprises zoxamide and captan. In some embodiments, the combination for controlling Plasmopara viticola in grape comprises cymoxanil and captan. In some embodiments, the combination for controlling Plasmopara viticola in grape comprises fluopicolide and captan. In some embodiments, the combination for controlling Plasmopara viticola in grape comprises oxathiapiprolin and captan. In some embodiments, the combination for controlling Plasmopara viticola in grape comprises potassium phosphonate and captan. In some embodiments, the combination for controlling Plasmopara viticola in grape comprises potassium phosphonate and folpet. In some embodiments, the combination for controlling Plasmopara viticola in grape comprises 3-fluoro-4-imino-3-methyl-1-tosyl-3,4-dihydropyrimidin-2(1H)-one and folpet.

In some embodiments, the fungal disease is powdery mildew in grape. In some embodiments, the fungal pathogen is Erysiphe necator. In some embodiments, the powdery mildew is caused by Erysiphe necator. For powdery mildew in grape and/or fungal disease caused by Erysiphe necator, the combination comprising a phthalimide fungicide and the following primary fungicides or combinations of primary fungicides are preferred. In some embodiments, the primary fungicide is selected from the group consisting of demethylation inhibitor fungicides (DMI), quinone outside inhibitors fungicides, succinate dehydrogenase inhibitor fungicides (SDHI), and any combination thereof. In some embodiments, the primary fungicide is a demethylation inhibitor fungicide (DMI). In some embodiments, the primary fungicide is a quinone outside inhibitors fungicide. In some embodiments, the primary fungicide is a succinate dehydrogenase inhibitor fungicide (SDHI). In some embodiment, the combination comprises two primary fungicide wherein the two primary fungicides are a demethylation inhibitor fungicide (DMI) and a succinate dehydrogenase inhibitor fungicide (SDHI). In some embodiments, the demethylation inhibitor fungicide (DMI) is difenoconazole. In some embodiments, the quinone outside inhibitor fungicide is azoxystrobin or pyraclostrobin. In some embodiments, the succinate dehydrogenase inhibitor fungicide (SDHI) is fluxapyroxad. In some embodiments, the fungal pathogen is Erysiphe necator and/or the fungal disease in grape is caused by Erysiphe necator and the primary fungicide is is selected from the group consisting of difenoconazole, azoxystrobin, pyraclostrobin, fluxapyroxad and any combination thereof. In some embodiments, the combination for controlling Erysiphe necator in grape comprises difenoconazole and folpet. In some embodiments, the combination for controlling Erysiphe necator in grape comprises azoxystrobin and folpet. In some embodiments, the combination for controlling Erysiphe necator in grape comprises pyraclostrobin and folpet. In some embodiments, the combination for controlling Erysiphe necator in grape comprises difenoconazole, fluxapyroxad and folpet. In some embodiments, the combination for controlling Erysiphe necator in grape difenoconzole, pyraclostrobin and folpet. In some embodiments, the combination for controlling Erysiphe necator in grape comprises difenoconazole, azoxystrobin and folpet. In some embodiments, the combination for controlling Erysiphe necator in grape comprises pyraclostrobin, fluxapyroxad and folpet. In some embodiments, the combination for controlling Erysiphe necator in grape comprises azoxystrobin, fluxapyroxad and folpet. In some embodiments, the combination for controlling Erysiphe necator in grape comprises difenoconazole and captan. In some embodiments, the combination for controlling Erysiphe necator in grape comprises azoxystrobin and captan. In some embodiments, the combination for controlling Erysiphe necator in grape comprises pyraclostrobin and captan. In some embodiments, the combination for controlling Erysiphe necator in grape comprises difenoconazole, fluxapyroxad and captan. In some embodiments, the combination for controlling Erysiphe necator in grape difenoconzole, pyraclostrobin and captan. In some embodiments, the combination for controlling Erysiphe necator in grape comprises difenoconazole, azoxystrobin and captan. In some embodiments, the combination for controlling Erysiphe necator in grape comprises pyraclostrobin, fluxapyroxad and captan. In some embodiments, the combination for controlling Erysiphe necator in grape comprises azoxystrobin, fluxapyroxad and captan.

In some embodiments, the fungal disease is powdery mildew in melon. In some embodiments, the fungal pathogen is Sphaerotheca fuliginea. In some embodiments, the powdery mildew is caused by Sphaerotheca fuliginea. For powdery mildew in melon and/or fungal disease caused by Sphaerotheca fuliginea, the combination comprising a phthalimide fungicide and the following primary fungicides or combinations of primary fungicides are preferred. In some embodiments, the primary fungicide is selected from the group consisting of demethylation inhibitor fungicides (DMI), succinate dehydrogenate inhibitor fungicides (SDHI), quinone outside inhibitor fungicides, and any combination thereof. In some embodiments, the primary fungicide is a demethylation inhibitor fungicide (DMI). In some embodiments, the primary fungicide is a succinate dehydrogenase inhibitor fungicide (SDHI). In some embodiments, the combination comprises two primary fungicides, wherein the two primary fungicides are a quinone outside inhibitor fungicide and a succinate dehydrogenase inhibitor fungicide (SDHI), or a demethylation inhibitor fungicide (DMI) and a succinate dehydrogenase inhibitor fungicide (SDHI). In some embodiments, the demethylation inhibitor fungicide (DMI) is difenoconazole. In some embodiments, the quinone outside inhibitor fungicide is azoxystrobin or pyraclostrobin. In some embodiments, the succinate dehydrogenase inhibitor fungicide (SDHI) is fluxapyroxad. In some embodiments, the fungal pathogen Sphaerotheca fuliginea and/or the fungal disease in melon is caused by Sphaerotheca fuliginea and the primary fungicide is selected from the group consisting of difenoconazole, azoxystrobin, pyraclostrobin, fluxapyroxad and any combination thereof. In some embodiments, the combination for controlling Sphaerotheca fuliginea in melon comprises difenoconazole and folpet. In some embodiments, the combination for controlling Sphaerotheca fuliginea in melon comprises azoxystrobin and folpet. In some embodiments, the combination for controlling Sphaerotheca fuliginea in melon comprises pyraclostrobin and folpet. In some embodiments, the combination for controlling Sphaerotheca fuliginea in melon comprises fluxapyroxad and folpet. In some embodiments, the combination for controlling Sphaerotheca fuliginea in melon comprises difenoconazole, fluxapyroxad and folpet. In some embodiments, the combination for controlling Sphaerotheca fuliginea in melon difenoconzole, pyraclostrobin and folpet. In some embodiments, the combination for controlling Sphaerotheca fuliginea in melon comprises difenoconazole, azoxystrobin and folpet. In some embodiments, the combination for controlling Sphaerotheca fuliginea in melon comprises pyraclostrobin, fluxapyroxad and folpet. In some embodiments, the combination for controlling Sphaerotheca fuliginea in melon comprises azoxystrobin, fluxapyroxad and folpet. In some embodiments, the combination for controlling Sphaerotheca fuliginea in melon comprises difenoconazole and captan. In some embodiments, the combination for controlling Sphaerotheca fuliginea in melon comprises azoxystrobin and captan. In some embodiments, the combination for controlling Sphaerotheca fuliginea in melon comprises Pyraclostrobin and captan. In some embodiments, the combination for controlling Sphaerotheca fuliginea in melon comprises difenoconazole, fluxapyroxad and captan. In some embodiments, the combination for controlling Sphaerotheca fuliginea in melon difenoconzole, pyraclostrobin and captan. In some embodiments, the combination for controlling Sphaerotheca fuliginea in melon comprises difenoconazole, azoxystrobin and captan. In some embodiments, the combination for controlling Sphaerotheca fuliginea in melon comprises pyraclostrobin, fluxapyroxad and captan. In some embodiments, the combination for controlling Sphaerotheca fuliginea in melon comprises azoxystrobin, fluxapyroxad and captan.

In some embodiments, the fungal disease is gray mold in strawberry. In some embodiments, the fungal pathogen is Botrytis cinerea. In some embodiments, the gray mold is caused by Botrytis cinerea. For gray mold in strawberry and/or fungal disease caused by Botrytis cinerea, the combination comprising a phthalimide fungicide and the following primary fungicides or combinations of primary fungicides are preferred. In some embodiments, the primary fungicide is selected from the group consisting of quinone outside inhibitors fungicides. keto-reductase inhibitor fungicides, anilinopyrimidine fungicides, plant extract fungicides, phenylpyrrole fungicides, dinitroanilines fungicides, and any combination thereof. In some embodiments, the primary fungicide is a quinone outside inhibitors fungicide. In some embodiments, the primary fungicide is a keto-reductase inhibitor fungicide. In some embodiments, the primary fungicide is an anilinopyrimidine fungicide. In some embodiments, the primary fungicide is a plant extract fungicide. In some embodiments, the primary fungicide is a phenylpyrrole fungicide. In some embodiments, the primary fungicide is a dinitroanilines fungicide. In some embodiments, the combination comprises two primary fungicides selected from the group consisting of quinone outside inhibitors fungicides, keto-reductase inhibitor fungicides, anilinopyrimidine fungicides, plant extract fungicides, phenylpyrrole fungicides, dinitroanilines fungicides, and SDHI fungicides. In some embodiments, the quinone outside inhibitors fungicide is pyraclostrobin. In some embodiments, the keto-reductase inhibitor fungicide is fenhexamid. In some embodiments, the anilinopyrimidine fungicide is cyprodinil. In some embodiments, the plant extract fungicide is an extract from Melaleuca altemifolia. In some embodiments, the phenylpyrrole fungicide is fludioxonil. In some embodiments, the dinitroanilines fungicide is fluazinam. In some embodiments, the SDHI fungicide is fluxapyroxad, fluopyram and/or isofetamid. In some embodiments, the fungal pathogen is Botrytis cinerea and/or the fungal disease in strawberry is caused by Botrytis cinerea and the primary fungicide is selected from the group consisting of isofetamid, pyraclostrobin, fenhexamid, cyprodinil, fungicidal extract from Melaleuca alternifolia, fludioxonil, fluazinam and any combination thereof. In some embodiments, the combination for controlling Botrytis cinerea in strawberry comprises isofetamid and captan. In some embodiments, the combination for controlling Botrytis cinerea in strawberry comprises pyraclostrobin and captan. In some embodiments, the combination for controlling Botrytis cinerea in strawberry comprises fenhexamid and captan. In some embodiments, the combination for controlling Botrytis cinerea in strawberry comprises cyprodinil and captan. In some embodiments the combination for controlling Botrytis cinerea in strawberry comprises a fungicidal extract from Melaleuca altemifolia and captan. In some embodiments, the combination for controlling Botrytis cinerea in strawberry comprises fludioxonil and captan. In some embodiments, the combination for controlling Botrytis cinerea in strawberry comprises fluazinam and captan. In some embodiments, the combination for controlling Botrytis cinerea in strawberry comprises isofetamid and folpet. In some embodiments, the combination for controlling Botrytis cinerea in strawberry comprises pyraclostrobin and folpet. In some embodiments, the combination for controlling Botrytis cinerea in strawberry comprises fenhexamid and folpet. In some embodiments, the combination for controlling Botrytis cinerea in strawberry comprises cyprodinil and folpet. In some embodiments, the combination for controlling Botrytis cinerea in strawberry comprises a fungicidal extract from Melaleuca altemifolia and folpet. In some embodiments, the combination for controlling Botrytis cinerea in strawberry comprises fludioxonil and folpet. In some embodiments, the combination for controlling

Botrytis cinerea in strawberry comprises fluazinam and folpet.

In some embodiments, the fungal disease is grapevine downy mildew. In some embodiments, the fungal pathogen is Plasmopora. In some embodiments, the grapevine downy mildew is caused by Plasmopora. For grapevine downy mildew and/or fungal disease caused by Plasmopora, the combination comprising a phthalimide fungicide and a fluoropyrimidinone fungicide is preferred. In some embodiments, the combination for controlling Plasmopora comprises folpet and 5-fluoro-4-imino-3-methyl-1-tosyl-3,4-dihydropyrimidin-2(1H)-one.

In some embodiments, the fungal disease is septoria leaf blotch. In some embodiments, the fungal disease is septoria leaf blotch in wheat. In some embodiments, the fungal pathogen is Zymoseptoria tritici. In some embodiments, the septoria leaf blotch is caused by Zymoseptoria tritici. For septoria leaf blotch and/or fungal disease caused by Zymoseptoria tritici, the combination comprising a phthalimide fungicide and a SDHI fungicide. or the combination comprising phthalimide fungicide and a QoI fungicide is preferred. In some embodiments, the combination for controlling Zymoseptoria tritici comprises captan and fluxapyroxad. In some embodiments, the combination for controlling Zymoseptoria tritici comprises folpet and fluxapyroxad. In some embodiments, the combination for controlling Zymoseptoria tritici comprises folpet and bixafen. In some embodiments, the combination for controlling Zymoseptoria tritici comprises folpet and penthiopyrad. In some embodiments, the combination for controlling Zymoseptoria tritici comprises folpet and prochloraz. In some embodiments, the combination for controlling Zymoseptoria tritici comprises folpet and azoxystrobin. In some embodiments, the combination for controlling Zymoseptoria tritici comprises folpet and trifloxystrobin. In some embodiments, the combination for controlling Zymoseptoria tritici comprises folpet and pyraclostrobin.

In some embodiments, the fungal disease is Cercospora leaf spot. In some embodiments, the fungal disease is Cercospora leaf spot in sugar beet. In some embodiments, the fungal pathogen is Cercospora beticola. In some embodiments, the Cercospora leaf spot is caused by Cercospora beticola. For Cercospora leaf spot and/or fungal disease caused by Cercospora beticola, the combination comprising a phthalimide fungicide and an amine fungicide is preferred. In some embodiments, the combination for controlling Cercospora beticola comprises fenpropidin and folpet.

In some embodiments, the combination for controlling fungal disease caused by a fungal pathogen in wheat comprises folpet and difenoconazole.

In some embodiments, the combination for controlling fungal disease caused by a fungal pathogen in wheat and/or barley comprises folpet and prothioconazole.

In some embodiments, the combination for controlling fungal disease caused by a fungal pathogen in for wheat and/or barley comprises folpet, azoxystrobin and prothioconazole.

In some embodiments, the combination for controlling fungal disease caused by a fungal pathogen in wheat and/or barley comprises folpet, fluxapyroxad and prothioconazole.

In some embodiments, the combination for controlling fungal disease caused by a fungal pathogen in grapes and/in wheat and/or in barley comprises folpet, fosetyl-Al and difenoconazole.

In some embodiments, the combination for controlling fungal disease caused by a fungal pathogen in grapes and/or in wheat and/or on barley comprises folpet, fosetyl-Al and sulfur.

In some embodiments, the combination for controlling fungal disease caused by a fungal pathogen in grapes and/or in wheat and/or in barley comprises folpet, mefenoxan and sulfur.

In some embodiments, the combination for controlling fungal disease caused by a fungal pathogen in sugar beet comprises folpet and fenpropidin.

The fungicidal mixture of (1) an amount of phthalimide fungicide and (2) an amount of succinate dehydrogenase inhibitor fungicide, if applied, has excellent activity against a broad spectrum of phytopathogenic fungi.

For example, the phytopathogenic fungi may be one or more of Alternaria species on vegetables, fruit trees, oilseed rape. sugar beet and fruit and rice, such as, *A. solani* or *A. alternata* on potatoes, tomatoes, apples and pears; Aphanomyces species on sugar beet and vegetables: Ascochyta species on cereals, legumes and vegetables: Bipolaris and Drechslera species on com, cereals, rice and lawns, for example, *D. maydis* on com; *Blumeria graminis* (powdery mildew) on cereals: *Botrytis cinerea* (gray mold) on strawberries, vegetables, flowers and grapevines: *Bremia lactucae* on lettuce; Cercospora species on corn, soybeans, rice, sugar beet and coffee: Cochliobolus species on corn, cereals, rice, for example *Cochliobolus sativus* on cereals, *Cochliobolus miyabeanus* on rice; Colletotricum species on vegetables, soybeans and cotton, such as *Colletotrichum truncatum* in pepper and soybean; Drechslera species, Pyrenophora species on corn, cereals, rice and lawns, for example, *D. teres* on barley or *D. tritici-repentis* on wheat; Esca on grapevines, caused by *Phaeoacremonium chlamydosporum, P. Aleophilum* and *Fomitiporia punctata* (syn. *Phellinus punctatus*), Exserohilum species on corn; *Erysiphe cichoracearum* and *Sphaerotheca fuliginea* on cucumbers: Fusarium and Verticillium species on various plants, for example, *Fusarium graminearum* or *Fusarium culmorum* on cereals or *F. oxysporum* on a multitude of plants, such as, for example, tomatoes; *Gaeumannomyces graminis* on cereals; Gibberella species on cereals and rice (for example *Gibberella fujikuroi* on rice); Grainstaining complex on rice: Helminthosporium species on corn and rice: *Hemileia vastatrix* on coffee; *Microdochium nivale* on cereals: Mycosphaerella species on cereals, bananas and peanuts, for example, *M. graminicola* on wheat, *M..fijiensis* on bananas or *M. pyri* on pears: Peronospora species on cabbage and bulbous plants, for example, *P. brassicae* on cabbage or *P. destructor* on onions;

*Phakopsora pachyrhizi* and *Phakopsora meibomiae* on soybeans: Phomopsis species on soybeans, sunflowers and grapes: *Phytophthora infestans* on potatoes and tomatoes; Phytophthora species on various plants, for example, *P. capsici* on bell pepper, *P. citrophthora* and *P. citricola* in citrus: *Plasmopara viticola* on grapevines; Pleosporales on various plants, for example,*Pleospora allii* in pears and onion; *Podosphaera leucotricha* on apples; *Pseudocercosporella herpotrichoides* on cereals; Pseudoperonospora on various plants, for example, *P. cubensis* on cucumber or *P. humili* on hops: Puccinia species on various plants, for example, *Puccinia recondita, Puccinia triticina, Puccinia striiformis, Puccinia hordei* or *Puccinia graminis* on cereals or *Puccinia asparagi* on asparagus: *Pyricularia oryzae, Corticium sasakii, Sarocladium oryzae*, *S. attenuatum, Entyloma oryzae* on rice; *Pyricularia grisea* on lawns and cereals: *Pythium* spp. on lawns, rice, corn, cotton, oilseed rape, sunflowers, sugar beet, vegetables and other plants, for example, *P*. *ultimum* on various plants, *P. aphanidermatum* on lawns: Ramularia species on cereals, barley and cotton, for example, *Ramularia collo-cygni* on barley and *Ramularia areola* on cotton: Rhizoctonia species on cotton, rice, potatoes, lawns, corn, oilseed rape, sugar beet, vegetables and on various plants, for example, *R. solani* on beet and various plants: *Rhynchosporium secalis* on barley, rye and triticale; Sclerotinia species on oilseed rape and sunflowers; *Zymoseptoria tritici* (syn. *Septoria tritici)* and *Stagonospora nodorum* on wheat: Erysiphe species on wheat such as *Erysiphe graminis*; *Erysiphe* (syn. *Uncinula*) *necator* on grapevines: Setosphaeria species on com and lawns: *Sphacelotheca reiliana* on com: Thielaviopsis species on soybeans and cotton: Tilletia species on cereals; Ustilago species on cereals, corn and sugar cane, for example, *U. maydis* on corn; Venturia species (scab) on apples and pears, for example, *V. inaequalis* on apples.

In some embodiments, the method comprises application of at least one pesticide in addition to the phthalimide fungicide(s) and the primary fungicide(s). In some embodiments, the method comprises application of at least two pesticides in addition to the phthalimide fungicide(s) and the primary fungicide(s). In some embodiments, the pesticide is herbicide, insecticide, acaricides, or nematicide.

In some embodiments, the method comprises application of at least one fungicide in addition to the phthalimide fungicide(s) and the primary fungicide(s). In some embodiments, the method comprises application of at least two fungicides in addition to the phthalimide fungicide(s) and the primary fungicide(s).

In some embodiments, the method does not comprise application of any pesticide in addition to the phthalimide fungicide(s) and the primary fungicide(s).

In some embodiments, the method comprises application of an additional crop protection agents, for example insecticides, herbicides, fungicides, bactericides, nematicides, molluscicides, growth regulators, biological agents, fertilizers, or mixtures thereof.

*Preferred Methods*

The present invention provides a method for controlling an apple scab disease comprising applying a fungicidal mixture comprising (1) phthalimide fungicide and (2) succinate dehydrogenase inhibitor fungicide to the plant, propagation material of the plant. and/or a locus of the plant.

The present invention provides a method for controlling fungal disease in vegetable crops, comprising applying a fungicidal mixture comprising (1) a phthalimide fungicide and (2) a succinate dehydrogenase inhibitor fungicide to the plant, propagation material of the plant, and/or a locus of the plant. In some embodiments, the vegetable crop is potato. In some embodiments, the vegetable crop is tomato. In some embodiments, the vegetable crop is chili. In some embodiments, the fungal disease is early blight. In some embodiments, the disease is Anthracnose and/or Alternaria.

The present invention provides a method for controlling Sheath blight disease in rice, comprising applying a fungicidal mixture comprising (1) an amount of phthalimide fungicide and (2) an amount of succinate dehydrogenase inhibitor fungicide to the plant, propagation material of the plant, and/or a locus of the plant.

The present invention provides a method for controlling Sheath blight disease in rice, comprising applying (1) an amount of phthalimide fungicide and (2) an amount of succinate dehydrogenase inhibitor fungicide to the plant, propagation material of the plant, and/or a locus of the plant.

The present invention provides a method for controlling sheath blight disease in rice, comprising applying a fungicidal mixture comprising (1) a phthalimide fungicide and (2) a succinate dehydrogenase inhibitor fungicide to the plant, propagation material of the plant, and/or a locus of the plant.

The present invention provides a method for controlling fungal disease in chili, comprising applying a fungicidal mixture of (1) a phthalimide fungicide and (2) a succinate dehydrogenase inhibitor fungicide to the plant, propagation material of the plant, and/or a locus of the plant. In some embodiments, the disease in chili is anthracnose disease.

The present invention provides a method for controlling fungal disease in banana comprising applying (a) a phthalimide fungicide and (b) a succinate dehydrogenase inhibitor fungicide, to the plant, part of the plant or locus of the plant. In some embodiments, the fungal disease in banana is black sigatoka.

The present invention provides a method for controlling *Plasmopara viticola,* in grape comprising applying (a) at least one phthalimide fungicide selected from the group consisting of captan, folpet, captafol and any combination thereof and (b) at least one succinate dehydrogenase inhibitor fungicide, to the plant, part of the plant or locus of the plant.

The present invention provides a method of protecting and prolonging the lifespan of medium to high resistance risk fungicides comprising applying to the locus of the crop a mixture or a composition comprising (1) an amount of phthalimide fungicide and (2) an amount of succinate dehydrogenase inhibitor fungicide.

The present invention provides a method of protecting and prolonging the lifespan of medium to high resistance risk fungicides comprising applying to the plant and/or the locus of the plant any combination comprising (1) a phthalimide fungicide and (2) a succinate dehydrogenase inhibitor fungicide disclosed herein.

**Combinations**

The present invention provides an improved combination comprising an amount of a primary fungicide and an amount of a phthalimide fungicide.

The present invention provides a fungicidal combination or mixture comprising a) at least one succinate dehydrogenase inhibitor fungicide, and b) captan.

Preferred phthalimide fungicides (including combinations of phthalimide fungicides), primary fungicides (including combinations of primary fungicides), and combinations of phthalimide fungicides and primary fungicides, as well as preferred weight ratios, are described herein above.

In some embodiments, the combination is a mixture. Any of the combinations described herein may be in the form of a mixture.

The present invention provides a fungicidal mixture comprising, as active components a) a succinate dehydrogenase inhibitor fungicide; and b) captan.

In some embodiments, the mixture is a tank mix. Any of the combinations described herein may be in the form of a tank mix. In some embodiments, each of the phthalimide fungicide(s) and primary fungicide(s) is formulated in its own composition prior to tank mix.

In some embodiments, the combination is a composition. Any of the combinations described herein may be in the form of a composition.

The combination, mixture or composition comprising the primary fungicide and phthalimide fungicide may be an improved combination, mixture or composition in any one or any combination of ways as described below.

In some embodiments, the combination comprises an amount of fungicide I and an amount of a phthalimide fungicide. The combination comprising fungicide I and phthalimide fungicide may be an improved combination in any one or any combination of ways as described below.

In some embodiments, the combination is an improved combination in that it is synergistic.

In some embodiments, the combination is an improved combination in that the amount of the primary fungicide and the amount of the phthalimide fungicide are more effective for treating a plant or locus against fungal infection than when the amount of the phthalimide fungicide and the amount of a primary fungicide are applied alone.

In some embodiments, the combination is an improved combination in that the amount of the primary fungicide is more effective for treating a plant or locus against fungal infection when applied in combination with the amount of the phthalimide fungicide than when the same amount of the primary fungicide is applied not in combination with the same amount of the phthalimide fungicide.

In some embodiments, the combination is an improved combination in that the amount of the phthalimide fungicide is more effective for treating a plant or locus against fungal infection when applied in combination with the amount of the primary fungicide than when the same amount of the phthalimide fungicide is applied not in combination with the same amount of the primary fungicide.

In some embodiments, the combination is an improved combination in that the amount of the phthalimide fungicide improves the fungicidal efficacy of the amount of the primary fungicide compared to when the same amount of the primary fungicide is applied not in combination with the amount of the phthalimide fungicide. In some embodiments, the locus is soil.

In some embodiments, the combination is an improved combination in that the amount of the phthalimide fungicide improves the fungicidal efficacy of the amount of the primary fungicide compared to when the same amount of the primary fungicide is applied not in combination with the amount of the phthalimide fungicide.

In some embodiments, fungicidal efficacy is increased by at least 10%, 20%, or 30% compared to when the same amount of the primary fungicide is applied alone. In some embodiments, fungicidal efficacy is increased by at least 50%, 100%, 200% or 300% compared to when the same amount of the primary fungicide is applied alone.

In some embodiments, fungicidal efficacy is measured in a treated area of the plant. In some embodiments, fungicidal efficacy is measured in an untreated area of the plant. In some embodiments, fungicidal efficacy is increased in a treated area of the plant. In some embodiments, fungicidal efficacy is increased in an untreated area of the plant.

In some embodiments, fungicidal efficacy is measure at least 21 days after treatment. In some embodiments, fungicidal efficacy is measure at least 28 days after treatment.

In some embodiments, the combination is an improved combination in that a substantially similar level of

fungicidal efficacy is achieved by using a lesser amount of the phthalimide fungicide and/or the primary fungicide.

In some embodiments, the amount of phthalimide fungicide in the combination is less than the fungicidally effective amount of phthalimide fungicide when phthalimide fungicide is used alone. In some embodiments, the amount of the phthalimide fungicide is less than its fungicidally effective amount. In some embodiments, the amount of the primary fungicide in the combination is less than the fungicidally effective amount of the primary fungicide when the primary fungicide is used alone.

In some embodiments, the combination is an improved combination in that the amount of the phthalimide fungicide is effective to increase sensitivity of the fungus to the amount of the primary fungicide compared to the sensitivity of the fungus to the amount of the primary fungicide when it is applied not in combination with the amount of the phthalimide fungicide.

In some embodiments, the combination is an improved combination in that the amount of the phthalimide fungicide is effective to increase bioavailability of the amount of the primary fungicide compared to the bioavailability of the amount of the primary fungicide when it is applied not in combination with the amount of the phthalimide fungicide.

Increasing bioavailability includes increasing penetration of the amount of the primary fungicide into the plant. The primary fungicide may penetrate into the plant by penetrating into leaves (including penetrating leaf cuticle) and/or roots. In some embodiments, the combination of the amount of the primary fungicide and the amount of the phthalimide fungicide increases penetration of the amount of the primary fungicide into the plant. In some embodiments, the combination of the amount of the primary fungicide and the amount of the phthalimide fungicide increases penetration of the amount of the primary fungicide into the plant leaf. In some embodiments, the combination of the amount of the primary fungicide and the amount of the phthalimide fungicide increases penetration of the primary fungicide into the plant root.

Increasing bioavailability also includes increased translocation of the amount of the primary fungicide once inside the plant, including leaves. In some embodiments, the combination of the amount of the primary fungicide and the amount of the phthalimide fungicide increases translocation of the amount of the primary fungicide after penetration into the plant.

In some embodiments, the combination is an improved combination in that it is more effective in treating the plant or locus against fungal infection than when each fungicide at the same amount is applied alone. In some embodiments, the primary fungicide as part of the combination is more effective in treating the plant or locus against fungal infection than when applied at the same amount alone. Increased effectiveness may be due to increased bioavailability and/or uptake by the fungal pathogen.

In some embodiments, the combination is an improved combination in that the amount of the primary fungicide and the amount of the phthalimide fungicide are more effective for treat a plant or locus against fungal infection than when the amount of the phthalimide fungicide and the amount of a primary fungicide are applied alone. In some embodiments, the combination comprises one or more primary fungicide(s) and the combination of the phthalimide fungicide and at least one of the primary fungicides applied is more effective in treating the plant or soil against fungal infection than when each fungicide at the same amount is applied alone. In some embodiments, the combination comprises two or more primary fungicides and the combination of the phthalimide fungicide and at least two of the primary fungicides applied is more effective in treating the plant or soil against fungal infection than when each fungicide at the same amount is applied alone.

In some embodiments, treating a plant or locus against fungal infection comprises inhibiting fungal mycelium formation.

In some embodiments, treating a plant or locus against fungal infection comprises combating phytopathogenic diseases on the plant or locus.

In some embodiments, treating the plant or locus against fungal infection comprises protecting the plant or locus from fungal attack.

In some embodiments, treating the plant or locus against fungal infection comprises preventing fungal infection of the plant or locus.

In some embodiments, treating the plant or locus against fungal infection comprises controlling fungal disease affecting the plant or locus.

In some embodiments, treating the plant or locus against fungal infection comprises controlling a fungal pathogen, a fungal pathogen group or a fungal pathogen class affecting the plant or locus.

In some embodiments, treating the plant or locus against fungal infection comprises controlling a fungal disease caused by a fungal pathogen, a fungal pathogen group or a fungal pathogen class affecting the plant or locus.

In some embodiments, treating the plant or locus against fungal infection comprises reducing fungal infection of the plant or locus.

In some embodiments, the combination is an improved combination in that it prolongs the period of protection against fungal infection and/or control of fungal infection than when the amount of the phthalimide fungicide and the amount of a primary fungicide are applied alone.

In some embodiments, the period of protection against fungal infection and/or control of fungal infection is prolonged by at least 7 days, 14 day, 21 days, or 28 days.

In some embodiments, the combination is an improved combination in that it reduces the amount of time needed to achieve a level of fungal control than when the amount of the phthalimide fungicide and the amount of a primary fungicide are applied alone.

An example for reduction is, if each fungicide is applied alone achieves 50% control of fungal disease 7 days after application, the mixture or composition disclosed herein achieves 50% control of fungal diseases 2 days after application where each fungicide is applied at the amount.

In some embodiments, the amount of time needed to achieve a level of fungal control is reduced by at least 1 day, 2 days, 3 days, 4 day, 5 days, 7 days, 10 days, 14 days or 21 days, or 28 days.

In some embodiments, the combination is an improved combination in that it improves plant development compared to the development of a plant affected by the same type and degree of fungal infection to which the combination is not applied. In some embodiments, the plant is a crop plant. In some embodiments, the primary fungicide as part of the combination is more effective in improving plant development than when applied at the same amount alone. In some embodiments, the phthalimide fungicide as part of the combination is more effective in improving plant development than when applied at the same amount alone.

In some embodiments, the plant development is improved by treating the plant against fungal attack.

In some embodiments, improving plant development comprises enhancing crop plants. In some embodiment, improving plant development comprises improving plant quality.

Improving plant development includes, but is not limited to, enhancing the root systems, enhancing shoot of the plant, enhancing plant vigor, enhancing greening effect on leaves and/or enhancing plant potential yield.

In some embodiments, improving plant development comprises enhancing the root system. In some embodiments, enhancement in root system is measured by root weight. In some embodiments, root weight is increased by at least 1%, 5%, 10, 20%, 30%, 40%, 50%, 60%, 70%, 80%, or 90%.

In some embodiments, improving plant development comprises enhancing shoot of the plant. In some embodiments, enhancement in shoot is measured by shoot weight. In some embodiments, shoot weight is increased by at least 1%, 5%, 10, 20%, 30%, 40%, 50%, 60%, 70%, 80%, or 90%.

In some embodiments, improving plant development comprises enhancing plant vigor. In some embodiments, plant vigor is assessed using the relative vigor index. In some embodiments, plant vigor is increased by at least 1%, 5%, 10, 20%, 30%, 40%, 50%, 60%, 70%, 80%, or 90%.

In some embodiments, improving plant development comprises enhancing greening effect on leaves. In some embodiments, greening effect on leaves is assessed using the relative vigor index. In some embodiments, greening effect on leaves is increased by at least 1%, 5%, or 10%.

In some embodiments, improving plant development comprises enhancing plant yield. In some embodiments, plant yield is increased by at least 1%, 5%, 10, 20%, 30%, 40%. 50%, 60%, 70%, 80%, or 90%.

In some embodiments, the amount of phthalimide fungicide in the combination is less than the fungicidally effective amount of the phthalimide fungicide when the phthalimide fungicide is applied alone.

In some embodiments, the amount of the primary fungicide in the combination is less than the fungicidally effective amount of the primary fungicide when the primary fungicide is applied not in combination with the phthalimide fungicide.

In some embodiments, the combination is an improved combination in that it is anti-resistance. Anti-resistance refers to the effect of blocking the development or the spreading of resistance by increased efficacy of the combination.

In some embodiments, the combination is an improved combination in that it has improved potentiated efficacy, improved long lasting effect, improved anti-resistance activity, improving activity against resistant strains, improved green leaf area, improved greening effect, increased disease spectrum of activity, increased efficacy against disease not controlled by the solo fungicides, higher yield, higher protein content, higher sugar content, higher °Brix, better color grading of fruits, higher thousand kernels weight, higher test weight or hectoliter weight, increased fruit size, increased number of marketable fruits, improved plant vigor, and/or reduced risks of adverse effects on plants.

In some embodiments, the combination comprises at least one pesticide in addition to the phthalimide fungicide(s) and the primary fungicide(s). In some embodiments, the combination comprises at least two pesticides in addition to the phthalimide fungicide(s) and the primary fungicide(s). In some embodiments, the pesticide is herbicide, insecticide, acaricides, or nematicide.

In some embodiments, the combination comprises at least one fungicide in addition to the phthalimide fungicide(s) and the primary fungicide(s). In some embodiments, the combination comprises at least two fungicides in addition to the phthalimide fungicide(s) and the primary fungicide(s).

In some embodiments, the combination does not comprise any pesticide other than the phthalimide fungicide and the primary fungicide.

In some embodiments, the combination comprises an additional crop protection agents, for example insecticides, herbicides, fungicides, bactericides, nematicides, molluscicides, growth regulators, biological agents, fertilizers, or mixtures thereof.

In some embodiments, the combination comprises at least one additive selected from the group consisting of wetting agents, anti-foaming, adhesives, neutralizers, thickeners, binders, sequestrates, fertilizers, biocides, stabilizers, buffers and anti-freeze agents.

The invention combinations help prevent fungal attack and thus enable the use of a reduced amount of fungicides at a later stage of the plant development. The present combination is capable of containing or destroying the microorganisms which occur on plants or parts of plants (fruits, flowers, foliage, stalks, tubers, roots) of a variety of crops of useful plants, and even on parts of plants which are formed at a later point in time and remain unharmed by such microorganisms.

**Compositions**

The combinations of the present invention may be formulated as one composition. The combinations of the present invention may be formulated as separate compositions. The combinations of the present invention may be formulated in more than one composition.

The present invention also provides a fungicidal composition comprising any one of the combinations disclosed herein, and an agriculturally acceptable carrier.

The present invention also provides a fungicidal composition comprising (i) a phthalimide fungicide, (ii) a primary fungicide, and an agriculturally acceptable carrier.

Preferred phthalimide fungicides (including combinations of phthalimide fungicides), primary fungicides (including combinations of primary fungicides), and combinations of phthalimide fungicides and primary fungicides, as well as preferred weight ratios, are described herein above.

The agriculturally acceptable carrier may be liquid or solid. Suitable carriers are described in detail below.

In some embodiments, the composition comprises captan and 5-fluoro-4-imino-3-methyl-1-tosyl-3,4-dihydropyrimidin-2(1*H*)-one.

In some embodiments, the composition comprises folpet and 5-fluoro-4-imino-3-methyl-1-tosyl-3,4-dihydropyrimidin-2(1*H*)-one.

In some embodiments, the composition comprises captafol and 5-fluoro-4-imino-3-methyl-1-tosyl-3,4-dihydropyrimidin-2(1*H*)-one.

In an embodiment, the amount of the phthalimide fungicide(s) and the primary fungicide(s) in the composition is from about 0.1%, 0.5%, 1%, 1.5%, 2%, 2.5%, 3%, 3.5%, 4%, 4.5%, 5% to about 90%. 93%, 95%, 98%, 99% based on the total weight of the composition.

In an embodiment, the amount of the phthalimide fungicide(s) and the primary fungicide(s) in the composition is from about 0.5% to about 95% by weight based on the total weight of the composition.

In some embodiments, the succinate dehydrogenase inhibitor and phthalimide fungicide are present in a combined amount ranging from 5% to 80% by weight of the total weight of all components in the composition.

In some embodiments, the combined amount of fluxapyroxad and at least one phthalimide fungicide selected from group consisting of captan and captafol in the ready-for-use (ready-mix) formulations according to the invention is 0.01-95 wt.%, particularly 0.1-90 wt. %, more particularly 1-90 wt. %, even more particularly is 10-90 wt. %, based on the total weight of the formulation.

In some embodiments, the combined amount of the succinate dehydrogenase inhibitor fungicide and captan together in the ready-for-use (ready-mix) formulations is 1-95 wt. %, particularly 75-95 wt. %, based on the total weight of the formulation.

In yet another embodiment, the composition is prepared in the form of a ready-for-use (ready-mix) formulation. A ready-mix formulation can be obtained by combining the active components in a fungicidal effective amount with an agriculturally acceptable carrier, a surfactant or other application-promoting adjuvant customarily employed in formulation technology. This ready-use formulation can also be obtained by combining the active components with one or more fungicide active components, belonging to the same or to different chemical classes, in a fungicidal effective amount with an agriculturally acceptable carrier, a surfactant or other application-promoting adjuvant customarily employed in formulation technology.

In some embodiments, succinate dehydrogenase inhibitor fungicide and phthalimide fungicide are prepared separately, and the individual formulations are applied as is, or are diluted to predetermined concentrations. In some embodiments, succinate dehydrogenase inhibitor fungicide and phthalimide fungicide are prepared separately, and the formulations are mixed when are diluted to a predetermined concentration. In some embodiment, succinate dehydrogenase inhibitor fungicide and phthalimide fungicide are formulated together, and the formulation is applied as it is, or the formulation is diluted to a predetermined concentration.

In some embodiments, the composition of the present invention is applied in the form of a ready-for-use (ready-mix) formulation comprising fluxapyroxad and captan, which can be obtained by combining the two active components with an agriculturally acceptable carrier, a surfactant or other application-promoting adjuvant customarily employed in formulation technology.

In some embodiments, the composition of the present invention is applied in the form of a ready-for-use (ready-mix) formulation comprising fluxapyroxad and captafol, which can be obtained by combining the two active components with an agriculturally acceptable carrier, a surfactant or other application-promoting adjuvant customarily employed in formulation technology.

The present invention provides a fungicidal composition comprising a) at least one succinate dehydrogenase inhibitor fungicide, and b) captan.

The present invention provides a fungicidal composition comprising a) at least one succinate dehydrogenase inhibitor fungicide and b) captafol.

The present invention provides a fungicidal composition comprising a) at least one succinate dehydrogenase inhibitor fungicide, and b) folpet.

Preferred weight ratios between the succinate dehydrogenase inhibitor fungicide and the captan, captafol or folpet are described herein above.

In some embodiments, the succinate dehydrogenase inhibitor fungicide and the captan or captafol are present in a combined amount ranging from 5% to 80% by weight of the total weight of all components in the composition.

In some embodiments, the combined amount of the succinate dehydrogenase inhibitor fungicide and captan together in the ready-for-use (ready-mix) formulations is 1-95 wt. %, particularly 75-95 wt. %, based on the total weight of the formulation.

In some embodiments, the combined amount of fluxapyroxad and at least one phthalimide fungicide selected from group consisting of captan and captafol in the ready-for-use (ready-mix) composition according to the invention is 0.01-95 wt.%, particularly 0.1-90 wt. %, more particularly 1-90 wt. %, even more particularly is 10-90 wt. %, based on the total weight of the formulation.

In some embodiments, the combined amount of (i) the SDHI fungicide and/or DMI fungicide, and (ii) the phthalimide fungicide in the ready-for-use (ready-mix) composition is 0.01-95 wt.% based on the total weight of the composition. In some embodiments, the combined amount of (i) the SDHI fungicide and/or DMI fungicide, and (ii) the phthalimide fungicide in the ready-for-use (ready-mix) composition is 0.1-90 wt. % based on the total weight of the composition. In some embodiments, the combined amount of (i) the SDHI fungicide and/or DMI fungicide, and (ii) the phthalimide fungicide in the ready-for-use (ready-mix) composition 1-90 wt.% based on the total weight of the composition. In some embodiments, the combined amount of (i) the SDHI fungicide and/or DMI fungicide, and (ii) the phthalimide fungicide in the ready-for-use (ready-mix) composition is 10-90 wt. % based on the total weight of the composition.

In some embodiments, the combined amount of fluxapyroxad and at least one phthalimide fungicide selected from group consisting of captan and captafol in the ready-for-use (ready-mix) composition according to the invention is 0.01-95 wt.%, particularly 0.1-90 wt. %, more particularly 1-90 wt. %, even more particularly is 10-90 wt. %, based on the total weight of the composition.

In some embodiments, the composition comprises a phthalimide fungicide, 5-fluoro-4-imino-3-methyl-1-tosyl-3,4-dihydropyrimidin-2(1*H*)-one, and at least one additional primary fungicide. The additional primary fungicide(s) may be any one or any combination of the primary fungicides described herein.

The present composition may be employed or prepared in any conventional form, for example, as wettable powders (WP), emulsion concentrates (EC). microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), a mixed formulation of CS and SC (ZC), a mixed heterogeneous formulation of CS and SE (ZE), a mixed heterogeneous formulation CS and EW (ZW), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

The composition may be employed in any conventional form, especially in the form of water dispersible granules, coated granules, emulsifiable concentrate, suspension concentrate, microemulsion, oil dispersion, suspo-emulsion, capsule suspension, a mixed formulation of capsule suspension and suspension concentrate.

Such compositions may be produced in conventional manner, e.g. by mixing the active ingredients with appropriate adjuvants (diluents or solvents and optionally other formulating ingredients such as surfactants).

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active component, wetting agent, tackifier, dispersant or emulsifier and, if desired, a solvent or oil, which are suitable for dilution with water.

In some embodiments, the composition is a ready-for-use (ready mix) composition.

In some embodiments, the composition comprises at least one agriculturally acceptable additive. In some embodiments, the agriculturally acceptable additive is selected from the group of surfactants, solid diluents, liquid diluents

and any combination thereof. The agriculturally acceptable additive may also be other application-promoting adjuvants customarily employed in formulation technology and formulation techniques that are known in the art.

In some embodiments, the composition comprises at least one additional component selected from the group of surfactants, solid diluents and liquid diluents.

Such compositions can be formulated using agriculturally acceptable carriers, surfactants or other application-promoting adjuvants customarily employed in formulation technology and formulation techniques that are known in the art.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Suitable carriers and adjuvants may be solid or liquid and correspond to the substances ordinarily employed in formulation technology, such as, e.g. natural or regenerated mineral substances, solvents, dispersants, wetting fungicides, tackifiers, thickeners, binding fungicides or fertilizers. Such carriers are for example described in WO 96/22690.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol: polypropylene glycol; dipropropylene glycol: N,N-dimethylformamide; dimethylsulfoxide: dimethylacetamide; N-alkylpyrrolidones such as N-methyl-2-pyrrolidone; paraffins: various oils such as olive, castor, linsced, tung, sesame, corn, peanut, cotton-seed, soybean, rape-seed, or coconut oil: fatty acid esters; ketones such as cyclohexanone, 2-heptanone, isophorone, and 4-hydroxy-4-methyl-2-pentanone: and the like.

Examples of suitable solid carriers potentially useful in the present compositions include but are not limited to mineral earths such as silica gels, silicates, talc, kaolin, scricite, attaclay, limestone, bentonite, lime, chalk, bole, mirabilite, locss, clay, dolomite, zeolite, diatomaceous earth, calcium carbonate, calcium sulfate, magnesium sulfate, magnesium oxide, sodium carbonate and bicarbonate, and sodium sulfate; ground synthetic materials: fertilizers such as ammonium sulfate, ammonium phosphate, ammonium nitrate, ureas, and products of vegetable origin, such as cereal meal, tree bark meal, wood meal, and nutshell meal: cellulose powders: and other solid carriers.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active component, wetting agent, tackifier, dispersant or emulsifier and, if desired, a solvent or oil, which are suitable for dilution with water.

Particularly compositions to be applied in spraying forms such as water dispersible concentrates or wettable powders may contain surfactants such as wetting and dispersing fungicides, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

The composition according to the invention is generally formulated in various ways using formulation adjuvants, such as carriers, solvents and surface-active substances. The formulations can be in various physical forms, e.g. in the form of dusting powders, gels, wettable powders, water-dispersible granules, water-dispersible tablets, effervescent pellets, emulsifiable concentrates, microemulsifiable concentrates, oil-in-water emulsions, oilflowables, aqueous dispersions, oily dispersions, suspo-emulsions, capsule suspensions, emulsifiable granules, soluble liquids, water-soluble concentrates (with water or a watermiscible organic solvent as carrier), impregnated polymer films or in other forms known e.g. from the Manual on Development and Use of FAO and WHO Specifications for Pesticides, United Nations, First Edition, Second Revision (20 10). Such formulations can either be used directly or diluted prior to use. The dilutions can be made, for example, with water, liquid fertilisers, micronutrients, biological organisms, oil or solvents. The formulations can be prepared e.g. by mixing the active ingredient with the formulation adjuvants in order to obtain compositions in the form of finely divided solids, granules, solutions, dispersions or emulsions. The active ingredients can also be formulated with other adjuvants, such as finely divided solids, mineral oils, oils of vegetable or animal origin, modified oils of vegetable or animal origin, organic solvents, water, surface-active substances or combinations thereof.

The active ingredients can also be contained in microcapsules. Microcapsules contain the active ingredients in a porous carrier. This enables the active ingredients to be released into the environment in controlled amounts (e.g. slow-release). Microcapsules usually have a diameter of from 0.1 to 500 microns. They contain active ingredients in an amount

of from about 25 to 95 % by weight of the capsule weight. The active ingredients can be in the form of a monolithic solid, in the form of fine particles in solid or liquid dispersion or in the form of a suitable solution. The encapsulating membranes can comprise, for example, natural or synthetic rubbers, cellulose, styrene/butadiene copolymers, polyacrylonitrile, polyacrylate, polyesters, polyamides, polyureas, polyurethane or chemically modified polymers and starch xanthates or other polymers that are known to the person skilled in the art. Alternatively, very fine microcapsules can be formed in which the active ingredient is contained in the form of finely divided particles in a solid matrix of base substance, but the microcapsules are not themselves encapsulated.

The formulation adjuvants that are suitable for the preparation of the formulations according to the invention are known per se. As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylene carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, /V,/V-dimethylformamide, dimethyl sulfoxide, 1,4-dioxane, dipropylene glycol, dipropylene glycol methyl ether, dipropylene glycol dibenzoate. diproxitol, alkylpyrrolidone, ethyl acetate, 2-ethylhexanol, ethylene carbonate, 1,1,1 -trichloroethane, 2- heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n- octylamine, octadecanoic acid, octylamine acetate, oleic acid, oleylamine, o-xylene, phenol, polyethylene glycol, propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and alcohols of higher molecular weight, such as amyl alcohol, tetrahydrofurfuryl alcohol, hexanol, octanol, ethylene glycol, propylene glycol, glycerol, V-methyl-2-pyrrolidone and the like.

Suitable solid carriers are, for example, talc, titanium dioxide, pyrophyllite clay, silica, attapulgite clay, kieselguhr, limestone, calcium carbonate, bentonite, calcium montmorillonite, cottonseed husks, wheat flour, soybean flour, pumice, wood flour, ground walnut shells, lignin and similar substances.

A large number of surface-active substances can advantageously be used in both solid and liquid formulations, especially in those formulations which can be diluted with a carrier prior to use. Surface-active substances may be anionic, cationic, non-ionic or polymeric and they can be used as emulsifiers, wetting fungicides or suspending fungicides or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol/alkylene oxide addition products, such as nonylphenol ethoxylate; alcohol/alkylene oxide addition products, such as tridecylalcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyvl)sulfosuccinate: sorbitol esters, such as sorbitol oleate: quaternary amines, such as lauryltrimethylammonium chloride, polyethylene glycol esters of fatty acids, such as polyethylene glycol stearate: block copolymers of ethylene oxide and propylene oxide: and salts of mono- and dialkylphosphate esters.

Further adjuvants that can be used in pesticidal formulations include crystallisation inhibitors, viscosity modifiers, suspending fungicides, dyes, anti-oxidants, foaming fungicides, light absorbers, mixing auxiliaries, antifoams, complexing fungicides, neutralising or pH-modifying substances and buffers, corrosion inhibitors, fragrances, wetting fungicides, take-up enhancers, micronutrients, plasticizers, glidants, lubricants, dispersants, thickeners, antifreezes, microbicides, and liquid and solid fertilizers.

The compositions according to the invention can include an additive comprising an oil of vegetable or animal origin, a mineral oil, alkyl esters of such oils or mixtures of such oils and oil derivatives. The amount of oil additive in the formulation according to the invention is generally from 0.01 to 10 %, based on the mixture to be applied. For example, the oil additive can be added to a spray tank in the desired concentration after a spray mixture has been prepared. Preferred oil additives comprise mineral oils or an oil of vegetable origin, for example rapeseed oil, olive oil or sunflower oil, emulsified vegetable oil, alkyl esters of oils of vegetable origin, for example the methyl derivatives, or an oil of animal origin, such as fish oil or beef tallow. Preferred oil additives comprise alkyl esters of C8-C22 fatty acids, especially the methyl derivatives of C12-C18 fatty acids, for example the methyl esters of lauric acid, palmitic acid and oleic acid (methyl laurate, methyl palmitate and methyl oleate, respectively).

A seed dressing composition is applied in a manner known per se to the seeds employing the mixture of the invention and a diluent in suitable seed dressing composition form, e.g. as an aqueous suspension or in a dry powder form having good adherence to the seeds. Such seed dressing composition are known in the art. Seed dressing composition may contain the single active ingredients or the combination of active ingredients of the present invention in encapsulated form, e.g. as slow release capsules or microcapsules.

In general, the formulations include from 0.01 to 90% by weight of active fungicide, from 0 to 20% agriculturally acceptable surfactant and 10 to 99.99% solid or liquid adjuvant(s). Concentrate forms of compositions generally contain in between about 2 and 80%, preferably between about 5 and 70% by weight of active fungicide. Application forms of formulation may for example contain from 0.01 to 20% by weight, preferably from 0.01 to 5% by weight of active fungicide.

Concentrate forms of compositions generally are diluted before application.

The present composition may include additional crop protection agents, for example insecticides, herbicides, fungicides, bactericides, nematicides, molluscicides, growth regulators, biological agents, fertilizers, or mixtures thereof.

However, for the avoidance of doubt it is understood that such additional crop protection agents are unnecessary to achieve the desired control of fungal disease as achieved by the present mixture. Accordingly, the present fungicidal compositions and mixtures may be limited to containing a primary fungicide and a phthalimide fungicide, as the only crop protection agents present.

Process of Preparation

The present invention also provides a process of preparing the composition described herein, comprises the steps of: (i) obtaining an amount of the phthalimide fungicide(s) and an amount of the primary fungicide(s), and (ii) mixing the obtained amount of phthalimide fungicide(s) and the obtained amount of the primary fungicide(s) to obtain the composition.

In some embodiments, the amount of the phthalimide fungicide is less than the fungicidally effective amount of the phthalimide fungicide when the phthalimide fungicide is used alone. In some embodiments, the amount of the primary fungicide is less than the fungicidally effective amount of the primary fungicide when the primary fungicide is used alone.

In some embodiments, step (i) comprises obtaining an amount of agrochemically acceptable carrier(s) and step (ii) comprises mixing the amount of agrochemically acceptable carrier(s) with the obtained amount of phthalimide fungicide(s) and the obtained amount of the primary fungicide(s) to obtain the composition.

**Packages and Kits**

The present invention also provides a package comprising any one of the combinations disclosed herein. In some embodiments, the combination is any one of the mixtures described herein. In some embodiments, the combination is any one of the compositions described herein.

In some embodiments, the package comprises instructions for using the combination for treating a plant from fungal attack. In some embodiments, the package comprises instructions for using the combination for protecting a plant from fungal attack. In some embodiments, the package comprises instructions for using the combination for controlling fungal disease infecting a plant. In some embodiments, the instructions comprise application rates, application times, target fungal pathogen, and/or target plant as described herein.

In another embodiment, the present invention provides a kit comprising a synergistic fungicidal composition as described herein, or components thereof. Such kits may comprise, in addition to the aforementioned active components, one or more additional active and/or inactive component, either within the provided fungicidal composition or separately. Certain kits comprise a) a succinate dehydrogenase inhibitor fungicide and b) captan, each in a separate container, and each optionally combined with a carrier.

In some embodiments, the compositions, kits and methods described herein exhibit a synergistic effect. A synergistic effect exists wherever the action of a combination of active components is greater than the sum of the action of each of the components alone. Therefore, a synergistically effective amount (or an effective amount of a synergistic composition or mixture) is an amount that exhibits greater fungicidal activity than the sum of the fungicidal activities of the individual components.

In another embodiment, the present invention provides a kit comprising mixture and/or composition fungicidal composition as described herein, or components thereof. Such kits may comprise, in addition to the aforementioned active components, one or more additional active and/or inactive component, either within the provided fungicidal composition or separately. Certain kits comprise (1) an amount of phthalimide fungicide and (2) an amount of succinate dehydrogenase inhibitor fungicide each in a separate container, and each optionally combined with a carrier.

In another embodiment, the present invention provides a kit comprising combination and/or composition as described herein, or components thereof. Such kits may comprise, in addition to the aforementioned active components, one or more additional active and/or inactive component, either within the provided fungicidal composition or separately.

In some embodiments, the kit comprises (i) a SDHI fungicide, a DMI fungicide or a combination thereof, and (ii) at least one phthalimide fungicide, each in a separate container, and each optionally combined with a carrier.

In some embodiments, the kit comprises (i) a SDHI fungicide, and (ii) folpet each in a separate container, and each optionally combined with a carrier.

In some embodiments, the kit comprises (i) a DMI fungicide, and (ii) folpet, each in a separate container, and each

optionally combined with a carrier.

Certain kits comprise a) a succinate dehydrogenase inhibitor fungicide and b) captan, each in a separate container, and each optionally combined with a carrier.

Uses

The present invention provides a combination of an amount of a phthalimide fungicide and an amount of a primary fungicide for use to treat a plant or locus against fungal infection wherein the use comprises applying the combination of the amount of the phthalimide fungicide and the amount of the primary fungicide to the plant or locus, wherein (i) the combination of the amount of the phthalimide fungicide and the amount of the primary fungicide is more effective against fungal infection than when the amount of the phthalimide fungicide and the amount of a primary fungicide are applied alone, and/or (ii) the amount of the phthalimide fungicide improves the fungicidal efficacy of the amount of the primary fungicide compared to when the same amount of the primary fungicide is applied not in combination with the amount of the phthalimide fungicide.

In some embodiments, the locus is soil.

In some embodiments, the use comprising applying the amount of the primary fungicide in combination with the amount of the phthalimide fungicide improves the fungicidal efficacy of the amount of primary fungicide compared to when the same amount of the primary fungicide is applied not in combination with the amount of the phthalimide fungicide. The present invention provides a combination of an amount of a phthalimide fungicide and an amount of a primary fungicide for use to improving fungicidal efficacy of the amount of the primary fungicide comprising applying the combination of the amount of the phthalimide fungicide and the amount of the primary fungicide to the fungus, so as to thereby improve the fungicidal efficacy of the amount of the primary fungicide compared to when the same amount of the primary fungicide is applied not in combination with the amount of the phthalimide fungicide.

In some embodiments, fungicidal efficacy is increased by at least 10%, 20%, or 30% compared to when the same amount of the primary fungicide is applied alone. In some embodiments, fungicidal efficacy is increased by at least 50%, 100%, 200% or 300% compared to when the same amount of the primary fungicide is applied alone.

In some embodiments, fungicidal efficacy is measured in a treated area of the plant. In some embodiments, fungicidal efficacy is measured in an untreated area of the plant. In some embodiments, fungicidal efficacy is increased in a treated area of the plant. In some embodiments, fungicidal efficacy is increased in an untreated area of the plant.

In some embodiments, fungicidal efficacy is measure at least 21 days after treatment. In some embodiments, fungicidal efficacy is measure at least 28 days after treatment.

In some embodiments, the amount of the phthalimide fungicide is effective to increase sensitivity of the fungus to the amount of the primary fungicide compared to the sensitivity of the fungus to the amount of the primary fungicide when it is applied not in combination with the amount of the phthalimide fungicide, so as to thereby improve the fungicidal efficacy of the amount of the primary fungicide. The present invention provides a combination of an amount of a phthalimide fungicide and an amount of a primary fungicide for use to increase sensitivity of a fungus to the amount of the primary fungicide comprising applying a combination of the amount of the phthalimide fungicide and the amount of the primary fungicide to the fungus, so as to thereby increase sensitivity of the fungus to the amount of the primary fungicide.

In some embodiments, the amount of the phthalimide fungicide is effective to increase bioavailability of the amount of the primary fungicide compared to the bioavailability of the amount of the primary fungicide when it is applied not in combination with the amount of the phthalimide fungicide, so as to thereby improve the fungicidal efficacy of the amount of the primary fungicide. In some embodiments, the use increases the bioavailability the amount of the primary fungicide in the roots. In some embodiments, the use increases the bioavailability of the amount of the primary fungicide in the leaves. The present invention provides a combination of an amount of a phthalimide fungicide and an amount of a primary fungicide for use to increase bioavailability of the amount of the primary fungicide to a plant comprising applying the combination of the amount of the phthalimide fungicide and the amount of the primary fungicide to the plant, so as to thereby increase bioavailability of the amount of the primary fungicide.

Increasing bioavailability includes increasing penetration of the amount of the primary fungicide into the plant. The primary fungicide may penetrate into the plant by penetrating into leaves (including penetrating leaf cuticle) and/or roots. In some embodiments, applying the amount of the primary fungicide in combination with the amount of the phthalimide fungicide increases penetration of the amount of the primary fungicide into the plant. In some embodiments, applying the amount of the primary fungicide in combination with the amount of the phthalimide fungicide increases penetration of the amount of the primary fungicide into the plant leaf. In some embodiments, applying the amount of the primary fungicide in combination with the amount of the phthalimide fungicide increases penetration of the primary fungicide into the plant root. The present invention provides a combination of an amount of a phthalimide fungicide and an amount of a primary fungicide for use to increase penetration of the amount of the primary fungicide into a plant comprising applying a combination of the amount of the phthalimide fungicide and the amount of the primary fungicide to the plant, so as to thereby increase penetration of the amount of the primary fungicide into the plant.

Increasing bioavailability also includes increased translocation of the amount of the primary fungicide once inside the plant, including leaves. In some embodiments, applying the amount of the primary fungicide in combination with the amount of the phthalimide fungicide increases translocation of the amount of the primary fungicide after penetration into the plant. The present invention provides a combination of an amount of a phthalimide fungicide and an amount of a primary fungicide for use to increase translocation of the amount of the primary fungicide in a plant comprising applying a combination of the amount of the phthalimide fungicide and the amount of the primary fungicide to the plant, so as to thereby increase translocation of the amount of the primary fungicide in the plant.

In some embodiments, the combination of the amount of the phthalimide fungicide and the amount of the primary fungicide is for use to treat a plant or locus against fungal infection, wherein the combination of the amount of the phthalimide fungicide and the amount of the primary fungicide is more effective against fungal infection than when the amount of the phthalimide fungicide and the amount of a primary fungicide are applied alone.

In some embodiments, treating a plant or soil against fungal infection comprises inhibiting fungal mycelium formation. The present invention also provides a combination of an amount of a phthalimide fungicide and an amount of a primary fungicide for use to inhibit fungal mycelium formation comprising applying a combination of the amount of the phthalimide fungicide and the amount of the primary fungicide to the fungus, so as to thereby inhibit fungal mycelium fomation.

In some embodiments, treating a plant or locus against fungal infection comprises combating phytopathogenic diseases on the plant or locus. The present invention also provides a combination of an amount of a phthalimide fungicide and an amount of a primary fungicide for use to combat phytopathogenic diseases on a plant or locus which comprises applying to the plant or to the locus a combination of the phthalimide fungicide and the primary fungicide. In some embodiments, the plant is a crop plant.

In some embodiments, treating the plant or locus against fungal infection comprises protecting the plant or locus from fungal attack.

In some embodiments, treating the plant or locus against fungal infection comprises preventing fungal infection of the plant or locus.

In some embodiments, treating the plant or locus against fungal infection comprises controlling fungal disease affecting the plant or locus.

In some embodiments, treating the plant or locus against fungal infection comprises controlling a fungal pathogen, a fungal pathogen group or a fungal pathogen class affecting the plant or locus.

In some embodiments, treating the plant or locus against fungal infection comprises controlling a fungal disease caused by a fungal pathogen, a fungal pathogen group or a fungal pathogen class affecting the plant or locus.

In some embodiments, treating the plant or locus against fungal infection comprises reducing fungal infection of the plant or locus.

In some embodiments, the use is effective for prolonging the period of protection against fungal infection and/or control of fungal infection than when the amount of the phthalimide fungicide and the amount of a primary fungicide are applied alone. The present invention also provides a combination of an amount of a phthalimide fungicide and an amount of a primary fungicide for use to prolong the period of protection against fungal infection and/or control of fungal infection from an application of an amount of a primary fungicide to a plant or locus comprising applying a combination of the amount of the phthalimide fungicide and the amount of the primary fungicide to the plant or locus. In some embodiments, the plant is a crop plant.

In some embodiments, the period of protection against fungal infection and/or control of fungal infection is prolonged by at least 7 days, 14 day, 21 days, or 28 days.

In some embodiments, the use is effective for reducing the amount of time needed to achieve a level of fungal control compared to when the amount of the phthalimide fungicide and the amount of a primary fungicide are applied alone. The present invention also provides a combination of an amount of a phthalimide fungicide and an amount of a primary fungicide for use to reduce the amount of time needed to achieve a level of fungal control from an application of an amount of primary fungicide to a plant or locus comprising applying a combination of the amount of the phthalimide fungicide and the amount of the primary fungicide to the plant or locus.

An example for reduction is, if each fungicide is applied alone achieves 50% control of fungal disease 7 days after application, the method disclosed herein achieves 50% control of fungal diseases 2 days after application where each fungicide is applied at the amount.

In some embodiments, the amount of time needed to achieve a level of fungal control is reduced by at least 1 day, 2 days, 3 days, 4 day, 5 days, 7 days, 10 days, 14 days or 21 days, or 28 days.

In some embodiments, the use is effective for improving plant development compared to the development of a plant affected by the same type and degree of fungal infection to which the combination is not applied. The present invention also provides a combination of an amount of a phthalimide fungicide and an amount of a primary fungicide for use to improve development of a plant affected by fungal infection comprising applying a combination of the phthalimide fungicide and the primary fungicide to the plant or a locus thereof so as to improve the development of the plant compared

to the development of a plant affected by the same type and degree of fungal infection to which the combination is not applied. In some embodiments, the plant is a crop plant.

In some embodiments, the plant development is improved by treating the plant against fungal attack.

In some embodiments, improving plant development comprises enhancing crop plants. In some embodiment, improving plant development comprises improving plant quality.

Improving plant development includes, but is not limited to, enhancing the root systems, enhancing shoot of the plant, enhancing plant vigor, enhancing greening effect on leaves and/or enhancing plant potential yield.

In some embodiments, improving plant development comprises enhancing the root system. In some embodiments, enhancement in root system is measured by root weight. In some embodiments, root weight is increased by at least 1%, 5%, 10, 20%, 30%, 40%, 50%, 60%, 70%, 80%, or 90%.

In some embodiments, improving plant development comprises enhancing shoot of the plant. In some embodiments, enhancement in shoot is measured by shoot weight. In some embodiments, shoot weight is increased by at least 1%, 5%, 10, 20%, 30%, 40%, 50%, 60%, 70%, 80%, or 90%.

In some embodiments, improving plant development comprises enhancing plant vigor. In some embodiments, plant vigor is assessed using the relative vigor index. In some embodiments, plant vigor is increased by at least 1%, 5%, 10, 20%, 30%, 40%, 50%, 60%, 70%, 80%, or 90%.

In some embodiments, improving plant development comprises enhancing greening effect on leaves. In some embodiments, greening effect on leaves is assessed using the relative vigor index. In some embodiments, greening effect on leaves is increased by at least 1%, 5%, or 10%.

In some embodiments, improving plant development comprises enhancing plant yield. In some embodiments, plant yield is increased by at least 1%, 5%, 10, 20%, 30%, 40%, 50%, 60%, 70%, 80%, or 90%.

In some embodiments, the combination is more effective in treating the plant or locus against fungal infection than when each fungicide at the same amount is applied alone.

In some embodiments, the combination comprises one or more primary fungicide(s) and the combination of the phthalimide fungicide and at least one of the primary fungicides applied is more effective in treating the plant or soil against fungal infection than when each fungicide at the same amount is applied alone. In some embodiments, the combination comprises two or more primary fungicides and the combination of the phthalimide fungicide and at least two of the primary fungicides applied is more effective in treating the plant or soil against fungal infection than when each fungicide at the same amount is applied alone.

In some embodiments, the combination is more effective in treating the plant or locus against fungal infection than when the primary fungicide at the same amount is applied alone.

In some embodiments, the amount of phthalimide fungicide applied is less than the fungicidally effective amount of the phthalimide fungicide when the phthalimide fungicide is applied alone.

In some embodiments, the amount of the primary fungicide applied is less than the fungicidally effective amount of the primary fungicide when the primary fungicide is applied not in combination with the phthalimide fungicide.

Preferred phthalimide fungicide(s), primary fungicide(s), and combinations of phthalimide fungicide(s) and primary fungicide(s) are described herein. Any one the phthalimide fungicide(s), primary fungicide(s), and combinations of phthalimide fungicide(s) and primary fungicide(s) described herein may be used in connection with the uses described herein.

Fungal pathogens, fungal pathogen groups and fungal pathogen classes that the combinations of the present invention are particularly effective in treating against are described herein. The combinations of the present invention may be used for treating a plant or locus against any one or any combination of the fungal pathogens, fungal pathogen groups and fungal pathogen classes described herein, or any fungal diseases caused thereby.

The present invention also provides use of any one of the combination, mixtures or compositions disclosed herein for combating phytopathogenic (fungal) diseases on crop plants.

The present invention also provides use of any one of the combination, mixtures or compositions disclosed herein for treating a plant or soil against fungal infection.

The present invention also provides use of any one of the combination, mixtures or compositions disclosed herein for combating phytopathogenic diseases on crop plants.

The present invention also provides use of any one of the combination, mixtures or compositions disclosed herein for treating a plant or soil against fungal infection.

The present invention also provides use of any one of the combination, mixtures or compositions disclosed herein for protecting a plant or soil from fungal attack.

The present invention also provides use of any one of the combination, mixtures or compositions disclosed herein for protecting a plant or soil from fungal infection.

The present invention also provides use of any one of the combination, mixtures or compositions disclosed herein for preventing fungal infection of a plant or soil.

The present invention also provides use of any one of the combination, mixtures or compositions disclosed

herein for controlling fungal infection on a plant or soil.

The present invention also provides use of any one of the combination, mixtures or compositions disclosed herein for controlling fungal disease infecting a plant.

The present invention provides a use of fungicidal mixture or combination comprising, a) at least one succinate dehydrogenase inhibitor fungicide and b) captan, for protecting and prolonging the lifespan of medium to high resistance risk fungicides.

The present invention provides a use of fungicidal mixture or combination comprising, a) at least one succinate dehydrogenase inhibitor fungicide and b) captafol, for protecting and prolonging the lifespan of medium to high resistance risk fungicides.

The present invention provides a use of fungicidal mixture or combination comprising (1) an amount of phthalimide fungicide and (2) an amount of succinate dehydrogenase inhibitor fungicide for controlling an apple scab disease.

The present invention provides a mixture or combination for controlling an apple scab disease comprising (1) an amount of phthalimide fungicide and (2) an amount of succinate dehydrogenase inhibitor fungicide.

The present invention provides a use of fungicidal mixture or combination comprising (1) phthalimide fungicide and (2) succinate dehydrogenase inhibitor fungicide for controlling an apple scab disease.

The present invention provides a fungicidal mixture or combination for controlling an apple scab disease comprising (1) phthalimide fungicide and (2) succinate dehydrogenase inhibitor fungicide.

The present invention provides a use of fungicidal mixture or combination comprising (1) at least one phthalimide fungicide and (2) at least one succinate dehydrogenase inhibitor fungicide for controlling an apple scab disease.

The present invention provides a mixture or combination for controlling an apple scab disease comprising (1) at least one phthalimide fungicide and (2) at least one succinate dehydrogenase inhibitor fungicide.

The present invention provides a use of fungicidal mixture or combination comprising (1) an amount of phthalimide fungicide and (2) an amount of succinate dehydrogenase inhibitor fungicide for controlling disease in vegetable crop.

The present invention provides a fungicidal mixture or combination for controlling disease in vegetable crop comprising 1) an amount of phthalimide fungicide and (2) an amount of succinate dehydrogenase inhibitor fungicide for controlling disease in vegetable crop.

In some embodiments, the vegetable crop is potato.

In some embodiments, the vegetable crop is tomato.

In some embodiments, the vegetable crop is chilli.

In some embodiments, the disease is Anthracnose and/or Altemaria.

In some embodiments, the disease is Early blight.

The present invention provides a use of a fungicidal mixture or combination comprising, (1) an amount of phthalimide fungicide and (2) an amount of succinate dehydrogenase inhibitor fungicide for controlling early blight disease in potato.

The present invention provides a fungicidal mixture or combination for controlling Early blight disease in potato, comprising (1) an amount of phthalimide fungicide and (2) an amount of succinate dehydrogenase inhibitor fungicide.

The present invention provides a use of a fungicidal mixture or combination comprising, (1) an amount of phthalimide fungicide and (2) an amount of succinate dehydrogenase inhibitor fungicide for controlling early blight disease in tomato.

The present subject matter also relates to a use of fungicidal mixture or combination comprising (1) an amount of phthalimide fungicide and (2) an amount of succinate dehydrogenase inhibitor fungicide for protecting and prolonging the lifespan of medium to high resistance risk fungicides.

The present invention provides a fungicidal mixture or combination for controlling Early blight disease in tomato, comprising (1) an amount of phthalimide fungicide and (2) an amount of succinate dehydrogenase inhibitor fungicide.

The present invention provides a use of a fungicidal mixture or combination comprising (1) an amount of phthalimide fungicide and (2) an amount of succinate dehydrogenase inhibitor fungicide for controlling Sheath blight disease in rice.

The present invention provides a fungicidal mixture or combination for controlling Sheath blight disease on rice, comprising (1) an amount of phthalimide fungicide and (2) an amount of succinate dehydrogenase inhibitor fungicide.

The present invention provides a use of a fungicidal mixture or combination comprising (1) phthalimide fungicide and (2) succinate dehydrogenase inhibitor fungicide for controlling Early blight disease in potatoes.

The present invention provides a mixture or combination for controlling Early blight disease in potatoes, comprising (1) phthalimide fungicide and (2) succinate dehydrogenase inhibitor fungicide.

The present invention provides a method for controlling Early blight disease in tomatoes, comprising applying a fungicidal mixture or combination comprising (1) phthalimide fungicide and (2) succinate dehydrogenase inhibitor fungicide to the plant, propagation material of the plant, and/ or a locus of the plant.

The present invention provides a use of a fungicidal mixture or combination comprising, (1) phthalimide fungicide and (2) succinate dehydrogenase inhibitor fungicide for controlling early blight disease in tomatoes.

The present invention provides a fungicidal mixture or combination for controlling Early blight disease in tomatoes, comprising (1) phthalimide fungicide and (2) succinate dehydrogenase inhibitor fungicide.

The present invention provides a use of a fungicidal mixture or combination comprising (1) phthalimide fungicide and (2) succinate dehydrogenase inhibitor fungicide for controlling Sheath blight disease in rice.

The present invention provides a mixture or combination for controlling Sheath blight disease on rice, comprising (1) phthalimide fungicide and (2) succinate dehydrogenase inhibitor fungicide.

The present invention provides a use of a fungicidal mixture or combination comprising (1) at least one phthalimide fungicide and (2) at least one succinate dehydrogenase inhibitor fungicide for controlling Early blight disease in potatoes.

The present invention provides a mixture or combination for controlling Early blight disease in potatoes, comprising (1) at least one phthalimide fungicide and (2) at least one succinate dehydrogenase inhibitor fungicide.

The present invention provides a use of a fungicidal mixture or combination comprising (1) at least one phthalimide fungicide and (2) at least one succinate dehydrogenase inhibitor fungicide for controlling Early blight disease in tomatoes.

The present invention provides a fungicidal mixture for controlling Early blight disease in tomatoes, comprising (1) at least one phthalimide fungicide and (2) at least one succinate dehydrogenase inhibitor fungicide.

The present invention provides a use of a fungicidal mixture or combination comprising (1) at least one phthalimide fungicide and (2) at least one succinate dehydrogenase inhibitor fungicide for controlling Sheath blight disease in rice.

The present invention provides a fungicidal mixture or combination for controlling Sheath blight disease in rice, comprising (1) at least one phthalimide fungicide and (2) at least one succinate dehydrogenase inhibitor fungicide.

In some embodiments, the mixture or combination is a synergistic mixture or combination.

The present invention provides a use of a fungicidal mixture or combination comprising (1) an amount of phthalimide fungicide and (2) an amount of succinate dehydrogenase inhibitor fungicide for controlling anthracnose disease in chili.

The present invention provides a mixture or combination for controlling anthracnose disease in chili, comprising (1) an amount of phthalimide fungicide and (2) an amount of succinate dehydrogenase inhibitor fungicide.

The present invention provides a use of a fungicidal mixture or combination comprising (1) an amount of phthalimide fungicide and (2) an amount of succinate dehydrogenase inhibitor fungicide for controlling disease in chili.

The present invention provides a mixture or combination for controlling disease in chili, comprising (1) an amount of phthalimide fungicide and (2) an amount of succinate dehydrogenase inhibitor fungicide.

The present invention provides a method for controlling disease in chili, comprising applying a fungicidal mixture or combination comprising (1) phthalimide fungicide and (2) succinate dehydrogenase inhibitor fungicide to the plant, propagation material of the plant, and/or a locus of the plant.

The present invention provides a use of a fungicidal mixture or combination comprising (1) phthalimide fungicide and (2) succinate dehydrogenase inhibitor fungicide for controlling disease in chili.

The present invention provides a mixture or combination for controlling disease in chili, comprising (1) phthalimide fungicide and (2) succinate dehydrogenase inhibitor fungicide.

The present invention provides a use of a fungicidal mixture or combination comprising (1) at least one phthalimide fungicide and (2) at least one succinate dehydrogenase inhibitor fungicide for controlling Alternaria disease in chili crop.

The present invention provides a mixture or combination for controlling Alternaria disease in chili crop, comprising (1) at least one phthalimide fungicide and (2) at least one succinate dehydrogenase inhibitor fungicide.

In some embodiments, the fungicidal mixture or combination is a synergistic mixture or combination.

In some embodiments, the amount of succinate dehydrogenase inhibitor fungicide and the amount of the phthalimide fungicide if applied together is more effective for controlling the disease than if each fungicide at the same amount is applied alone.

The present invention provides a use of a fungicidal mixture or combination comprising (1) an amount of phthalimide fungicide and (2) an amount of succinate dehydrogenase inhibitor fungicide for controlling disease in chili.

The present invention provides a fungicidal mixture or combination for controlling disease in chili, comprising (1) an amount of phthalimide fungicide and (2) an amount of succinate dehydrogenase inhibitor fungicide.

The present invention provides a use of a fungicidal mixture or combination comprising (1) phthalimide fungicide and (2) succinate dehydrogenase inhibitor fungicide for controlling fungal disease in chili.

The present invention provides a mixture or combination for controlling fungal disease in chili, comprising (1) phthalimide fungicide and (2) succinate dehydrogenase inhibitor fungicide.

The present invention provides a use of a fungicidal mixture or combination comprising (1) at least one

phthalimide fungicide and (2) at least one succinate dehydrogenase inhibitor fungicide for controlling fungal disease in chili.

The present invention provides a fungicidal mixture or combination for controlling fungal disease in chili crop, comprising (1) at least one phthalimide fungicide and (2) at least one succinate dehydrogenase inhibitor fungicide.

In some embodiments, the disease is Anthracnose and/or Altemaria.

In some embodiments, the disease is caused by Colletotrichum capsica.

In some embodiments, the disease is caused Alternaria solani.

The present invention provides a use of fungicidal mixture or combination comprising (a) at least one phthalimide fungicide selected from the group consisting of captan, folpet, captafol and any combination thereof and (b) at least one succinate dehydrogenase inhibitor fungicide for controlling fungal disease in banana.

The present invention provides a use of fungicidal mixture or combination comprising (a) at least one phthalimide fungicide selected from the group consisting of captan, folpet, captafol and any combination thereof and (b) at least one succinate dehydrogenase inhibitor fungicide for controlling black sigatoka in banana.

The present invention provides a fungicidal mixture or combination for controlling fungal disease in banana comprising (a) at least one phthalimide fungicide selected from the group consisting of captan, folpet, captafol and any combination thereof and (b) at least one succinate dehydrogenase inhibitor fungicide.

The present invention provides a fungicidal mixture or combination for controlling black sigatoka in banana comprising (a) at least one phthalimide fungicide selected from the group consisting of captan, folpet, captafol and any combination thereof and (b) at least one succinate dehydrogenase inhibitor fungicide.

In some embodiments, the fungal disease caused by Mycosphaerella fijiensis

The present invention provides a fungicidal mixture or combination for controlling Plasmopara viticola, in grape comprising (a) at least one phthalimide fungicide selected from the group consisting of captan, folpet, captafol and any combination thereof and (b) at least one succinate dehydrogenase inhibitor fungicide.

The present invention provides a use of fungicidal mixture or combination comprising (1) an amount of phthalimide fungicide and (2) an amount of succinate dehydrogenase inhibitor fungicide for protecting and prolonging the lifespan of medium to high resistance risk fungicides.

The present invention provides a use of fungicidal mixture or combination comprising (1) phthalimide fungicide and (2) succinate dehydrogenase inhibitor fungicide for protecting and prolonging the lifespan of medium to high resistance risk fungicides.

The present invention provides a use of fungicidal mixture or combination comprising (1) at last one phthalimide fungicide and (2) at least one succinate dehydrogenase inhibitor fungicide for protecting and prolonging the lifespan of medium to high resistance risk fungicides.

In some embodiments, the mixture comprises **SDHI** fungicide and phthalimide fungicide as the active ingredients.

The present invention provides a mixture or combination for controlling a disease caused by a pathogen on plant or soil, comprising (1) an amount of phthalimide fungicide and (2) an amount of succinate dehydrogenase inhibitor fungicide wherein the mixture is more effective than if each fungicide at the same amount is applied alone.

The present invention provides a mixture or combination for controlling a disease caused by a pathogen on plant or soil, comprising (1) phthalimide fungicide and (2) succinate dehydrogenase inhibitor fungicide wherein the mixture is more effective than if each fungicide at the same amount is applied alone.

The present invention provides a fungicidal mixture or combination for controlling a disease caused by a pathogen on plant or soil, comprising (1) at least one phthalimide fungicide and (2) at least one succinate dehydrogenase inhibitor fungicide wherein the mixture is more effective than if each fungicide at the same amount is applied alone.

As noted above, the compositions, kits and methods described herein exhibit a synergistic effect.

The present invention also provides use of an amount of phthalimide fungicide for increasing the efficacy of an amount of fungicide I selected from group consisting of succinate dehydrogenase inhibitor (SDHI) fungicides, demethylation inhibitor (DMI) fungicides, quinone outside inhibitor (QoI) fungicides, and any combination thereof compared to the efficacy of the same amount of fungicide I when applied without the amount of phthalimide fungicide.

The present invention also provides use of an amount of phthalimide fungicide for increasing the bioavailability of an amount of fungicide I selected from group consisting of succinate dehydrogenase inhibitor (SDHI) fungicides, demethylation inhibitor (DMI) fungicides, quinone outside inhibitor (QoI) fungicides, and any combination thereof compared to the bioavailability of the same amount of fungicide I when applied without the amount of phthalimide fungicide.

The present invention also provides use of an amount of phthalimide fungicide for increasing the penetration of an amount of fungicide I into a plant compared to the penetration of the same amount of fungicide I when applied without the amount of phthalimide fungicide, wherein fungicide I is selected from group consisting of succinate dehydrogenase inhibitor (SDHI) fungicides, demethylation inhibitor (DMI) fungicides, quinone outside inhibitor (QoI) fungicides, and any combination thereof.

The present invention also provides use of an amount of phthalimide fungicide for increasing the translocation of an amount of fungicide I in a plant compared to the translocation of the same amount of fungicide I when applied without the amount of phthalimide fungicide, wherein fungicide I is selected from group consisting of succinate dehydrogenase inhibitor (SDHI) fungicides, demethylation inhibitor (DMI) fungicides, quinone outside inhibitor (QoI) fungicides, and any combination thereof.

The present invention provides use of a phthalimide fungicide for increasing the bioavailability and biological efficacy of the fungicide I selected from group consisting of succinate dehydrogenase inhibitor (SDHI) fungicides, demethylation inhibitor (DMI) fungicides, quinone outside inhibitor (QoI) fungicides, and combination thereof for controlling plant disease caused by a pathogen.

The present invention also provides use of phthalimide fungicide for increasing the phytopathogenic diseases control by at least one fungicide I selected from group consisting of succinate dehydrogenase inhibitor (SDHI) fungicides, demethylation inhibitor (DMI) fungicides, quinone outside inhibitor (QoI) fungicides, and combination thereof.

In some embodiments, the efficacy of fungicide I, selected from the group consisting of succinate dehydrogenase inhibitor (SDHI) fungicides, demethylation inhibitor (DMI) fungicides, quinone outside inhibitor (QoI) fungicides, and combination thereof, when applied in the presence of phthalimide fungicide is improved compared to when fungicide I at the same amount is applied alone.

The present invention provides a combination, mixture or composition for controlling plant disease caused by pathogen comprising an amount of phthalimide fungicide and an amount of fungicide I, wherein the bioavailability of fungicide I is increased.

In some embodiments, the present invention does not include the inventions disclosed in the PCT/IL2019/051432.

In some embodiments, the present invention does not include the inventions disclosed in the WO 2019/244084.

In some embodiments, the present invention does not include the inventions disclosed in the WO 2015/103262.

In some embodiments, the present invention does not include the inventions disclosed in the WO 2012/025912.

The present invention provides a use of fungicidal mixture or combination comprising (a) at least one phthalimide fungicide selected from the group consisting of captan, folpet, captafol and any combination thereof and (b) 5-fluoro-4-imino-3-methyl-1-tosyl-3,4-dihydropyrimidin-2(1H)-one for controlling fungal disease in barley.

The present invention provides a use of fungicidal mixture or combination comprising (a) at least one phthalimide fungicide selected from the group consisting of captan, folpet, captafol and any combination thereof and (b) 5-fluoro-4-imino-3-methyl-1-tosyl-3,4-dihydropyrimidin-2(1H)-one for controlling Ramularia leaf spot in barley.

The present invention provides a fungicidal mixture or combination for controlling fungal disease in barley comprising (a) at least one phthalimide fungicide selected from the group consisting of captan, folpet, captafol and any combination thereof and (b) 5-fluoro-4-imino-3-methyl-1-tosyl-3,4-dihydropyrimidin-2(1H)-one.

The present invention provides a fungicidal mixture or combination for controlling Ramularia leaf spot in barley comprising (a) at least one phthalimide fungicide selected from the group consisting of captan, folpet, captafol and any combination thereof and (b) 5-fluoro-4-imino-3-methyl-1-tosyl-3,4-dihydropyrimidin-2(1H)-one.

The present invention provides a use of fungicidal mixture or combination comprising (a) at least one phthalimide fungicide selected from the group consisting of captan, folpet, captafol and any combination thereof and (b) 5-fluoro-4-imino-3-methyl-1-tosyl-3,4-dihydropyrimidin-2(1H)-one for controlling Plasmopara viticola in grapevine.

The present invention provides a fungicidal mixture or combination for controlling Plasmopara viticola in grapevine comprising (a) at least one phthalimide fungicide selected from the group consisting of captan, folpet, captafol and any combination thereof and (b) 5-fluoro-4-imino-3-methyl-1-tosyl-3,4-dihydropyrimidin-2(1H)-one.

The present invention provides a use of a fungicidal mixture or combination comprising (1) an amount of phthalimide fungicide and (2) an amount of amine fungicide for controlling disease in sugar beet.

The present invention provides a fungicidal mixture or combination for controlling disease in sugar beet, comprising (1) an amount of phthalimide fungicide and (2) an amount of amine fungicide.

The present invention provides a use of a fungicidal mixture or combination comprising (1) phthalimide fungicide and (2) amine fungicide for controlling fungal disease in sugar beet.

The present invention provides a mixture or combination for controlling Cercospora beticola in sugar beet, comprising (1) phthalimide fungicide and (2) amine fungicide.

Each embodiment disclosed herein is contemplated as being applicable to each of the other disclosed embodiments. Thus, all combinations of the various elements described herein are within the scope of the invention. In addition, the clements recited in the composition embodiments can be used in the combination, mixture (including synergistic mixture), package, method and use embodiments described herein and vice versa. In addition, the elements recited in the combination embodiments can be used in the composition, kit, method and use embodiments described herein and vice versa.

The present invention is illustrated and further described in more detail with reference to the following non-limiting examples. The following examples illustrate the practice of the present subject matter in some of its embodiments but

should not be construed as limiting the scope of the present subject matter. Other embodiments will be apparent to one skilled in the art from consideration of the specification and examples. It is intended that the specification, including the examples, is considered exemplary only without limiting the scope and spirit of the present subject matter.

Experiments

Biological examples

In the field of agriculture, it is often understood that the term "synergy" is as defined by (1) Colby S. R. in an article entitled "Calculation of the synergistic and antagonistic responses of herbicide combinations" published in the journal Weeds, 1967, 15, p. 20-22, and (2) Wadley (Ulrich Gisi, Phytopathology, 86, 1996, 1273-1279)

Under the Colby approach, a synergistic effect is present if the action of the combination of active ingredients exceeds the total of the actions of the individual components. The expected action E for a given combination of active ingredients can be described by the so-called COLBY formula and can be calculated as follows (COLBY, S.R. "Calculating synergistic and antagonistic responses of herbicide combination". Weeds, Vol. 15, pages 20-22: 1967).

ppm = milligrams of active ingredient (= a.i.) per litre of spray mixture

X = % action caused by active ingredient I at a rate of application of p ppm of active ingredient

Y = % action caused by active ingredient II at a rate of q ppm of active ingredient

E = expected action of active ingredients I+II at a rate of application of p+q ppm of active ingredient (additive action).

X - Y then Colby's formula reads E = X + Y- 100

If the actually observed action (O) exceeds the expected action (E), the action of the combination is superadditive, i.e. there is a synergistic effect. O E = factory of synergism (FS).

The action expected for a given combination of two active components can be calculated as follows:

$$E = X + Y - \frac{XY}{100}$$

The action expected for a given combination of three active components can be calculated as follows:

$$E = X + Y + Z - \frac{XY + XZ + YZ}{100} + \frac{XYZ}{10000}$$

in which E represents the expected effect, e.g. percentage of pest control, for the combination of the three active ingredient at defined doses (for example equal to x, y and z respectively). X is the effect, e.g. percentage of pest control, observed for compound (I) at a defined dose (equal to x), Y is the effect, e.g. percentage of pest control, observed for compound (II) at a defined dose (equal to y), Z is the effect, e.g. percentage of pest control, observed for compound (III) at a defined dose (equal to z). When the effect, e.g. percentage of pest control, observed for the combination is greater than the expected effect, there is a synergistic effect. The ratio of observed action ($E_{obs}$) and expected action ($E_{exp}$), i.e. $E_{abs}$/ $E_{exp}$ expresses the factor of interaction level (R) which may be interpreted in accordance with Table Ia below.

Table Ia. Colby interaction level

| **R > I** | **Synergy** |
|---|---|
| R = I | Additivity |
| R < I | Antagonism |

A synergistic effect may also be shown by using the Wadley method. The Wadley formula predicts the expected effective concentration ($EC_{theoretical}$) at different control levels (50% or 90%).

In the Wadley method, synergistic activity is determined from dose response curves. With this method, the efficacy of the active ingredient ("a.i.") is determined by comparing the degree of fungal attack on treated plants with that on

untreated, similarly inoculated and incubated check plants. Each a.i. is generally tested at multiple. (e.g. 6) concentrations, and dose response curves are generated. The dose response curves are used to establish the EC50 (i.e. the effective concentration of a.i. providing 50% disease control) of the individual compounds as well as of the combinations (EC50Observed) · The experimental values of the mixture at a given weight ratio are compared with the values that would have been found where only a complementary efficacy of the components is present as follows:

$$EC_{theo} = (a+b)/[(a/EC_A)+(b/EC_B)]$$

A and B = the single products which are tested

a and b = the ratio of each product in the mixture

$EC_A$ and $EC_B$ = observed effective concentration of the single products A and B at different control levels (50 or 90%)

$$R = EC_{theo} / EC_{observed}$$

For three-way mixture:

$$EC_{theo} = (a+b+c)/[(a/EC_A)+(b/EC_B+(c/EC_C)]$$

a, b and c = the ratio of each product in the mixture

$EC_A$, $EC_B$ and ECc = observed effective concentration of the single products A B and C at different control levels (50 or 90%).

The ratio EC50 $(A+B)_{Theo}$ / EC50$(A+B)_{observed}$ expresses the factor of interaction level (R) which may be interpreted in accordance with Table 1b below.

Table 1b. Wadley interaction level

| **R > 1.5** | **Synergy** |
|---|---|
| 0.5<R<1.5 | Additivity |
| R < 0.5 | Antagonism |

The Colby approach allows determination of the type of fungicide mixtures interaction at one dose. It is adapted for field and laboratory studies and gives the a.i. interaction at the evaluated dose. The Colby approach is dose dependent.

The Wadley approach evaluates the type of fungicide mixtures interaction within a range of concentrations. It is more adapted for laboratory studies and permits to evaluate the intrinsic a.i. interaction. The Wadley approach is dose independent.

EXAMPLE Ia

An experiment was conducted in controlled conditions under a greenhouse to evaluate the fungicidal activity of the mixture comprising demethylation inhibitor fungicide (difenoconazole, tebuconazole), and phthalimides (captan, folpet) toward *Venturia inaequalis* in young apple plants, variety Golden Delicious. In addition, the activity phthalimide with two fungicides (A): demethylation inhibitor fungicide (difenoconazole, tebuconazole) and succinate dehydrogenase inhibitor fungicide (fluopyram) was also tested.

The experiment was conducted by applying compositions of fluopyram (Luna privilege®), difenoconazole (Score®25 EC), tebuconazole (Folicur WG®), and captan (Merpan 80 WDG®R) or folpet (Folpan 80 WDG®) alone and together. The compositions were diluted with water. Water amount used was equivalent to 1500 L/ha. Application is performed in an automatic spraying cabin equipped with 2 flatfan AI11003VS nozzles.

*Treatments:*

Captan 1200 gr (A.I.)/ha
Folpet 1200 gr (A.I.)/ha
Difenoconazole 75 gr (A.I.)/ha
Difenoconazole 75 gr (A.I.)/ha + Captan 1200 gr (A.I.)/ha
Difenoconazole 75 gr (A.I.)/ha + Folpet 1200 gr (A.I.)/ha
Tcbuconazole 150 gr (A.I.)/ha
Tebuconazole 150 gr (A.I.)/ha + Captan 1200 gr (A.I.)/ha
Tebuconazole 150 gr (A.I.)/ha + Folpet 1200 gr (A.I.)/ha
fluopyram 150 gr (A.I.)/ha
fluopyram 150gr (A.I.)/ha + Captan 1200 gr (A.I.)/ha
fluopyram 150 gr (A.I.)/ha + Folpet 1200 gr (A.I.)/ha
fluopyram 150gr (A.I.)/ha + Difenoconazole 75 gr (A.I.)/ha
fluopyram 150gr (A.I.)/ha + Difenoconazole 75 gr (A.I.)/ha + Captan 1200 gr (A.I.)/ha
fluopyram 150gr (A.I.)/ha + Difenoconazole 75 gr (A.I.)/ha + Folpet 1200 gr (A.I.)/ha
fluopyram 150gr (A.I.)/ha + Tebuconazole 150 gr (A.I.)/ha
fluopyram 150gr (A.I.)/ha + Tebuconazole 150 gr (A.I.)/ha + Captan 1200 gr (A.I.)/ha
fluopyram 150gr (A.I.)/ha + Tebuconazole 150 gr (A.I.)/ha + Folpet 1200 gr (A.I.)/ha

To test for fungicidal control of *Venturia inaequalis,* the apple trees were sprayed with each of the above treatments. Each of the above treatments were applied once at one day before artificial inoculation with a suspension of $10^6$ cfu/ml of V. *inaequalis* spores. The treatments were composed of 4 replicates. The experimental design was a randomized complete block design. Statistically significant differences are assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of apple scab and incidence and severity of *Venturia inaequalis* on leaves was determined. Results, shown in Tables 2 and 3 below, are presented as the percentage of control based on severity rating with a maximum of 100%.

Table 2.

| Product Name | AI | Fungicide family | Application rate (gAI/ha) | % control observed on leaves 26 DAYS after the application | Stat. | % control expected | Colby Ratio (o/e) |
|---|---|---|---|---|---|---|---|
| Merpan 80 WDG | CAPTAN | phthalimides | 1200 | 75.9 | d | | |
| Folpan 80 WDG | FOLPET | phthalimides | 1200 | 72.3 | e | | |
| Score 10 WG | DIFENOCONAZOLE | DMI | 75 | 71.8 | e | | |
| Merpan 80 WDG + Score 10 WG | CAPTAN + DIFENO-CONAZOLE | phthalimides + DMI | 1200<br>75 | 94.5 | b | 93.20 | 1.01 |
| Folpan 80 WDG + Score 10 WG | FOLPET + DIFENO-CONAZOLE | phthalimides + DMI | 1200<br>75 | 94.3 | b | 92.19 | 1.02 |
| Alien | TEBUCONAZOLE | DMI | 150 | 77.4 | d | | |
| Merpan 80 WDG + Alien | CAPTAN + TEBUCO-NAZOLE | phthalimides<br>DMI | 1200<br>150 | 89.6 | c | 94.55 | 0.95 |

(continued)

| Product Name | AI | Fungicide family | Application rate (gAI/ha) | % control observed on leaves 26 DAYS after the application | Stat. | % control expected | Colby Ratio (o/e) |
|---|---|---|---|---|---|---|---|
| Folpan 80 WDG + Alien | FOLPET + TEBUCONAZOLE | phthalimides<br>DMI | 1200<br>150 | 95.1 | b | 93.74 | 1.01 |
| Luna Privilege | FLUOPYRAM | SDHI | 150 | 75.3 | d | | |
| Merpan 80 WDG + Luna Privilege | CAPTAN + FLUOPYRAM | phthalimides<br>SDHI | 1200<br>150 | 98.6 | a | 94.05 | 1.05 |
| Folpan 80 WDG + Luna Privilege | FOLPET + FLUOPYRAM | phthalimides<br>SDHI | 1200<br>150 | 94.5 | b | 93.16 | 1.01 |
| Luna Privilege + Score 10 WG | FLUOPYRAM + DIFENOCONAZOLE | SDHI<br>DMI | 150<br>75 | 93.6 | b | 93.63 | 1.00 |
| Luna Privilege + Score 10 WG + Merpan 80 WDG | FLUOPYRAM + DIFENOCONAZOLE + CAPTAN | SDHI<br>DMI<br>phthalimides | 150<br>75<br>1200 | 100 | a | 98.46 | 1.02 |
| Luna Privilege Score 10 WG + Folpan 80 WDG | FLUOPYRAM + DIFENOCONAZOLE + FOLPET | SDHI<br>DMI<br>phthalimides | 150<br>75<br>1200 | 100 | a | 98.23 | 1.02 |
| Luna Privilege Alien | FLUOPYRAM + TEBUCONAZOLE | SDHI<br>DMI | 150<br>150 | 94 | b | 93.03 | 1.01 |
| Luna Privilege Alien Merpan 80 WDG | FLUOPYRAM + TEBUCONAZOLE + CAPTAN | SDHI<br>DMI<br>phthalimides | 150<br>150<br>1200 | 100 | a | 98.32 | 1.02 |
| Luna Privilege Alien Folpan 80 WDG | FLUOPYRAM + TEBUCONAZOLE + FOLPET | SDHI<br>DMI<br>phthalimides | 150<br>150<br>1200 | 100 | a | 98.07 | 1.02 |

Table 3.

| Product Name | AI | Fungicide family | Application rate (gAI/ha) | % control observed on leaves 19 DAYS after the application | Stat. | % control observed on leaves 26 DAYS after the application | Stat. | Var% (19/26 DAYS) |
|---|---|---|---|---|---|---|---|---|
| Merpan 80 WDG | CAPTAN | phthalimides | 1200 | 82.6 | ef | 75.9 | d | -8.1 |
| Folpan 80 WDG | FOLPET | phthalimides | 1200 | 80.6 | f | 72.3 | e | -10.3 |
| Score 10 WG | DIFENOCONAZOLE | DMI | 75 | 77.9 | g | 71.8 | e | -7.8 |
| Merpan 80 WDG + Score 10 WG | CAPTAN + DIFENO-CONAZOLE | phthalimides + DMI | 1200<br>75 | 93.8 | cd | 94.5 | b | 0.7 |
| Folpan 80 WDG + Score 10 WG | FOLPET + DIFENO-CONAZOLE | phthalimides + DMI | 1200<br>75 | 91.5 | d | 94.3 | b | 3.1 |
| Alien | TEBUCONAZOLE | DMI | 150 | 82.5 | ef | 77.4 | d | -6.2 |
| Merpan 80 WDG + Alien | CAPTAN + TEBUCO-NAZOLE | phthalimides<br>DMI | 1200<br>150 | 92.8 | cd | 89.6 | c | -3.4 |
| Folpan 80 WDG + Alien | FOLPET + TEBUCO-NAZOLE | phthalimides<br>DMI | 1200<br>150 | 93.4 | cd | 95.1 | b | 1.8 |
| Luna Pri-vilege | FLUOPYRAM | SDHI | 150 | 83.9 | e | 75.3 | d | -10.3 |
| Merpan 80 WDG + Luna Privilege | CAPTAN + FLUO-PYRAM | phthalimides<br>SDHI | 1200<br>150 | 99.3 | a | 98.6 | a | -0.7 |
| Folpan 80 WDG + Luna Privilege | FOLPET + FLUO-PYRAM | phthalimides<br>SDHI | 1200<br>150 | 96.8 | b | 94.5 | b | -2.4 |
| Luna Pri-vilege + Score 10 WG | FLUOPYRAM + DI-FENOCONAZOLE | SDHI<br>DMI | 150<br>75 | 95.4 | bc | 93.6 | b | -1.9 |
| Luna Pri-vilege + Score 10 WG + Merpan 80 WDG | FLUOPYRAM + DI-FENOCONAZOLE + CAPTAN | SDHI<br>DMI<br>phthalimides | 150<br>75<br>1200 | 100 | a | 100 | a | 0.0 |

(continued)

| Product Name | AI | Fungicide family | Application rate (gAI/ha) | % control observed on leaves 19 DAYS after the application | Stat. | % control observed on leaves 26 DAYS after the application | Stat. | Var% (19/26 DAYS) |
|---|---|---|---|---|---|---|---|---|
| Luna Privilege Score 10 WG + Folpan 80 WDG | FLUOPYRAM + DIFENOCONAZOLE + FOLPET | SDHI<br>DMI<br>phthalimides | 150<br>75<br>1200 | 100 | a | 100 | a | 0.0 |
| Luna Privilege Alien | FLUOPYRAM + TEBUCONAZOLE | SDHI<br><br>DMI | 150<br><br>150 | 93.3 | cd | 94 | b | 0.8 |
| Luna Privilege Alien Merpan 80 WDG | FLUOPYRAM + TEBUCONAZOLE + CAPTAN | SDHI<br><br>DMI<br>phthalimides | 150<br><br>150<br>1200 | 100 | a | 100 | a | 0.0 |
| Luna Privilege Alien Folpan 80 WDG | FLUOPYRAM + TEBUCONAZOLE + FOLPET | SDHI<br><br>DMI<br>phthalimides | 150<br><br>150<br>1200 | 100 | a | 100 | a | 0.0 |

Results show that the mixtures bring an added value in terms of controlling *Venturia inaequalis* in apple compared to the use of each fungicide alone:

1. There is a synergistic effect when a fungicide belonging to the phthalimides is mixed with one belonging to the DMI or SDHI and one belonging to the DMI and SDHI.

2. A phthalimide fungicide applied in mixture with one belonging to the DMI or SDHI group and one belonging to the DMI and SDHI provides overtime a longer control of the disease compared to the solo active ingredients applied at the same amount per hectare.

EXAMPLE 1b

An experiment was conducted in controlled conditions under a greenhouse to evaluate the fungicidal activity of the mixture comprising demethylation inhibitor fungicide (difenoconazole, tebuconazole), and phthalimides (captan, folpet) toward *Venturia inaequalis* in young apple plants, variety Golden Delicious. In addition, the activity phthalimide with two fungicides (A): demethylation inhibitor fungicide (difenoconazole, tebuconazole) and succinate dehydrogenase inhibitor fungicide (fluopyram) was also tested.

The experiment was conducted by applying compositions of fluopyram (Luna privilege®), difenoconazole (Score®25 EC), tebuconazole (Folicur WG®), and captan (Merpan 80 WDG®) or folpet (Folpan 80 WDG®) alone and together. The compositions were diluted with water. Water amount used was equivalent to 1500 L/ha. Application was performed in an automatic spraying cabin equipped with 2 flatfan AI11003VS nozzles.

*Treatments:*

Captan 900 gr (A.I.)/ha
Folpet 900 gr (A.I.)/ha

Difenoconazole 35 gr (A.I.)/ha
Difenoconazole 35 gr (A.I.)/ha + Captan 900 gr (A.I.)/ha
Difenoconazole 35 gr (A.I.)/ha + Folpet 900 gr (A.I.)/ha
Tcbuconazole 150 gr (A.I.)/ha
Tebuconazole 150 gr (A.I.)/ha + Captan 900 gr (A.I.)/ha
Tebuconazole 150 gr (A.I.)/ha + Folpet 900 gr (A.I.)/ha
fluopyram 150 gr (A.I.)/ha
fluopyram 150gr (A.I.)/ha + Captan 900 gr (A.I.)/ha
fluopyram 150 gr (A.I.)/ha + Folpet 900 gr (A.I.)/ha
fluopyram 150gr (A.I.)/ha + Difenoconazole 35 gr (A.I.)/ha
fluopyram 150gr (A.I.)/ha + Difenoconazole 35 gr (A.I.)/ha + Captan 900 gr (A.I.)/ha
fluopyram 150gr (A.I.)/ha + Difenoconazole 35 gr (A.I.)/ha + Folpet 900 gr (A.I.)/ha
fluopyram 150gr (A.I.)/ha + Tebuconazole 150 gr (A.I.)/ha
fluopyram 150gr (A.I.)/ha + Tebuconazole 150 gr (A.I.)/ha + Captan 900 gr (A.I.)/ha
fluopyram 150gr (A.I.)/ha + Tebuconazole 150 gr (A.I.)/ha + Folpet 900 gr (A.I.)/ha

To test for fungicidal control of *Venturia inaequalis,* the apple trees were sprayed with each of the above treatments. Each of the above treatments was applied once at one day before artificial inoculation with a suspension of $10^6$ cfu/ml of V. *inaequalis* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot are examined for symptoms of apple scab and incidence and severity of *Venturia inaequalis* on leaves was determined. Results, as shown in Tables 4 and 5, are presented as the percentage of control based on severity rating with a maximum of 100%.

Table 4.

| Product Name | AI | Fungicide family | Application rate (gAI/ha) | % control observed on leaves 26 DAYS after the application | Stat. | % control expected | Colby Ratio (o/e) |
|---|---|---|---|---|---|---|---|
| Merpan 80 W DG | CAPTAN | phthalimides | 900 | 77 | c | - | - |
| Folpan 80 WDG | FOLPET | phthalimides | 900 | 73.4 | d | - | - |
| Score 10 WG | DIFENOCONAZOLE | DMI | 35 | 73.1 | d | - | - |
| Merpan 80 WDG + Score 10 WG | CAPTAN + DIFENO-CONAZOLE | phthalimides + DMI | 900<br>35 | 94.7<br>- | b<br>- | 93.8<br>- | 1.01<br>- |
| Folpan 80 WDG + Score 10 WG | FOLPET + DIFENO-CONAZOLE | phthalimides + DMI | 900<br>35 | 94.5<br>- | b<br>- | 92.8<br>- | 1.02<br>- |
| Alien | TEBUCONAZOLE | DMI | 150 | 78.2 | c | - | - |
| Merpan 80 WDG + Alien | CAPTAN + TEBUCO-NAZOLE | phthalimides<br>DMI | 900<br>150 | 95.3<br>- | b<br>- | 95.0<br>- | 1.00<br>- |
| Folpan 80 WDG + Alien | FOLPET + TEBUCO-NAZOLE | phthalimides<br>DMI | 900<br>150 | 95.3<br>- | b<br>- | 94.2<br>- | 1.01<br>- |

(continued)

| Product Name | AI | Fungicide family | Application rate (gAI/ha) | % control observed on leaves 26 DAYS after the application | Stat. | % control expected | Colby Ratio (o/e) |
|---|---|---|---|---|---|---|---|
| Luna Privilege | FLUOPYRAM | SDHI | 150 | 76.2 | c | - | - |
| Merpan 80 WDG + Luna Privilege | CAPTAN + FLUOPYRAM | phthalimides<br>SDHI | 900<br>150 | 98.6<br>- | a<br>- | 94.5<br>- | 1.04<br>- |
| Folpan 80 WDG + Luna Privilege | FOLPET + FLUOPYRAM | phthalimides<br>SDHI | 900<br>150 | 94.8<br>- | b<br>- | 93.7<br>- | 1.02<br>- |
| Luna Privilege + Score 10 WG | FLUOPYRAM + DIFENOCONAZOLE | SDHI<br>DMI | 150<br>35 | 93.9<br>- | b<br>- | 93.6<br>- | 1.00<br>- |
| Luna Privilege + Score 10 WG + Merpan 80 WDG | FLUOPYRAM + DIFENOCONAZOLE + CAPTAN | SDHI<br>DMI<br>phthalimides | 150<br>35<br>900 | 100<br>-<br>- | a<br>-<br>- | 98.5<br>-<br>- | 1.01<br>-<br>- |
| Luna Privilege Score 10 WG + Folpan 80 WDG | FLUOPYRAM + DIFENOCONAZOLE + FOLPET | SDHI<br>DMI<br>phthalimides | 150<br>35<br>900 | 100<br>-<br>- | a<br>-<br>- | 98.3<br>-<br>- | 1.02<br>-<br>- |
| Luna Privilege Alien | FLUOPYRAM + TEBUCONAZOLE | SDHI<br>DMI | 150<br>150 | 94.2<br>- | b<br>- | 94.8 | 0.99<br>- |
| Luna Privilege Alien Merpan 80 WDG | FLUOPYRAM + TEBUCONAZOLE + CAPTAN | SDHI<br>DMI<br>phthalimides | 150<br>150<br>900 | 100<br>-<br>- | a<br>-<br>- | 98.8<br>-<br>- | 1.01<br>-<br>- |
| Luna Privilege Alien Folpan 80 WDG | FLUOPYRAM + TEBUCONAZOLE + FOLPET | SDHI<br>DMI<br>phthalimides | 150<br>150<br>900 | 100<br>-<br>- | a<br>-<br>- | 98.6<br>-<br>- | 1.01<br>-<br>- |

Table 5

| Product Name | AI | Fungicide family | Application rate (gAI/ha) | % control observed on leaves 19 DAYS after the application | Stat. | % control observed on leaves 26 DAYS after the application | Stat. | Var% (19/26 DAYS) |
|---|---|---|---|---|---|---|---|---|
| Merpan 80 WDG | CAPTAN | phthalimides | 900 | 83.9 | ef | 77 | c | -8.2 |
| Folpan 80 WDG | FOLPET | phthalimides | 900 | 82.1 | f | 73.4 | d | 10.6 |
| Score 10 WG | DIFENOCONAZOLE | phosphonates | 35 | 79.5 | g | 73.1 | d | -8.1 |
| Merpan 80 WDG + Score 10 WG | CAPTAN + DIFENO-CONAZOLE | phthalimides + DMI | 900<br>35 | 94.3<br>- | cd<br>- | 94.7<br>- | b<br>- | 0.4<br>- |
| Folpan 80 WDG + Score 10 WG | FOLPET + DIFENO-CONAZOLE | phthalimides + DMI | 900<br>35 | 92.1<br>- | d<br>- | 94.5<br>- | b<br>- | 2.6<br>- |
| Alien | TEBUCONAZOLE | DMI | 150 | 83.8 | ef | 78.2 | c | -6.7 |
| Merpan 80 WDG + Alien | CAPTAN + TEBUCO-NAZOLE | phthalimides<br>DMI | 900<br>150 | 93.4<br>- | cd<br>- | 95.3<br>- | b<br>- | 2.0<br>- |
| Folpan 80 WDG + Alien | FOLPET + TEBUCO-NAZOLE | phthalimides<br>DMI | 900<br>150 | 93.9<br>- | cd<br>- | 95.3<br>- | b<br>- | 1.5<br>- |
| Luna Pri-vilege | FLUOPYRAM | SDHI | 150 | 85.1 | c | 76.2 | c | -10.5 |
| Mcrpan 80 WDG + Luna Privilege | CAPTAN + FLUO-PYRAM | phthalimides<br>SDHI | 900<br>150 | 99.3 | a<br>- | 98.6 | a<br>- | -0.7<br>- |
| Folpan 80 WDG + Luna Privilege | FOLPET + FLUO-PYRAM | phthalimides<br>SDHI | 900<br>150 | 97<br>- | b<br>- | 1.02<br>- | 94.8<br>- | -2.3<br>- |
| Luna Pri-vilege + Score 10 WG | FLUOPYRAM + DI-FENOCONAZOLE | SDHI<br>DMI | 150<br>35 | 95.7<br>- | bc<br>- | 93.9<br>- | b<br>- | -1.9<br>- |
| Luna Pri-vilege + Score 10 WG + Merpan 80 WDG | FLUOPYRAM + DI-FENOCONAZOLE + CAPTAN | SDHI<br>DMI<br>phthalimides | 150<br>35<br>900 | 100<br>-<br>- | a<br>-<br>- | 100<br>-<br>- | a<br>-<br>- | 0.0<br>-<br>- |

(continued)

| Product Name | AI | Fungicide family | Application rate (gAI/ha) | % control observed on leaves 19 DAYS after the application | Stat. | % control observed on leaves 26 DAYS after the application | Stat. | Var% (19/26 DAYS) |
|---|---|---|---|---|---|---|---|---|
| Luna Privilege Score 10 WG + Folpan 80 WDG | FLUOPYRAM + DIFENOCONAZOLE + FOLPET | SDHI<br>DMI<br>phthalimides | 150<br>35<br>900 | 100<br>-<br>- | a<br>-<br>- | 100<br>-<br>- | a<br>-<br>- | 0.0<br>-<br>- |
| Luna Privilege Alien | FLUOPYRAM + TEBUCONAZOLE | SDHI<br>DMI | 150<br>150 | 93.9<br>- | cd<br>- | 94.2<br>- | b | 0.3<br>- |
| Luna Privilege Alien Merpan 80 WDG | FLUOPYRAM + TEBUCONAZOLE + CAPTAN | SDHI<br>DMI<br>phthalimides | 150<br>150<br>900 | 100<br>-<br>- | a<br>-<br>- | 100<br>-<br>- | a | 0.0<br>-<br>- |
| Luna Privilege Alien Folpan 80 WDG | FLUOPYRAM + TEBUCONAZOLE + FOLPET | SDHI<br>DMI<br>phthalimides | 150<br>150<br>900 | 100<br>-<br>- | a<br>-<br>- | 100<br>-<br>- | a<br>-<br>- | 0.0<br>-<br>- |

Results show that the mixtures bring an added value in terms of controlling *Venturia inaequalis* in apple compared to the use of each fungicide alone:

1. There is a synergistic effect when a fungicide belonging to the phthalimides is mixed with one belonging to the DMI or SDHI and one belonging to the DMI and SDHI.

2. A phthalimide fungicide applied in mixture with one belonging to the DMI or SDHI group and one belonging to the DMI and SDHI provides overtime a longer control of the disease compared to the solo active ingredients applied at the same amount per hectare.

EXAMPLE 2

An experiment was conducted in controlled conditions under a greenhouse to evaluate the fungicidal activity of the mixture comprising an anilinopyrimidines (cyprodinil), and phthalimides (captan, folpet) toward *Venturia inaequalis* in young apple plants, variety Golden Delicious. In addition, the activity phthalimide with two fungicides (A): anilinopyrimidines (cyprodinil) and succinate dehydrogenase inhibitor fungicide (fluxapyroxad) was also tested.

The experiment was conducted by applying compositions of fluxapyroxad, cyprodinil (Chorus®), and captan (Merpan 80 WDG®) or folpet (Folpan 80 WDG®) alone or together. The compositions were diluted with water. Water amount used was equivalent to 1500 L/ha. Application was performed in an automatic spraying cabin equipped with 2 flatfan AI11003VS nozzles.

*Treatments:*

Captan 1200 gr (A.I.)/ha
Folpet 1200 gr (A.I.)/ha
Cyprodinil 300 gr (A.I.)/ha

Cyprodinil 300 gr (A.I.)/ha + Captan 1200 gr (A.I.)/ha
Cyprodinil 300 gr (A.I.)/ha + Folpet 1200 gr (A.I.)/ha
Fluxapyroxad 90 gr (A.I.)/ha
Fluxapyroxad 90 gr (A.I.)/ha + Captan 1200 gr (A.I.)/ha
Fluxapyroxad 90 gr (A.I.)/ha + Folpet 1200 gr (A.I.)/ha
Fluxapyroxad 90 gr (A.I.)/ha + Cyprodinil 300 gr (A.I.)/ha
Fluxapyroxad 90 gr (A.I.)/ha + Cyprodinil 300 gr (A.I.)/ha + Captan 1200 gr (A.I.)/ha
Fluxapyroxad 90 gr (A.I.)/ha + Cyprodinil 300 gr (A.I.)/ha + Folpet 1200 gr (A.I.)/ha

To test for fungicidal control of *Venturia inaequalis,* the apple trees were sprayed with each of the above treatments. Each of the above treatments were applied once at 1 day before artificial inoculation with a suspension of $10^6$ cfu/ml of V. *inaequalis* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of apple scab and incidence and severity of *Venturia inaequalis* on leaves was determined. Results, as shown in Table 6, are presented as the percentage of control based on severity rating with a maximum of 100%.

Table 6.

| Product Name | AI | Fungicide family | Application rate (gAI/ha) | % control observed on leaves 26 DAYS after the application | Stat. | % control expected | Colby Ratio (o/c) |
|---|---|---|---|---|---|---|---|
| Merpan 80 WDG | CAPTAN | phthalimides | 1200 | 68.3 | h | | |
| Folpan 80 W DG | FOLPET | phthalimides | 1200 | 64.9 | i | | |
| Chorus | CYPRODINIL | anilino-pyrimidines | 300 | 62.7 | j | | |
| Merpan 80 WDG<br>Chorus | CAPTAN + CY-PRODINIL | phthalimides<br>anilino-pyri-midines | 1200<br>300 | 94.5 | e | 88.18 | 1.07 |
| Folpan 80 WDG<br>Chorus | FOLPET + CY-PRODINIL | phthalimides<br>anilino-pyri-midines | 1200<br>300 | 93.1 | f | 86.91 | 1.07 |
| Sercadis | FLUXAPIROXAD | SDHI | 90 | 75 | g | | |
| Merpan 80 WDG<br>Sercadis | CAPTAN + FLUX-APIROXAD | phthalimides | 1200<br>90 | 97.1 | b | 92.08 | 1.05 |
| Folpan 80 WDG<br>Sercadis | FOLPET + FLUX-APIROXAD | phthalimides<br>SDHI | 1200<br>90 | 96.7 | c | 91.23 | 1.06 |
| Sercadis<br>Chorus | FLUXAPIROXAD + CYPRODINIL | SDHI<br>anilino-pyri-midines | 90<br>300 | 95.9 | d | 90.68 | 1.06 |

(continued)

| Product Name | AI | Fungicide family | Application rate (gAI/ha) | % control observed on leaves 26 DAYS after the application | Stat. | % control expected | Colby Ratio (o/c) |
|---|---|---|---|---|---|---|---|
| Merpan 80 WDG<br>Sercadis<br>Chorus | CAPTAN + FLUXAPIROXAD + CYPRODINIL | phthalimides<br>SDHI<br>anilino-pyrimidines | 1200<br>90<br>300 | 100 | a | 97.04 | 1.03 |
| Folpan 80 WDG<br>Sercadis<br>Chorus | FOLPET + FLUXAPIROXAD + CYPRODINIL | phthalimides<br>SDHI<br>anilino-pyrimidines | 1200<br>90<br>300 | 100 | a | 96.73 | 1.03 |

Results show that the mixtures bring an added value in terms of controlling *Venturia inaequalis* in apple compared to the use of each fungicide alone:

1. There is a synergistic effect when a fungicide belonging to the phthalimides is mixed with one belonging to the anilino-pyrimidines or SDHI and one belonging to the anilino-pyrimidines and SDHI.

2. A phthalimide fungicide applied in mixture with one belonging to the anilino-pyrimidines or SDHI group and one belonging to the anilino-pyrimidines and SDHI provides overtime a longer control of the disease compared to the solo active ingredients applied at the same amount per hectare.

EXAMPLE 3

An experiment was conducted in controlled conditions under a greenhouse to evaluate the fungicidal activity of the mixture comprising phosphonates (potassium phosphonate, fosetyl-Al) and phthalimides (captan, folpet) toward *Venturiainaequalis* in young apple plants, variety Golden Delicious.

The experiment was conducted by applying compositions of potassium phosphonate (LBG-01F34, Century®SL). and captan (Merpan 80 WDG®) alone and together. The compositions were diluted with water. Water amount used was 0.3 L, equivalent to 1500 L/ha. Application was performed in an automatic spraying cabin equipped with 2 flatfan AI11003VS nozzles.

*Treatments:*

Captan 900, 1080 gr (A.I.)/ha
Potassium phosphonate 1650, 1998 gr (A.I.)/ha
Potassium phosphonate 1650 gr (A.I.)/ha + Captan 900 gr (A.I.)/ha
Potassium phosphonate 1998 gr (A.I.)/ha + Captan 1080 gr (A.I.)/ha

To test for fungicidal control of *Venturia inaequalis,* the apple trees were sprayed with each of the above treatments. Each of the above treatments wereapplied once at 1 day before artificial inoculation with a suspension of $10^6$ cfu/ml of V. *inaequalis* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of apple scab and incidence and severity of *Venturia inaequalis* on leaves was determined. Results, as shown in Tables 7 and 8 and Figure 1, are presented as the percentage of control based on severity rating with a maximum of 100%.

Table 7.

| Product Name | AI | Fungicide family | Application rate (gAI/ha) | % control observed on leaves 26 DAYS after the application | Stat. | % control expected | Colby Ratio (o/e) |
|---|---|---|---|---|---|---|---|
| Merpan 80 WDG | CAPTAN | phthalimides | 900 | 66.8 | c | | |
| Merpan 80 WDG | CAPTAN | phthalimides | 1080 | 86.2 | b | | |
| Century SL | POTASSIUM PHOSPHONATE | phosphonates | 1650 | 50.7 | e | | |
| Century SL | POTASSIUM PHOSPHONATE | phosphonates | 1998 | 57.2 | d | | |
| Merpan 80 WDG + Century SL | CAPTAN + POTASSIUM PHOSPHONATE | phthalimides + phosphonates | 900 + 1650 | 89.9 | b | 83.6 | 1.07 |
| Merpan 80 WDG + Century SL | CAPTAN + POTASSIUM PHOSPHONATE | phthalimides + phosphonates | 1080 + 1998 | 99.2 | a | 94.1 | 1.05 |

Table 8.

| Product Name | AI | Fungicide family | Application rate (gAI/ha) | % control observed on leaves 12 DAYS after the application | % control observed on leaves 19 DAYS after the application | Var% (12/19 DAYS) | % control observed on leaves 26 DAYS after the application | Var% (19/26 DAYS) |
|---|---|---|---|---|---|---|---|---|
| Merpan 80 WDG | CAPTAN | phthalimides | 900 | 78 | 77.2 | -1.0 | 66.8 | -13.5 |
| Merpan 80 WDG | CAPTAN | phthalimides | 1080 | 94.9 | 89.5 | -5.7 | 86.2 | -3.7 |
| Century SL | POTASSIUM PHOSPHONATE | phosphonates | 1650 | 47.7 | 56.5 | 18.4 | 50.7 | -10.3 |
| Century SL | POTASSIUM PHOSPHONATE | phosphonates | 1998 | 55.5 | 63.7 | 14.8 | 57.2 | -10.2 |
| Merpan 80 WDG + Century SL | CAPTAN + PO-TASSIUM PHOS-PHONATE | phthalimides + phosphonates | 1650+900 | 92.7 | 94.5 | 1.9 | 89.9 | -4.9 |
| Merpan 80 WDG + Century SL | CAPTAN + PO-TASSIUM PHOS-PHONATE | phthalimides + phosphonates | 1998+1080 | 100 | 99.7 | -0.3 | 99.2 | -0.5 |

Results show that the mixtures bring an added value in terms of controlling *Venturia inaequalis* in apple compared to the use of each fungicide alone:

1. There is a synergistic effect when a fungicide belonging to the phthalimides is mixed with one belonging to the phosphonates.

2. The mixture of a phthalimide fungicide (like captan) and a phosphonate (like potassium phosphonate) allow to achieve similar or higher level of disease control with a reduced amount per hectare of the two active ingredients. The application of the lower dose of captan (at 900 g/ha) in mixture with the lower dose of potassium phosphonate (at 1650 g/ha) provided statistically equivalent result compared to the full dose of captan applied solo and statistically better result compared to potassium phosphonate applied solo.

3. The mixture of a phthalimide fungicide and a phosphonate provides overtime a longer control of the disease compared to the two solo active ingredients applied at the same amount per hectare.

EXAMPLE 4

An experiment was conducted in controlled conditions under a greenhouse to evaluate the fungicidal activity of the mixture comprising demethylation inhibitor fungicide (difenoconazole, tebuconazole), and phthalimides (captan, folpet) toward *Alternaria solani* in tomato seedlings, variety Liguria. In addition, the activity of phthalimide with two fungicides (A); demethylation inhibitor fungicide (difenoconazole, tebuconazole) and succinate dehydrogenase inhibitor fungicide (fluxapyroxad) was also tested.

The experiment was conducted by applying compositions of fluxapyroxad, difenoconazole (Score®25 EC), tebuconazole (Folicur WG®), and captan (Merpan 80 WDG®) or folpet (Folpan 80 WDG®) alone or together. The compositions were diluted with water. Water amount used was equivalent to 600 L/ha. Application was performed in an automatic spraying cabin equipped with 2 flatfan AI11003VS nozzles.

*Treatments:*

Captan 900, 1200 gr (A.I.)/ha
Folpet 900, 1200 gr (A.I.)/ha
Difenoconazole 75 gr (A.I.)/ha
Difenoconazole 75 gr (A.I.)/ha + Captan 1200 gr (A.I.)/ha
Difenoconazole 75 gr (A.I.)/ha + Folpet 1200 gr (A.I.)/ha
Tebuconazole 150 gr (A.I.)/ha
Tebuconazole 150 gr (A.I.)/ha + Captan 1200 gr (A.I.)/ha
Tebuconazole 150 gr (A.I.)/ha + Folpet 1200 gr (A.I.)/ha
Fluxapyroxad 75 gr (A.I.)/ha
Fluxapyroxad 75 gr (A.I.)/ha + captan 1200 gr (A.I.)/ha
Fluxapyroxad 75 gr (A.I.)/ha + folpet 1200 gr (A.I.)/ha
Fluxapyroxad 75 gr (A.I.)/ha + Difenoconazole 75 gr (A.I.)/ha
Fluxapyroxad 75 gr (A.I.)/ha + Tebuconazole 150 gr (A.I.)/ha
Fluxapyroxad 75 gr (A.I.)/ha + Difenoconazole 75 gr (A.I.)/ha + Captan 1200 gr (A.I.)/ha
Fluxapyroxad 75 gr (A.I.)/ha + Difenoconazole 75 gr (A.I.)/ha + Folpet 1200 gr (A.I.)/ha
Fluxapyroxad 75 gr (A.I.)/ha + Tebuconazole 150 gr (A.I.)/ha + Captan 1200 gr (A.I.)/ha
Fluxapyroxad 75 gr (A.I.)/ha + Tebuconazole 150 gr (A.I.)/ha + Folpet 1200 gr (A.I.)/ha

To test for fungicidal control of A. *solani,* tomato plants were sprayed at $4^{th}$ leaves stage with each of the above treatments. Each of the above treatments were applied once at 1 day before artificial inoculation with a suspension of $10^5$ cfu/ml of A. *solani* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of A. *solani* and incidence and severity of the disease on leaves was determined. Results, as shown in Table 9, are presented as the percentage of control based on severity rating with a maximum of 100%.

Table 9.

| Product Name | AI | Fungicide family | Application rate (gAI/ha) | % control observed on leaves 20 DAYS after the application | Stat. | % control expected | Colby Rate (o/e) |
|---|---|---|---|---|---|---|---|
| Merpan 80 WDG | CAPTAN | phthalimides | 900 | 51.3 | n | | |
| Merpan 80 WDG | CAPTAN | phthalimides | 1200 | 64.3 | j | | |
| Folpan 80 WDG | FOLPET | phthalimides | 900 | 50.5 | o | | |
| Folpan 80 WDG | FOLPET | phthalimides | 1200 | 63.4 | k | | |
| Score 10 WG | DIFENCONAZOLE | DMI | 75 | 60.6 | l | | |
| Merpan 80 WDG + Score 10 WG | CAPTAN + DIFENCONAZOLE | phthalimides + DMI | 75+1200 | 94.5 | g | 80.8 | 1.17 |
| Merpan 80 WDG + Score 10 WG | FOLPET + DIFENCONAZOLE | phthalimides + DMI | 75+1200 | 93.5 | i | 80.5 | 1.16 |
| Folicur WG | TEBUCONAZOLE | DMI | 150 | 64.3 | j | | |
| Merpan 80 WDG + Folicur WG | CAPTAN + TEBUCONAZOLE | phthalimides + DMI | 150+1200 | 94.8 | f | 82.6 | 1.15 |
| Folpan 80 WDG + Folicur WG | FOLPET + TEBUCONAZOLE | phthalimides + DMI | 150+1200 | 94 | h | 82.3 | 1.14 |
| Sercadis | FLUXAPIROXAD | SDHI | 75 | 60.4 | m | | |
| Merpan 80 WDG + Serca-dis | CAPTAN + FLUXA-PIROXAD | phthalimides + SDHI | 75+1200 | 98.1 | b | 80.7 | 1.22 |
| Folpan 80 WDG + Serca-dis | FOLPET + FLUXA-PIROXAD | phthalimides + SDHI | 75+1200 | 97.4 | e | 80.4 | 1.21 |
| Sercadis + Score 10 WG | FLUXAPIROXAD + DIFENCONAZOLE | SDHI + DMI | 75+75 | 97.7 | d | 84.4 | 1.16 |
| Sercadis + Folicur WG | FLUXAPIROXAD + TEBUCONAZOLE | SDHI + DMI | 75+150 | 97.8 | c | 85.9 | 1.14 |

(continued)

| Product Name | AI | Fungicide family | Application rate (gAI/ha) | % control observed on leaves 20 DAYS after the application | Stat. | % control expected | Colby Rate (o/e) |
|---|---|---|---|---|---|---|---|
| Merpan 80 WDG + Sercadis + Score 10 WG | CAPTAN + FLUXAPIROXAD + DIFENCONAZOLE | phthalimides + SDHI + DMI | 75÷75+1200 | 100 | a | 94.4 | 1.06 |
| Folpan 80 WDG + Sercadis + Score 10 WG | FOLPET + FLUXAPIROXAD + DIFENCONAZOLE | phthalimides + SDHI + DMI | 75+75+1200 | 100 | a | 94.3 | 1.06 |
| Merpan 80 WDG + Sercadis + Folicur WG | CAPTAN + FLUXAPIROXAD + TEBUCONAZOLE | phthalimides + SDHI + DMI | 75+150+1200 | 100 | a | 95.0 | 1.05 |
| Folpan 80 WDG + Sercadis + Folicur WG | FOLPET + FLUXAPIROXAD + TEBUCONAZOLE | phthalimides + SDHI + DMI | 75+150+1200 | 100 | a | 94.8 | 1.05 |

Results show that the mixtures bring an added value in terms of controlling *Alternaria solani* in tomato compared to the use of each fungicide alone. A synergistic effect was observed when a phthalimide is combined in two or three ways mixtures with DMI and/or SDHI fungicides.

EXAMPLE 5

An experiment was conducted in controlled conditions under a greenhouse to evaluate the fungicidal activity of the mixture comprising a quinone outside inhibitors (azoxystrobin, pyraclostrobin), and phthalimides (captan, folpet) toward *Alternaria solani* in tomato plants variety Liguria. In addition, the activity of phthalimide with two fungicides (A): quinone outside inhibitors (azoxystrobin, pyraclostrobin) and succinate dehydrogenase inhibitor fungicide (fluxapyroxad) was also tested.

The experiment was conducted by applying compositions of fluxapyroxad, azoxystrobin (Ortiva®), and captan (Merpan 80 WDG®) or folpet (Folpan 80 WDG®) alone or together. The compositions were diluted with water. Water amount used was equivalent to 800 L/ha. Application was performed in an automatic spraying cabin equipped with 2 flatfan AII 1003VS nozzles.

*Treatments:*

Captan 900, 1200 gr (A.I.)/ha
Folpet 900, 1200 gr (A.I.)/ha
Azoxystrobin 120 gr (A.I.)/ha
Azoxystrobin 120 gr (A.I.)/ha + Captan 1200 gr (A.I.)/ha
Azoxystrobin 120 gr (A.I.)/ha + Folpet 1200 gr (A.I.)/ha

Fluxapyroxad 75 gr (A.I.)/ha
Fluxapyroxad 75 gr (A.I.)/ha + captan 1200 gr (A.I.)/ha
Fluxapyroxad 75 gr (A.I.)/ha + folpet 1200 gr (A.I.)/a
Fluxapyroxad 75 gr (A.I.)/ha + Azoxystrobin 120 gr (A.I.)/ha
Fluxapyroxad 75 gr (A.I.)/ha + Azoxystrobin 120 gr (A.I.)/ha + Captan 1200 gr (A.I.)/ha
Fluxapyroxad 75 gr (A.I.)/ha + Azoxystrobin 120 gr (A.I.)/ha + Folpet 1200 gr (A.I.)/ha

To test for fungicidal control of A. *solani* tomato plants were sprayed at $5^{th}$ leaves stage with each of the above treatments. Each of the above treatments were applied once at 1 day before artificial inoculation with a suspension of $10^6$ cfu/ml of A. *solani* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each, 25 leaves per plot were examined for symptoms of A. *solani* and incidence and severity of the disease on leaves. Results, as shown in Tables 10 and 11, are presented as the percentage of control based on severity rating with a maximum of 100%.

Table 10.

| Product Name | AI | Fungicide family | Application rate (gAI/ha) | % control observed on leaves 20 DAYS after the application | Stat. | % control expected | Colby Rate |
|---|---|---|---|---|---|---|---|
| Merpan 80 W DG | CAPTAN | phthalimides | 900 | 54.5 | k | | |
| Merpan 80 WDG | CAPTAN | phthalimides | 1200 | 65.9 | h | | |
| Folpan 80 WDG | FOLPET | phthalimides | 900 | 56.7 | j | | |
| Folpan 80 WDG | FOLPET | phthalimides | 1200 | 65.3 | i | | |
| Ortiva | AZOXYSTROBIN | QoI | 120 | 51.4 | l | | |
| Merpan 80 WDG + Ortiva | CAPTAN + AZOX-YSTROBIN | phthalimides + QoI | 1200 + 120 | 93.1 | e | 83.4 | 1.1 |
| Folpet 80 WDG + Ortiva | FOLPET + AZOX-YSTROBIN | phthalimides + QoI | 1200 + 120 | 92.9 | f | 83.1 | 1.1 |
| Sercadis | FLUXAPIROXAD | SDHI | 75 | 66.6 | g | | |
| Merpan 80 WDG + Serca-dis | CAPTAN + FLUX-APIROXAD | phthalimides + SDHI | 1200 + 75 | 94.4 | b | 88.6 | 1.1 |
| Folpan 80 WDG + Serca-dis | FOLPET + FLUX-APIROXAD | phthalimides + SDHI | 1200 + 75 | 94.2 | c | 88.4 | 1.1 |
| Sercadis + Ortiva | FLUXAPIROXAD + AZOXYSTROBIN | QoI + SDHI | 75 + 120 | 93.3 | d | 83.8 | 1.1 |

(continued)

| Product Name | AI | Fungicide family | Application rate (gAI/ha) | % control observed on leaves 20 DAYS after the application | Stat. | % control expected | Colby Rate |
|---|---|---|---|---|---|---|---|
| Merpan 80 WDG + Sercadis + Ortiva | CAPTAN + FLUXAPIROXAD + AZOXYSTROBIN | phthalimides + SDHI + QoI | 1200 + 75 + 120 | 100 | a | 94.5 | 1.1 |
| Folpan 80 WDG + Sercadis + Ortiva | FOLPET + FLUXAPIROXAD + AZOXYSTROBIN | phthalimides + SDHI + QoI | 1200 + 75 + 120 | 100 | a | 94.4 | 1.1 |

Table 11.

| Product Name | AI | Fungicide family | Application rate (gAI/ha) | % control observed on leaves 14 DAYS after the application | Stat. | % control observed on leaves 20 DAYS after the application | Stat. | Var% (14/20 DAYS) |
|---|---|---|---|---|---|---|---|---|
| Merpan 80 WDG | CAPTAN | phthalimides | 900 | 64.9 | h | 54.5 | k | -16.0 |
| Merpan 80 WDG | CAPTAN | phthalimides | 1200 | 76 | e | 65.9 | h | -13.3 |
| Folpan 80 WDG | FOLPET | phthalimides | 900 | 67.8 | g | 56.7 | j | -16.4 |
| Folpan 80 WDG | FOLPET | phthalimides | 1200 | 79.7 | d | 65.3 | i | -18.1 |
| Ortiva | AZOXYSTROBIN | QoI | 120 | 71 | f | 51.4 | l | -27.6 |
| Merpan 80 W DG + Ortiva | CAPTAN + AZOXYSTROBIN | phthalimides + QoI | 1200 + 120 | 87.3 | b | 93.1 | e | 6.6 |
| Folpet 80 WDG + Ortiva | FOLPET + AZOXYSTROBIN | phthalimides + QoI | 1200 + 120 | 82.9 | c | 92.9 | f | 12.1 |
| Sercadis | FLUXAPIROXAD | SDHI | 75 | 75.3 | e | 66.6 | g | -11.6 |
| Merpan 80 W DG + Sercadis | CAPTAN + FLUXAPIROXAD | phthalimides + SDHI | 1200 + 75 | 86.8 | b | 9.4.4 | b | 8.8 |
| Folpan 80 WDG + Sercadis | FOLPET + FLUXAPIROXAD | phthalimides + SDHI | 1200+ 75 | 85.9 | bc | 94.2 | c | 9.7 |
| Sercadis + Ortiva | FLUXAPIROXAD + AZOXYSTROBIN | QoI + SDHI | 75 + 120 | 84.3 | bc | 93.3 | d | 10.7 |

(continued)

| Product Name | AI | Fungicide family | Application rate (gAI/ha) | % control observed on leaves 14 DAYS after the application | Stat. | % control observed on leaves 20 DAYS after the application | Stat. | Var% (14/20 DAYS) |
|---|---|---|---|---|---|---|---|---|
| Merpan 80 W DG + Serca-dis + Or-tiva | CAPTAN + FLUX-APIROXAD + AZOXYSTROBIN | phthalimides + SDHI + QoI | 1200 + 75 + 120 | 100 | a | 100 | a | 0.0 |
| Folpan 80 WDG + Serca-dis + Or-tiva | FOLPET + FLUX-APIROXAD + AZOXYSTROBIN | phthalimides + SDHI + QoI | 1200 + 75 + 120 | 100 | a | 100 | a | 0.0 |

Results show that the mixtures bring an added value in terms of controlling *Alternaria* sp. in tomato compared to the use of each fungicide alone:

1. There is a synergistic effect when a fungicide belonging to the phthalimides is mixed with one belonging to the QoI or SDHI and one belonging to the QoI and SDHI.

2. A phthalimide fungicide applied in mixture with one belonging to the QoI or SDHI group and one belonging to the QoI and SDHI provides overtime a longer control of the disease compared to the solo active ingredients applied at the same amount per hectare.

EXAMPLE 6a

An experiment was conducted in controlled conditions under a greenhouse to evaluate the fungicidal activity of the mixture comprising (1) phthalimide fungicide and (2) a carboxylic acid amide (mandipropamid) or a quinone outside stigmatellin inhibitors (ametoctradin) or a benzamides (zoxamide, fluopicolide) or a cyanoacetamideoxime (cymoxanil) or a oxysterol binding protein inhibitor (oxathiapiprolin), toward *Phytophthora infestans* in tomato plants, variety Liguria.

Material:

Mandipropamid (Pergado SCR®), ametoctradin (Enervin SC®), zoxamide (Zoxium ® 240 SC). fluopicolide, cymoxanil (Curzate®), oxathiapiprolin (Zorvec zelavin®), and captan (Merpan 80 WDG®) or folpet (Folpan 80 WDG®).
The compositions were diluted with water. Water amount used was equivalent to 800 L/ha. Application was performed in an automatic spraying cabin equipped with 2 flatfan AI11003VS nozzles.

*Treatments:*

Captan 900, 1200 gr (A.I.)/ha

Folpet 900, 1200 gr (A.I.)/ha

Mandipropamide 150 gr (A.I.)/ha

Mandipropamide 150 gr (A.I.)/ha + captan 1200 gr (A.I.)/ha

Mandipropamide 150 gr (A.I.)/ha + folpet 1200 gr (A.I.)/ha

Ametoctradin 240 gr (A.I.)/ha

Ametoctradin 240 gr (A.I.)/ha + Captan 1200 gr (A.I.)/ha

Ametoctradin 240 gr (A.I.)/ha + Folpet 1200 gr (A.I.)/ha

Cymoxanil 150 gr (A.I.)/ha

Cymoxanil 150 gr (A.I.)/ha + Captan 1200 gr (A.I.)/ha

Cymoxanil 150 gr (A.I.)/ha + Folpet 1200 gr (A.I.)/ha

Zoxamide 180 gr (A.I.)/ha

Zoxamide 180 gr (A.I.)/ha + Captan 1200 gr (A.I.)/ha

Zoxamide 180 gr (A.I.)/ha + Folpet 1200 gr (A.I.)/ha

Oxathiapiprolin 15 gr (A.I.)/ha

Oxathiapiprolin 15 gr (A.I.)/ha + Captan 1200 gr (A.I.)/ha

Oxathiapiprolin 15 gr (A.I.)/ha + Folpet 1200 gr (A.I.)/ha

To test for fungicidal control of *Phytophthora infestans,* the tomato plants were sprayed with each of the above treatments. Each of the above treatments were applied once at 1 day before artificial inoculation with a suspension of $10^6$ cfu/ml of *P. infestans.* The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined and symptoms of *Phytophthora infestans* on plants parts was determined. The results are shown in Table 12.

Table 12.

| Product Name | AI | Fungicide | Application rate | % control observed on leaves 14 DAYS after the application | Stat. | % control expected | Colby Rate |
|---|---|---|---|---|---|---|---|
| Merpan 80 WDG | CAPTAN | phthalimides | 900 | 57.0 | o | | |
| Merpan 80 W DG | CAPTAN | phthalimides | 1200 | 72.4 | i | | |
| Folpan 80 W DG | FOLPET | phthalimides | 900 | 58.3 | n | | |
| Folpan 80 WDG | FOLPET | phthalimides | 1200 | 70.3 | j | | |
| Pergado SC | MANDIPROPAMIDE | CAA | 150 | 65.7 | m | | |
| Merpan 80 WDG + Pergado SC | CAPTAN + MANDIPROPAMIDE | phthalimides + CAA | 150+1200 | 95.7 | e | 90.5 | 1.06 |

(continued)

| Product Name | AI | Fungicide | Application rate | % control observed on leaves 14 DAYS after the application | Stat. | % control expected | Colby Rate |
|---|---|---|---|---|---|---|---|
| Folpan 80 WDG + Pergado SC | FOLPET + MANDIPROPAMIDE | phthalimides + CAA | 150+1200 | 95.2 | f | 89.8 | 1.06 |
| Enervin SC | AMETOCRADIN | QoSI | 240 | 68.0 | 1 | | |
| Merpan 80 WDG + Enervin SC | CAPTAN + AMETOCRADIN | phthalimides + QoSI | 240+1200 | 96.3 | d | 91.2 | 1.06 |
| Folpan 80 WDG + Enervin SC | FOLPET + AMETOCRADIN | phthalimides + QoSI | 240+1200 | 95.9 | e | 90.5 | 1.06 |
| Curzate | CYMOXANIL | cyanoacetamide-oxime | 150 | 68.5 | k | | |
| Merpan 80 WDG + Curzate | CAPTAN + CYMOXANIL + | phthalimides + cyanoacetamide-oxime | 150+1200 | 96.4 | d | 91.3 | 1.06 |
| Folpan 80 WDG + Curzate | FOLPET + CYMOXANIL | phthalimides + cyanoacetamide-oxime | 150+1200 | 96 0 | e | 90.6 | 1.06 |
| Zoxium 240 SC | ZOXAMIDE | benzamides | 180 | 74.4 | h | | |
| Merpan 80 WDG + Zoxium 240 SC | CAPTAN + ZOXAMIDE + | phthalimides + benzamides | 180+1200 | 98.0 | b | 92.9 | 1.05 |
| Folpan 80 WDG + Zoxium 240 SC | FOLPET + ZOXAMIDE | phthalimides + benzamides | 180+1200 | 97.7 | c | 92.4 | 1.06 |
| Zorvec Zelavin | OXATHIAPIPROLIN | OSBPI | 15 | 78.6 | g | | |
| Merpan 80 WDG + Zorvec Zelavin | CAPTAN + OXATHIAPIPROLIN | phthalimides + OSBPI | 15+1200 | 99.3 | a | 94.1 | 1.06 |

(continued)

| Product Name | AI | Fungicide | Application rate | % control observed on leaves 14 DAYS after the application | Stat. | % control expected | Colby Rate |
|---|---|---|---|---|---|---|---|
| Folpan 80 WDG + Zorvec Zelavin | FOLPET + OXATHIAPIPROLIN | phthalimides + OSBPI | 15+1200 | 99.4 | a | 93.6 | 1.06 |

Results show that the mixtures bring an added value in terms of controlling *Phytophthora infestans* in tomato compared to the use of each fungicide alone. A synergistic effect was observed when a fungicide belonging to the phthalimides is mixed with one belonging to CAA, or QoSI, or cyanoacetamide-oxime, or benzamides, or OSBPI.

EXAMPLE 6b

An experiment was conducted in controlled conditions under a greenhouse to evaluate the fungicidal activity of the mixture comprising (1) phthalimide fungicide and (2) a carboxylic acid amide (mandipropamid) or a quinone outside stigmatellin inhibitors (ametoctradin) or a benzamides (zoxamide, fluopicolide) or a cyanoacetamideoxime (cymoxanil) or a oxysterol binding protein inhibitor (oxathiapiprolin), toward *Alternaria solani* in potato plants, variety Agata.

Material:

Mandipropamid (Pergado SC®), ametoctradin (Enervin SC®), zoxamide (Zoxium® 240 SC), fluopicolide, cymoxanil (Curzate®), oxathiapiprolin (Zorvec zelavin®), and captan (Merpan 80 WDG®) or folpet (Folpan 80 WDG®).

The compositions were diluted with water. Water amount used was equivalent to 800 L/ha. Application was performed in an automatic spraying cabin equipped with 2 flatfan AI11003VS nozzles.

*Treatments:*

Captan 900, 1200 gr (A.I.)/ha

Folpet 900, 1200 gr (A.I.)/ha

Mandipropamide 150 gr (A.I.)/ha

Mandipropamide 150 gr (A.I.)/ha + captan 1200 gr (A.I.)/ha

Mandipropamide 150 gr (A.I.)/ha + folpet 1200 gr (A.I.)/ha

Ametoctradin 240 gr (A.I.)/ha

Ametoctradin 240 gr (A.I.)/ha + Captan 1200 gr (A.I.)/ha

Ametoctradin 240 gr (A.I.)/ha + Folpet 1200 gr (A.I.)/ha

Cymoxanil 150 gr (A.I.)/ha

Cymoxanil 150 gr (A.I.)/ha + Captan 1200 gr (A.I.)/ha

Cymoxanil 150 gr (A.I.)/ha + Folpet 1200 gr (A.I.)/ha

Zoxamide 180 gr (A.I.)/ha

Zoxamide 180 gr (A.I.)/ha + Captan 1200 gr (A.I.)/ha

Zoxamide 180 gr (A.I.)/ha + Folpet 1200 gr (A.I.)/ha

Oxathiapiprolin 15 gr (A.I.)/ha

Oxathiapiprolin 15 gr (A.I.)/ha + Captan 1200 gr (A.I.)/ha

Oxathiapiprolin 15 gr (A.I.)/ha + Folpet 1200 gr (A.I.)/ha

To test for fungicidal control *of Alternaria solani,* the potato plants were sprayed with each of the above treatments. Each of the above treatments was applied once at 1 day before artificial inoculation with a suspension of $10^6$ cfu/ml of A. *solani.* The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot are examined for symptoms of *Alternaria solani* and incidence and severity on leaves was determined. Results, as shown in Table 13, are presented as the percentage of control based on severity rating with a maximum of 100%.

Table 13.

| Product Name | AI | Fungicide | Applica tion rate | % control observe d on leaves 21 DAYS after the applicat ion | Sta t. | % contr ol expec ted | Col by Rat e |
|---|---|---|---|---|---|---|---|
| Merpan 80 WDG | CAPTAN | phthalimides | 900 | 54.1 | d | | |
| Merpan 80 WDG | CAPTAN | phthalimides | 1200 | 64.8 | c | | |
| Folpan 80 WDG | FOLPET | phthalimides | 900 | 53.2 | d | | |
| Folpan 80 WDG | FOLPET | phthalimides | 1200 | 63.6 | c | | |
| Pergado SC | MANDIPROP AMIDE | CAA | 150 | 62.5 | c | | |
| Merpan 80 WDG + Pergado SC | CAPTAN + MANDIPROP AMIDE | phthalimides + CAA | 150+12 00 | 92.6 | a | 86.8 | 1.07 |
| Folpan 80 WDG + Pergado SC | FOLPET + MANDIPROP AMIDE | phthalimides + CAA | 150+12 00 | 92.1 | a | 86.4 | 1.07 |
| Enervin SC | AMETOCRAD IN | QoSI | 240 | 62.0 | c | | |
| Merpan 80 WDG + Enervin SC | CAPTAN + AMETOCRAD IN | phthalimides + QoSI | 240+12 00 | 91.6 | a | 86.6 | 1.06 |

(continued)

| Product Name | AI | Fungicide | Applica tion rate | % control observe d on leaves 21 DAYS after the applicat ion | Sta t. | % contr ol expec ted | Col by Rat e |
|---|---|---|---|---|---|---|---|
| Folpan 80 WDG + Enervin SC | FOLPET + AMETOCRAD IN | phthalimides + QoSI | 240+12 00 | 91.9 | a | 86.2 | 1.07 |
| Curzate | CYMOXANIL | cyanoacetamide -oxime | 150 | 68.4 | b | | |
| Merpan 80 WDG + Curzate | CAPTAN + CYMOXANIL + | phthalimides + cyanoacetamide -oxime | 150+12 00 | 94.0 | a | 88.9 | 1.06 |
| Folpan 80 WDG + Curzate | FOLPET + CYMOXANIL | phthalimides + cyanoacetamide -oxime | 150+12 00 | 93.7 | a | 88.5 | 1.06 |
| Zoxium 240 SC | ZOXAMIDE | benzamides | 180 | 62.9 | c | | |
| Merpan 80 WDG + Zoxium 240 SC | CAPTAN + ZOXAMIDE + | phthalimides + benzamides | 180+12 00 | 92.8 | a | 86.9 | 1.07 |
| Folpan 80 WDG + Zoxium 240 SC | FOLPET + ZOXAMIDE | phthalimides + benzamides | 180+12 00 | 94.1 | a | 86.5 | 1.09 |
| Zorvec Zelavin | OXATHIAPIP ROLIN | OSBPI | 15 | 63.6 | c | | |
| Merpan 80 WDG + | CAPTAN + OXATHIAPIP ROLIN | phthalimides + OSBPI | 15+120 0 | 92.9 | a | 87.2 | 1.07 |
| Zorvec Zelavin | | | | | | | |
| Folpan 80 WDG + Zorvec Zelavin | FOLPET + OXATHIAPIP ROLIN | phthalimides + OSBPI | 15+120 0 | 92.4 | a | 86.8 | 1.07 |

Results show that the mixtures bring an added value in terms of controlling *Alternaria* sp. in potato compared to the use of each fungicide alone. A synergistic effect was observed when a fungicide belonging to the phthalimides is mixed with one belonging to CAA, or QoSI, or cyanoacetamide-oxime, or benzamides, or OSBPI.

EXAMPLE 7

An experiment was conducted in controlled conditions under a greenhouse to evaluate the fungicidal activity of the mixture comprising (1) phthalimide fungicide (folpet) and (2) succinate dehydrogenase inhibitor fungicide (fluxapyroxad) or a carboxylic acid amide (mandipropamide) or a quinone outside stigmatellin inhibitors (ametoctradin), or a benzamides (zoxamide, fluopicolide) or a cyanoacetamideoxime (cymoxanil) or a oxysterol binding protein inhibitor (oxathiapiprolin) toward *Plasmopara viticola* in grape plants, variety Barbera.

The experiments were conducted by applying compositions of fluxapyroxad mandipropamide (Pergado SC®),

ametoctradin (Enervin SC®), zoxamide (Zoxium ® 240 SC), fluopicolide, cymoxanil (Curzate®), oxathiapiprolin (Zorvec zelavin®), and folpet (Folpan 80 WDG®) alone or together. The compositions are diluted with water. Water amount used was equivalent to 800 L/ha. Application is performed in an automatic spraying cabin equipped with 2 flatfan AI11003VS nozzles.

*Treatments:*

Folpet 1000 gr (A.I.)/ha

Fluxapyroxad 45 gr (A.I.)/ha

Fluxapyroxad 45 gr (A.I.)/ha + folpet 1000 gr (A.I.)/ha

Mandipropamid 112.5 gr (A.I.)/ha

Mandipropamid 112.5 gr (A.I.)/ha + folpet 1000 gr (A.I.)/ha

Ametoctradin 225 gr (A.I.)/ha

Ametoctradin 225 gr (A.I.)/ha + Folpet 1000 gr (A.I.)/ha

Cymoxanil 126 gr (A.I.)/ha

Cymoxanil 126 gr (A.I.)/ha + Folpet 1000 gr (A.I.)/ha

Zoxamide 135 gr (A.I.)/ha

Zoxamide 135 gr (A.I.)/ha + Folpet 1000 gr (A.I.)/ha

fluopicolide 75 gr (A.I.)/ha

fluopicolide 75 gr (A.I.)/ha + Folpet 1000 gr (A.I.)/ha

oxathiapiprolin 22.5 gr (A.I.)/ha

oxathiapiprolin 22.5 gr (A.I.)/ha + Folpet 1000 gr (A.I.)/ha

To test for fungicidal control of *Plasmopara viticola,* the grape plants were sprayed with each of the above treatments. Each of the above treatments was applied once at 1 day before artificial inoculation with a suspension of $10^6$ cfu/ml of *P. viticola* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 50 leaves per plot were examined for symptoms of downy mildew and incidence and severity of *Plasmopara viticola* on leaves was determined. Results, as shown in Table 14, are presented as the percentage of control based on severity rating with a maximum of 100%.

Table 14.

| Product Name | AI | Fungicide family | Application rate | % control observe d on leaves 21 DAYS after the applicat ion | Stat. | % control expected | Col by Rat e |
|---|---|---|---|---|---|---|---|
| Folpan 80 WDG | FOLPET | phthalimides | 1000 | 60.3 | m | | |
| Sercadis | FLUXAPIROXAD | SDHI | 45 | 35.1 | n | | |
| Folpan 80 WDG + Sercadis | FOLPET + FLUXAPIROXAD | phthalimides + SDHI | 1000 + 45 | 79.4 | g | 74.2 | 1.07 |
| Pergado SC | MANDIPROPAMIDE | CAA | 112.5 | 74.1 | k | | |
| Folpan 80 WDG + Pergado SC | FOLPET + MANDIPROPAMIDE | phthalimides + CAA | 1000 + 112.5 | 9F5.1 | d | 89.7 | 1.06 |
| Enervin SC | AMETOCRADIN | QoSI | 225.0 | 78.8 | h | | |
| Folpan 80 WDG + Enervin SC | FOLPET + AMETOCRADIN | phthalimides + QoSI | 1000 + 225 | 98.2 | b | 91.6 | 1.07 |
| Curzate | CYMOXANIL | cyanoacetamideoxime | 126.0 | 73.6 | 1 | | |
| Folpan 80 WDG + Curzate | FOLPET + CYMOXANIL | phthalimides + cyanoacetamidcoxime | 1000 + 126 | 94.8 | e | 89.5 | 1.06 |
| Zoxium 240 SC | ZOXAMIDE | benzamides | 1 35.0 | 74.7 | i | | |
| Folpan 80 WDG + Zoxium 240 SC | FOLPET + ZOXAMIDE | phthalimides + benzamides | 1000 + 135 | 95.1 | d | 90.0 | 1.06 |
| Presidio | FLUOPICOLIDE | benzamides | 75.0 | 74.5 | J | | |
| Folpan 80 WDG + Presidio | FOLPET + FLUOPICOLIDE | phthalimides + benzamides | 1000 + 75 | 95.3 | c | 89.9 | 1.06 |
| Zorvec Zelavin | OXATHIAPIPROLIN | OSBPI | 22.5 | 86.7 | f | | |
| Folpan 80 WDG + Zorvec Zelavin | FOLPET + OXATHIAPIPROLIN | phthalimides + OSBPI | 1000 + 22.5 | 100.0 | a | 94.7 | 1.06 |

Results show that the mixtures bring an added value in terms of controlling *Plasmopara viticola,* in grape compared to the use of each fungicide alone. A synergistic effect was observed when a fungicide belonging to the phthalimides is mixed with one belonging to CAA, or QoSI, or cyanoacetamide-oxime, or benzamides, or OSBPI.

EXAMPLE 8

An experiment was conducted in controlled conditions under a greenhouse to evaluate the fungicidal activity of the mixture comprising (1) phthalimide fungicide (folpet) and (2) phosphonate (potassium phosphonate), toward *Plasmopara viticola* in young grape plants, variety Barbera.

The experiment was conducted by applying compositions of potassium phosphonate (LBG-01F34, Centurv®SL), and captan (Merpan 80 WDG®) alone and mixed together. The compositions were diluted with water. Water amount used was equivalent to 800 L/ha. Application was performed in an automatic spraying cabin equipped with flatfan AI11003VS nozzles.

*Treatments:*

Folpet 1050, 1200 gr (A.I.)/ha

Potassium phosphonate 1575, 1800 gr (A.I.)/ha

Potassium phosphonate 1575 gr (A.I.)/ha + Folpet 1050 gr (A.I.)/ha

Potassium phosphonate 1800 gr (A.I.)/ha + Folpet 1200 gr (A.I.)/ha

To test for fungicidal control of *Plasmopara viticola,* the grape trees are sprayed with each of the above treatments. Each of the above treatments are applied once at 1 day before artificial inoculation with a suspension of $10^6$ cfu/ml of *Plasmopara viticola.* The treatments are composed of 4 replicates. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 50 leaves per plot were examined for symptoms of *Plasmopara viticola* to determine incidence and severity on leaves. Results, as shown below in Table 15, are presented as the percentage of control based on severity rating with a maximum of 100%.

Table 15.

| Product Name | AI | Fungicide family | Application rate (gAI/ha) | % control observed on leaves 28 DAYS after the application | Stat. | % control expected | Colby Ratio (o/e) |
|---|---|---|---|---|---|---|---|
| Folpan 80 WDG | FOLPET | phthalimides | 1050 | 87.7 | b | | |
| Folpan 80 WDG | FOLPET | phthalimides | 1200 | 96.9 | a | | |
| Century SL | POTASSIUM PHOSPHONATE | phosphonates | 1575 | 31.7 | d | | |
| Century SL | POTASSIUM PHOSPHONATE | phosphonates | 1800 | 40.9 | c | | |
| Folpan 80 WDG + Century SL | FOLPET + POTASSIUM PHOSPHONATE | phthalimides + phosphonates | 1050 + 1575 | 98.6 | a | 91.6 | 1.08 |
| Folpan 80 WDG + Century SL | FOLPET + POTASSIUM PHOSPHONATE | phthalimides + phosphonates | 1200 + 1800 | 99.3 | a | 98.2 | 1.01 |

Results show that the mixtures bring an added value in terms of controlling *Plasmopara viticola* in grape compared to the use of each fungicide alone:

1. There is a synergistic effect when a fungicide belonging to the phthalimides is mixed with one belonging to the phosphonates.

2. The mixture of a phthalimide fungicide (like folpet) and a phosphonate (like potassium phosphonate) allow to achieve similar or higher level of disease control with a reduced amount per hectare of the two active ingredients. The application of the lower dose of folpet (at 1050 g/ha) in mixture with the lower dose of potassium phosphonate (at 1575 g/ha) provided statistically equivalent result compared to the full dose of folpet (at 1800 g/ha) applied solo and statistically better result compared to potassium phosphonate applied solo.

EXAMPLE 9

An experiment was conducted in controlled conditions under a greenhouse to evaluate the fungicidal activity of the mixture comprising (1) phthalimide fungicide (folpet, captan) and (2) demethylation inhibitor fungicide (difenoconazole) or a quinone outside inhibitors (azoxystrobin, pyraclostrobin), toward *Erysiphe necator* in grape plants, variety Barbera. In addition, the activity of phthalimide with two fungicides (A); demethylation inhibitor fungicide (difenoconazole) or a quinone outside inhibitors (azoxystrobin, pyraclostrobin and dehydrogenase inhibitor fungicide (fluxapyroxad) was also tested.

The experiment was conducted by applying compositions of fluxapyroxad, difenoconazole (Score® 10 WG), azoxystrobin (Ortiva®), pyraclostrobin (Cabrio ® EC) and folpet (Folpan 80 WDG®) alone or together. The compositions were diluted with water. Water amount used was equivalent to 800 L/ha. Application was performed in an automatic spraying cabin equipped with 2 flatfan AI11003VS nozzles.

*Treatments:*

Folpet 1000 gr (A.I.)/ha

Fluxapyroxad 45 gr (A.I.)/ha

Difenoconazole 37.5 gr (A.I.)/ha

Difenoconazole 37.5 gr (A.I.)/ha + folpet 1000 gr (A.I.)/ha

Azoxystrobin 90 gr (A.I.)/ha

Azoxystrobin 90 gr (A.I.)/ha + folpet 1000 gr (A.I.)/ha

Pyraclostrobin 75 gr (A.I.)/ha

Pyraclostrobin 75 gr (A.I.)/ha + folpet 1000 gr (A.I.)/ha

Fluxapyroxad 45 gr (A.I.)/ha + Difenoconazole 37.5 gr (A.I.)/ha

Fluxapyroxad 45 gr (A.I.)/ha + Difenoconazole 37.5 gr (A.I.)/ha + folpet 1000 gr (A.I.)/ha

Azoxystrobin 90 gr (A.I.)/ha + Fluxapyroxad 45 gr (A.I.)/ha

Azoxystrobin 90 gr (A.I.)/ha + Fluxapyroxad 45 gr (A.I.)/ha + folpct 1000 gr (A.I.)/ha

Azoxystrobin 90 gr (A.I.)/ha + Difenoconazole 37.5 gr (A.I.)/ha

Azoxystrobin 90 gr (A.I.)/ha + Difenoconazole 37.5 gr (A.I.)/ha + folpet 1000 gr (A.I.)/ha

Pyraclostrobin 75 gr (A.I.)/ha + Fluxapyroxad 45 gr (A.I.)/ha

Pyraclostrobin 75 gr (A.I.)/ha + Fluxapyroxad 45 gr (A.I.)/ha + folpet 1000 gr (A.I.)/ha

Pyraclostrobin 75 gr (A.I.)/ha + Difenoconazole 37.5 gr (A.I.)/ha

Pyraclostrobin 75 gr (A.I.)/ha + Difenoconazole 37.5 gr (A.I.)/ha + folpet 1000 gr (A.I.)/ha

To test for fungicidal control of *Erysiphe necator,* the grape plants were sprayed with each of the above treatments. Each of the above treatments was applied from 4 to 10 times according to the disease development, applications occurring 7-14 days after the previous treatment. The treatments were composed of 4 replicates.

Evaluations were performed for the whole duration of the experiment. At each time the incidence and the severity of *Erysiphe necator* on plants parts was determined. The results are shown in Table 16.

Table 16.

| Product Name | AI | Fungicide family | Applicati on rate | % control observe d on leaves 21 DAYS after the applicati on | Sta t. | % control expect ed | Colb y Rate |
|---|---|---|---|---|---|---|---|
| Folpan 80 WDG | FOLPET | phthalimi des | 1000 | 35.2 | q | | |
| Sercadis | FLUXAPIROXA D | SDHI | 45 | 68.7 | o | | |
| Score 10 WG | DIFENCONAZO LE | DMI | 37.5 | 68.9 | n | | |

(continued)

| Product Name | AI | Fungicide family | Applicati on rate | % control observe d on leaves 21 DAYS after the applicati on | Sta t. | % control expect ed | Colb y Rate |
|---|---|---|---|---|---|---|---|
| Folpan 80 WDG + Score 10 WG | FOLPET + DIFENCONAZO LE | phthalimi des + DMI | 1000 + 37.5 | 82.4 | k | 79.8 | 1.03 |
| Ortiva | AZOXYSTROBI N | QoI | 90 | 65.9 | p | | |
| Folpan 80 WDG + Ortiva | FOLPET + AZOX-YSTROBI N | phthalimi des + QoI | 1000 + 90 | 80.2 | 1 | 77.9 | 1.03 |
| Cabrio EC | PYRACLOSTR OBIN | QoI | 75 | 70.7 | m | | |
| Folpan 80 WDG | FOLPET + PYRACLOSTR OBIN | phthalimi des + QoI | 1000 + 75 | 83.7 | J | 81.0 | 1.03 |
| Sercadis + Score 10 WG | FLUXAPIROXA D + DIFENCONAZO LE | SDHI + DMI | 45 + 37.5 | 94.1 | g | 90.3 | 1.04 |
| Folpan 80 WDG + Sercadis + Score 10 WG | FOLPET + FLUXA-PIROXA D + DI-FENCONAZO LE | phthalimi des + SDHI + DMI + | 1000 + 45 + 37.5 | 98.9 | b | 93.7 | 1.06 |
| Ortiva + Sercadis | AZOXYSTROBI N + FLUXAPIROXA D | QoI + SDHI | 90 + 45 | 93.2 | i | 89.3 | 1.04 |
| Folpan 80 WDG + Ser-cadis + Ortiva | FOLPET + FLUXA-PIROXA D + AZOXYSTROBI N | phthalimi des + SDHI + QoI + | 1000 + 45 + 90 | 98.9 | c | 93.1 | 1.06 |
| Ortiva + Score 10 WG | AZOXYSTROBI N+ DIFENCONAZO LE | QoI + DMI | 90 + 37.5 | 93.5 | h | 89.4 | 1.05 |
| Folpan 80 WDG + Ortiva + Score 10 WG | FOLPET + AZOX-YSTROBI N+ DI-FENCONAZO LE | phthalimi des + QoI + DMI + | 1000 + 90 + 37.5 | 98.8 | d | 93.1 | 1.06 |
| Cabro EC + Sercadis | PYRACLOSTR OBIN + FLUXAPIROXA D | QoI + SDHI | 75 + 45 | 94.7 | f | 90.8 | 1.04 |
| Folpan 80 WDG + Ser-cadis + Cabrio EC | FOLPET + FLUXA-PIROXA D+ PYR-ACLOSTR OBIN | phthalimi des + SDHI + QoI + | 1000 + 45 + 75 | 100 | a | 94.1 | 1.06 |
| Cabrio EC + Score 10 WG | PYRACLOSTR OBIN + DIFENCONAZO LE | QoI + DMI | 75 + 37.5 | 96.7 | c | 90.9 | 1.06 |
| Folpan 80 WDG + Cabrio EC + Score 10 WG | FOLPET + PYRACLOSTR OBIN + DIFENCONAZO LE | phthalimi des + QoI + DMI | 1000 + 75 + 37.5 | 100 | a | 94.1 | 1.06 |

Results show that the mixtures bring an added value in terms of controlling *Erysiphe necator,* in grape compared to the use of each fungicide alone. A synergistic effect was observed when a fungicide belonging to the phthalimides is mixed with one belonging to QoI, or DMI or in 3-way mixtures with a fungicide belonging to QoI and SDHI, or QoI and DMI. or DMI and SDHI.

EXAMPLE 10

An experiment was conducted in controlled conditions under a greenhouse to evaluate the fungicidal activity of the mixture comprising (1) phthalimide fungicide (folpet, captan) and (2) demethylation inhibitor fungicide (difenoconazole) or a quinone outside inhibitor (azoxystrobin, pyraclostrobin), towards *Sphaerotheca fuliginea* on melon plants, hybrid Pepito Fl. In addition, the activity of phthalimide with two fungicides (A): demethylation inhibitor fungicide (difenoconazole) and/or a quinone outside inhibitor (azoxystrobin, pyraclostrobin) and/or succinate dehydrogenase inhibitor fungicide (fluxapyroxad) was also tested.
The experiment was conducted by applying compositions of fluxapyroxad (Sercadis®). difenoconazole (Score®10 WG), azoxystrobin (Ortiva®), pyraclostrobin (Insigna® WG) and folpet (Folpan 80 WDG®) alone or together. The compositions were diluted with water. Water amount used was equivalent to 600 L/ha. Application was performed in an automatic spraying cabin equipped with 2 flatfan AI11003VS nozzles.

*Treatments:*

Folpet 900, 1200 gr (A.I.)/ha

Difenoconazole 50 gr (A.I.)/ha

Difenoconazole 50 gr (A.I.)/ha + folpet 1200 gr (A.I.)/ha

Azoxystrobin 250 gr (A.I.)/ha

Azoxystrobin 250 gr (A.I.)/ha + folpet 1200 gr (A.I.)/ha

Pyraclostrobin 100 gr (A.I.)/ha

Pyraclostrobin 100 gr (A.I.)/ha + folpet 1200 gr (A.I.)/ha

Fluxapyroxad 75 gr (A.I.)/ha

Fluxapyroxad 75 gr (A.I.)/ha + folpet 1200 gr (A.I.)/haFluxapyroxad 75 gr (A.I.)/ha + Difenoconazole 50 gr (A.I.)/ha

Fluxapyroxad 75 gr (A.I.)/ha + Difenoconazole 50 gr (A.I.)/ha + folpet 1200 gr (A.I.)/ha

Azoxystrobin 250 gr (A.I.)/ha + Fluxapyroxad 75 gr (A.I.)/ha

Azoxystrobin 250 gr (A.I.)/ha + Fluxapyroxad 75 gr (A.I.)/ha + folpet 1200 gr (A.I.)/ha

Azoxystrobin 250 gr (A.I.)/ha + Difenoconazole 50 gr (A.I.)/ha

Azoxystrobin 250 gr (A.I.)/ha + Difenoconazole 50 gr (A.I.)/ha + folpet 1200 gr (A.I.)/ha

Pyraclostrobin 100 gr (A.I.)/ha + Fluxapyroxad 75 gr (A.I.)/ha

Pyraclostrobin 100 gr (A.I.)/ha + Fluxapyroxad 75 gr (A.I.)/ha + folpet 1200 gr (A.I.)/ha

Pyraclostrobin 100 gr (A.I.)/ha + Difenoconazole 50 gr (A.I.)/ha

Pyraclostrobin 100 gr (A.I.)/ha + Difenoconazole 50 gr (A.I.)/ha + folpet 1200 gr (A.I.)/ha

To test for fungicidal control of *Sphaerotheca fuliginea,* the melon plants were sprayed with each of the above treatments. Each of the above treatments was applied once at 1 day before artificial inoculation with a suspension of $10^5$ cfu/ml of *Sphaerotheca fuliginea* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not

significantly different.

Evaluations were performed for the whole duration of the experiment. At each time, 15 leaves per plot were examined for symptoms of *Sphaerotheca fuliginea* and incidence and severity on plants parts was determined. Results, as shown in Table 17, are presented as the percentage of control based on severity rating with a maximum of 100%.

Table 17.

| Product Name | AI | Fungicide family | Application rate | % control observed on leaves 21 DAYS after the application | Stat | % contro l expected | Colby Rate |
|---|---|---|---|---|---|---|---|
| Folpan 80 WDG | FOLPET | phthalimi des | 900 | 45.3 | o | | |
| Folpan 80 WDG | FOLPET | phthalimi des | 1200 | 54.0 | 1 | | |
| Score 10 WG | DIFENCONAZ OLE | DMI | 50 | 49.4 | n | | |
| Folpan 80 WDG + Score 10 WG | FOLPET + DIFENCONAZ OLE | phthalimi des + DMI | 1200 + 50 | 90.4 | i | 76.7 | 1.18 |
| Ortiva | AZOXYSTROB IN | QoI | 250 | 51.0 | m | | |
| Folpan 80 WDG + Ortiva | FOLPET + AZOXYSTROB IN | phthalimi des + QoI | 1200+250 | 94.9 | e | 77.5 | 1.23 |
| Insigna WG | PYRACLOSTR OBIN | QoI | 100 | 60.1 | k | | |
| Folpan 80 WDG + In-signa WG | FOLPET + PYR-ACLOSTR OBIN | phthalimi des + QoI | 1200+100 | 92.2 | g | 81.6 | 1.13 |
| Sercadis | FLUXAPIROX AD | SDHI | 75 | 72.5 | j | | |
| Folpan 80 WDG + Sercadis | FOLPET + FLUXAPIROX AD | phthalimi des + SDHI | 1200 + 75 | 96.5 | d | 87.4 | 1.10 |
| Scrcadis + Score 10 WG | FLUXAPIROX AD + DIFENCONAZ OLE | SDHI + DMI | 75+50 | 97.5 | c | 86.1 | 1.13 |
| Folpan 80 WDG + Sercadis + Score 10 WG | FOLPET + FLUXAPIROX AD + DIFENCONAZ OLE | phthalimi des + SDHI + DMI | 1200+75+ 50 | 100.0 | a | 93.6 | 1.07 |
| Ortiva + Ser-cadis | AZOXYSTROB IN + FLUXAPIR-OX AD | QoI + SDHI | 250+75 | 98.9 | b | 86.5 | 1.14 |
| Folpan 80 WDG + Ser-cadis + Orti-va | FOLPET + FLUXAPIROX AD + AZOXY-STROB IN | phthalimi des + SDHI + QoI | 1200 + 75 + 250 | 100.0 | a | 93.8 | 1.07 |

(continued)

| Product Name | AI | Fungicide family | Application rate | % control observed on leaves 21 DAYS after the application | Stat | % contro l expected | Colby Rate |
|---|---|---|---|---|---|---|---|
| Ortiva + Score 10 WG | AZOXYSTROB IN + DIFENCONAZ OLE | QoI + DMI | 250+50 | 92.9 | f | 75.2 | 1.24 |
| Folpan 80 WDG + Ortiva + Score 10 WG | FOLPET + AZOXYSTROB IN + DIFENCONAZ OLE | phthalimi des + QoI + DMI | 1200+250 +50 | 99.6 | a | 88.6 | 1.12 |
| Insigna WG + Sercadis | PYRACLOSTR OBIN + FLUXA-PIROX AD | QoI + SDHI | 100+75 | 97.8 | c | 89.0 | 1.10 |
| Folpan 80 WDG + In-signa WG + Sercadis | FOLPET + PYR-ACLOSTR OBIN + FLUXAPIROX AD | phthalimi des + SDHI + QoI | 1200+100 +75 | 100.0 | a | 95.0 | 1.05 |
| Insigna WG + Score 10 WG | PYRACLOSTR OBIN + DIFENCONAZ OLE | QoI + DMI | 100+50 | 91.4 | h | 79.8 | 1.15 |
| Folpan 80 WDG + Insigna WG + Score 10 WG | FOLPET + PYRACLOSTR OBIN + DIFENCONAZ OLE | phthalimi des + QoI + DMI | 1200+100 +50 | 98.3 | bc | 90.7 | 1.08 |

Results show that the mixtures bring an added value in terms of controlling *Sphaerotheca fuliginea,* in melon compared to the use of each fungicide alone. A synergistic effect was observed when a fungicide belonging to the phthalimides is mixed with one belonging to QoI, or DMI, or SDHI, or in 3-way mixtures with a fungicide belonging to QoI and SDHI, or QoI and DMI, or DMI and SDHI.

EXAMPLE 11

An experiment was conducted in controlled conditions under a greenhouse to evaluate the fungicidal activity of the mixture comprising (1) phthalimide fungicide (folpet, captan) and (2) a succinate dehydrogenase inhibitor fungicide (isofetamid) or a quinone outside inhibitors (pyraclostrobin), or a ketoreductase inhibitor (fenhexamid) or a anilinopyrimidine (cyprodinil) or a plant extract (extract from Melaleuca altemifolia) or a phenylpyrrole (Fludioxonil) or a dinitroanilines (fluazinam), toward *Botrytis cinerea* in strawberry, variety Brilla.

The experiment was conducted by applying compositions of isofetamid (Kenja®), pyraclostrobin (Cabrio® EC), fenhexamid (Teldor® plus), cyprodinil (Chorus ®), extract from Melaleuca altemifolia (Timorex Gold®), fludioxonil (Geoxe®), fluazinam (Banjo®), and folpet (Folpan 80 WDG®) alone or together. The compositions were diluted with water. Water amount used was equivalent to 500 L/ha. Application was performed in an automatic spraying cabin equipped with 2 flatfan AI11003VS nozzles.

*Treatments:*

Folpet 900, 1200 gr (A.I.)/ha

Isofetamid 480 gr (A.I.)/ha

Isofetamid 480 gr (A.I.)/ha + folpet 900 gr (A.I.)/ha

Isofetamid 480 gr (A.I.)/ha + folpet 1200 gr (A.I.)/ha

Pyraclostrobin 75 gr (A.I.)/ha

Pyraclostrobin 75 gr (A.I.)/ha + folpet 900 gr (A.I.)/ha

Pyraclostrobin 75 gr (A.I.)/ha + folpet 1200 gr (A.I.)/ha

Fenhexamid 500 gr (A.I.)/ha

Fenhexamid 500 gr (A.I.)/ha + folpet 900 gr (A.I.)/ha

Fenhexamid 500 gr (A.I.)/ha + folpet 1200 gr (A.I.)/ha

Cyprodinil 150 gr (A.I.)/ha

Cyprodinil 150 gr (A.I.)/ha + folpet 900 gr (A.I.)/ha

Cyprodinil 150 gr (A.I.)/ha + folpet 1200 gr (A.I.)/ha

Extract from Melaleuca altemifolia 330 gr (A.I.)/ha

Extract from Melaleuca alternifolia 330 gr (A.I.)/ha + folpet 900 gr (A.I.)/ha

Extract from Melaleuca alternifolia 330 gr (A.I.)/ha + folpet 1200 gr (A.I.)/ha

fludioxonil 200 gr (A.I.)/ha

fludioxonil 200 gr (A.I.)/ha + folpet 900 gr (A.I.)/ha

fludioxonil 200 gr (A.I.)/ha + folpet 1200 gr (A.I.)/ha

fluazinam 500 gr (A.I.)/ha

fluazinam 500 gr (A.I.)/ha + folpet 900 gr (A.I.)/ha

fluazinam 500 gr (A.I.)/ha + folpet 1200 gr (A.I.)/ha

To test for fungicidal control of *Botrytis cinerea,* the strawberry plants were sprayed with each of the above treatments. Each of the above treatments was applied once at 1 day before artificial inoculation with a suspension of $10^5$ cfu/ml of *Botrytis cinerea* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 15 fruits per plot were examined for symptoms of *Botrytis cinerea* and incidence on fruits was determined. Results, as shown in Table 18, are presented as the percentage of control based on incidence rating with a maximum of 100%.

Table 18.

| Produc t Name | AI | Fungicide family | Applicati on rate | % control observed on fruits 21 DAYS after the applicati on | Stat . | % control expecte d | Colb y Rate |
|---|---|---|---|---|---|---|---|
| Folpan 80 WDG | FOLPET | phthalimid es | 900 | 33.3 | h | | |

(continued)

| Produc t Name | AI | Fungicide family | Applicati on rate | % control observed on fruits 21 DAYS after the applicati on | Stat . | % control expecte d | Colb y Rate |
|---|---|---|---|---|---|---|---|
| Folpan 80 WDG | FOLPET | phthalimid es | 1200 | 40.8 | g | | |
| Kenja | ISOFETAMID | SDHI | 400 | 74.0 | c | | |
| Folpan 80 WDG + Kenja | FOLPET + ISOFETAMID | phthalimid es + SDHI | 900 + 400 | 88.8 | a | 82.7 | 1.07 |
| Folpan 80 WDG + Kenja | FOLPET + ISOFETAMID | phthalimid es + SDHI | 1200 + 400 | 89.1 | a | 84.6 | 1.05 |
| Cabrio EC | PYRACLOSTRO BIN | QoI | 75 | 66.7 | e | | |
| Folpan 80 WDG + Cabrio EC | FOLPET + PYRACLOSTRO BIN | phthalimid es + QoI | 900 + 75 | 83.4 | b | 77.8 | 1.07 |
| Folpan 80 WDG + Cabrio EC | FOLPET + PYRACLOSTRO BIN | phthalimid es + QoI | 1200 + 75 | 83.4 | b | 80.3 | 1.04 |
| Teldor plus | FENHEXAMID | KRI | 500 | 74.2 | c | | |
| Folpan 80 WDG + Teldor plus | FOLPET + FENHEXAMID | phthalimid es + KRI | 900 + 500 | 89.1 | a | 82.8 | 1.08 |
| Folpan 80 WDG + Teldor plus | FOLPET + FENHEXAMID | phthalimid es + KRI | 1200 + 500 | 92.5 | a | 84.7 | 1.09 |
| Chorus | CYPRODNIL | anilinopyrimidine s | 150 | 51.8 | f | | |
| Folpan 80 WDG + Chorus | FOLPET + CYPRODNIL | phthalimid es + anilinopyrimidine s | 900 + 150 | 74.2 | c | 67.9 | 1.09 |
| Folpan 80 WDG + Chorus | FOLPET + CYPRODNIL | phthalimid es + anilinopyrimidine s | 1200 + 150 | 79.7 | b | 71.5 | 1.12 |
| Timore x gold | EXTRACT MELA-LEUCA ALTERNI-FOLIA | plant extract | 330 | 36.9 | gh | | |
| Folpan 80 WDG + Timore x gold | FOLPET + EX-TRACT MELA-LEUCA ALTERNI-FOLIA | phthalimid es + plant extract | 900 + 330 | 64.8 | e | 57.9 | 1.12 |

(continued)

| Produc t Name | AI | Fungicide family | Applicati on rate | % control observed on fruits 21 DAYS after the applicati on | Stat . | % control expecte d | Colb y Rate |
|---|---|---|---|---|---|---|---|
| Folpan 80 WDG + Timore x gold | FOLPET + EX-TRACT MELA-LEUCA ALTERNI-FOLIA | phthalimid es + plant extract | 1200 + 330 | 68.5 | dc | 62.6 | 1.09 |
| Geoxe | FLUDIOXONIL | PP | 150 | 40.8 | g | | |
| Folpan 80 WDG + Geoxe | FOLPET + FLUDIOXONIL | phthalimid es + PP | 900 + 150 | 64.8 | e | 60.5 | 1.07 |
| Folpan 80 WDG + Geoxe | FOLPET + FLUDIOXONIL | phthalimid es + PP | 1200 + 150 | 72.2 | cd | 65.0 | 1.11 |
| Banjo | FLUAZINAM | 2,6-dinitro-anilines | 500 | 68.5 | de | | |
| Folpan 80 WDG + Banjo | FOLPET + FLUAZINAM | phthalimid es + 2,6-dinitro-anilines | 900 + 500 | 83.4 | b | 79.0 | 1.06 |
| Folpan 80 WDG + Banjo | FOLPET + FLUAZINAM | phthalimid es + 2,6-dinitro-anilines | 1200 + 500 | 90.9 | a | 81.4 | 1.12 |

Results show that the mixtures bring an added value in terms of controlling *Botrytis cinerea,* in strawberry compared to the use of each fungicide alone. A synergistic effect was observed when a fungicide belonging to the phthalimides is mixed with one belonging to QoI, or SDHI, or KRI, or anilino-pyrimidines, or plant extract, or PP, or 2,6-dinitro-anilines.

EXAMPLE 12

Test 12 A

The objective is to assess the biological effectiveness of a two-way mixture of 5-fluoro-4-imino-3-methyl-1-tosyl-3,4-dihydropyrimidin-2(1H)-one (described in U.S. Patent No. 8,263,603. Methods of preparation of 5-fluoro-4-imino-3-methyl-1-tosyl-3,4-dihydropyrimidin-2(1H)-one were described in U.S. Patent No. 9,850,215 and U.S. Patent No. 9,840,476) (250 OD) and Folpet (FOLPAN® 500 SC at 500 g a.i./L.) towards *Ramularia collo-cygni* in barley.

Winter barley plants cv. California at the BBCH 12 growth stage are treated with a hand sprayer at 2 bars calibrated to deliver the equivalent of 200 L/ha. Three replicates (pots) of 6 barley plants each are used for each condition to be tested. Each product is tested at the following rates in Table 19.

Table 19.

| Treatment | Rate (ai g/ha) |
|---|---|
| 5-fluoro-4-imino-3-methyl-1-tosyl-3,4-dihydropyrimidin-2(1*H*)-one | 5 g a.i./ha |
| Folpet | 450 - 550 and 750 g a.i./ha |
| Folpet + 5-fluoro-4-imino-3-methyl-1-tosyl-3,4-dihydropyrimidin-2(1*H*)-one | 450 + 5, 550 + 5 and 750 + 5 g a.i./ha |

After treatment barley plants are left to dry at room temperature for 1 hour and then are incubated in a climatic chamber: Temperature of 24°C day/18°C night - Photoperiod of 16 h light/8 h dark and a Relative Humidity of 65%.

Fragments of the first leaf are cut and transferred in Petri dish containing adapted water agar (6 leaf fragments per Petri dish). Fragments are inoculated with a calibrated spore suspension of *Ramularia collo-cygni.*

After inoculation, Petri dishes are incubated in a climatic chamber: Temperature of 20°C day/17°C night - Photoperiod of 16 h light/8 h dark and controlled Relative Humidity.

Disease assessments are carried out 21 days post inoculation (dpi) and 28 dpi by measuring the length of the necrosis of the leaf fragment. The intensity of infection is then determined in percent of the total length of the leaf fragment.

The efficacy is calculated based on the Area Under the Disease Progress Curve (AUDPC) which is a quantitative measure of disease intensity over time. The most commonly used method for estimating the AUDPC, the trapezoidal method, is performed for each time interval by multiplying the average disease intensity between each pair of adjacent time points by the corresponding time interval. The observed efficacies (OE) of fungicides are determined from the AUDPC values and are expressed in percent of the untreated control.

Test 12 B

| Table 20. | |
|---|---|
| Treatment | Rate (ai g/ha) |
| 5-fluoro-4-imino-3-methyl-1-tosyl-3,4-dihydropyrimidin-2(1*H*)-one | 75 g a.i./ha, 100 g a.i./ha |
| Folpet | 750 g a.i./ha |
| 5-fluoro-4-imino-3-methyl-1-tosyl-3,4-dihydropyrimidin-2(1*H*)-one and folpet | 75 + 750, 100 +750 g a.i./ha |

The spray volume is 200 l/ha.

The spraying regime advises one or two times of application: treatment A: When the first disease symptoms appear on Leaf 4 BBCH 30-39 and treatment B: BBCH 45-55 (depending on the disease pressure. Do not spray after crop stage BBCH 55)

The assessments are carried out according to the following protocol in Table 21.

Table 21.

| Efficacy | | | |
|---|---|---|---|
| 0 DAA | Intensity (%) and Frequency (%) of the disease(s) | 25 leaves/foliar level on the 3 last developed leaves in the untreated plots | PESSEV<br>PESINC |
| 7-14 DAA<br>21-28 DAA<br>0 DAB<br>7-14 DAB<br>21-28 DAB | Intensity (%) and Frequency (%) of the disease(s) | 25 leaves /plot/ foliar level (at least 2 foliar level) | PESSEV<br>PESINC |
| BBCH 75-85 | Green leaf area if relevant (%) L1+L2 | Plot | GRNARE |
| **Harvest (To be confirmed with the sponsor)** | | | |
| Harvest | weight per plot (kg)<br>moisture content (%)<br>Yield (Q-MET)<br>weight thousand kernel (g/kg) | Minimum 12 m² / plot | WEIGHT<br>MOICON<br>YIELD<br>TKW |

Adapt assessments timing to the disease development in order to see efficacies and differences between the treatments

The assessment timings are adapted to the disease development in order to see efficacies and differences between the treatments.

According to the GEP guidelines the field experiments design includes a randomized block with four replications. All cropping measures (soil maintenance, application of fertilizers) are conducted in accordance to the local practice (Good Farming Practice).

Table 22. 250 OD composition

| Ingredient | % w/w |
|---|---|
| 5-fluoro-4-imino-3-methyl-1-tosyl-3,4-dihydropyrimidin-2(1*H*)-one | 25.00 |
| Agrimer™ AL-22 | 3.00 |
| Atlox® 4916 | 3.00 |

(continued)

| Ingredient | % w/w |
|---|---|
| Aerosol® OT-SE | 6.00 |
| Synperonic® PE/L 64 | 6.00 |
| Genapol® X 050 | 3.00 |
| TEOS | 5.00 |
| Aerosil® R202 | 2.60 |
| Agnique® ME 18 RD-F | 46.40 |

Processing details (1-liter batches):

1. Tetraethyl orthosilicate (TEOS) is added to Agnique® ME 18 RD-F and is mixed with a high shear mixer for 5 mins.

2. Aerosil® is added whilst shearing and is mixed until fully dispersed (approximately 5 mins).

3. Agrimer™ AL-22, Atlox® 4916, Aerosol® OT-SE, Synperonic® PE/L 64 and Genapol® X 050 are added and are mixed until homogenous (approximately 5-10 mins).

4. The compound of Formula I is added slowly whilst shearing and is mixed for 15 mins.

5. The resulting batch is milled in Eiger mini motor mill for 15 mins at 4500 rpm (75% 0.75-1.0 mm glass bead charge). D(50) is approximately 2-3μm.

The composition should remain below 30°C throughout the processing.

Results show that the mixtures bring an added value in terms of controlling *Ramularia collo-cygni in barley* compared to the use of each fungicide alone.

<u>Example 13</u>

An experiment was conducted in controlled conditions under a greenhouse to evaluate the fungicidal control of *Venturia inaequalis* in young apple plants, variety Golden Delicious, with a dehydrogenase inhibitor fungicide (fluxapyroxad), and captan, alone, and in binary mixtures.

The experiment was conducted by applying compositions of fluxapyroxad and captan (Merpan 80 WDG®) alone or together. The compositions were diluted with water. Water amount used was equivalent to 1500 L/ha. Application was performed in an automatic spraying cabin equipped with 2 flatfan AI11003VS nozzles.

The following active components and their mixtures were evaluated:

- Fluxapyroxad 45, 75 and 90 gr (A.I.)/ha
- Captan 600, 900, 1200, 1500 gr (A.I.)/ha
- Fluxapyroxad 45 gr (A.I.)/ha + Captan 1500 gr (A.I.)/ha
- Fluxapyroxad 45 gr (A.I.)/ha + Captan 1200 gr (A.I.)/ha
- Fluxapyroxad 45 gr (A.I.)/ha + Captan 900 gr (A.I.)/ha
- Fluxapyroxad 75 gr (A.I.)/ha + Captan 1200 gr (A.I.)/ha
- Fluxapyroxad 75 gr (A.I.)/ha + Captan 900 gr (A.I.)/ha
- Fluxapyroxad 75 gr (A.I.)/ha + Captan 600 gr (A.I.)/ha

- Fluxapyroxad 90 gr (A.I.)/ha + Captan 1200 gr (A.I.)/ha
- Fluxapyroxad 90 gr (A.I.)/ha + Captan 900 gr (A.I.)/ha
- Fluxapyroxad 90 gr (A.I.)/ha + Captan 600 gr (A.I.)/ha

To test for fungicidal control of *Venturia inaequalis,* the apple trees were sprayed with each of the above treatments. Each of the above treatments was applied once at 1 day before artificial inoculation with a suspension of $10^6$ cfu/ml of *V. inaequalis* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each, 25 leaves per plot were examined for symptoms of *Venturia inaequalis* and incidence and severity on leaves was determined. Results, as shown in Tables 23 and 24, are presented as the percentage of control based on severity rating with a maximum of 100%.

Table 23.

| Product Name | AI | Fungicide family | Applicati on rate (gAI/ha) | % control observe d on leaves 26 DAYS after the applicati on | Sta t. | % control expect ed | Colb y Rati o (o/e) |
|---|---|---|---|---|---|---|---|
| Sercadis | FLUXAPIROX AD | SDHI | 45 | 38.6 | l | | |
| Sercadis | FLUXAPIROX AD | SDHI | 55 | 61.7 | j | | |
| Sercadis | FLUXAPIROX AD | SDHI | 75 | 78.4 | h | | |
| Sercadis | FLUXAPIROX AD | SDHI | 90 | 86.6 | f | | |
| Merpan 80 WDG | CAPTAN | phthalimi des | 600 | 50.4 | k | | |
| Merpan 80 WDG | CAPTAN | phthalimi des | 900 | 68.1 | i | | |
| Merpan 80 WDG | CAPTAN | phthalimi des | 1200 | 78.5 | h | | |
| Merpan 80 WDG | CAPTAN | phthalimi des | 1500 | 89.1 | e | | |
| Sercadis + Merpan 80 WDG | FLUXAPIROX AD + CAPTAN | SDHI + phthalimi des | 45 + 1500 | 100 | a | 93.31 | 1.07 |
| Sercadis + Merpan 80 WDG | FLUXAPIROX AD + CAPTAN | SDHI + phthalimi des | 45 + 1200 | 99.7 | a | 86.80 | 1.15 |
| Sercadis + Merpan 80 WDG | FLUXAPIROX AD + CAPTAN | SDHI + phthalimi des | 45 + 900 | 95.7 | d | 80.41 | 1.19 |
| Sercadis + Merpan 80 WDG | FLUXAPIROX AD + CAPTAN | SDHI + phthalimi des | 45 + 600 | 85 | g | 69.55 | 1.22 |
| Sercadis + Merpan 80 WDG | FLUXAPIROX AD + CAPTAN | SDHI + phthalimi des | 55 + 600 | 96.7 | c | 81.00 | 1.19 |

(continued)

| Product Name | AI | Fungicide family | Applicati on rate (gAI/ha) | % control observe d on leaves 26 DAYS after the applicati on | Sta t. | % control expect ed | Colb y Rati o (o/e) |
|---|---|---|---|---|---|---|---|
| Sercadis + Merpan 80 WDG | FLUXAPIROX AD + CAPTAN | SDHI + phthalimi des | 75 + 1200 | 100 | a | 95.36 | 1.05 |
| Sercadis + | FLUXAPIROX AD + | SDHI + | 75 + | 99.4 | ab | 93.11 | 1.07 |
| Merpan 80 WDG | CAPTAN | phthalimi des | 900 | | | | |
| Sercadis + Merpan 80 WDG | FLUXAPIROX AD + CAPTAN | SDHI + phthalimi des | 75 + 600 | 95.4 | d | 89.29 | 1.07 |
| Sercadis + Merpan 80 WDG | FLUXAPIROX AD + CAPTAN | SDHI + phthalimi des | 90 + 1200 | 100 | a | 97.12 | 1.03 |
| Sercadis + Merpan 80 WDG | FLUXAPIROX AD + CAPTAN | SDHI + phthalimi des | 90 + 900 | 99.8 | a | 95.73 | 1.04 |
| Sercadis + Merpan 80 WDG | FLUXAPIROX AD + CAPTAN | SDHI + phthalimi des | 90 + 600 | 99 | b | 93.35 | 1.06 |

Table 24.

| Product Name | AI | Fungicide family | Application rate (gAI/ha) | % control observed on leaves 12 DAYS after the application | stat | % control observed on leaves 19 DAYS after the application | stat | % control observed on leaves 26 DAYS after the application | stat | Var% (19/26 DAYS) |
|---|---|---|---|---|---|---|---|---|---|---|
| (Untreated) | | | | 6.4 | | 15.3 | | 36 | | 135, 3 |
| Sercadis | FLUXAPIROXAD | SDHI | 45 | 52.4 | c | 43.9 | h | 38.6 | 1 | -12.1 |
| Sercadis | FLUXAPIROXAD | SDHI | 55 | 74.6 | b | 69.9 | f | 61.7 | | -11.7 |
| Sercadis | FLUXAPIROXAD | SDHI | 75 | 89.5 | a | 83.7 | d | 78.4 | h | -6.3 |
| Sercadis | FLUXAPIROXAD | SDHI | 90 | 97.2 | a | 95.6 | abc | 86.6 | f | 9.4 |
| Merpan 80 WDG | CAPTAN | phthalimides | 600 | 57.7 | c | 53.7 | g | 50.4 | k | -6.1 |
| Merpan 80 WDG | CAPTAN | phthalimides | 900 | 74.5 | b | 75.5 | e | 68.1 | i | -9.8 |
| Merpan 80 WDG | CAPTAN | phthalimides | 1200 | 94.4 | a | 89.8 | c | 78.5 | h | -12.6 |
| Merpan 80 WDG | CAPTAN | phthalimides | 1500 | 100 | a | 99.7 | a | 89.1 | e | -10.6 |
| Sercadis + Merpan 80 WDBG | FLUXAPIROXAD + CAPTAN | SDHI + phthalimides | 45 + 1500 | 100 | a | 100 | a | 100 | a | 0.0 |
| Sercadis + Merpan 80 WDG | FLUXAPIROXAD + CAPTAN | SDHI + phthalimides | 45 + 1200 | 100 | a | 100 | a | 99.7 | a | -0.3 |
| Sercadis + Merpan 80 WDG | FLUXAPIROXAD + CAPTAN | SDHI + phthalimides | 45 + 900 | 97.9 | a | 97.4 | ab | 95.7 | d | -1.7 |
| Sercadis + Merpan 80 WDG | FLUXAPIROXAD + CAPTAN | SDHI + phthalimides | 45 + 600 | 79 | b | 83.7 | d | 85 | g | 1.6 |
| Sercadis + Merpan 80 WDG | FLUXAPIROXAD + CAPTAN | SDHI + phthalimides | 55 + 600 | 90 | a | 91.1 | bc | 96.7 | c | 6.1 |

(continued)

| Product Name | AI | Fungicide family | Application rate (gAI/ha) | % control observed on leaves 12 DAYS after the application | stat | % control observed on leaves 19 DAYS after the application | stat | % control observed on leaves 26 DAYS after the application | stat | Var% (19/26 DAYS) |
|---|---|---|---|---|---|---|---|---|---|---|
| Sercadis + Merpan 80 WDG | FLUXAPIROXAD + CAPTAN | SDHI + phthalimides | 75 + 1200 | 100 | a | 100 | a | 100 | a | 0.0 |
| Sercadis + | FLUXAPIROXAD + | SDHI + | 75 + | 96.8 | a | 96.8 | abc | 99.4 | ab | 2.7 |
| Merpan 80 WDG | CAPTAN | phthalimides | 900 | | | | | | | |
| Sercadis + Merpan 80 WDG | FLUXAPIROXAD + CAPTAN | SDHI + phthalimides | 75 + 600 | 93.7 | a | 92.4 | abc | 95.4 | d | 3.2 |
| Sercadis + Merpan 80 WDG | FLUXAPIROXAD + CAPTAN | SDHI + phthalimides | 90 + 1200 | 100 | a | 99.9 | a | 100 | a | 0.1 |
| Sercadis + Merpan 80 WDG | FLUXAPIROXAD + CAPTAN | SDHI + phthalimides | 90 + 900 | 100 | a | 99.7 | a | 99.8 | a | 0.1 |
| Sercadis + Merpan 80 WDG | FLUXAPIROXAD + CAPTAN | SDHI + phthalimides | 90 + 600 | 100 | a | 98.2 | ab | 99 | b | 0.8 |

Results show that the mixtures bring an added value in terms of controlling *Venturia inaequalis,* in apple compared to the use of each fungicide alone:

1. There is a synergistic effect when a fungicide belonging to the phthalimides is mixed with one belonging to the SDHI.

2. The mixture of a phthalimide fungicide (like captan) and a SDHI (like fluxapyroxad) allow to achieve similar or higher level of disease control with a reduced amount per hectare of the two active ingredients. The application of low doses of captan in mixture with low doses of fluxapyroxad provided statistically higher control compared to the full dose of both captan and fluxapyroxad applied solo.

3. The mixture of a phthalimide fungicide and a SDHI fungicide provides overtime a longer control of the disease compared to the two solo active ingredients applied at the same amount per hectare.

EXAMPLE 14

An experiment was conducted to evaluate the fungicidal control of *Zymoseptoria tritici* on wheat, variety Iride, with a dehydrogenase inhibitor fungicide (fluxapyroxad), and captan, alone, and in binary mixtures.
The experiment was conducted by applying compositions of fluxapyroxad (Imtrex®) and captan (Merpan 800 WDG®) alone or together. The compositions were diluted with water.
The following active components and their mixtures were evaluated:

- Fluxapyroxad 90 gr (A.I.)/ha
- Captan 300, 500, 750 gr (A.I.)/ha
- Fluxapyroxad 90 gr (A.I.)/ha + Captan 300 gr (A.I.)/ha
- Fluxapyroxad 90 gr (A.I.)/ha + Captan 500 gr (A.I.)/ha
- Fluxapyroxad 90 gr (A.I.)/ha + Captan 750 gr (A.I.)/ha

To test for fungicidal control of *Zymoseptoria tritici,* the wheat plants were sprayed with each of the above treatments. Each of the above treatments was applied once at 1 day before artificial inoculation with a suspension of $10^6$ cfu/ml of *Zymoseptoria tritici* spores. The treatments were composed of 4 replicates. The experimental design was a randomized complete block design. Statistically significant differences are assessed with ANOVA followed by Student-Newman-Keuls test with an alpha level of 0.05. Where two means share the same alphabetical notation, they are not significantly different.
Evaluations were performed for the whole duration of the experiment. At each time, 100 leaves per plot were examined for symptoms of *Zymoseptoria tritici* and the severity was determined. Results, shown in Tables 25 and 26 below, are presented as the percentage of control based on severity rating with a maximum of 100%.

Table 25.

| Product Name | AI | Fungicide family | Application rate | % control observed on leaves 42 DAYS after the application | Stat. | % control expected | Colby Rate |
|---|---|---|---|---|---|---|---|
| Merpan 80 WDG | CAPTAN | phthalimides | 300 | 65.3 | f | | |
| Merpan 80 WDG | CAPTAN | phthalimides | 500 | 70.3 | e | | |
| Merpan 80 WDG | CAPTAN | phthalimides | 750 | 79.3 | d | | |
| Imtrex | FLUXAPIROXAD | SDHI | 90 | 59.3 | g | | |

(continued)

| Product Name | AI | Fungicide family | Application rate | % control observed on leaves 42 DAYS after the application | Stat. | % control expected | Colby Rate |
|---|---|---|---|---|---|---|---|
| Merpan 80 WDG + Imtrex | CAPTAN + FLUXAPIROXAD | phthalimides + SDHI | 300 + 90 | 91.1 | c | 85.9 | 1.06 |
| Merpan 80 WDG + Imtrex | CAPTAN + FLUXAPIROXAD | phthalimides + SDHI | 500 + 90 | 93.4 | b | 87.9 | 1.06 |
| Merpan 80 WDG + Imtrex | CAPTAN + FLUXAPIROXAD | phthalimides + SDHI | 750 + 90 | 97.7 | a | 91.6 | 1.07 |

Table 26.

| Product Name | AI | Fungicide family | Application rate | % control observed on leaves 35 DAYS after the application | Stat. | % control observed on leaves 42 DAYS after the application | Stat. | Var% (35/42 DAYS) |
|---|---|---|---|---|---|---|---|---|
| Merpan 80 WDG | CAPTAN | phthalimides | 300 | 70.3 | c | 65.3 | f | -7.1 |
| Merpan 80 WDG | CAPTAN | phthalimides | 500 | 83.3 | c | 70.3 | c | -15.6 |
| Merpan 80 WDG | CAPTAN | phthalimides | 750 | 96. 3 | b | 79.3 | d | -17.7 |
| Imtrex | FLUXAPIROXAD | SDHI | 90 | 66.6 | a | 59.3 | g | -11.0 |
| Merpan 80 WDG + Imtrex | CAPTAN + FLUXAPIROXAD | phthalimides + SDHI | 300 + 90 | 91.3 | a | 91.1 | c | -0.2 |
| Merpan 80 WDG + Imtrex | CAPTAN + FLUXAPIROXAD | phthalimides + SDHI | 500 + 90 | 94.1 | a | 93.4 | b | -0.7 |
| Merpan 80 WDG + Imtrex | CAPTAN + FLUXAPIROXAD | phthalimides + SDHI | 750 + 90 | 97.5 | a | 97.7 | a | 0.2 |

Results show that the mixtures bring an added value in terms of controlling *Zymoseptoria tritici,* in wheat compared to the use of each fungicide alone:

1. There is a synergistic effect when a fungicide belonging to the phthalimides is mixed with one belonging to the SDHI.

2. The mixture of a phthalimide fungicide and a SDHI allow to achieve level of disease control higher than the two solo active ingredients also against a *Zymoseptoria tritici* strain resistant to SDHI.

3. The mixture of a phthalimide fungicide and a SDHI provides overtime a longer control of the disease compared to the two solo active ingredients applied at the same amount per hectare.

EXAMPLE 15

An experiment was conducted to evaluate the fungicidal control of *Alternaria solani.* on potato plants, variety Agata, with a dehydrogenase inhibitor fungicide (fluxapyroxad), and captan, alone, and in binary mixtures.

The experiments were conducted by applying compositions of fluxapyroxad (Sercadis®) and captan (Merpan 800 WDG®) alone or together. The compositions were diluted with water. Water amount used was equivalent to 500 L/ha. Application was performed in an automatic spraying cabin equipped with 2 flatfan AI11003VS nozzles.

The following active components and their mixtures were evaluated:

- Fluxapyroxad 75 gr (A.I.)/ha
- Captan 750, 1000 gr (A.I.)/ha
- Fluxapyroxad 75 gr (A.I.)/ha + Captan 1000 gr (A.I.)/ha
- Fluxapyroxad 75 gr (A.I.)/ha + Captan 750 gr (A.I.)/ha

To test for fungicidal control *of Alternaria solani,* the potato plants were sprayed with each of the above treatments. Each of the above treatments was applied once at 1 day before artificial inoculation with a suspension of $10^6$ cfu/ml of *Alternaria solani* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms *of Alternaria solani* on leaves and incidence and severity was determined. Results, shown in Table 27 below, are presented as the percentage of control based on severity rating with a maximum of 100%.

Table 27.

| Produc t Name | AI | Fungicide family | Applicatio n rate | % control observed on leaves 21 DAYS after the applicatio n | Stat. | % control expecte d | Colb y Rate |
|---|---|---|---|---|---|---|---|
| Sercadi s | FLUXAPIROXA D | SDHI | 75 | 67.8 | c | | |
| Merpa n 80 WDG | CAPTAN | phthalimid es | 750 | 58.7 | c | | |
| Merpa n 80 WDG | CAPTAN | phthalimid es | 1000 | 62.1 | d | | |
| Merpa n 80 WDG + Sercadi s | CAPTAN + FLUXAPIROXA D | phthalimid es + SDHI | 1000 + 75 | 95.7 | a | 84.1 | 1.14 |
| Merpa n 80 WDG + Sercadi s | CAPTAN + FLUXAPIROXA D | phthalimid es + SDHI | 750 + 75 | 88.8 | b | 86.7 | 1.02 |

Results show that the mixtures bring an added value in terms of controlling *Alternaria solani,* in potato compared to the use of each fungicide alone. A synergistic effect was observed when a fungicide belonging to the phthalimides is mixed with one belonging to SDHI.

EXAMPLE 16

An experiment was conducted in controlled conditions under a greenhouse to evaluate the fungicidal control of *Alternaria solani* on tomato, variety Liguria, with a dehydrogenase inhibitor fungicide (fluxapyroxad), and captan, alone, and in binary mixtures.

The experiments were conducted by applying compositions of fluxapyroxad (Sercadis®) and captan (Merpan

800 WDG®) alone or together. The compositions were diluted with water. Water amount used was equivalent to 500 L/ha. Application was performed in an automatic spraying cabin equipped with 2 flatfan AI11003VS nozzles.

The following active components and their mixtures were evaluated:

- Fluxapyroxad 75 gr (A.I.)/ha
- Captan 750, 1000 gr (A.I.)/ha
- Fluxapyroxad 75 gr (A.I.)/ha + Captan 1000 gr (A.I.)/ha
- Fluxapyroxad 75 gr (A.I.)/ha + Captan 750 gr (A.I.)/ha

To test for fungicidal control *of Alternaria solani.* the tomato plants were sprayed with each of the above treatments. Each of the above treatments was applied once at 1 day before artificial inoculation with a suspension of $10^6$ cfu/ml of *Alternaria solani* spores. The treatments were composed of 4 replicates. The experimental design was a randomized complete block design. Statistically significant differences are assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot are examined for symptoms of *Alternaria solani* on leaves and incidence and severity is determined. Results, as shown in Table 28 below, are presented as the percentage of control based on severity rating with a maximum of 100%.

Table 28.

| Product Name | AI | Fungicide family | Application rate | % control observed on leaves 21 DAYS after the application | St at. | % contr ol expec ted | Colby Rate |
|---|---|---|---|---|---|---|---|
| Sercadis | FLUXAPIR OXAD | SDHI | 75 | 65.0 | d | | |
| Merpan 80 WDG | CAPTAN | phthalimides | 750 | 60.8 | c | | |
| Merpan 80 WDG | CAPTAN | phthalimides | 1000 | 70.7 | c | | |
| Merpan 80 WDG + Sercadis | CAPTAN + FLUXAPIR OXAD | phthalimides + SDHI | 1000 + 75 | 95.4 | a | 89.7 | 1.06 |
| Merpan 80 WDG + Sercadis | CAPTAN + FLUXAPIR OXAD | phthalimides + SDHI | 750 + 75 | 91.5 | b | 86.3 | 1.06 |

Results show that the mixtures bring an added value in terms of controlling *Alternaria solani,* in tomato compared to the use of each fungicide alone. A synergistic effect was observed when a fungicide belonging to the phthalimides is mixed with one belonging to SDHI.

Example 17

An experiment was conducted in controlled conditions under a greenhouse to evaluate the fungicidal control of *Venturia inaequalis* on apple, variety Golden Delicious, with a dehydrogenase inhibitor fungicide (benzovindiflupyr, fluxapyroxad, fluopyram, penthiopyrad, pydiflumetofen), and folpet, alone, and in binary mixtures.

The experiment was conducted by applying compositions of benzovindiflupyr (Elatus plus®), fluxapyroxad (Sercadis®), fluopyram (Luna privilege®), penthiopyrad (Fontelis®). pydiflumetofen (Miravis®), and folpet (Folpan 80 WDG®) alone or together. The compositions were diluted with water. Water amount used was equivalent to 1500 L/ha. Application was performed in an automatic spraying cabin equipped with 2 flatfan AI11003VS nozzles.

Treatments:

folpet 600, 900, 1200, 1500 gr (A.I.)/ha

Benzovindiflupyr 385 gr (A.I.)/ha

Benzovindiflupyr 385 gr (A.I.)/ha + folpet 1200 gr (A.I.)/ha

Benzovindiflupyr 385 gr (A.I.)/ha + folpet 1500 gr (A.I.)/ha

Fluxapyroxad 45, and 90 gr (A.I.)/ha

Fluxapyroxad 45 gr (A.I.)/ha + folpet 600 gr (A.I.)/ha

Fluxapyroxad 45 gr (A.I.)/ha + folpet 900 gr (A.I.)/ha

Fluxapyroxad 45 gr (A.I.)/ha + folpet 1200 gr (A.I.)/ha

Fluxapyroxad 45 gr (A.I.)/ha + folpet 1500 gr (A.I.)/ha

Fluxapyroxad 90 gr (A.I.)/ha + folpet 600 gr (A.I.)/ha

Fluxapyroxad 90 gr (A.I.)/ha + folpet 900 gr (A.I.)/ha

Fluxapyroxad 90 gr (A.I.)/ha + folpet 1500 gr (A.I.)/ha

Fluopyram 150 gr (A.I.)/ha

Fluopyram 150 gr (A.I.)/ha + folpet 1200 gr (A.I.)/ha

Fluopyram 150 gr (A.I.)/ha + folpet 1500 gr (A.I.)/ha

Penthiopyrad 225 gr (A.I.)/ha

Penthiopyrad 225 gr (A.I.)/ha + folpet 1200 gr (A.I.)/ha

Penthiopyrad 225 gr (A.I.)/ha + folpet 1500 gr (A.I.)/ha

Pydiflumetofen 40 gr (A.I.)/ha

Pydiflumetofen 40 gr (A.I.)/ha + folpet 1000 gr (A.I.)/ha

Pydiflumetofen 40 gr (A.I.)/ha + folpet 1500 gr (A.I.)/ha

To test for fungicidal control of *Venturia inaequalis,* the apple trees were sprayed with each of the above treatments. Each of the above treatments was applied once at 1 day before artificial inoculation with a suspension of $10^6$ cfu/ml of *V. inaequalis* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of *Venturia inaequalis* on leaves and incidence and severity is determined. Results, as shown in Table 29, are presented as the percentage of control based on severity rating with a maximum of 100%.

Table 29.

| Product Name | AI | Fungicide family | Application rate | % control observed on leaves 26 DAYS after the application | Stat. | % control expected | Colby Rate |
|---|---|---|---|---|---|---|---|
| Folpan 80 WDG | FOLPET | phthalimides | 600 | 57.4 | 1 | | |
| Folpan 80 WDG | FOLPET | phthalimides | 900 | 74.8 | i | | |
| Folpan 80 WDG | FOLPET | phthalimides | 1200 | 80.4 | g | | |
| Folpan 80 WDG | FOLPET | phthalimides | 1500 | 84.2 | f | | |
| Elatus plus | BENZOVINDIFLUPYR | SDHI | 385 | 79.6 | gh | | |
| Folpan 80 WDG + Elatus plus | FOLPET + BENZOVINDIFLUPYR | phthalimides + SDHI | 385+1200 | 95.5 | d | 79.6 | 1.20 |
| Folpan 80 WDG + Elatus plus | FOLPET + BENZOVINDIFLUPYR | phthalimides + SDHI | 385+1500 | 100.0 | a | 83.4 | 1.20 |
| Sercadis | FLUXAPIROXAD | SDHI | 45 | 60.7 | k | | |
| Sercadis | FLUXAPIROXAD | SDHI | 90 | 88.0 | e | | |
| Folpan 80 WDG + Serca-dis | FOLPET + FLUXAPIR-OXAD | phthalimides + SDHI | 45+600 | 78.1 | h | 56.8 | 1.37 |
| Folpan 80 WDG + Serca-dis | FOLPET + FLUXAPIR-OXAD | phthalimides + SDHI | 45+900 | 88.3 | e | 74.1 | 1.19 |
| Folpan 80 WDG + Serca-dis | FOLPET + FLUXAPIR-OXAD | phthalimides + SDHI | 45+1200 | 96.1 | cd | 79.6 | 1.21 |
| Folpan 80 WDG + Serca-dis | FOLPET + FLUXAPIR-OXAD | phthalimides + SDHI | 45+1500 | 100.0 | a | 83.4 | 1.20 |
| Folpan 80 WDG + Serca-dis | FOLPET + FLUXAPIR-OXAD | phthalimides + SDHI | 90+600 | 98.3 | ab | 56.8 | 1.73 |
| Folpan 80 WDG + Serca-dis | FOLPET + FLUXAPIR-OXAD | phthalimides + SDHI | 90+900 | 99.7 | a | 74.1 | 1.35 |

(continued)

| Product Name | AI | Fungicide family | Application rate | % control observed on leaves 26 DAYS after the application | Stat. | % control expected | Colby Rate |
|---|---|---|---|---|---|---|---|
| Folpan 80 WDG + Sercadis | FOLPET + FLUXAPIROXAD | phthalimides + SDHI | 90+1500 | 100.0 | a | 83.4 | 1.20 |
| Luna privilege | FLUOPYRAM | SDHI | 150 | 68.4 | i | | |
| Folpan 80 WDG + Luna privilege | FOLPET + FLUOPYRAM | phthalimides + SDHI | 150+1200 | 100.0 | a | 93.8 | 1.07 |
| Folpan 80 WDG + Luna privilege | FOLPET + FLUOPYRAM | phthalimides + SDHI | 150+1500 | 100.0 | a | 95.0 | 1.05 |
| Fontelis | PENTHIOPYRAD | SDHI | 225 | 67.0 | j | | |
| Folpan 80 WDG + Fontelis | FOLPET + PENTHIOPYRAD | phthalimides + SDHI | 225+1200 | 88.2 | e | 93.5 | 0.94 |
| Folpan 80 WDG + Fontelis | FOLPET + PENTHIOPYRAD | phthalimides + SDHI | 225+1500 | 100.0 | a | 94.8 | 1.06 |
| Miravis | PYDIFLUMETOFEN | SDHI | 40 | 61.0 | k | | |
| Folpan 80 WDG + Miravis | FOLPET + PYDIFLUMETOFEN | phthalimides + SDHI | 40+1200 | 97.4 | bc | 92.4 | 1.05 |
| Folpan 80 WDG + Miravis | FOLPET + PYDIFLUMETOFEN | phthalimides + SDHI | 40+1500 | 100.0 | a | 93.8 | 1.07 |

Results show that the mixtures bring an added value in terms of controlling *Venturia inaequalis,* in apple compared to the use of each fungicide alone. A synergistic effect was observed when a fungicide belonging to the phthalimides is mixed with one belonging to SDHI.

EXAMPLE 18

An experiment was conducted in controlled conditions under a greenhouse to evaluate the fungicidal control of *Alternaria solani* on potato, variety Agata, with a dehydrogenase inhibitor fungicide (fluxapyroxad), and captan, alone, and in binary mixtures.

The experiment was conducted by applying compositions of fluxapyroxad (Sercadis®) and captan (Merpan 480 L®) alone or together. The compositions were diluted with water. Water amount used was equivalent to 500 L/ha. Application was performed in an automatic spraying cabin equipped with 2 flatfan AI11003VS nozzles.

Treatments:

Fluxapyroxad 75 gr (A.I.)/ha

Captan 900, 1200 gr (A.I.)/ha

Fluxapyroxad 75 gr (A.I.)/ha + Captan 1200 gr (A.I.)/ha

Fluxapyroxad 75 gr (A.I.)/ha + Captan 900 gr (A.I.)/ha

To test for fungicidal control of *Alternaria solani,* the potato plants were sprayed with each of the above treatments. Each of the above treatments was applied once at 1 day before artificial inoculation with a suspension of $10^6$ cfu/ml of *Alternaria solani* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.
Evaluations were performed for the whole duration of the experiment. At each time, 25 leaves per plot were examined for symptoms of *Alternaria solani* on leaves and incidence and severity was determined. Results, as shown in Table 30, are presented as the percentage of control based on severity rating with a maximum of 100%.

Table 30.

| Product Name | AI | Fungicide family | Application rate | % control observed on leaves 21 DAYS after the application | Stat. | % control expected | Colby Rate |
|---|---|---|---|---|---|---|---|
| Sercadis | FLUXAPIROXAD | SDHI | 75 | 63.5 | d | | |
| Merpan 480 L | CAPTAN | phthalimides | 900 | 53.3 | e | | |
| Merpan 480 L | CAPTAN | phthalimides | 1200 | 64 | c | | |
| Merpan 480 L + Sercadis | CAPTAN + FLUXAPIROXAD | phthalimides + SDHI | 1200 + 75 | 93.1 | a | 62.9 | 1.48 |
| Merpan 480 L + Sercadis | CAPTAN + FLUXAPIROXAD | phthalimides + SDHI | 900 + 75 | 88.3 | b | 62.9 | 1.40 |

Results show that the mixtures bring an added value in terms of controlling *Alternaria solani,* in potato compared to the use of each fungicide alone. A synergistic effect was observed when a fungicide belonging to the phthalimides is mixed with one belonging to SDHI.

EXAMPLE 19

An experiment is conducted in controlled conditions under a greenhouse to evaluate the fungicidal control of *Alternaria solani* on potato, variety Agata, with a dehydrogenase inhibitor fungicide (fluxapyroxad), and folpet, alone, and in binary mixtures.
The experiment was conducted by applying compositions of fluxapyroxad (Sercadis®) and folpet (Folpan 80 WDG®) alone or together. The compositions were diluted with water. Water amount used was equivalent to 500 L/ha. Application was performed in an automatic spraying cabin equipped with 2 flatfan AI11003VS nozzles.

Treatments:

Fluxapyroxad 75 gr (A.I.)/ha

Folpet 900, 1200 gr (A.I.)/ha

Fluxapyroxad 75 gr (A.I.)/ha + Folpet 1200 gr (A.I.)/ha

Fluxapyroxad 75 gr (A.I.)/ha + Folpet 900 gr (A.I.)/ha

To test for fungicidal control of *Alternaria solani,* the potato plants were sprayed with each of the above treatments. Each of the above treatments was applied once at 1 day before artificial inoculation with a suspension of $10^6$ cfu/ml of *Alternaria solani* spores. The treatments were composed of 4 replicates. The experimental design was a randomized complete block design. Statistically significant differences are assessed with ANOVA followed by Student-Newman-Keuls test with an alpha level of 0.05. Where two means share the same alphabetical notation, they are not significantly different.

Evaluations were performed for the whole duration of the experiment. At each, 25 leaves per plot were examined for symptoms of *Alternaria solani* on leaves and incidence and severity was determined. Results, as shown in Table 31 below, are presented as the percentage of control based on severity rating with a maximum of 100%.

Table 31.

| Product Name | AI | Fungicide family | Application rate | % control observed on leaves 21 DAYS after the applicatio n | Stat | % control expecte d | Colb y Rate |
|---|---|---|---|---|---|---|---|
| Sercadi s | FLUXAPI ROXAD | SDHI | 75 | 63.5 | d | | |
| Merpan 80 WDG | CAPTAN | phthalimide s | 900 | 55.7 | e | | |
| Merpan 80 WDG | CAPTAN | phthalimide s | 1200 | 66.3 | c | | |
| Merpan 80 WDG + Scrcadi s | CAPTAN + FLUXAPI ROXAD | phthalimide s + SDHI | 1200 + 75 | 93.7 | a | 62.9 | 1.49 |
| Merpan 80 WDG + Sercadi s | CAPTAN + FLUXAPI ROXAD | phthalimide s + SDHI | 900 + 75 | 90.9 | b | 62.9 | 1.45 |

Results show that the mixtures bring an added value in terms of controlling *Alternaria solani,* in potato compared to the use of each fungicide alone. A synergistic effect was observed when a fungicide belonging to the phthalimides is mixed with one belonging to SDHI.

EXAMPLE 20

An experiment was conducted in controlled conditions under a greenhouse to evaluate the fungicidal control of *Alternaria solani* on tomato, variety Liguria, with a dehydrogenase inhibitor fungicide (fluxapyroxad), and captan, alone, and in binary mixtures.

The experiment was conducted by applying compositions of fluxapyroxad (Sercadis®) and captan (Merpan 480 L®) alone or together. The compositions were diluted with water. Water amount used was equivalent to 800 L/ha. Application was performed in an automatic spraying cabin equipped with 2 flatfan AI11003VS nozzles.

Treatments:

Fluxapyroxad 75 gr (A.I.)/ha

Captan 900, 1200 gr (A.I.)/ha

Fluxapyroxad 75 gr (A.I.)/ha + Captan 1200 gr (A.I.)/ha

Fluxapyroxad 75 gr (A.I.)/ha + Captan 900 gr (A.I.)/ha

To test for fungicidal control *of Alternaria solani,* the tomato plants were sprayed with each of the above treatments. Each of the above treatments was applied once at 1 day before artificial inoculation with a suspension of $10^6$ cfu/ml of *Alternaria solani* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of *Alternaria solani* on leaves and incidence and severity was determined. Results, as shown in Table 32 below, are presented as the percentage of control based on severity rating with a maximum of 100%.

Table 32.

| Produ ct Name | AI | Fungicide family | Applicati on rate | % control observed on leaves 21 DAYS after the applicati on | Sta t. | % control expect ed | Colb y Rate |
|---|---|---|---|---|---|---|---|
| Sercad is | FLUXAPIROX AD | SDHI | 75 | 72.6 | g | | |
| Merpa n 480 L | CAPTAN | phthalimi des | 900 | 67.8 | h | | |
| Merpa n 480 L | CAPTAN | phthalimi des | 1200 | 75.4 | f | | |
| Merpa n 480 L + Sercad is | CAPTAN + FLUXAPIROX AD | phthalimi des + SDHI | 1200 + 75 | 99.7 | a | 93.3 | 1.07 |
| Merpa n 480 L + Sercad is | CAPTAN + FLUXAPIROX AD | phthalimi des + SDHI | 900 + 75 | 96.4 | ab | 91.2 | 1.06 |

Results show that the mixtures bring an added value in terms of controlling *Alternaria solani,* in tomato compared to the use of each fungicide alone. A synergistic effect was observed when a fungicide belonging to the phthalimides is mixed with one belonging to SDHI.

EXAMPLE 21

An experiment was conducted in controlled conditions under a greenhouse to evaluate the fungicidal control of *Alternaria solani* on tomato, variety Liguria, with a dehydrogenase inhibitor fungicide (fluxapyroxad), and folpet, alone, and in binary mixtures.

The experiment was conducted by applying compositions of fluxapyroxad (Sercadis®) and folpet (Folpan 80 WDG®) alone or together. The compositions were diluted with water. Water amount used was equivalent to 800 L/ha. Application was performed in an automatic spraying cabin equipped with 2 flatfan AI11003VS nozzles.

Treatments:

Fluxapyroxad 75 gr (A.I.)/ha

Folpet 900, 1200 gr (A.I.)/ha

Fluxapyroxad 75 gr (A.I.)/ha + Folpet 1200 gr (A.I.)/ha

Fluxapyroxad 75 gr (A.I.)/ha + Folpet 900 gr (A.I.)/ha

To test for fungicidal control of *Alternaria solani,* the tomato plants were sprayed with each of the above treatments. Each of the above treatments was applied once at 1 day before artificial inoculation with a suspension of $10^6$ cfu/ml of *Alternaria solani* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of *Alternaria solani* on leaves and incidence and severity was determined. Results, as shown in Table 33 below, are presented as the percentage of control based on severity rating with a maximum of 100%.

Table 33.

| Produ ct Name | AI | Fungicide family | Applicati on rate | % control observed on leaves 21 DAYS after the applicati on | Sta t. | % control expect ed | Colb y Rate |
|---|---|---|---|---|---|---|---|
| Sercad is | FLUXAPIROX AD | SDHI | 75 | 67.8 | c | | |
| Folpan 80 WDG | FOLPET | phthalimi des | 900 | 58.6 | c | | |
| Folpan 80 WDG | FOLPET | phthalimi des | 1200 | 62.1 | d | | |
| Folpan 80 WDG + Sercad is | FOLPET + FLUXAPIROX AD | phthalimi des + SDHI | 1200 + 75 | 95.7 | a | 87.8 | 1.09 |
| Folpan 80 WDG + Sercad is | FOLPET + FLUXAPIROX AD | phthalimi des + SDHI | 900 + 75 | 88.8 | b | 86.7 | 1.02 |

Results show that the mixtures bring an added value in terms of controlling *Alternaria solani,* in tomato compared to the use of each fungicide alone. A synergistic effect was observed when a fungicide belonging to the phthalimides is mixed with one belonging to SDHI.

<u>EXAMPLE 22</u>

An experiment was conducted in controlled conditions under a greenhouse to evaluate the fungicidal activity of the mixture comprising (1) phthalimide fungicide (folpet, captan) and (2) dehydrogenase inhibitor fungicide (fluxapyroxad) toward *Plasmopara viticola* in grape, variety Barbera.

The experiment was conducted by applying compositions of fluxapyroxad (Sercadis ®), and folpet (Folpan 80 WDG®) alone or together. The compositions were diluted with water. Water amount used was equivalent to 800 L/ha. Application was performed in an automatic spraying cabin equipped with 2 flatfan AI11003VS nozzles.

The following active components and their mixtures were evaluated:

Folpet 900, 1200 gr (A.I.)/ha

Fluxapyroxad 75 gr (A.I.)/ha

Fluxapyroxad 75 gr (A.I.)/ha + folpet 1200 gr (A.I.)/ha

To test for fungicidal control of *Plasmopara viticola,* the grape plants were sprayed with each of the above treatments. Each of the above treatments was applied once at 1 day before artificial inoculation with a suspension of $10^6$ cfu/ml of *Plasmopara viticola* spores. The treatments werecomposed of 4 replicates. The experimental design was a randomized complete block design. Statistically significant differences are assessed with ANOVA followed by Student-Newman-Keuls test with an alpha level of 0.05. Where two means share the same alphabetical notation, they are not

significantly different.

Evaluations were performed for the whole duration of the experiment. At each time, 25 leaves per plot were examined for symptoms of *Plasmopara viticola* on leaves and incidence and severity was determined. Results, shown in Table 34 below, are presented as the percentage of control based on severity rating with a maximum of 100%.

Table 34.

| Produ ct Name | AI | Fungicide family | Applicati on rate | % control observed on leaves 21 DAYS after the applicati on | Sta t. | % control expect ed | Colb y Rate |
|---|---|---|---|---|---|---|---|
| Sercad is | FLUXAPIROX AD | SDHI | 45 | 14.8 | m | | |
| Folpan 80 WDG | FOLPET | phthalimi des | 900 | 63.2 | k | | |
| Folpan 80 WDG | FOLPET | phthalimi des | 1200 | 74.5 | e | | |
| Folpan 80 WDG + Scrcad is | FOLPET + FLUXAPIROX AD | phthalimi des + SDHI | 45+1200 | 85.3 | a | 74.5 | 1.14 |
| Folpan 80 WDG + Sercad is | FOLPET + FLUXAPIROX AD | phthalimi des + SDHI | 45+900 | 75.4 | d | 63.2 | 1.19 |

Although fluxapyroxad has limited effect against *Plasmopara viticola,* the combination with folpet shows a surprisingly effect on the efficacy bringing an added value in terms of controlling *Plasmopara viticola* compared to the use of each fungicide alone. A synergistic effect was observed when a fungicide belonging to the phthalimides is mixed with one belonging to SDHI.

Example 23

An experiment was conducted in controlled conditions under a greenhouse to evaluate the fungicidal activity of the mixture comprising phthalimides (captan, folpet) and succinate dehydrogenase inhibitor fungicide (fluopyram) toward *Venturia inaequalis* in young apple plants, variety Golden Delicious.

The experiment was conducted by applying compositions of fluopyram (Luna privilege®), and captan (Merpan 80 WDG®) or folpet (Folpan 80 WDG®) alone and together. The compositions were diluted with water. Water amount used was equivalent to 1500 L/ha. Application was performed in an automatic spraying cabin equipped with 2 flatfan AI11003VS nozzles.

Treatments:

Captan 900, 1200 gr (A.I.)/ha

Folpet 900, 1200 gr (A.I.)/ha

fluopyram 100, 150 gr (A.I.)/ha

fluopyram 100gr (A.I.)/ha + Captan 900 gr (A.I.)/ha

fluopyram 100gr (A.I.)/ha + Captan 1200 gr (A.I.)/ha

fluopyram 150gr (A.I.)/ha + Captan 900 gr (A.I.)/ha

fluopyram 150gr (A.I.)/ha + Captan 1200 gr (A.I.)/ha

fluopyram 100 gr (A.I.)/ha + Folpet 900 gr (A.I.)/ha

fluopyram 100 gr (A.I.)/ha + Folpet 1200 gr (A.I.)/ha

fluopyram 150 gr (A.I.)/ha + Folpet 900 gr (A.I.)/ha

fluopyram 150 gr (A.I.)/ha + Folpet 1200 gr (A.I.)/ha

To test for fungicidal control of *Venturia inaequalis,* the apple trees were sprayed with each of the above treatments. Each of the above treatments was applied once at 1 day before artificial inoculation with a suspension of 106 cfu/ml of *Venturia inaequalis* spores. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot were examined for symptoms of *Venturia inaequalis* on leaves and incidence and severity was determined. Results, shown in Table 35 below, are presented as the percentage of control based on severity rating with a maximum of 100%.

Table 35.

| Produ ct Name | AI | Fungicid e family | Applicat ion rate | % control observe d on leaves 26 DAYS after the applicat ion | Sta t. | % contro l expect ed | Col by Rate |
|---|---|---|---|---|---|---|---|
| Merpa n 80 WDG | CAPTAN | phthalimi des | 900 | 50.1 | k | | |
| Merpa n 80 WDG | CAPTAN | phthalimi des | 1200 | 79.2 | f | | |
| Folpa n 80 WDG | FOLPET | phthalimi des | 900 | 59.1 | J | | |
| Folpa n 80 WDG | FOLPET | phthalimi des | 1200 | 73.9 | h | | |
| Luna privile ge | FLUOPYRAM | SDHI | 100 | 70.7 | i | | |
| Luna privile ge | FLUOPYRAM | SDHI | 150 | 75.5 | g | | |
| Luna privile ge + Merpa n 80 WDG | FLUOPYRAM+ CAPTAN | SDHI + phthalimi des | 100+900 | 94.3 | e | 85.4 | 1.10 |
| Luna privile ge + Merpa n 80 WDG | FLUOPYRAM+ CAPTAN | SDHI + phthalimi des | 100+120 0 | 99.4 | a | 93.9 | 1.06 |
| Luna privile ge + Merpa n 80 WDG | FLUOPYRAM+ CAPTAN | SDHI + phthalimi des | 150+900 | 98.2 | bc | 87.8 | 1.12 |
| Luna privile ge + Merpa n 80 WDG | FLUOPYRAM+ CAPTAN | SDHI + phthalimi des | 150+120 0 | 100.0 | a | 94.9 | 1.05 |
| Luna privile ge + Folpa n 80 WDG | FLUOPYRAM+ FOLPET | SDHI + phthalimi des | 100+900 | 94.2 | e | 88.0 | 1.07 |
| Luna privile ge + Folpa n 80 WDG | FLUOPYRAM+ FOLPET | SDHI + phthalimi des | 100+120 0 | 97.7 | c | 92.4 | 1.06 |

(continued)

| Produ ct Name | AI | Fungicid e family | Applicat ion rate | % control observe d on leaves 26 DAYS after the applicat ion | Sta t. | % contro l expect ed | Col by Rate |
|---|---|---|---|---|---|---|---|
| Luna privile ge + Folpa n 80 WDG | FLUOPYRAM+F OLPET | SDHI + phthalimi des | 150+900 | 96.9 | d | 90.0 | 1.08 |
| Luna privile ge + Folpa n 80 WDG | FLUOPYRAM+F OLPET | SDHI + phthalimi des | 150+120 0 | 98.6 | b | 93.6 | 1.05 |

Results show that the mixtures bring an added value in terms of controlling *Venturia inaequalis* in apple compared to the use of each fungicide alone. A synergistic effect was observed when a fungicide belonging to the phthalimides is mixed with one belonging to SDHI.

EXAMPLE 24

An experiment was conducted in controlled conditions under a greenhouse to evaluate the fungicidal activity of the mixture comprising a fluoropyrimidinone fungicide (flumethylsulforim, 5-fluoro-4-imino-3-methyl-1-tosyl-3,4-dihydropyrimidin-2(1H)-one), and phthalimides (folpet) toward *Ramularia collo-cygni* in barley seedlings, variety Bologna.

The experiment was conducted by applying compositions of flumethylsulforim (250 OD) and folpet (Folpan 80 WDG®) alone or together. The compositions were diluted with water. Water amount used was equivalent to 250 L/ha. Application was performed in an automatic spraying cabin equipped with 2 flatfan AI11003VS nozzles. The flumethylsulforim 250 OD composition is shown in Table 22 of Example 12.

Treatments:

Folpet 175, 300, 400 gr (A.I.)/ha

Flumethylsulforim 25, 35 gr (A.I.)/ha

Folpet 175 gr (A.I.)/ha + flumethylsulforim 35 gr (A.I.)/ha

Folpet 300 gr (A.I.)/ha + flumethylsulforim 25 gr (A.I.)/ha

Folpet 300 gr (A.I.)/ha + flumethylsulforim 35 gr (A.I.)/ha

Folpet 400 gr (A.I.)/ha + flumethylsulforim 25 gr (A.I.)/ha

Folpet 400 gr (A.I.)/ha + flumethylsulforim 35 gr (A.I.)/ha

To test for fungicidal control of *Ramularia collo-cygni,* barley plants were sprayed at BBCH 21 - 23 (40/60 %) with each of the above treatments. Each of the above treatments was applied once at 1 day before artificial inoculation with a suspension of $10^6$ cfu/ml of *Ramularia collo-cygni* spores. The treatments were composed of 4 replicates. The experimental design was a randomized complete block design. Statistically significant differences are assessed with ANOVA followed by Student-Newman-Keuls test with an alpha level of 0.05. Where two means share the same alphabetical notation, they are not significantly different.

Evaluations were performed for the whole duration of the experiment. At each time, 25 leaves per plot are examined for symptoms *of Ramularia collo-cygni* and incidence and severity of the disease on leaves was determined. Results, as shown in Table 36 below, are presented as the percentage of control based on severity rating with a maximum of 100%.

Table 36.

| Product Name | AI | Application rate (gAI/ha) | % control observed on leaves 10 DAYS after the application | Stat. | % control expected | Col by Rate (o/e) |
|---|---|---|---|---|---|---|
| Folpan 80 WDG | FOLPET | 175 | 25.10 | d | | |
| Folpan 80 WDG | FOLPET | 300 | 61.10 | bc | | |
| Folpan 80 WDG | FOLPET | 400 | 64.80 | b | | |
| Flumethylsulforim 250 OD | FLUMETHYLSULFORIM | 25 | 45.70 | c | | |
| Flumethylsulforim 250 OD | FLUMETHYLSULFORIM | 35 | 55.00 | bc | | |
| Folpan 80 WDG + Flumethylsulforim 250 OD | FOLPET + FLUMETHYLSULFORIM | 175 + 35 | 84.60 | a | 60.64 | 1.40 |
| Folpan 80 WDG + Flumethylsulforim 250 OD | FOLPET + FLUMETHYLSULFORIM | 300 + 25 | 82.60 | a | 57.35 | 1.44 |
| Folpan 80 WDG + Flumethylsulforim 250 OD | FOLPET + FLUMETHYLSULFORIM | 300 + 35 | 89.10 | a | 72.14 | 1.24 |
| Folpan 80 WDG + Flumethylsulforim 250 OD | FOLPET + FLUMETHYLSULFORIM | 400 + 25 | 88.50 | a | 72.69 | 1.22 |
| Folpan 80 WDG + Flumethylsulforim 250 OD | FOLPET + FLUMETHYLSULFORIM | 400 + 35 | 90.50 | a | 85.51 | 1.06 |

Results show that the mixtures bring an added value in terms of controlling *Ramularia collo-cygni* in barely compared to the use of each fungicide alone. A synergistic effect was observed when a phthalimide is combined with flumethylsulforim at all tested ratios.

EXAMPLE 25

An experiment was conducted in field conditions to evaluate the fungicidal activity of the mixture comprising a morpholine (fenpropidin), and a phthalimide (folpet) toward *Cercospora beticola* in sugarbeet.

The experiment was conducted by applying compositions of fenpropidin (MCW-273 750 EC) and folpet (MCW-296 SC) alone or together in extemporary mix or ready formulation (ADM.1701.F.1.A). The compositions were diluted with water. Application is performed with backpack sprayer.

Treatments:

Folpet 750 gr (A.I.)/ha, SC

Fenpropidin 250 gr (A.I.)/ha, EC

Folpet+Fenpropidin 750+250 gr (A.I.)/ha, SC - ready formulation

Folpet 600 gr (A.I.)/ha, SC + Fenpropidin 200 gr (A.I.)/ha, EC

To test for fungicidal control of *Cercospora beticola,* sugarbeet plants were sprayed with each of the above treatments. The treatments were composed of 4 replicates. The experimental design was a randomized complete block

design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, leaves were examined for symptoms of *Cercospora beticola* and incidence and severity of the disease on leaves was determined. Results, as shown in Table 37 below, are presented as the percentage of control based on severity rating with a maximum of 100%.

Table 37.

| Product Name | AI | Applicat ion rate (gAI/ha) | % control observe d on leaves 10 DAYS after the applicat ion | Sta t | % contro l expect ed | Col by Rat e (o/e) |
|---|---|---|---|---|---|---|
| MCW-296 SC | FOLPET | 750 | 37.50 | | | |
| MCW-273 750 EC | FENPROPI DIN | 250 | 39.58 | | | |
| ADM.1701.F.1.A | FOLPET + FENPROPI DIN | 750 + 250 | 75.42 | | 62.24 | 1.21 |
| MCW-296 SC + MCW-273 750 EC | FOLPET + FENPROPI DIN | 600 + 200 | 68.33 | | | |

Results show that the mixtures bring an added value in terms of controlling *Cercospora beticola* in sugarbeet compared to the use of each fungicide alone. A synergistic effect was observed when a phthalimide is combined with a morpholine. Additionally, extemporary mix of phthalimide and morpholine allowed a decrease in the amount of both active ingredients per hectare providing a level of efficacy higher than the expected one based on the full dose of both the active ingredients.

## EXAMPLE 26

An experiment was conducted in field conditions to evaluate the fungicidal activity of the mixture comprising a DMI (prothioconazole), a SDHI (fluxapyroxad) and a phthalimide (folpet) toward *Ramularia collo-cygni* in barley.

The experiment was conducted by applying compositions of prothioconazole and fluxapyroxad (ADM.03503.F.1.A) and folpet (MCW-296 SC) alone or together in extemporary mix. The compositions were diluted with a water volume equivalent to 250 L/ha. Application was performed with backpack sprayer.

Treatments:

Folpet 375, 500, 750 gr (A.I.)/ha, SC

Prothiconazole + Fluxapyroxad 75+37.5, 105+52.5, 150+75 gr (A.I.)/ha, EC

Folpet 375 gr (A.I.)/ha, SC + Prothiconazole + Fluxapyroxad 75+37.5 gr (A.I.)/ha, EC

Folpet 500 gr (A.I.)/ha, SC + Prothiconazole + Fluxapyroxad 105+52.5 gr (A.I.)/ha, EC

Folpet 750 gr (A.I.)/ha, SC + Prothiconazole + Fluxapyroxad 150+75 gr (A.I.)/ha, EC

To test for fungicidal control of *Ramularia collo-cygni,* barley plants were sprayed with each of the above treatments. The treatments were composed of 4 replicates. The experimental design was a randomized complete block design. Statistically significant differences were assessed with ANOVA followed by Student-Newman-Keuls test with an alpha level of 0.05. Where two means share the same alphabetical notation, they are not significantly different.

Evaluations were performed for the whole duration of the experiment. At each time, leaves were examined for symptoms of *Ramularia collo-cygni* and incidence and severity of the disease on leaves was determined. Results, as shown in Tables 38 and 39 below, are presented as the percentage of control based on severity rating with a maximum of

100%.

Table 38.

| Product Name | AI | Application rate (gAI/ha) | % control observed on leaves 10 DAYS after the application | % control expected | Colby Rate (o/e) |
|---|---|---|---|---|---|
| MCW-296 SC | FOLPET | 375 | 44.5 | | |
| ADM.03503.F.1.A | PROTHIOCONAZOLE + FLUXAPYROXAD | 75+ 37.5 | 22.2 | | |
| MCW-296 SC + ADM.03503.F.1.A | FOLPET + PROTHIOCONAZOLE + FLUXAPYROXAD | 375 + 75+ 37.5 | 74.7 | 56.82 | 1.31 |
| MCW-296 SC | FOLPET | 500 | 47.9 | | |
| ADM.03503.F.1.A | PROTHIOCONAZOLE + FLUXAPYROXAD | 105+ 52.5 | 31.9 | | |
| MCW-296 SC + ADM.03503.F.1.A | FOLPET + PROTHIOCONAZOLE + FLUXAPYROXAD | 500 + 105+ 52.5 | 80.5 | 64.52 | 1.25 |
| MCW-296 SC | FOLPET | 750 | 62.3 | | |
| ADM.03503.F.1.A | PROTHIOCONAZOLE + FLUXAPYROXAD | 150+ 75 | 22.3 | | |
| MCW-296 SC + ADM.03503.F.1.A | FOLPET + PROTHIOCONAZOLE + FLUXAPYROXAD | 750 + 150+ 75 | 94 | 70.71 | 1.33 |

Table 39.

| Product Name | AI | Application rate (gAI/ha) | % green leaf area on leaves 10 DAYS after the application | Stat. |
|---|---|---|---|---|
| Untreated check | | | 21.3 | c |
| MCW-296 SC | FOLPET | 375 | 22.5 | c |
| ADM.03503.F.1.A | PROTHIOCONAZOLE + FLUXAPYROXAD | 75+ 37.5 | 25 | c |
| MCW-296 SC + ADM.03503.F.1.A | FOLPET + PROTHIOCONAZOLE + FLUXAPYROXAD | 375 + 75+ 37.5 | 55 | b |
| MCW-296 SC | FOLPET | 500 | 33.8 | c |
| ADM.03503.F.1.A | PROTHIOCONAZOLE + FLUXAPYROXAD | 105+ 52.5 | 35 | c |
| MCW-296 SC + ADM.03503.F.1.A | FOLPET + PROTHIOCONAZOLE + FLUXAPYROXAD | 500 + 105+ 52.5 | 66.3 | b |
| MCW-296 SC | FOLPET | 750 | 35 | c |
| ADM.03503.F.1.A | PROTHIOCONAZOLE + FLUXAPYROXAD | 150+ 75 | 23.8 | c |
| MCW-296 SC + ADM.03503.F.1.A | FOLPET + PROTHIOCONAZOLE + FLUXAPYROXAD | 750 + 150+ 75 | 80 | a |

Results in the first table show that the mixtures bring an added value in terms of controlling *Ramularia collo-cygni* in barley compared to the use of each fungicide alone. A synergistic effect was observed when a phthalimide is combined with a ready mixture comprising a DMI and a SDHI. Additionally, as reported in the second table, phthalimide mixed with a DMI and a SDHI fungicide allowed a statistically significant increase in the green leaf area granting a wider area of photosynthetic activity for a longer period of time. This normally results in quantitative and qualitative improvement in yield.

Example 27 - Combinations of Folpet and SDHI or DMI Fungicide

*Experimental Protocol*

The effect of folpet on the penetration and translocation (migration) of several SDHIs and a DMI was evaluated in an *in planta* bioassay. The penetration and transloacation (migration) of each SDHI or DMI alone was evaluated to provide a comparison.

Wheat seedlings of a susceptible Septoria leaf blotch cultivar (ALIXAN) were treated with the fungicides. The treatment was by droplets deposition (5 x 0.5 µl) of each product used straight or in 2 way-mixture consists of a localized deposit at 3 cm from the base of the leaf blade of the 1st wheat leaf of a known amount of each formulation complemented or not with folpet in order to assess the penetration of the second active ingredient. Control seedlings were treated with

distilled water. The fungicides were prepared in a volume of water corresponding to 200 l/ha.

Droplets of fungicides were applied onto wheat leaves and were dried by leaving the seedlings for 30 minutes at room temperature.

Wheat seedlings were then placed in climatic chamber: photoperiod of 16 h light/8 h darkness, 23°C day/17°C night and 70% relative humidity (RH).

Four days post treatment (4 dpt), the sheath of the first leave was cut in 2 segments of 3.0-cm each: basal (treated area) and apical (untreated area). The treated basal segments were washed first in sterile distilled water, then in absolute ethanol solution in order to remove all the active ingredient still present at the leaf surface, rinsed 3 times in sterile distilled water, and dried.

Washed treated basal segments and the unwashed untreated apical segments were then transferred in 90-mm Petri dishes, abaxial face up, containing Water Agar supplemented with an anti-senescence compound. For each experimental condition tested, 3 replicates of 6 wheat seedlings were tested.

Each leaf segment was inoculated on the adaxial face with a pycnospores suspension calibrated at $2x10^7$ spores/ml in sterile 0.05% Tween 80 solution of *Zymoseptoria tritici* Tri-R6 strain. The strain used in this trial (of the Tri-R6 family) is moderately resistant to DMI, highly resistant to QoI and sensitive to SDHI).

The inoculated segments were incubated in a climatic chamber: photoperiod of 16 h light/8 h darkness, 20°C day/17°C night and 100% Relative Humidity (RH) for 1 day and then 85% RH.

The fungicide protection and efficacy were evaluated by the determination of the infection intensity (area of the leaf segment infected in % of the total leaf segment area) by Z. *tritici* at 21 and 28 days after inoculation (quantitative criteria). Statistical analysis of the results was carried out by using the XL-STAT (Addinsoft®) software.

*Materials and Rates*

Table 40. List of products used in this study. For each product, the composition is indicated as well as the test item name used in the protocol.

| Products | Formulatio n Type | Composition | Test Item Name |
|---|---|---|---|
| Sesto (Adama) | SC | 500 g/L Folpet | FOLPET |
| Bravo (Syngenta) | SC | 500 g/L Chlorothalonil | CHLOROTHALONI L |
| Kumulus (BASF) | WDG | 800 g/kg Sulphur | SULPHUR |
| Imtrex (BASF) | EC | 62.5 g/L Fluxapyroxad | FLUXAPYROXAD |
| Mirage Max (Adama) | EC | 450 g/L Prochloraz | PROCHLORAZ |
| Vertisan (Corteva) | EC | 200 g/L Penthiopyrad | PENTHIOPYRAD |
| Thore (Bayer) | EC | 125 g/L Bixafen | BIXAFEN |
| Luna Privilege (Bayer) | SC | 500 g/L Fluopyram | FLUOPYRAM |

The experimental protocol is based on a crucial washing step whose role is to remove the active ingredients present at the leaf surface. It is therefore necessary to validate this methodology on formulations containing so-called contact active ingredients.

FOLPET. SULPHUR and CHLOROTHALONIL were used under the conditions described in Table 6. Under these conditions, the residual efficacy observed is very low both 21 and 28 days after inoculation (Table 41 - line 1).

For each condition, no significant difference from the untreated control was observed in both the treated and untreated areas. Under our experimental conditions, it is therefore demonstrated that the observed efficacy cannot be attributed to the contact active ingredient used.

Table 41. Fungicidal efficiencies obtained in treated and untreated areas. The efficacy obtained in each area reflects the penetration and/or translocation (migration) of the systemic active ingredient used as single formulation or associated with the contact a.i. formulation. Efficacy is calculated on symptom severity indices for 12 leaf fragments per condition. Statistical analysis was performed using a Newmann-Keuls (SNK) test at a 5% threshold on severity indices. This analysis is valid per column representing a combination of Area x Time of analysis. 18 repetitions are tested per experimental condition.

| | | 21 days | | 28 days | |
|---|---|---|---|---|---|
| **Formulation 1** | **Formulation 2** | **Treated area** | **Untreated area** | **Treated area** | **Untreated area** |
| - | - | 0%a | 0%a | 0%a | 0%a |
| | FOLPET (1.5 L/ha) | 4.7%a | 7.2%a | 1.5%a | 1.6%a |
| | CHLOROTHAL ONIL (1.0 L/ha) | 4.8%a | 0.4%a | 1.5%a | 0.8%a |
| | SULFUR (3 kg/ha) | 5.0%a | 1.3%a | 2.3%a | 2.7%a |
| **FLUXAPYROX AD (1.0 L/ha)** | **-** | **100%b** | **100%b** | **95.3%c** | **78.4%c** |
| | **FOLPET (1.5 L/ha)** | **100%b** | **100%b** | **91.9%c** | **89.4%d** |
| | **CHLOROTHA LONIL (1.0 L/ha)** | **100%b** | **98.5%b** | **84.1%b** | **63.3%b** |
| | **SULFUR (3 kg/ha)** | **100%b** | **100%b** | **78.5%b** | **54.6%b** |

Considering the values at 28 days in the treated area, it can be observed that the efficacy of the FOLPET + FLUXAPYROXAD combination is not significantly different from that obtained with FLUXAPYROXAD alone (Table 7). On the contrary, FLUXAPYROXAD used alone provides better protection than when used with SULPHUR or CHLOROTHALONIL (Table 7). If we look at the untreated area, we can observe that the efficacy of the FLUXAPYROXAD + FOLPET combination is significantly better than when FLUXAPYROXAD is used alone. Conversely, if SULPHUR or CHLOROTHALONIL are used as partners, the efficacy obtained in this area is significantly less than when FLUXAPYROXAD is used alone or with FOLPET.

These results indicate that FOLPET has a positive influence on the translocation (migration) of the formulated fluxapyroxad while SULPHUR or CHLOROTHALONIL provide a negative effect.

A broader study was carried out on four formulations of different systemic active ingredients: PROCHLORAZ, PENTHIOPYRAD, BIXAFEN, FLUOPYRAM, used under the conditions described in Table 42.

Table 42. Protocol used in this study. For each product, the dose used in this study in L-kg/ha or g a.i./ha (grams of active ingredient per hectare) for a spray volume of 200 L/ha is indicated.

| Test Item Name | Usage Dose |
|---|---|
| FOLPET | 1.5 L/ha (750 g a.i./ha Folpet) |
| CHLOROTHALONIL | 1.0 L/ha (500 g a.i./ha Chlorothalonil) |
| SULPHUR | 3 kg/ha (2400 g a.i./ha Sulfur) |
| PROCHLORAZ | 1.0 L/ha (450 g a.i./ha Prochloraz) |
| PROCHLORAZ + FOLPET | 1.0 + 1.5 L/ha (450 g a.i./ha Prochloraz + 750 g a.i./ha Folpet) |
| PENTHIOPYRAD | 0.3125 L/ha (62.5 g a.i./ha Penthiopyrad) |
| PENTHIOPYRAD + FOLPET | 0.3125 + 1.5 L/ha (62.5 g a.i./ha Penthiopyrad + 750 g a.i./ha Folpet) |
| BIXAFEN | 0.5 L/ha (62.5 g a.i./ha Bixafen) |
| BIXAFEN + FOLPET | 0.5 + 1.5 L/ha (62.5 g s.a./ha Bixafen + 750 g a.i./ha Folpet) |
| FLUOPYRAM | 0.18 L/ha (90 g a.i./ha Fluopyram) |
| FLUOPYRAM + FOLPET | 0.18 + 1.5 L/ha (90 g a.i./ha Fluopyram + 750 g a.i./ha Folpet) |
| FLUXAPYROXAD | 1.0 L/ha (62.5 g a.i./ha Fluxapyroxad) |
| FLUXAPYROXAD + FOLPET | 1.0 L/ha + 1.5 L/ha (62.5 g a.i./ha Fluxapyroxad + 750 g a.i./ha Folpet) |

(continued)

| Test Item Name | Usage Dose |
|---|---|
| CHLOROTHALONIL + FLUXAPYROXAD | 1.0 + 1.0 L/ha (500 g a.i./ha Chlorothalonil + 62.5 g a.i./ha Fluxapyroxad) |
| SULFUR + FLUXAPYROXAD | 3.0 + 1.0 Kg ou L/ha (2400 g a.i./ha Sulphur + 62.5 g a.i./ha Fluxapyroxad) |

In this study, we want to know if FOLPET significantly impacts the effectiveness of the different systemic products tested in each leaf compartment.

The results are presented in Table 43.

**Table 43.** Fungicidal efficacy obtained in the treated and untreated areas. The efficacy obtained in each area reflects the penetration and/or translocation (migration) of the systemic active ingredient associated or not with FOLPET. Efficacy is calculated on symptom severity indices for 12 leaf fragments per condition, statistical analysis was performed using a Newmann-Keuls test at a 5% threshold on severity indices, this analysis is valid per column representing a combination of Zone x Analysis Time. 18 repetitions are tested per experimental condition.

| | | 21 days | | 28 days | |
|---|---|---|---|---|---|
| **Formulation 1** | **Formulation 2** | **Treated area** | **Untreated area** | **Treated area** | **Untreated area** |
| - | - | 0%a | 0%ab | 0%a | 0%a |
| PROCHLORAZ (1.0 L/ha) | - | 37.5%bc | 7.9%abc | 32.6%bc | 5.6%a |
| | FOLPET (1.5 L/ha) | 45.2%c | 22.0%de | 49.8%cd | 12.9%b |
| PENTHIOPYRAD (0.3125 L/ha) | - | 94.0%e | 34.4%ef | 29.2%bc | 7.0%a |
| | FOLPET (1.5 L/ha) | 86.2%e | 46.0%f | 54.5%d | 39.9%c |
| BIXAFEN (0.5 L/ha) | - | 63.5%d | 0.2%a | 27.9%b | 5.1%a |
| | FOLPET (1.5 L/ha) | 81.3%e | 30.2%de | 50.1%cd | 31.6%bc |
| FLUOPYRAM (0.18 L/ha) | - | 27.4%b | 11.3%bc | 35.2%bcd | 27.3%bc |
| | FOLPET (1.5 L/ha) | 45.6%c | 17.2%cd | 49.2%cd | 25.2%b |

BIXAFEN used with FOLPET had a greatly improved efficacy in all the conditions tested compared to its use alone. This beneficial effect is all the more significant as BIXAFEN formulation alone is incapable of protecting the areas not treated under the conditions of the study.

PROCHLORAZ presented a significant positive effect of FOLPET on the efficacy in the untreated area. The effectiveness in the treated area is numerically appreciated but not significantly improved.

FLUOPYRAM displayed efficacy gains in the treated areas when used in mixture with FOLPET. This effect is not statistically significant in untreated areas.

With PENTHIOPYRAD, a significant effect was observed only for the 28-day timing for the two areas considered.

The influence of the strain used was homogeneous for all conditions of the same active ingredient. Indeed, it is the relative comparison between "with/without FOLPET" that interests us and not the absolute efficiencies that serve as a marker. It is therefore highly likely that the interpretations associated with the penetration effect can be extrapolated whatever the type of strain used.

Translocation (migration) and penetration of an active ingredient are strongly connected. It is necessary to obtain a balance between these two parameters in order to have a homogeneous tissue distribution of the active ingredient. The effectiveness in the treated area is governed by the quantity of active ingredient present in the tissue, which is regulated by the entry via penetration but also the exit from this area via translocation (migration).

These results indicate that the effect of FOLPET has a positive impact on the penetration and translocation (migration) of the partner measured in this experiment as an increased efficacy.

Example 28 - Combinations of Folpet and QoI Fungicide

*Experimental Protocol*

The effect of folpet on the penetration and translocation (migration) of several QoIs is evaluated in an *in planta* bioassay. The penetration and translocation (migration) of each QoI alone is evaluated to provide a comparison.

Wheat seedlings of a susceptible Septoria leaf blotch cultivar (ALIXAN) is treated with the fungicides. The treatment is by droplets deposition (5 x 0.5 μl) of each product used straight or in 2 way-mixture consists of a localized deposit at 3 cm from the base of the leaf blade of the 1st wheat leaf of a known amount of each formulation complemented or not with folpet in order to assess the penetration and translocation (migration) of the second active ingredient. Control seedlings are treated with distilled water. The fungicides are prepared in a volume of water corresponding to 200 1/ha.

Droplets of fungicides are applied onto wheat leaves and are dried by leaving the seedlings for 30 minutes at room temperature.

Wheat seedlings are then placed in climatic chamber: photoperiod of 16 h light/8 h darkness, 23°C day/17°C night and 70% relative humidity (RH).

Four days post treatment (4 dpt), the sheath of the first leave is cut in 2 segments of 3.0-cm each: basal (treated area) and apical (untreated area). The treated basal segments are washed first in sterile distilled water, then in absolute ethanol solution in order to remove all the active ingredient still present at the leaf surface, rinsed 3 times in sterile distilled water, and dried.

Washed treated basal segments and the unwashed untreated apical segments are then transferred in 90-mm Petri dishes, abaxial face up, containing Water Agar supplemented with an anti-senescence compound. For each experimental condition tested, 3 replicates of 6 wheat seedlings are tested.

Each leaf segment is inoculated on the adaxial face with a pycnospores suspension calibrated at $2x10^7$ spores/ml in sterile 0.05% Tween 80 solution of *Zymoseptoria tritici.*

The inoculated segments are incubated in a climatic chamber: photoperiod of 16 h light/8 h darkness, 20°C day/17°C night and 100% Relative Humidity (RH) for 1 day and then 85% RH.

The fungicide protection and effectiveness are evaluated by the determination of the infection intensity (area of the leaf segment infected in % of the total leaf segment area) by Z. *tritici* at 21 and 28 days after inoculation (quantitative criteria). Statistical analysis of the results is carried out by using the XL-STAT (Addinsoft®) software.

*Materials and Rates*

Table 44. List of products for use in this study. For each product, the composition is indicated as well as the test item name for the protocol.

| Products | Formulation Type | Composition | Test Item Name |
|---|---|---|---|
| Sesto (Adama) | SC | 500 g/L Folpet | FOLPET |
| Kumulus (BASF) | WDG | 800 g/kg Sulphur | SULPHUR |
| Amistar (Syngenta) | SC | 250 g/L Azoxystrobin | AZOXYSTROBIN |
| Drake | WDG | 500 g/L Trifloxystrobin | TRIFLOXYSTROBIN |
| Comet 200 (BASF) | EC | 200 g/L Pyraclostrobin | PYRACLOSTROBIN |

The experimental protocol is based on a crucial washing step whose role is to remove the active ingredients present at the leaf surface. It is therefore necessary to validate this methodology on formulations containing so-called contact active ingredients.

FOLPET, SULPHUR and CHLOROTHALONIL are used under the conditions described in Table 10. For each condition, no significant difference from the untreated control is observed in both the treated and untreated areas.

A broader study is carried out on three formulations of QoI fungicides: AZOXYSTROBIN, TRIFLOXYSTROBIN, and PYRACLOSTROBIN, used under the conditions described in Table 45.

Table 45. Protocol for use in this study. For each product, the dose for use in this study in L-kg/ha or g a.i./ha (grams of active ingredient per hectare) for a spray volume of 200 L/ha is indicated.

| Test Item Name | Usage Dose |
|---|---|
| FOLPET | 1.5 kg/ha (750 g a.i./ha Folpet) |
| AZOXYSTROBIN | 1 L/ha (250 g a.i./ha Azoxystrobin) |

(continued)

| Test Item Name | Usage Dose |
|---|---|
| AZOXYSTROBIN | 0.6 L/ha (150 g a.i./ha Azoxystrobin) |
| TRIFLOXYSTROBIN | 0.25 kg/ha (125 g a.i./ha Trifloxystrobin) |
| PYRACLOSTROBIN | 1 L/ha (200 g a.i./ha Pyralostrobin) |
| FOLPET + AZOXYSTROBIN | 1.5 kg/ha + 1 L/ha (750 g a.i./ha Folpet + 250 g a.i./ha Azoxystrobin) |
| FOLPET + AZOXYSTROBIN | 1.5 kg/ha + 0.6 L/ha (750 g a.i./ha Folpet + 150 g a.i./ha Azoxystrobin) |
| FOLPET + TRIFLOXYSTROBIN | 1.5 kg/ha +0.25 kg/ha (750 g a.i./ha Folpet+ 125 g a.i./ha Trifloxystrobin) |
| FOLPET + PYRACLOSTROBIN | 1.5 kg/ha + 1 L/ha (750 g a.i./ha Folpet + 200 g a.i./ha Pyralostrobin) |

AZOXYSTROBIN at 1 L/ha with FOLPET shows increased efficacy. AZOXYSTROBIN at 1 L/ha with FOLPET shows increased penetration. AZOXYSTROBIN at 1 L/ha with FOLPET shows increased translocation (migration).

AZOXYSTROBIN at 0.6 L/ha with FOLPET shows increased efficacy. AZOXYSTROBIN at 0.6 L/ha with FOLPET shows increased penetration. AZOXYSTROBIN at 0.6 L/ha with FOLPET shows increased translocation (migration).

TRIFLOXYSTROBIN with FOLPET shows increased efficacy. TRIFLOXYSTROBIN with FOLPET shows increased penetration. TRIFLOXYSTROBIN with FOLPET shows increased translocation (migration).

PYRACLOSTROBIN with FOLPET shows increased efficacy. PYRACLOSTROBIN with FOLPET shows increased penetration. PYRACLOSTROBIN with FOLPET shows increased translocation (migration).

EXAMPLE 29

An experiment is conducted in controlled conditions under a greenhouse to evaluate the fungicidal activity of the mixture comprising a fluoro-pyrimidinone (flumethylsulforim, 5-fluoro-4-imino-3-methyl-1-tosyl-3,4-dihydropyrimidin-2(I-H)-one), and phthalimides (folpet) toward Plasmopara viticola in grapevine seedlings, variety Barbera.

The experiment is conducted by applying compositions of flumethylsulforim (flumethylsulforim 250 OD) and folpet (Folpan 80 WDG®) alone or together. The compositions are diluted with water. Water amount is equivalent to 250 L/ha. Application is performed in an automatic spraying cabin equipped with 2 flatfan AI11003VS nozzles. The flumethylsulforim 250 OD composition is shown in Table 22 of Example 12.

*Treatments:*

Folpet 300, 600 gr (A.I.)/ha

flumethylsulforim 50. 75 gr (A.I.)/ha

Folpet 300 gr (A.I.)/ha + flumethylsulforim 50 gr (A.I.)/ha

Folpet 300 gr (A.I.)/ha + flumethylsulforim 75 gr (A.I.)/ha

Folpet 600 gr (A.I.)/ha + flumethylsulforim 50 gr (A.I.)/ha

Folpet 600 gr (A.I.)/ha + flumethylsulforim 75 gr (A.I.)/ha

To test for fungicidal control of Plasmopora viticola, grapevine plants are sprayed when 3 to 5 neoformed leaves are present with each of the above treatments. Each of the above treatments is applied once at 1 day before artificial inoculation with a suspension of 106 cfu/ml of Plasmopora viticola spores. The treatments are composed of 4 replicates. The experimental design is a randomized complete block design. Statistically significant differences are assessed with ANOVA followed by Student-Newman-Keuls test with an alpha level of 0.05. Where two means share the same alphabetical notation, they are not significantly different.

Evaluations are performed for the whole duration of the experiment. At each time, 5 leaves per plot are examined for symptoms of Plasmopara viticola and incidence and severity of the disease on leaves is determined. Results are presented as the percentage of control based on severity rating with a maximum of 100%.

Results show that the mixtures bring an added value in terms of controlling Plasmopara viticola in grapevine seedlings compared to the use of each fungicide alone. **In** particular, there is a synergistic effect when a fungicide belonging to the phthalimides is mixed with one belonging to the fluoro-pyrimidinone. A phthalimide fungicide applied in mixture with a fluoro-pyrimidinone fungicide provides overtime a longer control of the disease compared to the solo active ingredients applied at the same amount per hectare.

The present invention is further defined by the following items:

1. A method of treating a plant or locus against fungal infection comprising applying a combination of an amount of a phthalimide fungicide and an amount of a primary fungicide to the plant or locus so as to thereby treat the plant or locus against fungal infection, wherein:

(i) the method is more effective against fungal infection than when the amount of the phthalimide fungicide and the amount of a primary fungicide are applied alone, and/or
(ii) the amount of the phthalimide fungicide improves the fungicidal efficacy of the amount of the primary fungicide compared to when the same amount of the primary fungicide is applied not in combination with the amount of the phthalimide fungicide.

2. The method of item 1, wherein the amount of the phthalimide fungicide improves the fungicidal efficacy of the amount of the primary fungicide in a treated area of the plant and/or in an untreated area of the plant.
3. The method of item 1 or 2, wherein:

a. the amount of the phthalimide fungicide is effective to increase sensitivity of the fungus to the primary fungicide compared to the sensitivity of the fungus to the primary fungicide when it is applied not in combination with the amount of the phthalimide fungicide, and/or
b. the amount of the phthalimide fungicide is effective to increase bioavailability of the amount of the primary fungicide compared to the bioavailability of the amount of the primary fungicide when it is applied not in combination with the amount of the phthalimide fungicide,

so as to thereby improve the fungicidal efficacy of the amount of the primary fungicide.
4. The method of item 3, wherein increasing bioavailability comprises increasing penetration of the primary fungicide into the plant and/or increasing translation of the primary fungicide inside the plant.
5. The method of any one of items 1-4, wherein treating a plant or soil against fungal infection comprises:

a. inhibiting fungal mycelium formation,
b. combating phytopathogenic diseases on the plant or locus,
c. protecting the plant or locus from fungal attack,
d. preventing fungal infection of the plant or locus,
e. controlling fungal disease affecting the plant or locus,
f. controlling a fungal pathogen, a fungal pathogen group or a fungal pathogen class affecting the plant or locus, and/or
g. reducing fungal infection of the plant or locus.

6. The method of any one of items 1-5, wherein treating a plant or soil against fungal infection comprises inhibiting fungal mycelium formation.
7. The method of any one of items 1-6, wherein the method is effective for:

a. prolonging the period of protection against fungal infection and/or control of fungal infection, and/or
b. reducing the amount of time needed to achieve a level of fungal control,

compared to when the amount of the phthalimide fungicide and the amount of a primary fungicide are applied alone.
8. The method of any one of items 1-7, wherein the method is effective for improving plant development compared to the development of a plant affected by the same type and degree of fungal infection to which the combination is not applied.
9. The method of item 8, wherein improving plant development comprises enhancing the root systems, enhancing shoot of the plant, enhancing plant vigor, enhancing greening effect on leaves and/or enhancing plant potential yield.
10. The method of item 8 or 9, wherein improving plant development comprises enhancing greening effect on leaves.
11. The method of any one of items 1-10, wherein the amount of the phthalimide fungicide applied is less than the fungicidally effective amount of the phthalimide fungicide when the phthalimide fungicide is applied alone.

12. The method of any one of items 1-11, wherein the amount of the primary fungicide applied is less than the fungicidally effective amount of the primary fungicide when the primary fungicide is applied alone.
13. The method of any one of items 1-12, wherein the phthalimide fungicide is selected from the group consisting of captan, folpet, captafol, and any combination thereof.
14. The method of any one of items 1-13, wherein the primary fungicide is fungicide (A) selected from the group consisting of multi-site contact fungicide, QiI fungicide (quinone inside inhibitors), QoI fungicide (quinone outside inhibitors), QoSI fungicide (quinone outside stigmatellin subsite inhibitors), SDHI fungicide (succinate dehydrogenase inhibitors), demethylation inhibitor fungicide, phenyl amide fungicide, methyl-benzimidazole-carbamate (MBC) fungicide, carboxylic acid amide fungicide, benzamide fungicide, natural fungicide, anilinopyrimidine fungicide, hydroxy-(2-amino)-pyrimidines fungicide, phosphonate fungicide, plant extract fungicide, keto-reductase inhibitor fungicide, phenylpyrrole fungicide (PP), aryl phenyl-ketone fungicide, amine fungicide, dinitro aniline fungicide, azanaphthalene fungicide, benzothiadiazole fungicide, carbamate fungicide, cyanoacetamideoxime fungicide, dinitrophenyl-crotonate fungicide, glucopyranosyl antibiotic fungicide, tetrazolyloxime fungicide, thiazolidine fungicide, oxysterol binding protein inhibitor (OSBPI) fungicide, thiophenecarboxamide fungicide, phenylacetamide fungicide, phenyl urea fungicide, polyene fungicide, pyr-hydrazone fungicide, pyrimidinamine fungicide, pyrimidinone fungicide, fungicide (B) and any combination thereof.
15. The method of item 14, wherein:

a. the multi-site contact fungicide is selected from the group consisting of thiocarbamate, maleimide, quinoxalines, quinones, triazines, bis-guanidines, sulfamides, chloronitriles, dithio-carbamates, inorganic fungicide and any combination thereof,
b. the QiI (quinone inside inhibitors) is selected from the group consisting of amisulbrom, cyazofamid, fenpicoxamid and any combination thereof,
c. the QoI (quinone outside inhibitors) is selected from the group consisting of azoxystrobin, kresoxim-methyl, picoxystrobin, fluxastrobin, dimoxystrobin, pyraclostrobin, trifloxystrobin, coumoxystrobin, fenaminstrobin, pyrametostrobin, triclopyricarb, pyribencarb, pyraoxystrobin, metyltetraprole, mandestrobin, famoxadone, oryzastrobin, enoxastrobin, pyraclostrobin, fluoxastrobin, flufenostrin, flufenoxystrobin, metominostrobin, triclopyricarb; pyriminostrobin, florylpicoxamid, and any combination thereof,
d. the QoSI (quinone outside stigmatellin inhibitors) is ametoctradin,
e. the SDHI (succinate dehydrogenase inhibitors) fungicide is selected from the group consisting of fluxapyroxad, penflufen, bixafen, isopyrazam, sedaxane, benzovindiflupyr, thifluzamide, isofetamid, fluopyram, pydiflumetofen, pyraziflumid, flutolanil, carboxin, boscalid, fluindapyr, penthiopyrad, isoflucypram inpyrfluxam, furametpyr, benodanil, mepronil, fenfuram, oxycarboxin, pyrapropoyne, flubeneteram, quinofumelin and any combination thereof,
f. the demethylation inhibitor fungicide (DMI fungicide) is selected from the group consisting of ipconazole, tebuconazole, metconazole, fenbuconazole, bromuconazole, tetraconazole, flutriafol, penconazole, difenoconazole, prothioconazole, epoxiconazole, mefentrifluconazole, triticonazole, imazalil, prochloraz, lobutanil, azaconazole, etaconazole, bitertanol, fluquinconazole, myclobutanil, flusilazole, cyproconazole, triadimenol, hexaconazole, simeconazole, imibenconazole, diniconazole, pyrisoxazole and any combination thereof,
g. the phenyl amide fungicide is selected from the group consisting of benalaxyl, metalaxyl, kiralaxyl, mefenoxan, metalaxyl-M and any combination thereof,
h. the OSBPI fungicide is selected from the group consisting of fluoxapiprolin, oxathiapiprolin and a combination thereof,
i. the MBC fungicide is selected from the group consisting of carbendazim, thiabendazole, thiophanate-methyl and a combination thereof,
j. the keto-reductase inhibitor fungicide is selected from the group consisting of fenhexamid, fenpyrazamine and a combination thereof,
k. the carboxylic acid amide fungicide is selected from the group consisting of benthiavalicarb, dimethomorph, iprovalicard, mandipropamid, valifenalate and any combination thereof,
l. the benzamide fungicide is selected from the group consisting of fluopicolide, fluopimomide, zoxamide and any combination thereof,
m. the phenylpyrrole fungicide is selected from the group consisting of fludioxonil, fenpiclonil and a combination thereof,
n. the aryl phenyl-ketone fungicide is selected from the group consisting of metrafenone, pyriofenone and any combination thereof,
o. the amine fungicide is selected from the group consisting of fenpropidin, spiroxamine and any combination thereof,
p. the dinitro aniline fungicide is selected from the group consisting of fluazinam, 2, 6- dinitro-aniline fungicide, and

a combination thereof,
q. the azanaphthalene fungicide is proquinazid,
r. the benzothiadiazole fungicide is acibenzolar-S-methyl,
s. the carbamate fungicide is selected from the group consisting of propamocarb, iodocarb, prothiocarb and any combination thereof,
t. the cyanoacetamideoxime fungicide is cymoxanil,
u. the dinitrophenyl-crotonate fungicide is meptyldinocap,
v. the glucopyranosyl antibiotic fungicide is validamycin,
w. the tetrazolyloxime fungicide is picarbutrazox,
x. the thiazolidine fungicide is flutianil,
y. the thiophenecarboxamide fungicide is silthiofam,
z. the natural fungicide is laminarin,
aa. the phenylacetamide fungicide is cyflufenamide,
bb. the phenyl urea fungicide is pencycuron,
cc. the polyene fungicide is natamycin,
dd. the pyr-hydrazone fungicide is ferimzone,
ee. the pyrimidinamine fungicide is diflumetorim,
ff. the anilinopyrimidine fungicide is selected from the group consisting of cyprodinil, mepanipyrim, pyrimethanil and any combination thereof,
gg. the hydroxy-(2-amino)-pyrimidines fungicide is selected from the group consisting of bupirimate, dimethirimol, ethirimol and any combination thereof,
hh. the fungicide (B) is selected from the group consisting of tebufloquin, tolprocarb, dichlobentiazox, aminopyrifen, dipymetitrone and any combination thereof,
ii. the phosphonate fungicide is selected from the group consisting of fosetyl-Al, K-phosphonate, phosphorous acid and salts thereof and any combination thereof,
jj. the plant extract fungicide is selected from the group consisting of a fungicide extracted from Melaleuca alternifolia, a fungicide extracted from Swinglea glutinosa, a fungicide extracted Reynoutria sachalinensis, a fungicide extracted from cotyledons of lupine plantlets, a fungicide extracted from plant oil(s), and any combination thereof, and/or
kk. the pyrimidinone fungicide is a fluoropyrimidinone fungicide, preferably 5-fluoro-4-imino-3-methyl-1-tosyl-3,4-dihydropyrimidin-2(1H)-one of the Formula I

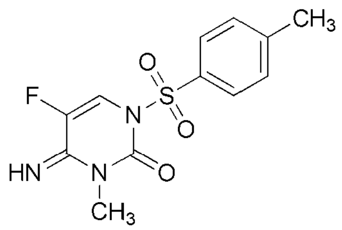

Formula I

16. The method of any one of items 1-15, wherein the combination comprises a phthalimide fungicide and a primary fungicide selected from the group consisting of mefentrifluconazole, difenoconazole, prothioconazole, tebuconazole, dimethomorph, mandipropamide, valifenalate, mandestrobin, metyltetraprole, azoxystrobin, pyraclostrobin, pydiflumetofen, bixafen, fluindapyr, flutolanil, inpyrfluxam, isoflucypram, isopyrazam, penflufen, penthiopyrad, pyraziflumid, sedaxane, thifluzamide, benzovindiflupyr, boscalid, fluopyram, fluxapyroxad, isofetamid, spiroxamine, carbendazim, thiophanate-methyl, kiralaxyl, fenpicoxamid, amisulbrom, ametoctradin, fludioxonil, K-phosphonate, fluopicolide, sulphur, a plant extract fungicide extracted from Melaleuca alternifolia, a plant extract fungicide extracted from Reynoutria sachalinensis, a plant extract fungicide extracted from Swinglea glutinosa, a plant extract fungicide extracted from the cotyledons of lupine plantlets, fluazinam, propamocarb, picarbutrazox, cyprodinil, metrafenone, cyflufenamid, fenhexamid, laminarin, oxathiapiprolin, fluoxapiprolin, pencycuron, natamycin, fenpropidin, imazalil, prochloraz, fosetyl-Al, mefenoxam, zoxamide, cymoxanil, a plant extracted fungicide extracted from plant oils, and any combination thereof.
17. The method of any one of items 1-16, wherein the combination comprises two primary fungicides.
18. The method of item 17, wherein the two primary fungicides are selected from the group consisting of:

a. an amines fungicide and a cyanoacetamideoxime fungicide,
b. an amines fungicide and a plant extract fungicide,
c. an anilinopyrimidines fungicide and a cyanoacetamideoxime fungicide,
d. an anilinopyrimidines fungicide and a amines fungicide,
e. an anilinopyrimidines fungicide and a plant extracted fungicide,
f. a benzamides fungicide and a QoI fungicide,
g. a benzamides fungicide and a plant extract fungicide,
h. a benzamides fungicide and an anilinopyrimidines fungicide,
i. a benzamides fungicide and an amines fungicide,
j. a benzamides fungicide and a cyanoacetamideoxime fungicide,
k. a phosphonate fungicide and a cyanoacetamideoxime fungicide,
l. a CAA fungicide and an amines fungicide,
m. a CAA fungicide and a phosphonates fungicide,
n. a CAA fungicide and a cyanoacetamideoxime fungicide,
o. a CAA fungicide and an anilinopyrimidines fungicide,
p. a CAA fungicide and a plant extract fungicide,
q. a CAA fungicide and a benzamides fungicide,
r. a CAA fungicide and a QoI ,
s. a DMI fungicide and a QoI fungicide,
t. a DMI fungicide and a cyanoacetamideoxime fungicide,
u. a DMI fungicide and a CAA fungicide,
v. a DMI fungicide and a benzamides fungicide,
w. a DMI fungicide and a plant extract fungicide,
x. a DMI fungicide and an anilinopyrimidines fungicide,
y. a DMI fungicide and an amines fungicide,
z. an SDHI fungicide and an amines fungicide,
aa. a QoI fungicide and a amines fungicide,
bb. a phenyl amide fungicide and a DMI fungicide,
cc. a phenyl amide fungicide and a CAA fungicide
dd. a phenylpyrrole fungicide and a QoI fungicide,
ee. a phenylpyrrole fungicide and a DMI fungicide,
ff. a phenylpyrrole fungicide and a SDHI fungicide,
gg. a phenylpyrrole fungicide and a MBC fungicide,
hh. a QoI fungicide and a plant extract fungicide,
ii. a QoI fungicide and an anilinopyrimidines fungicide,
jj. a QoI fungicide and an amine fungicide,
kk. a QoI fungicide and a cyanoacetamideoxime fungicide,
11. a SDHI fungicide and a cyanoacetamideoxime fungicide,
mm. an amine fungicide and an SDHI fungicide,
nn. an amine fungicide and a QoI fungicide,
oo. a SDHI fungicide and an amine fungicide,
pp. an SDHI fungicide and an anilinopyrimidines fungicide,
qq. an SDHI fungicide and a benzamides fungicide,
rr. an SDHI fungicide and a DMI fungicide,
ss. an SDHI fungicide and a plant extract fungicide,
tt. an SDHI fungicide and a CAA fungicide,
uu. an SDHI fungicide and a QoI fungicide,
vv. an SDHI fungicide and a phenylpyrrole fungicide,
ww. a phenylpyrrole fungicide and a phenyl amide fungicide,
xx. a phenylpyrrole fungicide and a QoI fungicide,
yy. an SDHI fungicide and a DMI fungicide,
zz. an SDHI fungicide and a phenylpyrrole fungicide,
aaa. an SDHI fungicide and a QoI fungicide, and
bbb. a MBC fungicide and a phenyl amide fungicide.

19. The method of item 17 or 18, wherein the two primary fungicides are selected from a group consisting of:

a. fenpropidin and an SDHI fungicide,

b. fenpropidin and a QoI fungicide,
c. thiophanate-methyl and kiralaxyl,
d. prothioconazole and azoxystrobin,
e. difenoconazole and pyraclostrobin,
f. dimethomorph and fosetyl-Al,
g. fluxapyroxad and picoxystrobin,
h. fluxapyroxad and prothioconazole, and
i. fosetyl-Al and cymoxanil.

20. The method of any one of items 1-16, wherein the combination comprises three primary fungicides.
21. The method of item 20, wherein the three primary fungicides are selected from a group consisting of:

a. an SDHI fungicide, a phenylpyrrole fungicide and a QoI fungicide,
b. an SDHI fungicide, a DMI fungicide and a QoI fungicide, and
c. an SDHI fungicide, a phenylpyrrole fungicide and a QoI fungicide.

22. The method of any one of items 1-16, wherein the combination comprises four primary fungicides.
23. The method of item 22, wherein the four primary fungicides are an SDHI fungicide, a DMI fungicide, a QoI fungicide and a phenyl amides fungicide.
24. The method of any one of items 1-13, wherein the primary fungicide is fungicide I and fungicide I is selected from the group consisting of succinate dehydrogenase inhibitor (SDHI) fungicides, demethylation inhibitor (DMI) fungicides, quinone outside inhibitor (QoI) fungicides, and any combination thereof.
25. The method of item 24, wherein fungicide I is selected from the group consisting of fluxapyroxad, bixafen, prochloraz, mefentrifluconazole, azoxystrobin, fluopyram, penthiopyrad, and any combination thereof.
26. The method of item 24 or 25, wherein the phthalimide fungicide is folpet and fungicide I is selected from the group consisting of fluopyram, fluxapyroxad, bixafen, penthiopyrad, prochloraz, mefentrifluconazole, and azoxystrobin.
27. The method of any one of items 1-26, wherein the weight ratio between the total amount of the phthalimide fungicide(s) to the total amount of the primary fungicide(s) is from 150:1 to 1:150.
28. The method of any one of items 1-26, wherein the weight ratio between the total amount of the phthalimide fungicide(s) to the total amount of the primary fungicide(s) is from 100:1 to 1:100, 50:1 to 1:50, 20:1 to 1:20, 10:1 to 1:10, 5:1 to 1:5 or 2:1 to 1:2.
29. The method of any one of items 1-28, wherein:

a. the phthalimide fungicide(s) and primary fungicide(s) are applied together,
b. the phthalimide fungicide(s) and primary fungicide(s) are applied separately,
c. the phthalimide fungicide(s) and primary fungicide(s) are applied simultaneously,
d. the phthalimide fungicide(s) and primary fungicide(s) are applied contemporaneously, or
e. the phthalimide fungicide(s) and primary fungicide(s) are applied successively.

30. The method of any one of items 1-29, wherein the phthalimide fungicide(s) and primary fungicide(s) are applied as a soil application, as a foliar application, as seed treatment and any combination thereof.
31. The method of any one of items 1-30, wherein the phthalimide fungicide(s) and primary fungicide(s) are applied as curative treatment, preventive treatment, persistence treatment and any combination thereof.
32. The method of any one of items 1-31, wherein the combination is applied at a rate from 0.1 g a.i./ha to 10000 g a.i./ha.
33. The method of any one of items 1-32, wherein the phthalimide fungicide(s) is applied at a rate between 10-400 g a.i./ha.
34. The method of any one of items 1-33, wherein the primary fungicide(s) is applied at a rate of 100-2000 g a.i./ha.
35. The method of any one of items 1-30, wherein the phthalimide fungicide(s) and primary fungicide(s) are applied as seed treatment and the application rate is between 2g per 100kg to 400 g per 100 kg of seed.
36. The method of any one of items 1-35, wherein the plant is wheat, rye, barley, triticale, oat, sorghum, rice, corn, vegetables, fruit trees, grapes, citrus fruit, soft berries, banana, potatoes, tobacco, cotton, soybean, oilseed rape, sunflower, peanuts, coffee, legumes, sugar beet, or sugar cane.
37. The method of item 36, wherein:

a. the vegetable is selected from the group consisting of tomatoes, peppers, cucurbits, cabbage, broccoli, lettuce, spinach, cauliflower, melon, watermelon, cucumbers, carrots and onions,
b. the fruit tree is selected from the group consisting of walnuts, hazelnut, pistachios, cocoa, kiwi, berries, olive,

almonds, pineapples, apples, pears, plums, peaches, apricots and cherries,
c. the citrus fruit is selected from the group consisting of such as oranges, lemons, grapefruits and limes,
d. the soft berry is selected from the group consisting of strawberry, blueberry, raspberry, blackberry and goose berry, and
e. the legume is selected from the group consisting of peas, beans, lentils and chickpeas.

38. The method of any one of items 1-37, wherein the fungal pathogen is one or more of Alternaria species on vegetables, oilseed rape, sugar beet and rice, such as, A. *solani* in tomatoes or A. *cucumerina* in cucumber or melon; Aphanomyces species on sugar beet and vegetables; Ascochyta species on cereals, legumes and vegetables; Bipolaris and Drechslera species on corn, cereals, rice and lawns, for example, *D. maydis* on corn; *Blumeria graminis* (powdery mildew) on cereals; *Botrytis cinerea* (gray mold) on strawberries, vegetables and flowers or *B. aclada* on onion; *Bremia lactucae* on lettuce; Cercospora species on corn, soybeans, rice, sugar beet and coffee as C. *beticola* in sugarbeet or C. *kikuchii* in soybean; Cladosporium species on several crops; *Claviceps purpurea* on rye; Cochliobolus species on corn, cereals, rice, for example *Cochliobolus sativus* on cereals, *Cochliobolus miyabeanus* on rice; Colletotricum species on vegetables, soybeans and cotton, such as *Colletotrichum truncatum* in pepper and soybean; Drechslera species and Pyrenophora species on corn, cereals, rice and lawns, for example, *D. teres* on barley or *D. tritici-repentis* on wheat; Esca on grapevines, caused by *Phaeoacremonium chlamydosporum, P. Aleophilum* and *Fomitiporia punctata* (syn. *Phellinus punctatus*), Exserohilum species on corn; *Erysiphe cichoracearum* and *Sphaerotheca fuliginea* on cucumbers; Fusarium and Verticillium species on various plants, for example, *Fusarium graminearum* or *Fusarium culmorum* on cereals or *F. oxysporum* on a multitude of plants, such as, for example, tomatoes; *Gaeumannomyces graminis* on cereals; Gibberella species on cereals and rice (for example *Gibberella fujikuroi* on rice); Grainstaining complex on rice; Helminthosporium species on corn and rice; *Hemileia vastatrix* on coffee; *Microdochium nivale* on cereals; Mycosphaerella species on several crops, for example, *M. brassicicola* on brassicas; *Parastagonospora nodorum* on cereals; Peronospora species on cabbages, legumes and bulbous plants, for example, *P. brassicae* on cabbage or *P. destructor* on onions; *Phakopsora pachyrhizi* and *Phakopsora meibomiae* on soybeans; Phoma species on soybean, cucurbits, tomato and brassicas; Phomopsis species on soybeans, sunflowers and grapes; *Phytophthora infestans* on potatoes and tomatoes; Phytophthora species on various plants, for example, *P. capsici* on bell pepper, *P. citrophthora* and *P. citricola* in citrus; *Plasmopara viticola* on grapevines; Pleosporales on various plants, for example, *Pleospora herharum* in alfalfa, tomato and chickpeas; *Pseudocercosporella herpotrichoides* on cereals; Pseudoperonospora on various plants, for example, *P. cubensis* on cucumber or *P. humili* on hops; *Pyricularia oryzae, Corticium sasakii, Sarocladium oryzae, S. attenuatum, Entyloma oryzae* on rice; *Pyricularia grisea* on lawns and cereals; *Pythium* spp. on lawns, rice, corn, cotton, oilseed rape, sunflowers, sugar beet, vegetables and other plants, for example, *P. ultimum* on various plants, *P. aphanidermatum* on lawns; Ramularia species on cereals, barley and cotton, for example, *Ramularia collo-cygni* on barley and *Ramularia areola* on cotton; Rhizoctonia species on cotton, rice, potatoes, lawns, corn, oilseed rape, sugar beet, vegetables and on various plants, for example, *R. solani* on beet and various plants; *Rhynchosporium secalis* on barley, rye and triticale; Sclerotinia species on oilseed rape, sunflowers and lettuce; Septoria species on several crops as *S. lactucae* in lettuce; Erysiphe species on wheat such as *Erysiphe graminis; Erysiphe* (syn. *Uncinula*) *necator* on grapevines; Setosphaeria species on corn and lawns; *Sphacelotheca reiliana* on corn; Thielaviopsis species on soybeans and cotton; Tilletia species on cereals; Ustilago species on cereals, corn and sugar cane, for example, *U. maydis* on corn.
39. An improved combination comprising an amount of a primary fungicide and an amount of a phthalimide fungicide.
40. The combination of item 39, wherein the combination is an improved combination in that:

a. it is synergistic,
b. the amount of the phthalimide fungicide improves the fungicidal efficacy of the amount of the primary fungicide compared to when the same amount of the primary fungicide is applied not in combination with the amount of the phthalimide fungicide,
c. a substantially similar level of fungicidal efficacy is achieved by using a lesser amount of the phthalimide fungicide and/or the primary fungicide,
d. the amount of the phthalimide fungicide is effective to increase sensitivity of the fungus to the amount of the primary fungicide compared to the sensitivity of the fungus to the amount of the primary fungicide when it is applied not in combination with the amount of the phthalimide fungicide,
e. the amount of the phthalimide fungicide is effective to increase bioavailability of the amount of the primary fungicide compared to the bioavailability of the amount of the primary fungicide when it is applied not in combination with the amount of the phthalimide fungicide,
f. the combination is more effective in treating the plant or locus against fungal infection than when each fungicide at the same amount is applied alone,
g. the combination prolongs the period of protection against fungal infection and/or control of fungal infection than

when the amount of the phthalimide fungicide and the amount of a primary fungicide are applied alone,
h. the combination reduces the amount of time needed to achieve a level of fungal control than when the amount of the phthalimide fungicide and the amount of a primary fungicide are applied alone,
i. the combination improves plant development compared to the development of a plant affected by the same type and degree of fungal infection to which the combination is not applied, and/or
j. the amount of the primary fungicide and the amount of the phthalimide fungicide are more effective for treat a plant or locus against fungal infection than when the amount of the phthalimide fungicide and the amount of a primary fungicide are applied alone.

41. The combination of item 40, wherein treating a plant or locus against fungal infection comprises:

a. inhibiting fungal mycelium formation, '
b. combating phytopathogenic diseases on the plant or locus,
c. protecting the plant or locus from fungal attack,
d. preventing fungal infection of the plant or locus,
e. controlling fungal disease affecting the plant or locus,
f. controlling a fungal pathogen, a fungal pathogen group or a fungal pathogen class affecting the plant or locus,
g. controlling a fungal disease caused by a fungal pathogen, a fungal pathogen group or a fungal pathogen class affecting the plant or locus, and/or
h. reducing fungal infection of the plant or locus.

42. The combination of any one of items 39-41, wherein:

a. the phthalimide fungicide is selected from the group consisting of captan, folpet, captafol, and any combination thereof, and
b. the primary fungicide is selected from the group consisting of multi-site contact fungicide, QiI fungicide (quinone inside inhibitors), QoI fungicide (quinone outside inhibitors), QoSI fungicide (quinone outside stigmatellin subsite inhibitors), SDHI fungicide (succinate dehydrogenase inhibitors), demethylation inhibitor fungicide, phenyl amide fungicide, methyl-benzimidazole-carbamate (MBC) fungicide, carboxylic acid amide fungicide, benzamide fungicide, natural fungicide, anilinopyrimidine fungicide, hydroxy-(2-amino)-pyrimidines fungicide, phosphonate fungicide, plant extract fungicide, keto-reductase inhibitor fungicide, phenylpyrrole fungicide (PP), aryl phenyl-ketone fungicide, amine fungicide, dinitro aniline fungicide, azanaphthalene fungicide, benzothiadiazole fungicide, carbamate fungicide, cyanoacetamideoxime fungicide, dinitrophenyl-crotonate fungicide, glucopyranosyl antibiotic fungicide, tetrazolyloxime fungicide, thiazolidine fungicide, oxysterol binding protein inhibitor (OSBPI) fungicide, thiophenecarboxamide fungicide, phenylacetamide fungicide, phenyl urea fungicide, polyene fungicide, pyr-hydrazone fungicide, pyrimidinamine fungicide, pyrimidinone fungicide, fungicide (B) and any combination thereof.

43. The combination of any one of items 39-42, wherein the combination is a mixture, preferably a tank mix.
44. The combination of any one of items 39-42, wherein the combination is a composition.
45. A composition comprising a phthalimide fungicide, a primary fungicide and at least one agriculturally acceptable carrier.
46. The composition of item 45, wherein the amount of the phthalimide fungicide(s) and the primary fungicide(s) in the composition is from about 0.5% to about 95% by weight based on the total weight of the composition.
47. The composition of item 45 or 46, wherein the composition is a ready-mix formulation.
48. The composition of any one of items 45-47, wherein the composition comprises at least one agriculturally acceptable additive selected from the group consisting of surfactants, solid diluents, liquid diluents, adjuvants and any combination thereof.
49. A process of preparing a composition comprising a phthalimide fungicide and a primary fungicide, wherein the process comprises the steps of: (i) obtaining an amount of the phthalimide fungicide(s) and an amount of the primary fungicide(s), and (ii) mixing the obtained amount of phthalimide fungicide(s) and the obtained amount of the primary fungicide(s) to obtain the composition.
50. A package comprising the combination or composition of any one of items 39-48.
51. The present invention provides a method of increasing sensitivity of a fungus to an amount of a primary fungicide comprising applying a combination of an amount of a phthalimide fungicide and the amount of the primary fungicide to the fungus, so as to thereby increase sensitivity of the fungus to the amount of the primary fungicide.
52. A method of increasing bioavailability of an amount of a primary fungicide to a plant comprising applying a combination of an amount of a phthalimide fungicide and the amount of the primary fungicide to the plant, so as to

thereby increase bioavailability of the amount of the primary fungicide.

53. A method of inhibiting fungal mycelium formation comprising applying a combination of an amount of a phthalimide fungicide and an amount of a primary fungicide to the fungus, so as to thereby inhibit fungal mycelium formation.

54. A method of prolonging the period of protection against fungal infection and/or control of fungal infection from an application of an amount of a primary fungicide to a plant or locus comprising applying a combination of an amount of a phthalimide fungicide and the amount of the primary fungicide to the plant or locus. In some embodiments, the plant is a crop plant.

55. A method of reducing the amount of time needed to achieve a level of fungal control from an application of an amount of primary fungicide to a plant or locus comprising applying a combination of an amount of a phthalimide fungicide and the amount of the primary fungicide to the plant or locus.

56. A method of improving development of a plant affected by fungal infection comprising applying a combination of a phthalimide fungicide and a primary fungicide to the plant or a locus thereof so as to improve the development of the plant compared to the development of a plant affected by the same type and degree of fungal infection to which the combination is not applied.

## Claims

**1.** A method of increasing bioavailability of an amount of a primary fungicide to a plant, plant organ, plants, and/or any physical parts of a plant, comprising applying a combination of an amount of a phthalimide fungicide selected from the group consisting of Captan and Folpet and the amount of the primary fungicide to the plant, plant organ, plants and/or any physical parts thereof, to obtain a treated area where the fungicide was applied to, and an untreated area where the fungicide was not applied to, so as to thereby increase bioavailability of the amount of the primary fungicide,

such that the amount of the phthalimide fungicide is effective to increase bioavailability of the amount of the primary fungicide compared to the bioavailability of the amount of the primary fungicide when it is applied not in combination with the amount of the phthalimide fungicide, in the roots and/or in the leaves,
wherein increasing bioavailability includes increasing penetration of the amount of the primary fungicide into the plant, and increasing translocation of the amount of the primary fungicide once inside the plant, such that applying the amount of the primary fungicide in combination with the amount of the phthalimide fungicide increases penetration of the amount of the primary fungicide into the plant leaf, including penetrating leaf cuticle, and into the plant root and increases translocation of the amount of the primary fungicide once inside the plant, including leaves.

**2.** The method of claim 1, wherein the presence of the fungicide in an untreated area is due to translocation, and the primary fungicide as part of the combination is more effective in treating the plant against fungal infection than when applied at the same amount alone when fungicidal efficacy is measured in an untreated area of the plant, and the increased effectiveness is due to increased bioavailability, such that the method is more effective against fungal infection than when the amount of the phthalimide fungicide and the amount of a primary fungicide are applied alone wherein more effective includes increasing efficacy of fungal disease control in an untreated area, and/or untreated plant area.

**3.** The method of claim 1, wherein the amount of the phthalimide fungicide is effective to increase bioavailability of the amount of the primary fungicide compared to the bioavailability of the amount of the primary fungicide when it is applied not in combination with the amount of the phthalimide fungicide, so as to thereby improve the fungicidal efficacy of the amount of the primary fungicide, wherein,

a) the method increases the bioavailability the amount of the primary fungicide in the roots,
b) the method increases the bioavailability of the amount of the primary fungicide in the leaves
wherein increasing bioavailability includes increasing penetration of the amount of the primary fungicide into the plant, and/or increasing translocation of the amount of the primary fungicide once inside the plant, including leaves, and

a. the primary fungicide penetrates into the plant by penetrating into leaves,
b. the primary fungicide penetrates into the plant by penetrating into leaf cuticle,
c. the primary fungicide penetrates into the plant by penetrating into roots,

such that applying the amount of the primary fungicide in combination with the amount of the phthalimide fungicide

increases penetration of the amount of the primary fungicide into the plant, into the plant leaf, into the plant root and increases translocation of the amount of the primary fungicide once inside the plant, including leaves.

**4.** The method of any one of claims 1-3, wherein the primary fungicide is a systemic fungicide which is fungicide I, and the method is for increasing the penetration of an amount of fungicide I into a plant compared to the penetration of the same amount of fungicide I when applied without the amount of phthalimide fungicide, and/or for increasing the translocation of an amount of fungicide I in a plant compared to the translocation of the same amount of fungicide I when applied without the amount of phthalimide fungicide, and/or for increasing the bioavailability of an amount of fungicide I compared to the bioavailability of the same amount of fungicide I when applied without the amount of phthalimide fungicide, wherein fungicide I is selected from group consisting of QiI fungicides (quinone inside inhibitors); demethylation inhibitor (DMI) fungicides; quinone outside inhibitor (QoI) fungicides; pyrimidinone fungicides; succinate dehydrogenase inhibitor (SDHI) fungicides; and any combination thereof.

**5.** The method of claim 2, wherein fungal disease control includes one or more of, preventing fungal disease, protecting plants from fungal disease, delaying the onset of fungal disease, combating or killing fungal disease, the curative and/or eradication action of compounds and compositions on underway fungal diseases, controlling fungal disease infecting the plant, propagation material of the plant or locus of the plant, controlling a plant or soil disease caused by phytopathologic fungi (pathogen), controlling fungal attack on the plant, propagation material of the plant, or locus of the plant, curative application, protectant, preventive application and/or persistence application.

**6.** The method of claim 1, wherein,

i. the combination comprises a phthalimide fungicide and fenpicoxamid, or
ii. the combination comprises a phthalimide fungicide and mefentrifluconazole, or
iii. the primary fungicide is QoI fungicide (quinone outside inhibitors) and the QoI (quinone outside inhibitors) is,

a. florylpicoxamid, or
b. azoxystrobin or picoxystrobin, or

iv. the combination comprises captan and 5-fluoro-4-imino-3-methyl-1-tosyl-3,4-dihydropyrimidin-2(1H)-one, or
v. the combination comprises folpet and 5-fluoro-4-imino-3-methyl-1-tosyl-3,4-dihydropyrimidin-2(1H)-one, or
vi. the combination comprises a phthalimide fungicide and prothioconazole, or
vii. the combination comprises a phthalimide fungicide and fluxapyroxad, or
viii. the combination comprises a phthalimide fungicide and bixafen, or
ix. the combination comprises a phthalimide fungicide and isopyrazam, or
x. the combination comprises a phthalimide fungicide and fluopyram, or
xi. the combination comprises a phthalimide fungicide and pydiflumetofen, or
xii. the combination comprises a phthalimide fungicide and azoxystrobin, or
xiii. the combination comprises a phthalimide fungicide and boscalid, or
xiv. the primary fungicide is anilinopyrimidine fungicide selected from the group consisting of cyprodinil, mepanipyrim, and any combination thereof.

**7.** The method of any one of claims 1-5, wherein, the fungal disease is selected from:

a) early blight disease, early blight disease in tomato, early blight disease in potato, fungal disease caused by Alternaria sp. or Alternaria solani., Anthracnose and/or Alternaria in chili, and fungal disease in chili caused by Colletotrichum capsica, or fungal disease in chili caused by Alternaria solani,
b) septoria leaf blotch, septoria leaf blotch in wheat, septoria leaf blotch caused by Zymoseptoria tritici, and/or fungal disease caused by Zymoseptoria tritici,
c) apple scab disease, fungal disease in apple caused by Venturia inaequalis, and/or apple scab disease and/or fungal disease caused by Venturia inaequalis,
d) late blight disease, late blight disease in tomato, and/or fungal disease caused by Phytophthora infestans,
e) downy mildew in grape, grapevine downy mildew, powdery mildew in melon, downy mildew caused by Plasmopara viticola, powdery mildew caused by Sphaerotheca fuliginea, powdery mildew caused by Erysiphe necator, and/or fungal disease caused by Plasmopara viticola, Sphaerotheca fuliginea, or Erysiphe necator,
f) Asian soybean rust, and/or fungal disease caused by Phakopsora pachyrhizi,
g) Cercospora leaf spot, Cercospora leaf spot in sugar beet,. and/or fungal disease caused by Cercospora beticola,

h) black sigatoka in banana, and/or fungal disease caused by Mycosphaerella fijiensis, or
i) ramularia leaf spot, or fungal disease caused by Ramularia collo-cygni, Ramularia beticola, Ramularia areola,
j) Ramularia species on cereals, barley and cotton and/or fungal disease caused by Ramularia areola on cotton,
k) Target spot (Corynespora cassiicola), and
l) Septoria brown spot (Septoria glycines).

**8.** The method of claim 7, wherein:

a) the fungal pathogen is Alternaria sp. and/or the fungal disease in tomato or potato is caused by Alternaria sp. and the combination comprises

i. difenoconazole and captan,
ii. tebuconazole and captan,
iii. difenoconazole, fluxapyroxad and captan,
iv. pyraclostrobin and captan,
v. azoxystrobin and captan or folpet,
vi. pyraclostrobin, fluxapyroxad and captan or folpet,
vii. azoxystrobin, fluxapyroxad and captan or folpet,
viii. mandipropamid and captan or folpet,
ix. ametoctradin and captan or folpet,
x. zoxamide and captan or folpet,
xi. fluopicolide and captan or folpet,
xii. cymoxanil and captan or folpet,
xiii. oxathiapiprolin and captan or folpet, or
xiv. fluxapyroxad and captan, or folpet,

or
b) the fungal disease is septoria leaf blotch, the fungal disease is septoria leaf blotch in wheat, and/or fungal disease caused by Zymoseptoria tritici and the combination comprises,

i. phthalimide fungicide and a SDHI fungicide,
ii. phthalimide fungicide and a QoI fungicide,
iii. captan and fluxapyroxad,
iv. folpet and fluxapyroxad,
v. folpet and bixafen,
vi. folpet and penthiopyrad
vii. folpet and prochloraz,
viii. folpet and azoxystrobin,
ix. folpet and trifloxystrobin, or
x. folpet and pyraclostrobin,

or
c) the fungal disease is apple scab disease, the fungal pathogen is Venturia inaequalis, and/or the fungal disease in apple caused by Venturia inaequalis and the combination comprises,

i. tebuconazole or difenoconazole, fluopyram and captan or folpet,
ii. fluopyram and captan or folpet,
iii. difenoconazole or tebuconazol and captan or folpet,
iv. tebuconazole or difenoconazole, fluxapyroxad and captan or folpet,
v. cyprodinil and captan or folpet,
vi. fluxapyroxad and captan or folpet,
vii. cyprodinil, fluxapyroxad and captan or folpet,
viii. potassium phosphonate and captan or folpet,
ix. fosetyl-Al and captan or folpet,
x. pyraclostrobin and folpet,
xi. azoxystrobin and folpet,
xii. benzovindiflupyr and folpet,
xiii. penthiopyrad and folpet, or

xiv. pydiflumetofen and folpet,

or

d) the fungal disease is ramularia leaf spot in barley, or the fungal disease caused by Ramularia collo-cygni, and the combination comprises,

i. a phthalimide fungicide and a pyrimidinone fungicide,
ii. a phthalimide fungicide and two or more primary fungicides wherein at least one primary fungicide is a pyrimidinone fungicide,
iii. 5-fluoro-4-imino-3-methyl-1-tosyl-3,4-dihydropyrimidin-2(1H)-one and folpet,
iv. 5-fluoro-4-imino-3-methyl-1-tosyl-3,4-dihydropyrimidin-2(1H)-one and captan,
v. a phthalimide fungicide, a SDHI fungicide and a DMI fungicide, or
vi. folpet, prothioconazole and fluxapyroxad,

or

e) the fungal disease is late blight disease in tomato or the fungal disease caused by Phytophthora infestans, and the combination comprises,

i. mandipropamid and captan or folpet,
ii. ametoctradin and captan or folpet,
iii. zoxamide and captan or folpet,
iv. fluopicolide and captan or folpet,
v. cymoxanil and captan or folpet, or
vi. oxathiapiprolin and captan or folpet,

or

f) the fungal disease is Asian soybean rust, and/or fungal disease caused by Phakopsora pachyrhizi, and the combination comprises,

i. azoxystrobin and folpet,
ii. picoxystrobin, fluxapyroxad and folpet,
iii. azoxystrobin, fluxapyroxad and folpet,
iv. picoxystrobin and captan, fluxapyroxad and captan,
v. azoxystrobin and captan,
vi. picoxystrobin, fluxapyroxad and captan, or
vii. azoxystrobin, fluxapyroxad and captan,

or

g) the fungal disease is downy mildew in grape plants, the fungal pathogen is Plasmopara viticola and the fungal disease in grape caused by Plasmopara viticola, or the downy mildew is caused by Plasmopara viticola, or the disease is Erysiphe necator in grape, the fungal pathogen is Erysiphe necator and the powdery mildew caused by Erysiphe necator and the combination comprises,

i. fluxapyroxad and folpet or captan for Plasmopara viticola,
ii. mandipropamid and folpet or captan for Plasmopara viticola,
iii. ametoctradin and folpet or captan for Plasmopara viticola,
iv. zoxamide and folpet or folpet for Plasmopara viticola,
v. cymoxanil and folpet or captan for Plasmopara viticola,
vi. fluopicolide and folpet or captan for Plasmopara viticola,
vii. oxathiapiprolin and folpet or captan for Plasmopara viticola,
viii. potassium phosphonate and captan or folpet for Plasmopara viticola,
ix. 5-fluoro-4-imino-3-methyl-1-tosyl-3,4-dihydropyrimidin-2(1H)-one and folpet for Plasmopara viticola,
x. difenoconazole and folpet or captan for Erysiphe necator,
xi. azoxystrobin and folpet or captan for Erysiphe necator,
xii. pyraclostrobin and folpet or captan for Erysiphe necator,
xiii. difenoconazole, fluxapyroxad and folpet or captan for Erysiphe necator,
xiv. difenoconazole, pyraclostrobin and folpet or captan for Erysiphe necator,
xv. difenoconazole, azoxystrobin and folpet or captan for Erysiphe necator,

xvi. pyraclostrobin, fluxapyroxad and folpet or captan for Erysiphe necator, or
xvii. azoxystrobin, fluxapyroxad and folpet or captan for Erysiphe necator,

or
h) the method is for controlling fungal disease in banana using a fungicidal mixture or combination comprising at least one phthalimide fungicide at least one succinate dehydrogenase inhibitor fungicide, the fungal disease is black sigatoka in banana, and/or fungal disease caused by Mycosphaerella fijiensis.

**9.** The method of claim 5, wherein,

a. the combination is mixture comprising phosphonates and phthalimides toward Venturia inaequalis in young apple plants, variety Golden Delicious,
b. the combination is mixture comprising potassium phosphonate or fosetyl-Al and captan or folpet, toward *Venturia inaequalis* in young apple plants, variety Golden Delicious,
c. the method is for fungicidal activity of phthalimide with two fungicides, demethylation inhibitor fungicide and succinate dehydrogenase inhibitor fungicide, toward *Venturia inaequalis* in young apple plants, variety Golden Delicious,
d. the combination is a mixture comprising an anilinopyrimidines (cyprodinil), and phthalimides (captan, folpet) toward Venturia inaequalis in young apple plants, variety Golden Delicious,
e. the combination is mixture comprising demethylation inhibitor fungicide and phthalimides toward *Alternaria solani* in tomato seedlings, variety Liguria,
f. the combination is mixture comprising difenoconazole and/or tebuconazole and captan or folpet toward *Alternaria solani* in tomato seedlings, variety Liguria,
g. the combination is phthalimide with two fungicides; demethylation inhibitor fungicide and succinate dehydrogenase inhibitor fungicide toward *Alternaria solani* in tomato seedlings, variety Liguria,
h. the combination is phthalimide with two fungicides; difenoconazole/tebuconazole, and fluxapyroxad toward *Alternaria solani* in tomato seedlings, variety Liguria,
i. the combination is a mixture comprising quinone outside inhibitors, and phthalimides toward *Alternaria solani* in tomato plants variety Liguria,
j. the combination is a mixture comprising azoxystrobin and/or pyraclostrobin, and captan/folpet toward *Alternaria solani* in tomato plants variety Liguria,
k. the combination is phthalimide with two fungicides; quinone outside inhibitors and succinate dehydrogenase inhibitor fungicide toward Alternaria solani in tomato plants variety Liguria,
l. the combination is phthalimide with two fungicides; azoxystrobin or pyraclostrobin and fluxapyroxad toward Alternaria solani in tomato plants variety Liguria,
m. the combination is a mixture comprising phthalimide fungicide and a carboxylic acid amide or a quinone outside stigmatellin inhibitors or a benzamides fungicide or a cyanoacetamide oxime or a oxysterol binding protein inhibitor toward Phytophthora infestans in tomato plants, variety Liguria,
n. the combination is a mixture comprising phthalimide fungicide and mandipropamid or ametoctradin or zoxamide or fluopicolide) or a cymoxanilor oxathiapiprolin, toward Phytophthora infestans in tomato plants, variety Liguria,
o. the combination is a mixture comprising phthalimide fungicide and a carboxylic acid amide or a quinone outside stigmatellin inhibitors or a benzamides fungicide or a cyanoacetamide oxime or a oxysterol binding protein inhibitor, toward *Alternaria solani* in potato plants, variety Agata,
p. the combination is a mixture comprising phthalimide fungicide and mandipropamid or ametoctradin or zoxamide or fluopicolide or cymoxanil or oxathiapiprolin, toward *Alternaria solani* in potato plants, variety Agata,
q. the combination is a mixture comprising (1) phthalimide fungicide (folpet) and (2) succinate dehydrogenase inhibitor fungicide (fluxapyroxad) or a carboxylic acid amide (mandipropamide) or a quinone outside stigmatellin inhibitors (ametoctradin), or a benzamides (zoxamide, fluopicolide) or a cyanoacetamideoxime (cymoxanil) or a oxysterol binding protein inhibitor (oxathiapiprolin) toward *Plasmopara viticola* in grape plants, variety Barbera,
r. the combination is a mixture comprising (1) phthalimide fungicide (folpet) and (2) phosphonate (potassium phosphonate), toward Plasmopara viticola in young grape plants, variety Barbera,
s. the combination is a mixture comprising (1) phthalimide fungicide (folpet, captan) and (2) demethylation inhibitor fungicide (difenoconazole) or a quinone outside inhibitors (azoxystrobin, pyraclostrobin), toward Erysiphe necator in grape plants, variety Barbera,
t. the combination is phthalimide fungicide (folpet, captan) and two fungicides (A); demethylation inhibitor fungicide (difenoconazole) or a quinone outside inhibitors (azoxystrobin, pyraclostrobin and dehydrogenase inhibitor fungicide (fluxapyroxad), toward Erysiphe necator in grape plants, variety Barbera,

u. the combination is a mixture comprising (1) phthalimide fungicide (folpet, captan) and (2) demethylation inhibitor fungicide (difenoconazole) or a quinone outside inhibitor (azoxystrobin, pyraclostrobin), towards Sphaerotheca fuliginea on melon plants, hybrid Pepito F1,
v. the combination is phthalimide with two fungicides (A); demethylation inhibitor fungicide (difenoconazole) and/or a quinone outside inhibitor (azoxystrobin, pyraclostrobin) and/or succinate dehydrogenase inhibitor fungicide (fluxapyroxad), towards *Sphaerotheca fuliginea* on melon plants, hybrid Pepito F1,
w. the combination is a mixture comprising (1) phthalimide fungicide (folpet, captan) and (2) a succinate dehydrogenase inhibitor fungicide (isofetamid) or a quinone outside inhibitors (pyraclostrobin), or a ketoreductase inhibitor (fenhexamid) or a anilinopyrimidine (cyprodinil) or a plant extract (extract from Melaleuca alternifolia) or a phenylpyrrole (Fludioxonil) or a dinitro-anilines (fluazinam), toward Botrytis cinerea in strawberry, variety Brilla,
x. the combination is a a two-way mixture of 5-fluoro-4-imino-3-methyl-1-tosyl-3,4-dihydropyrimidin-2(1*H*)-one and Folpet towards *Ramularia collo-cygni* in barley,
y. the method is for the fungicidal control of Venturia inaequalis in young apple plants, variety Golden Delicious, with a dehydrogenase inhibitor fungicide (fluxapyroxad), and captan in binary mixtures,
z. the method is for the fungicidal control of Zymoseptoria tritici on wheat, variety Iride, with a dehydrogenase inhibitor fungicide (fluxapyroxad), and captan in binary mixtures,
aa. the method is for the fungicidal control of Alternaria solani, on potato plants, variety Agata, with a dehydrogenase inhibitor fungicide (fluxapyroxad), and captan in binary mixtures,
bb. the method is for the fungicidal control of Alternaria solani on tomato, variety Liguria, with a dehydrogenase inhibitor fungicide (fluxapyroxad), and captan in binary mixtures,
cc. the method is for the fungicidal control of Venturia inaequalis on apple, variety Golden Delicious, with a dehydrogenase inhibitor fungicide (benzovindiflupyr, fluxapyroxad, fluopyram, penthiopyrad, pydiflumetofen), and folpet in binary mixtures,
dd. the method is for the fungicidal control of Alternaria solani on potato, variety Agata, with a dehydrogenase inhibitor fungicide (fluxapyroxad), and captan in binary mixtures,
ee. the method is for the fungicidal control of Alternaria solani on potato, variety Agata, with a dehydrogenase inhibitor fungicide (fluxapyroxad), and folpet in binary mixtures,
ff. the method is for the fungicidal control of Alternaria solani on tomato, variety Liguria, with a dehydrogenase inhibitor fungicide (fluxapyroxad), and captan in binary mixtures,
gg. the method is for the fungicidal control of Alternaria solani on tomato, variety Liguria, with a dehydrogenase inhibitor fungicide (fluxapyroxad), and folpet in binary mixtures,
hh. the method is for the fungicidal activity of the mixture comprising (1) phthalimide fungicide (folpet, captan) and (2) dehydrogenase inhibitor fungicide (fluxapyroxad) toward Plasmopara viticola in grape, variety Barbera,
ii. the method is for the fungicidal activity of the mixture comprising phthalimides (captan, folpet) and succinate dehydrogenase inhibitor fungicide (fluopyram) toward Venturia inaequalis in young apple plants, variety Golden Delicious,
jj. the method is for the fungicidal activity of the mixture comprising a fluoropyrimidinone fungicide (flumetylsulforim, 5-fluoro-4-imino-3-methyl-1-tosyl-3,4-dihydropyrimidin-2(1H)-one), and phthalimides (folpet) toward Ramularia collo-cygni in barley seedlings, variety Bologna,
kk. the method is for the fungicidal activity of the mixture comprising a morpholine (fenpropidin), and a phthalimide (folpet) toward Cercospora beticola in sugarbeet,
ll. the method is for the fungicidal activity of the mixture comprising a DMI (prothioconazole), a SDHI (fluxapyroxad) and a phthalimide (folpet) toward Ramularia collo-cygni in barley,
mm. the method is the effect of folpet of increased penetration and translocation (migration) of SDHI fungicides and DMI in wheat seedlings of a susceptible septoria leaf blotch cultivar (alixan) by droplets deposition in a volume of water corresponding to 200 l/ha, and the combination is folpet and fluxapyroxad; bixafen and folpet; prochloraz and folpet; fluopyram and folpet; or penthiopyrad and folpet,
nn. the method is the effect of folpet on the penetration and translocation (migration) of qoi fungicides in wheat seedlings of a susceptible septoria leaf blotch cultivar (alixan) treated with the fungicides by droplets deposition (5 x 0.5 $\mu$l) in 2 way-mixture prepared in a volume of water corresponding to 200 l/ha, and the combination is azoxystrobin and folpet; trifloxystrobin and folpet; pyraclostrobin and folpet, or
oo. the method is for the fungicidal activity of the combination which is a mixture comprising a fluoro-pyrimidinone (flumetylsulforim, 5-fluoro-4-imino-3-methyl-1-tosyl-3,4-dihydropyrimidin-2(1H)-one), and phthalimides (folpet) toward Plasmopara viticola in grapevine seedlings, variety Barbera, by applying compositions of flumetylsulforim and folpet together. diluted with water equivalent to 250 L/ha.

**10.** The method of claim 1, wherein the applied combination comprises any of:

i. Difenoconazole 75 gr (A.I.)/ha + Captan 1200 gr (A.I.)/ha
ii. Difenoconazole 75 gr (A.I.)/ha + Folpet 1200 gr (A.I.)/ha;
iii. Tebuconazole 150 gr (A.I.)/ha + Captan 1200 gr (A.I.)/ha;
iv. Tebuconazole 150 gr (A.I.)/ha + Folpet 1200 gr (A.I.)/ha;
v. fluopyram 150gr (A.I.)/ha + Captan 1200 gr (A.I.)/ha;
vi. fluopyram 150 gr (A.I.)/ha + Folpet 1200 gr (A.I.)/ha;
vii. fluopyram 150gr (A.I.)/ha + Difenoconazole 75 gr (A.I.)/ha;
viii. fluopyram 150gr (A.I.)/ha + Difenoconazole 75 gr (A.I.)/ha + Captan 1200 gr (A.I.)/ha;
ix. fluopyram 150gr (A.I.)/ha + Difenoconazole 75 gr (A.I.)/ha + Folpet 1200 gr (A.I.)/ha;
x. fluopyram 150gr (A.I.)/ha + Tebuconazole 150 gr (A.I.)/ha;
xi. fluopyram 150gr (A.I.)/ha + Tebuconazole 150 gr (A.I.)/ha + Captan 1200 gr (A.I.)/ha;
xii. fluopyram 150gr (A.I.)/ha + Tebuconazole 150 gr (A.I.)/ha + Folpet 1200 gr (A.I.)/ha;
xiii. Difenoconazole 35 gr (A.I.)/ha + Captan 900 gr (A.I.)/ha;
xiv. Difenoconazole 35 gr (A.I.)/ha + Folpet 900 gr (A.I.)/ha;
xv. Tebuconazole 150 gr (A.I.)/ha + Captan 900 gr (A.I.)/ha;
xvi. Tebuconazole 150 gr (A.I.)/ha + Folpet 900 gr (A.I.)/ha;
xvii. fluopyram 150gr (A.I.)/ha + Captan 900 gr (A.I.)/ha;
xviii. fluopyram 150 gr (A.I.)/ha + Folpet 900 gr (A.I.)/ha;
xix. fluopyram 150gr (A.I.)/ha + Difenoconazole 35 gr (A.I.)/ha;
xx. fluopyram 150gr (A.I.)/ha + Difenoconazole 35 gr (A.I.)/ha + Captan 900 gr (A.I.)/ha;
xxi. fluopyram 150gr (A.I.)/ha + Difenoconazole 35 gr (A.I.)/ha + Folpet 900 gr (A.I.)/ha;
xxii. fluopyram 150gr (A.I.)/ha + Tebuconazole 150 gr (A.I.)/ha;
xxiii. fluopyram 150gr (A.I.)/ha + Tebuconazole 150 gr (A.I.)/ha + Captan 900 gr (A.I.)/ha;
xxiv. fluopyram 150gr (A.I.)/ha + Tebuconazole 150 gr (A.I.)/ha + Folpet 900 gr (A.I.)/ha;
xxv. Cyprodinil 300 gr (A.I.)/ha + Captan 1200 gr (A.I.)/ha;
xxvi. Cyprodinil 300 gr (A.I.)/ha + Folpet 1200 gr (A.I.)/ha;
xxvii. Fluxapyroxad 90 gr (A.I.)/ha + Captan 1200 gr (A.I.)/ha;
xxviii. Fluxapyroxad 90 gr (A.I.)/ha + Folpet 1200 gr (A.I.)/ha;
xxix. Fluxapyroxad 90 gr (A.I.)/ha + Cyprodinil 300 gr (A.I.)/ha;
xxx. Fluxapyroxad 90 gr (A.I.)/ha + Cyprodinil 300 gr (A.I.)/ha + Captan 1200 gr (A.I.)/ha;
xxxi. Fluxapyroxad 90 gr (A.I.)/ha + Cyprodinil 300 gr (A.I.)/ha + Folpet 1200 gr (A.I.)/ha;
xxxii. Potassium phosphonate 1650 gr (A.I.)/ha + Captan 900 gr (A.I.)/ha;
xxxiii. Potassium phosphonate 1998 gr (A.I.)/ha + Captan 1080 gr (A.I.)/ha;
xxxiv. Difenoconazole 75 gr (A.I.)/ha + Captan 1200 gr (A.I.)/ha;
xxxv. Difenoconazole 75 gr (A.I.)/ha + Folpet 1200 gr (A.I.)/ha;
xxxvi. Tebuconazole 150 gr (A.I.)/ha + Captan 1200 gr (A.I.)/ha;
xxxvii. Tebuconazole 150 gr (A.I.)/ha + Folpet 1200 gr (A.I.)/ha;
xxxviii. Fluxapyroxad 75 gr (A.I.)/ha + captan 1200 gr (A.I.)/ha;
xxxix. Fluxapyroxad 75 gr (A.I.)/ha + folpet 1200 gr (A.I.)/ha;
xl. Fluxapyroxad 75 gr (A.I.)/ha + Difenoconazole 75 gr (A.I.)/ha;
xli. Fluxapyroxad 75 gr (A.I.)/ha + Tebuconazole 150 gr (A.I.)/ha;
xlii. Fluxapyroxad 75 gr (A.I.)/ha + Difenoconazole 75 gr (A.I.)/ha + Captan 1200 gr (A.I.)/ha;
xliii. Fluxapyroxad 75 gr (A.I.)/ha + Difenoconazole 75 gr (A.I.)/ha + Folpet 1200 gr (A.I.)/ha;
xliv. Fluxapyroxad 75 gr (A.I.)/ha + Tebuconazole 150 gr (A.I.)/ha + Captan 1200 gr (A.I.)/ha;
xlv. Fluxapyroxad 75 gr (A.I.)/ha + Tebuconazole 150 gr (A.I.)/ha + Folpet 1200 gr (A.I.)/ha;
xlvi. Azoxystrobin 120 gr (A.I.)/ha + Captan 1200 gr (A.I.)/ha;
xlvii. Azoxystrobin 120 gr (A.I.)/ha + Folpet 1200 gr (A.I.)/ha;
xlviii. Fluxapyroxad 75 gr (A.I.)/ha + captan 1200 gr (A.I.)/ha;
xlix. Fluxapyroxad 75 gr (A.I.)/ha + folpet 1200 gr (A.I.)/ha;
l. Fluxapyroxad 75 gr (A.I.)/ha + Azoxystrobin 120 gr (A.I.)/ha;
li. Fluxapyroxad 75 gr (A.I.)/ha + Azoxystrobin 120 gr (A.I.)/ha + Captan 1200 gr (A.I.)/ha;
lii. Fluxapyroxad 75 gr (A.I.)/ha + Azoxystrobin 120 gr (A.I.)/ha + Folpet 1200 gr (A.I.)/ha;
liii. Mandipropamide 150 gr (A.I.)/ha + captan 1200 gr (A.I.)/ha;
liv. Mandipropamide 150 gr (A.I.)/ha + folpet 1200 gr (A.I.)/ha;
lv. Ametoctradin 240 gr (A.I.)/ha + Captan 1200 gr (A.I.)/ha;
lvi. Ametoctradin 240 gr (A.I.)/ha + Folpet 1200 gr (A.I.)/ha;
lvii. Cymoxanil 150 gr (A.I.)/ha + Captan 1200 gr (A.I.)/ha;
lviii. Cymoxanil 150 gr (A.I.)/ha + Folpet 1200 gr (A.I.)/ha;

lix. Zoxamide 180 gr (A.I.)/ha + Captan 1200 gr (A.I.)/ha;
lx. Zoxamide 180 gr (A.I.)/ha + Folpet 1200 gr (A.I.)/ha;
lxi. Oxathiapiprolin 15 gr (A.I.)/ha + Captan 1200 gr (A.I.)/ha;
lxii. Oxathiapiprolin 15 gr (A.I.)/ha + Folpet 1200 gr (A.I.)/ha;
lxiii. Mandipropamide 150 gr (A.I.)/ha + captan 1200 gr (A.I.)/ha;
lxiv. Mandipropamide 150 gr (A.I.)/ha + folpet 1200 gr (A.I.)/ha;
lxv. Ametoctradin 240 gr (A.I.)/ha + Captan 1200 gr (A.I.)/ha;
lxvi. Ametoctradin 240 gr (A.I.)/ha + Folpet 1200 gr (A.I.)/ha;
lxvii. Cymoxanil 150 gr (A.I.)/ha + Captan 1200 gr (A.I.)/ha;
lxviii. Cymoxanil 150 gr (A.I.)/ha + Folpet 1200 gr (A.I.)/ha;
lxix. Zoxamide 180 gr (A.I.)/ha + Captan 1200 gr (A.I.)/ha;
lxx. Zoxamide 180 gr (A.I.)/ha + Folpet 1200 gr (A.I.)/ha;
lxxi. Oxathiapiprolin 15 gr (A.I.)/ha + Captan 1200 gr (A.I.)/ha;
lxxii. Oxathiapiprolin 15 gr (A.I.)/ha + Folpet 1200 gr (A.I.)/ha;
lxxiii. Fluxapyroxad 45 gr (A.I.)/ha + folpet 1000 gr (A.I.)/ha;
lxxiv. Mandipropamid 112.5 gr (A.I.)/ha + folpet 1000 gr (A.I.)/ha;
lxxv. Ametoctradin 225 gr (A.I.)/ha + Folpet 1000 gr (A.I.)/ha;
lxxvi. Cymoxanil 126 gr (A.I.)/ha + Folpet 1000 gr (A.I.)/ha;
lxxvii. Zoxamide 135 gr (A.I.)/ha + Folpet 1000 gr (A.I.)/ha;
lxxviii. fluopicolide 75 gr (A.I.)/ha + Folpet 1000 gr (A.I.)/ha;
lxxix. oxathiapiprolin 22.5 gr (A.I.)/ha + Folpet 1000 gr (A.I.)/ha;
lxxx. Potassium phosphonate 1575 gr (A.I.)/ha + Folpet 1050 gr (A.I.)/ha;
lxxxi. Potassium phosphonate 1800 gr (A.I.)/ha + Folpet 1200 gr (A.I.)/ha;
lxxxii. Difenoconazole 37.5 gr (A.I.)/ha + folpet 1000 gr (A.I.)/ha;
lxxxiii. Azoxystrobin 90 gr (A.I.)/ha + folpet 1000 gr (A.I.)/ha;
lxxxiv. Pyraclostrobin 75 gr (A.I.)/ha + folpet 1000 gr (A.I.)/ha;
lxxxv. Fluxapyroxad 45 gr (A.I.)/ha + Difenoconazole 37.5 gr (A.I.)/ha;
lxxxvi. Fluxapyroxad 45 gr (A.I.)/ha + Difenoconazole 37.5 gr (A.I.)/ha + folpet 1000 gr (A.I.)/ha;
lxxxvii. Azoxystrobin 90 gr (A.I.)/ha + Fluxapyroxad 45 gr (A.I.)/ha;
lxxxviii. Azoxystrobin 90 gr (A.I.)/ha + Fluxapyroxad 45 gr (A.I.)/ha + folpet 1000 gr (A.I.)/ha;
lxxxix. Azoxystrobin 90 gr (A.I.)/ha + Difenoconazole 37.5 gr (A.I.)/ha;
xc. Azoxystrobin 90 gr (A.I.)/ha + Difenoconazole 37.5 gr (A.I.)/ha + folpet 1000 gr (A.I.)/ha;
xci. Pyraclostrobin 75 gr (A.I.)/ha + Fluxapyroxad 45 gr (A.I.)/ha;
xcii. Pyraclostrobin 75 gr (A.I.)/ha + Fluxapyroxad 45 gr (A.I.)/ha + folpet 1000 gr (A.I.)/ha;
xciii. Pyraclostrobin 75 gr (A.I.)/ha + Difenoconazole 37.5 gr (A.I.)/ha;
xciv. Pyraclostrobin 75 gr (A.I.)/ha + Difenoconazole 37.5 gr (A.I.)/ha + folpet 1000 gr (A.I.)/ha;
xcv. Difenoconazole 50 gr (A.I.)/ha + folpet 1200 gr (A.I.)/ha;
xcvi. Azoxystrobin 250 gr (A.I.)/ha + folpet 1200 gr (A.I.)/ha;
xcvii. Pyraclostrobin 100 gr (A.I.)/ha + folpet 1200 gr (A.I.)/ha;
xcviii. Fluxapyroxad 75 gr (A.I.)/ha + folpet 1200 gr (A.I.)/ha;
xcix. Fluxapyroxad 75 gr (A.I.)/ha + Difenoconazole 50 gr (A.I.)/ha;
c. Fluxapyroxad 75 gr (A.I.)/ha + Difenoconazole 50 gr (A.I.)/ha + folpet 1200 gr (A.I.)/ha;
ci. Azoxystrobin 250 gr (A.I.)/ha + Fluxapyroxad 75 gr (A.I.)/ha;
cii. Azoxystrobin 250 gr (A.I.)/ha + Fluxapyroxad 75 gr (A.I.)/ha + folpet 1200 gr (A.I.)/ha;
ciii. Azoxystrobin 250 gr (A.I.)/ha + Difenoconazole 50 gr (A.I.)/ha;
civ. Azoxystrobin 250 gr (A.I.)/ha + Difenoconazole 50 gr (A.I.)/ha + folpet 1200 gr (A.I.)/ha;
cv. Pyraclostrobin 100 gr (A.I.)/ha + Fluxapyroxad 75 gr (A.I.)/ha;
cvi. Pyraclostrobin 100 gr (A.I.)/ha + Fluxapyroxad 75 gr (A.I.)/ha + folpet 1200 gr (A.I.)/ha;
cvii. Pyraclostrobin 100 gr (A.I.)/ha + Difenoconazole 50 gr (A.I.)/ha;
cviii. Pyraclostrobin 100 gr (A.I.)/ha + Difenoconazole 50 gr (A.I.)/ha + folpet 1200 gr (A.I.)/ha;
cix. Isofetamid 480 gr (A.I.)/ha + folpet 900 gr (A.I.)/ha;
cx. Isofetamid 480 gr (A.I.)/ha + folpet 1200 gr (A.I.)/ha;
cxi. Pyraclostrobin 75 gr (A.I.)/ha + folpet 900 gr (A.I.)/ha;
cxii. Pyraclostrobin 75 gr (A.I.)/ha + folpet 1200 gr (A.I.)/ha;
cxiii. Fenhexamid 500 gr (A.I.)/ha + folpet 900 gr (A.I.)/ha;
cxiv. Fenhexamid 500 gr (A.I.)/ha + folpet 1200 gr (A.I.)/ha;
cxv. Cyprodinil 150 gr (A.I.)/ha + folpet 900 gr (A.I.)/ha;

cxvi. Cyprodinil 150 gr (A.I.)/ha + folpet 1200 gr (A.I.)/ha;
cxvii. Extract from Melaleuca alternifolia 330 gr (A.I.)/ha + folpet 900 gr (A.I.)/ha;
cxviii. Extract from Melaleuca alternifolia 330 gr (A.I.)/ha + folpet 1200 gr (A.I.)/ha;
cxix. fludioxonil 200 gr (A.I.)/ha + folpet 900 gr (A.I.)/ha;
cxx. fludioxonil 200 gr (A.I.)/ha + folpet 1200 gr (A.I.)/ha;
cxxi. fluazinam 500 gr (A.I.)/ha + folpet 900 gr (A.I.)/ha;
cxxii. fluazinam 500 gr (A.I.)/ha + folpet 1200 gr (A.I.)/ha;
cxxiii. Folpet 450 g a.i./ha and 5-fluoro-4-imino-3-methyl-1-tosyl-3,4-dihydropyrimidin-2(1H)-one 5 g a.i./ha;
cxxiv. Folpet 550 g a.i./ha and 5-fluoro-4-imino-3-methyl-1-tosyl-3,4-dihydropyrimidin-2(1H)-one 5 g a.i./ha;
cxxv. Folpet 750 g a.i./ha and 5-fluoro-4-imino-3-methyl-1-tosyl-3,4-dihydropyrimidin-2(1H)-one 5 g a.i./ha;
cxxvi. Folpet 750 g a.i./ha and 5-fluoro-4-imino-3-methyl-1-tosyl-3,4-dihydropyrimidin-2(1H)-one 75 g a.i./ha;
cxxvii. Folpet 750 g a.i./ha and 5-fluoro-4-imino-3-methyl-1-tosyl-3,4-dihydropyrimidin-2(1H)-one 100 g a.i./ha;
cxxviii. Fluxapyroxad 45 gr (A.I.)/ha + Captan 1500 gr (A.I.)/ha;
cxxix. Fluxapyroxad 45 gr (A.I.)/ha + Captan 1200 gr (A.I.)/ha;
cxxx. Fluxapyroxad 45 gr (A.I.)/ha + Captan 900 gr (A.I.)/ha;
cxxxi. Fluxapyroxad 75 gr (A.I.)/ha + Captan 1200 gr (A.I.)/ha;
cxxxii. Fluxapyroxad 75 gr (A.I.)/ha + Captan 900 gr (A.I.)/ha;
cxxxiii. Fluxapyroxad 75 gr (A.I.)/ha + Captan 600 gr (A.I.)/ha;
cxxxiv. Fluxapyroxad 90 gr (A.I.)/ha + Captan 1200 gr (A.I.)/ha;
cxxxv. Fluxapyroxad 90 gr (A.I.)/ha + Captan 900 gr (A.I.)/ha;
cxxxvi. Fluxapyroxad 90 gr (A.I.)/ha + Captan 600 gr (A.I.)/ha;
cxxxvii. Fluxapyroxad 90 gr (A.I.)/ha + Captan 300 gr (A.I.)/ha;
cxxxviii. Fluxapyroxad 90 gr (A.I.)/ha + Captan 500 gr (A.I.)/ha;
cxxxix. Fluxapyroxad 90 gr (A.I.)/ha + Captan 750 gr (A.I.)/ha;
cxl. Fluxapyroxad 75 gr (A.I.)/ha + Captan 1000 gr (A.I.)/ha;
cxli. Fluxapyroxad 75 gr (A.I.)/ha + Captan 750 gr (A.I.)/ha;
cxlii. Fluxapyroxad 75 gr (A.I.)/ha + Captan 1000 gr (A.I.)/ha;
cxliii. Fluxapyroxad 75 gr (A.I.)/ha + Captan 750 gr (A.I.)/ha;
cxliv. Benzovindiflupyr 385 gr (A.I.)/ha + folpet 1200 gr (A.I.)/ha;
cxlv. Benzovindiflupyr 385 gr (A.I.)/ha + folpet 1500 gr (A.I.)/ha;
cxlvi. Fluxapyroxad 45 gr (A.I.)/ha + folpet 600 gr (A.I.)/ha;
cxlvii. Fluxapyroxad 45 gr (A.I.)/ha + folpet 900 gr (A.I.)/ha;
cxlviii. Fluxapyroxad 45 gr (A.I.)/ha + folpet 1200 gr (A.I.)/ha;
cxlix. Fluxapyroxad 45 gr (A.I.)/ha + folpet 1500 gr (A.I.)/ha;
cl. Fluxapyroxad 90 gr (A.I.)/ha + folpet 600 gr (A.I.)/ha;
cli. Fluxapyroxad 90 gr (A.I.)/ha + folpet 900 gr (A.I.)/ha;
clii. Fluxapyroxad 90 gr (A.I.)/ha + folpet 1500 gr (A.I.)/ha;
cliii. Fluopyram 150 gr (A.I.)/ha + folpet 1200 gr (A.I.)/ha;
cliv. Fluopyram 150 gr (A.I.)/ha + folpet 1500 gr (A.I.)/ha;
clv. Penthiopyrad 225 gr (A.I.)/ha + folpet 1200 gr (A.I.)/ha;
clvi. Penthiopyrad 225 gr (A.I.)/ha + folpet 1500 gr (A.I.)/ha;
clvii. Pydiflumetofen 40 gr (A.I.)/ha + folpet 1000 gr (A.I.)/ha;
clviii. Pydiflumetofen 40 gr (A.I.)/ha + folpet 1500 gr (A.I.)/ha;
clix. Fluxapyroxad 75 gr (A.I.)/ha + Captan 1200 gr (A.I.)/ha;
clx. Fluxapyroxad 75 gr (A.I.)/ha + Captan 900 gr (A.I.)/ha;
clxi. Fluxapyroxad 75 gr (A.I.)/ha + Folpet 1200 gr (A.I.)/ha;
clxii. Fluxapyroxad 75 gr (A.I.)/ha + Folpet 900 gr (A.I.)/ha;
clxiii. Fluxapyroxad 75 gr (A.I.)/ha + Captan 1200 gr (A.I.)/ha;
clxiv. Fluxapyroxad 75 gr (A.I.)/ha + Captan 900 gr (A.I.)/ha;
clxv. Fluxapyroxad 75 gr (A.I.)/ha + Folpet 1200 gr (A.I.)/ha;
clxvi. Fluxapyroxad 75 gr (A.I.)/ha + Folpet 900 gr (A.I.)/ha;
clxvii. Fluxapyroxad 75 gr (A.I.)/ha + folpet 1200 gr (A.I.)/ha;
clxviii. fluopyram 100gr (A.I.)/ha + Captan 900 gr (A.I.)/ha;
clxix. fluopyram 100gr (A.I.)/ha + Captan 1200 gr (A.I.)/ha;
clxx. fluopyram 150gr (A.I.)/ha + Captan 900 gr (A.I.)/ha;
clxxi. fluopyram 150gr (A.I.)/ha + Captan 1200 gr (A.I.)/ha;
clxxii. fluopyram 100 gr (A.I.)/ha + Folpet 900 gr (A.I.)/ha;
clxxiii. fluopyram 100 gr (A.I.)/ha + Folpet 1200 gr (A.I.)/ha;

clxxiv. fluopyram 150 gr (A.I.)/ha + Folpet 900 gr (A.I.)/ha;
clxxv. fluopyram 150 gr (A.I.)/ha + Folpet 1200 gr (A.I.)/ha;
clxxvi. Folpet 175 gr (A.I.)/ha + flumetylsulforim 35 gr (A.I.)/ha;
clxxvii. Folpet 300 gr (A.I.)/ha + flumetylsulforim 25 gr (A.I.)/ha;
clxxviii. Folpet 300 gr (A.I.)/ha + flumetylsulforim 35 gr (A.I.)/ha;
clxxix. Folpet 400 gr (A.I.)/ha + flumetylsulforim 25 gr (A.I.)/ha;
clxxx. Folpet 400 gr (A.I.)/ha + flumetylsulforim 35 gr (A.I.)/ha;
clxxxi. Folpet + Fenpropidin, 750 + 250 gr (A.I.)/ha;
clxxxii. Folpet 600 gr (A.I.)/ha, + Fenpropidin 200 gr (A.I.)/ha;
clxxxiii. Prothioconazole + Fluxapyroxad 75+37.5,
clxxxiv. Prothioconazole + Fluxapyroxad 105+52.5,
clxxxv. Prothioconazole + Fluxapyroxad 150+75 gr (A.I.)/ha;
clxxxvi. Folpet 375 gr (A.I.)/ha + Prothioconazole + Fluxapyroxad 75 or 37.5 gr (A.I.)/ha;
clxxxvii. Folpet 500 gr (A.I.)/ha, + Prothioconazole + Fluxapyroxad 105 or 52.5 gr (A.I.)/ha;
clxxxviii. Folpet 750 gr (A.I.)/ha, + Prothioconazole + Fluxapyroxad 150 or 75 gr (A.I.)/ha;
clxxxix. 450 g a.i./ha Prochloraz + 750 g a.i./ha Folpet;
cxc. 62.5 g a.i./ha Penthiopyrad + 750 g a.i./ha Folpet;
cxci. 62.5 g s.a./ha Bixafen + 750 g a.i./ha Folpet;
cxcii. 90 g a.i./ha Fluopyram + 750 g a.i./ha Folpet;
cxciii. 62.5 g a.i./ha Fluxapyroxad + 750 g a.i./ha Folpet;
cxciv. 750 g a.i./ha Folpet + 250 g a.i./ha Azoxystrobin;
cxcv. 750 g a.i./ha Folpet + 150 g a.i./ha Azoxystrobin;
cxcvi. 750 g a.i./ha Folpet+ 125 g a.i./ha Trifloxystrobin;
cxcvii. 750 g a.i./ha Folpet + 200 g a.i./ha Pyralostrobin;
cxcviii. Folpet 300 gr (A.I.)/ha + flumetylsulforim 50 gr (A.I.)/ha;
cxcix. Folpet 300 gr (A.I.)/ha + flumetylsulforim 75 gr (A.I.)/ha;
cc. Folpet 600 gr (A.I.)/ha + flumetylsulforim 50 gr (A.I.)/ha; or
cci. Folpet 600 gr (A.I.)/ha + flumetylsulforim 75 gr (A.I.)/ha.

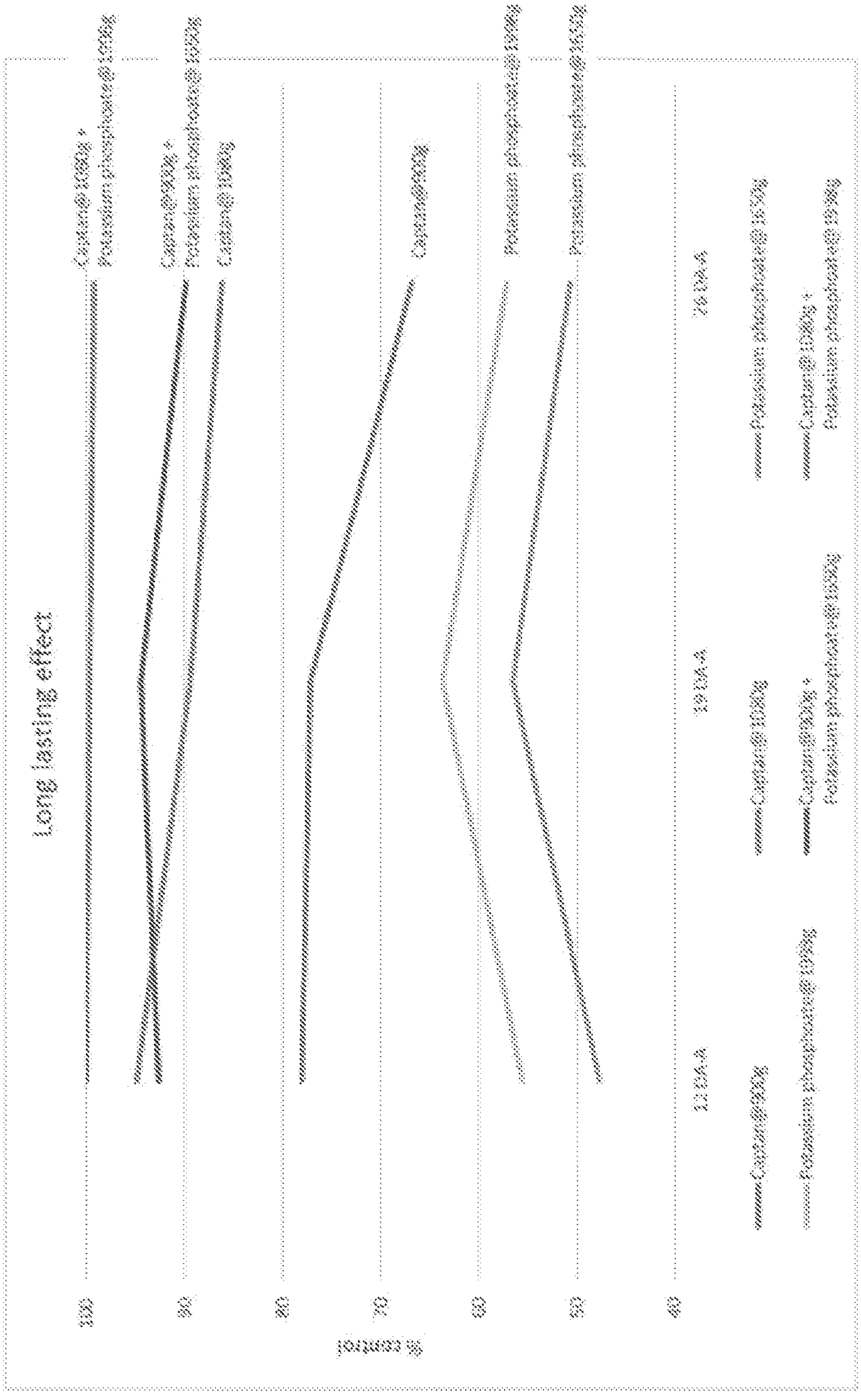


Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9622690 A
- IL 2019051432 W
- WO 2019244084 A
- WO 2015103262 A
- WO 2012025912 A
- US 8263603 B
- US 9850215 B
- US 9840476 B


### Non-patent literature cited in the description


- Calculation of the synergistic and antagonistic responses of herbicide combinations. **COLBY S. R.** Weeds. 1967, vol. 15, 20-22
- **ULRICH GISI**. *Phytopathology*, 1996, vol. 86, 1273-1279
- **COLBY, S.R.** Calculating synergistic and antagonistic responses of herbicide combination. *Weeds*, 1967, vol. 15, 20-22